(19) Europäisches Patentamt
European Patent Office
Office européen des brevets

(11) EP 0 513 622 B1

(12) # EUROPÄISCHE PATENTSCHRIFT

(45) Veröffentlichungstag und Bekanntmachung des Hinweises auf die Patenterteilung:
**28.08.1996 Patentblatt 1996/35**

(51) Int Cl.[6]: **C09B 62/022**, D06P 1/382

(21) Anmeldenummer: **92107531.3**

(22) Anmeldetag: **04.05.1992**

(54) **Reaktivfarbstoffe**

Reactive dyes

Colorants réactifs

(84) Benannte Vertragsstaaten:
**CH DE FR GB LI**

(30) Priorität: **15.05.1991 DE 4115833**
**28.05.1991 DE 4117387**

(43) Veröffentlichungstag der Anmeldung:
**19.11.1992 Patentblatt 1992/47**

(73) Patentinhaber: **BAYER AG**
**51368 Leverkusen (DE)**

(72) Erfinder:
- **Reddig, Wolfram, Dr.**
  **W-5060 Bergisch Gladbach (DE)**
- **Herd, Karl-Josef, Dr.**
  **W-5068 Odenthal-Holz (DE)**
- **Eizenhöfer, Thomas, Dr.**
  **W-5000 Köln 60 (DE)**
- **Harms, Wolfgang, Dr.**
  **W-5068 Odenthal (DE)**
- **Henk, Hermann, Dr.**
  **W-5000 Köln 80 (DE)**
- **Hoppe, Manfred, Dr.**
  **W-5067 Kürten (DE)**
- **Kunde, Klaus, Dr.**
  **W-5206 Neunkirchen-Seelscheid (DE)**

(56) Entgegenhaltungen:
**EP-A- 0 097 119** **FR-A- 1 450 102**
**FR-A- 2 341 626** **FR-A- 2 417 532**
**GB-A- 2 200 131** **US-A- 4 007 164**

EP 0 513 622 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft neue Reaktivfarbstoffe, ihre Herstellung und Verwendung.

Reaktivfarbstoffe sind beispielsweise aus der EP-A-97 119 bekannt. Die darin angegebenen Reaktivfarbstoffe weisen aber noch Nachteile, beispielsweise in den Echtheiten, auf.

Die vorliegende Erfindung betrifft Reaktivfarbstoffe der Formel (1)

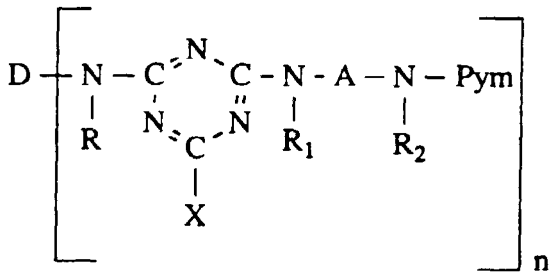

(1),

worin bedeuten

D der Rest eines organisches Farbstoffes,

R, $R_1$ und $R_2$ unabhängig voneinander Wasserstoff oder gegebenenfalls substituiertes $C_{1-4}$-Alkyl,

A ein gegebenenfalls substituiertes aliphatisches, aromatisches oder aromatisch-aliphatisches Brükkenglied,

Pym die Reste

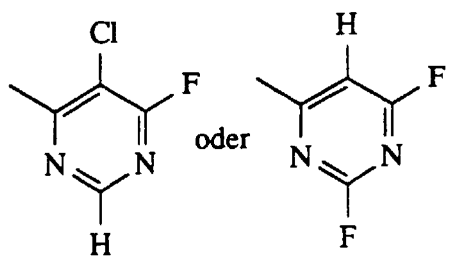

,

X Cl oder F und

n 1 oder 2.

Besonders bevorzugte Reaktivfarbstoffe entsprechen folgenden Formeln (1a) und (1b)

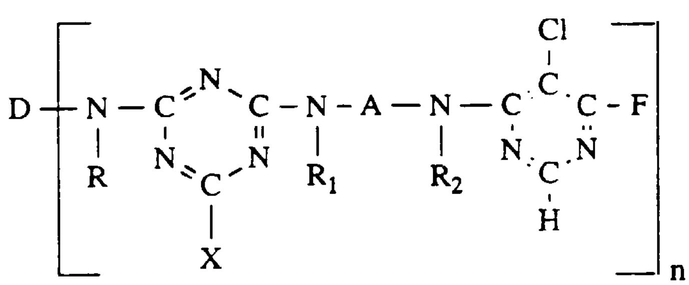

(1a),

Reaktivfarbstoffe der Formel (1b)

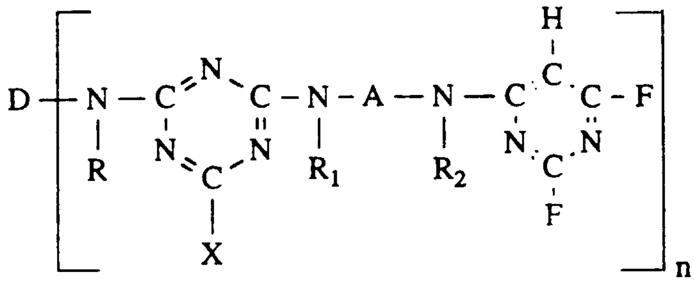

(1b),

worin

D, R, $R_1$, $R_2$, A, X und n die oben genannte Bedeutung haben.

Der Rest D ist insbesondere der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe.

An den Farbstoffrest D in Formel (1) können 1 oder 2 bireaktive Fluortriazin-Fluorpyrimidin-Gruppierungen gebunden sein. Falls der Farbstoff 2 derartige Gruppierungen aufweist (bei n = 2), sind diese unabhängig voneinander, sie können somit bezüglich der Reste R, $R_1$, $R_2$ oder A gleich oder verschieden sein.

Der Rest D in Formel (1) kann in der üblichen Art substituiert sein, insbesondere enthält der Rest D eine oder mehrere Sulfonsäuregruppen. Als Beispiele für weitere Substituenten am Rest D seien genannt Alkylgruppen mit 1 bis 4 Kohlenstoffatomen, wie Methyl, Ethyl, Propyl, Isopropyl und Butyl, Alkoxygruppen mit 1 bis 4 Kohlenstoffatomen, wie Methoxy, Ethoxy, Propoxy, Isopropoxy und Butoxy, Acylaminogruppen mit 1 bis 6 Kohlenstoffatomen, wie Acetylamino und Propionylamino, Benzoylamino, Amino, Alkylamino mit 1 bis 4 Kohlenstoffatomen, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbarnoyl, Ureido, Hydroxy, Carboxy, Sulfomethyl und Sulfo. Diejenigen Reaktivfarbstoffe, worin D der Rest eines Azofarbstoffes ist, enthalten als Substituenten insbesondere Methyl, Ethyl, Methoxy, Benzoylamino, Amino, Acetylamino, Ureido, Sulfomethyl, Hydroxy, Carboxy, Halogen und Sulfo.

Als Alkylrest kommt für R, $R_1$ und $R_2$ in Formel (1) ein geradkettiger oder verzweigter Alkylrest in Betracht, der auch substituiert sein kann, z.B. durch Halogen, Sulfato, Carboxy, Hydroxy, Cyan oder Sulfo. Als Beispiele für R seien genannt: Methyl, Ethyl, Propyl, Isopropyl, Butyl, Isobutyl, sek.-Butyl, tert.-Butyl, β-Chlorethyl, β-Hydroxyethyl, β-Hydroxybutyl, β-Cyanethyl, β-Sulfatoethyl, Carboxymethyl und Sulfomethyl. Bevorzugte Gruppen $R_1$ und $R_2$ sind: Wasserstoff, Methyl, Ethyl, β-Hydroxyethyl und β-Sulfatoethyl.

Das A ist vorzugsweise ein Alkylen-, Arylen- oder Aralkylrest. Der Ausdruck aliphatisches Brückenglied schließt auch cycloaliphatische Reste ein. So kann A ein langer (z.B. mit 10 oder mehr Koblenstoffatomen) oder kürzerer, geradkettiger oder verzweigter Alkylenrest sein; insbesondere kommt ein Akylenrest mit 2 bis 6 Kohlenstoffatomen in Betracht, z.B. Ethylen, Propylen, Butylen, Hexylen oder Cyclohexylen. Als Arylenrest ist A z.B. ein Naphthylenrest, der Rest eines Diphenyls oder Stilbens oder insbesondere ein Phenylenrest. Der Rest A kann weitere Substituenten enthalten, z.B. Halogenatome, wie Fluor, Chlor und Brom, Alkylgruppen mit 1 bis 4 Kohlenstoffatomen, wie Methyl, Ethyl und Propyl, Alkoxygruppen mit 1 bis 4 Kohlenstoffatomen, wie Methoxy, Ethoxy, Propyloxy und Isopropyloxy, Carboxy, Hydroxy oder Sulfo. Vorzugsweise ist A $C_{2-6}$-Alkylen oder gegebenenfalls substituiertes Phenylen. Bevorzugt ist der Ethylen-, der Propylen-, der Phenylen- und der Sulfophenylenrest.

Bevorzugte Untergruppen der Reaktivfarbstoffe der Formel (1) sind:

a) Reaktivfarbstoffe der Formel (1)
worin

| | |
|---|---|
| D | der Rest eines sulfogruppenhaltigen organischen Farbstoffes der Mono- oder Polyazo-, Metallkomplexazo-, Anthrachinon-, Phthalocyanin-, Formazan- oder Dioxazin-Reihe ist, |
| Pym | die oben genannte Bedeutung hat, |
| n | 1 oder 2, |
| X | Cl oder F und |
| R | für Wasserstoff, Methyl oder Ethyl steht, |
| $R_1$, $R_2$ | unabhängig voneinander für H oder $C_1$-$C_4$-Alkyl, das durch OR, $OSO_3H$, $SO_3H$, COOR oder Halogen substituiert sein kann, steht, |
| A | für ein gegebenenfalls substituiertes Phenylen oder ein gegebenenfalls substituiertes aromatisch-aliphatisches Brückenglied oder für ein gegebenenfalls durch Heteroatome oder Heteroatome wie NR, O oder S enthaltende Gruppierungen unterbrochenes, geradkettiges oder verzweigtes $C_1$-$C_6$-Alkylen, das |

mit OR, $OSO_3H$, $SO_3H$, COOR oder Halogen substituiert sein kann, steht.

Innerhalb des Brückengliedes A kann NR mit $NR_1$ oder $NR_2$ auch einen heterocyclischen aliphatischen Ring bilden.

b) Farbstoffe der Formel (1),
worin

A, D, n, R, $R_1$ und $R_2$ die Bedeutung haben wie unter a) und

X = F.

c) Reaktivfarbstoffe der Formel

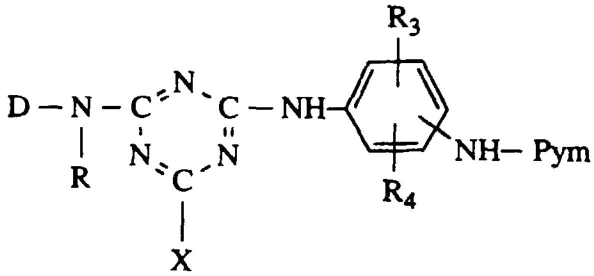
(2),

worin

D, X, R und Pym die gleichen Bedeutungen haben wie unter a) und

$R_3$ und $R_4$ unabhängig voneinander Wasserstoff, Methyl, Ethyl, Methoxy, Ethoxy, Chlor, Carboxy oder Sulfo ist.

d) Reaktivfarbstoffe gemäß c),
worin

D, X, R und Pym die gleichen Bedeutungen haben wie unter c) und

$R_3$ und $R_4$ unabhängig voneinander Wasserstoff oder Sulfo ist.

e) Reaktivfarbstoffe der Formeln

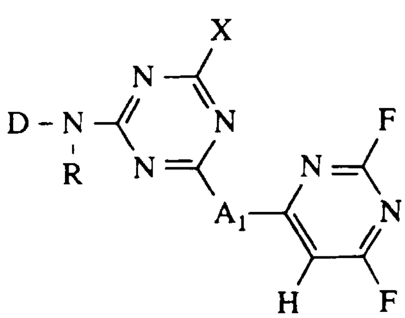
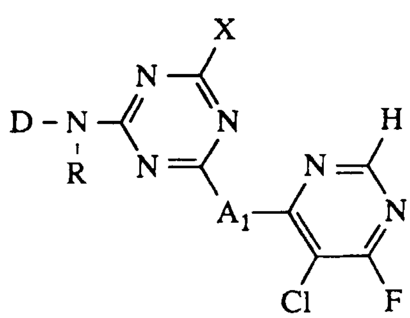

3a) und 3b)

worin

D, X und R die gleichen Bedeutungen haben wie in a) und

$A_1$ für ein aliphatisches, gegebenenfalls durch Heteroatome oder Heteroatome wie $NR_1$, O oder S

enthaltende Gruppierungen unterbrochenes, geradkettiges oder verzweigtes $C_1$-$C_6$-Diaminoalkylen steht, welches mit OR, $OSO_3H$, $SO_3H$, COOR oder Halogen substituiert sein kann. Eingeschlossen sind darin auch hetero- und carbocyclische aliphatische Diamine.

$R_1$ hat die gleiche Bedeutung wie in a).

Bevorzugte aliphatische Diamine sind:

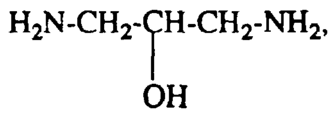 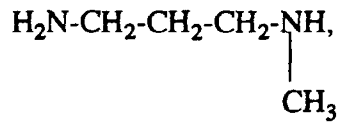

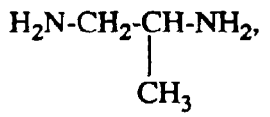

$HN(CH_2$-$CH_2OH)$-$CH_2$-$CH_2$-$NH_2$,

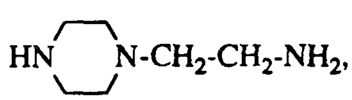 $H_2N$-$CH_2$-$CH_2$-$NH_2$, 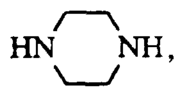

$H_2N$-$CH_2$-$CH_2$-$CH_2$-$NH_2$,

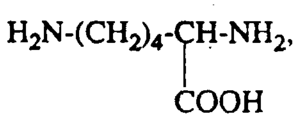

f) Reaktivfarbstoffe der Formeln

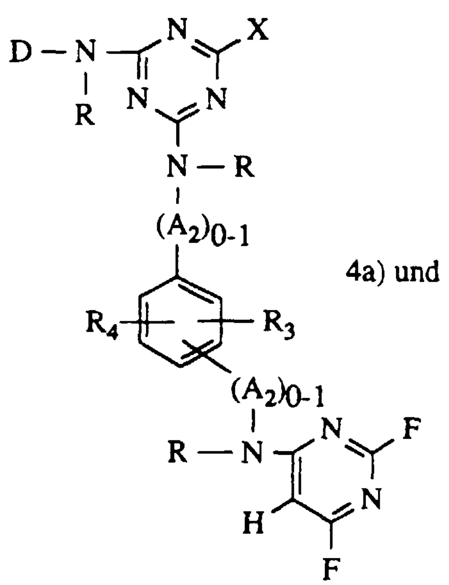

4a) und

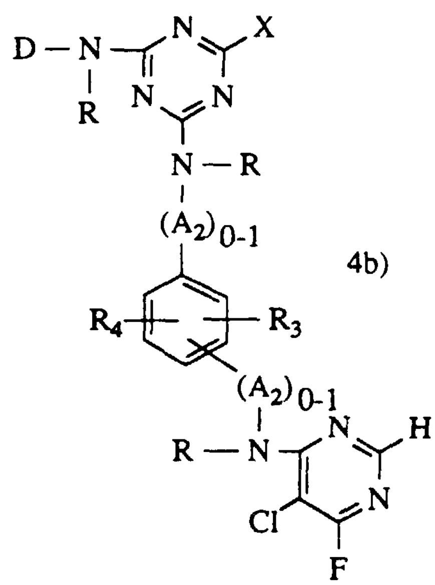

4b)

worin

D, X und R die gleichen Bedeutungen haben wie in a) und

$R_3$ und $R_4$ unabhängig voneinander H, Methyl, Ethyl oder Sulfo ist und

$A_2$ für ein aliphatisches, gegebenenfalls durch Heteroatome oder Heteroatome wie $NR_1$, O oder S enthaltende Gruppierungen unterbrochenes, geradkettiges oder verzweigtes $C_1$-$C_6$ Brückenglied steht, welches mit OR, $OSO_3H$, $SO_3H$, COOR oder Halogen substituiert sein kann.

Eingeschlossen sind darin auch hetero- und carbocyclische aliphatische Bindeglieder.

g) Reaktivfarbstoffe gemäß c), d), e) und f),
in denen

X für F steht.

Die Herstellung der Reaktivfarbstoffe der Formel (1) erfolgt vorzugsweise dadurch, daß man einen organischen Farbstoff der Formel

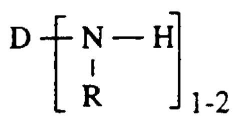

(5)

oder ein Farbstoffvorprodukt,
2,4,6-Trifluor-s-triazin oder 2,4,6-Trichlor-s-triazin,
eine Verbindung der Formel

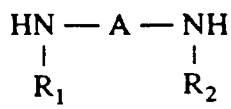

(6)

und 2,4,6-Trifluorpyrimidin oder 4,6-Difluor-5-chlorpyrimidin kondensiert, wobei D, R, $R_1$, $R_2$ und A in den obengenannten Formeln die unter Formel (1) angegebenen Bedeutungen haben, und daß man im Falle der Verwendung von Farbstoffvorprodukten, die erhaltenen Zwischenverbindungen in die gewünschten Endfarbstoffe umwandelt.

Bei dem im vorangehenden beschriebenen Verfahren können die einzelnen Verfahrensschritte in unterschiedlicher Reihenfolge, gegebenenfalls teilweise auch gleichzeitig, ausgeführt werden. Dabei sind verschiedene Verfahrensvarianten möglich. Im allgemeinen führt man die Umsetzung schrittweise nacheinander aus.

Dabei hängt es von der Struktur der Ausgangsstoffe ab, welche der möglichen Verfahrensvarianten die besten Resultate ergeben, oder unter welchen speziellen Bedingungen, z.B. bei welcher Kondensationstemperatur, die Reaktion am vorteilhaftesten auszuführen ist.

Wichtige Verfahrensvarianten sind dadurch gekennzeichnet, daß man:

1. einen organischen Farbstoff der Formel (5) mit 2,4,6-Trifluor-s-triazin oder 2,4,6-Trichlor-s-triazin kondensiert, daß man ferner eine Verbindung der Formel (6) mit 2,4,6-Trifluorpyrimidin oder 4,6-Difluor-5-chlorpyrimidin kondensiert, und beide Zwischenprodukte miteinander kondensiert;

2. einen organischen Farbstoff der Formel (5) mit 2,4,6-Trifluor-s-triazin oder 2,4,6-Trichlor-s-triazin kondensiert, das primäre Kondensationsprodukt mit einer Verbindung der Formel (6) kondensiert, und das erhaltene sekundäre Kondensationsprodukt mit 2,4,6-Trifluorpyrimidin oder 4,6-Difluor-5-chlorpyrimidin kondensiert;

3. eine Verbindung der Formel (6) mit 2,4,6-Trifluorpyrimidin oder 4,6-Difluor-5-chlorpyrimidin kondensiert, das primäre Kondensationsprodukt mit 2,4,6-Trifluor-s-triazin oder 2,4,6-Trichlor-s-triazin kondensiert, und das entstandene Zwischenprodukt mit einem organischen Farbstoff der Formel (5) kondensiert;

4. 2,4,6-Trifluor-s-triazin oder 2,4,6-Trichlor-s-triazin mit einer Verbindung der Formel (6) kondensiert, das primäre Kondensationsprodukt mit einem organischen Farbstoff der Formel (5) kondensiert, und das erhaltene sekundäre Kondensationsprodukt in letzter Stufe mit 2,4,6-Trifluorpyrimidin oder 4,6-Difluor-5-chlorpyrimidin kondensiert.

Die Kondensationsreaktionen von organischen Farbstoffen (5), Farbstoffvorprodukten und Diaminen (6) mit

2,4,6-Trifluor-s-triazin, 2,4,6-Trichlor-s-triazin, 2,4,6-Trifluorpyrimidin oder 4,6-Difluor-5-chlorpyrimidin oder deren Vorkondensate erfolgen nach bekannten Verfahren, vorzugsweise in wäßrigen oder wäßrig-organischen Medien in Gegenwart von säurebindenden Mitteln.

Die angegebenen Formeln sind die der freien Säuren. Bei der Herstellung werden im allgemeinen die Salze erhalten, insbesondere die Alkalisalze wie Natrium-, Kalium- oder Lithiumsalze. Die Farbstoffe können auch als konzentrierte Lösungen eingesetzt werden.

Die erfindungsgemäßen Farbstoffe eignen sich hervorragend zum Färben und Bedrucken von natürlichen und synthetischen OH- oder amidgruppenhaltigen Materialien, insbesondere solchen aus Cellulose und Polyamiden. Sie sind besonders geeignet zum Färben von Cellulosematerialien im Auszieh- und Klotz-Kaltverweilfahren, sowie zum Bedrucken von Baumwolle und Zellwolle.

Man erhält bei gutem Aufbauvermögen und hohen Fixierausbeuten Färbungen mit guten Allgemeinechtheiten, insbesondere Naßechtheiten.

Im folgenden sollen mögliche Ausgangsstoffe, die zur Herstellung der Reaktivfarbstoffe der Formel (1) verwendet werden können, einzeln genannt werden.

Als Farbstoffe der Formel (5) kommen besonders Farbstoffe der folgenden Strukturtypen in Betracht:

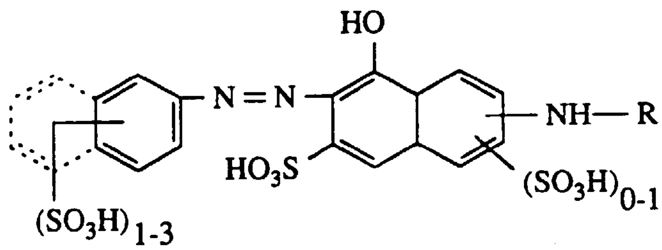

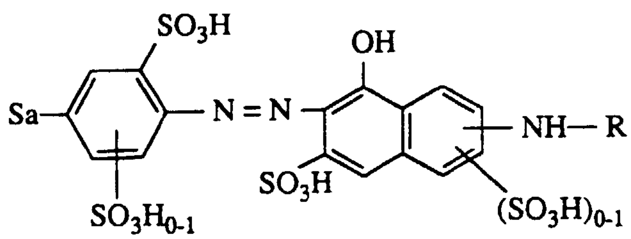

mit Sa = $H_5C_2$-O- oder $H_3C$-O-

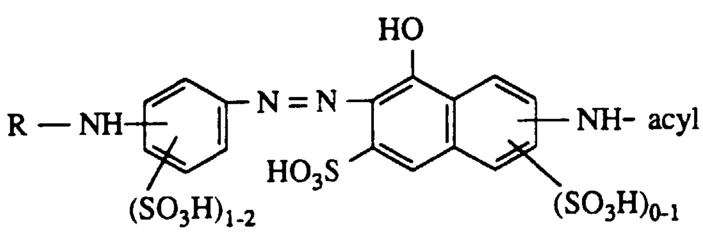

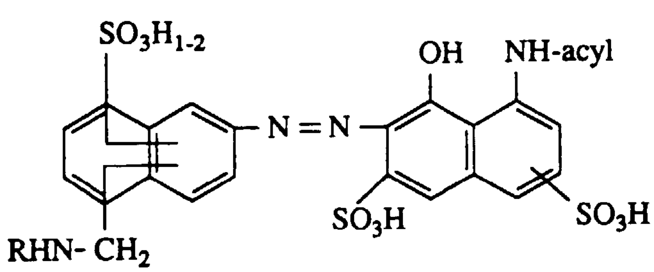

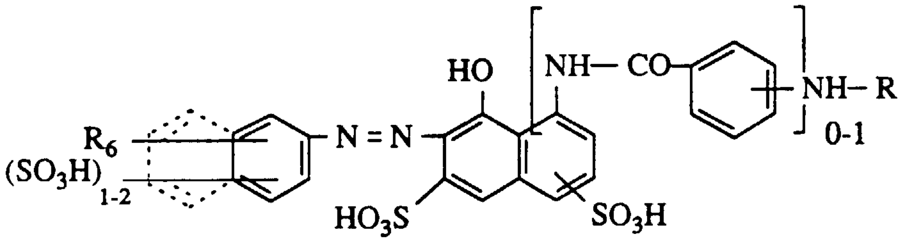

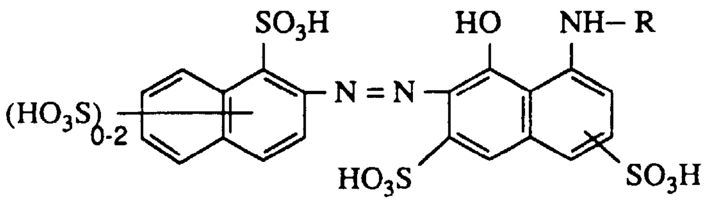

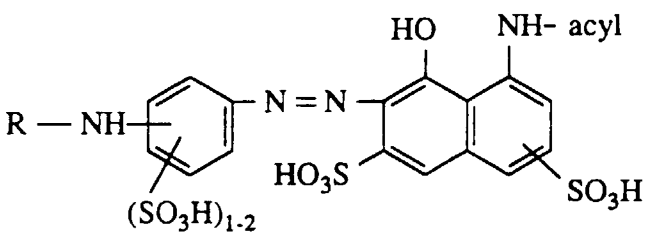

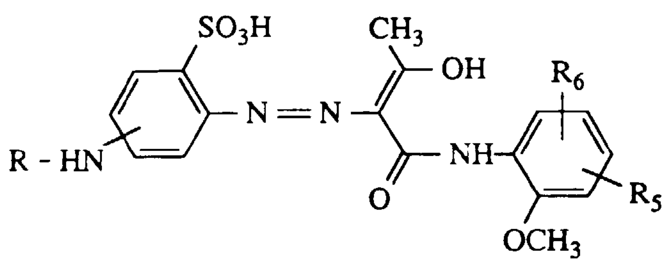

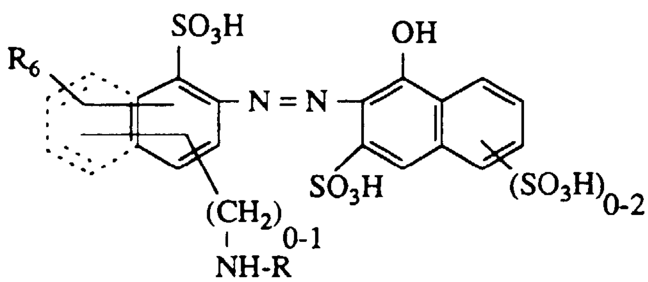

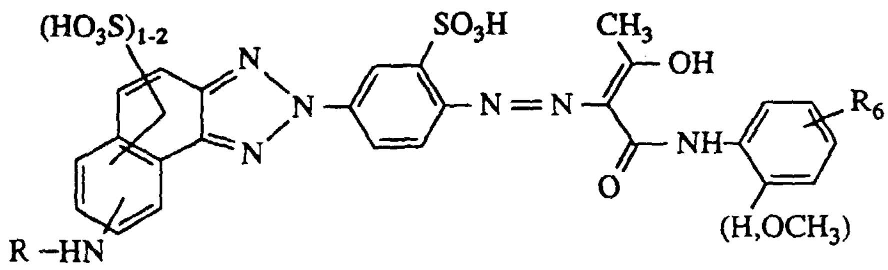

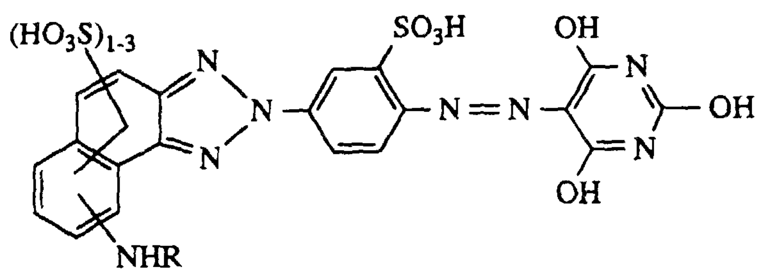

worin
acyl z.B. Acetyl oder gegebenenfalls substituiertes Benzoyl ist,

R = H, $CH_3$ oder $C_2H_5$,

$R_5$ = H, $CH_3$, $OCH_3$ oder Cl,

$R_6$ = H, $C_1$-$C_4$-Alkyl, $C_1$-$C_4$-Alkoxy, Cl, Br, COOH, $SO_3H$.

Metallkomplexe von Farbstoffen der Formeln:

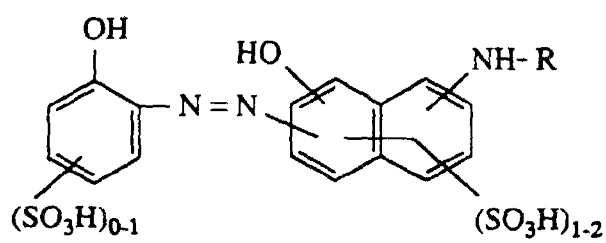

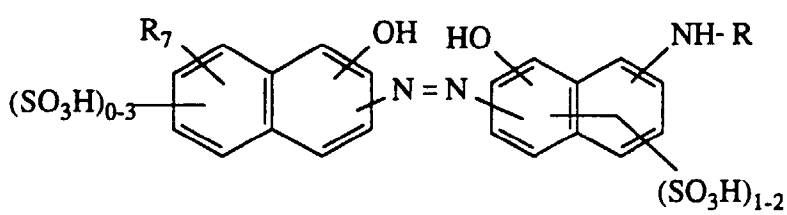

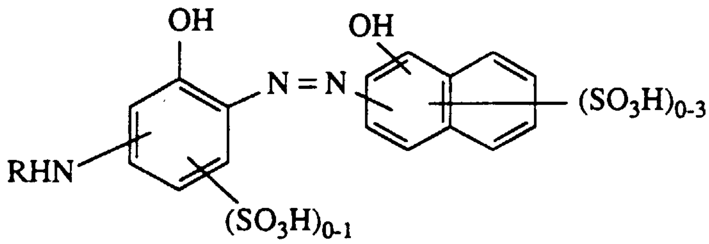

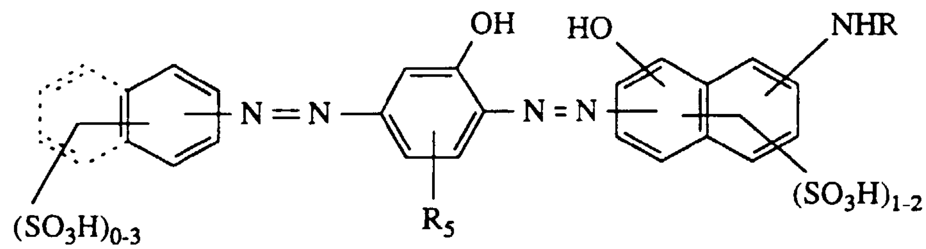

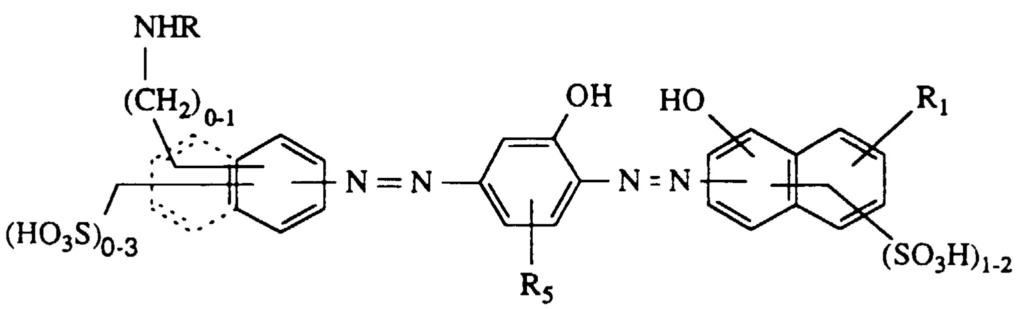

worin

$R_7$ = H, OH, $NH_2$, $NHCOCH_3$, NHCOPh, Cl, $C_1$-$C_4$-Alkoxy oder $C_1$-$C_4$-Alkyl ist.

Als Metallatom sind Cu (1:1-Komplex) oder Cr und Co (1:2-Komplex) bevorzugt. Cr- und Co-Komplexe können die Azoverbindung der oben angegebenen Formel einmal oder zweimal enthalten, d.h., sie können symmetrisch oder mit beliebigen anderen Ligandengruppen unsymmetrisch aufgebaut sein.

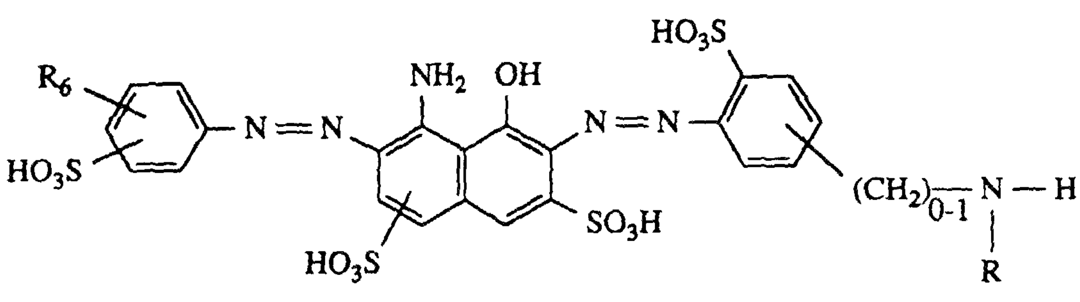

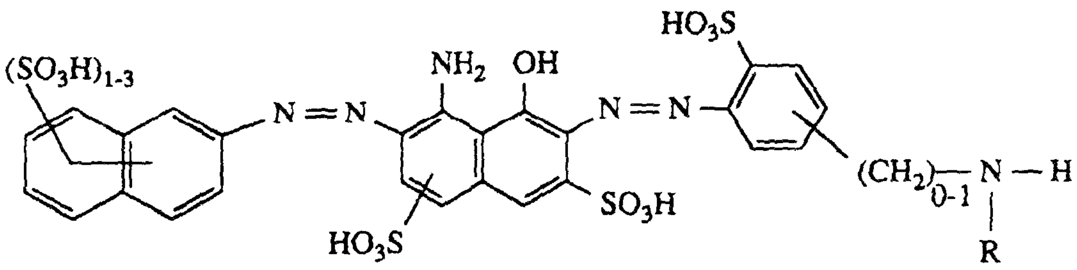

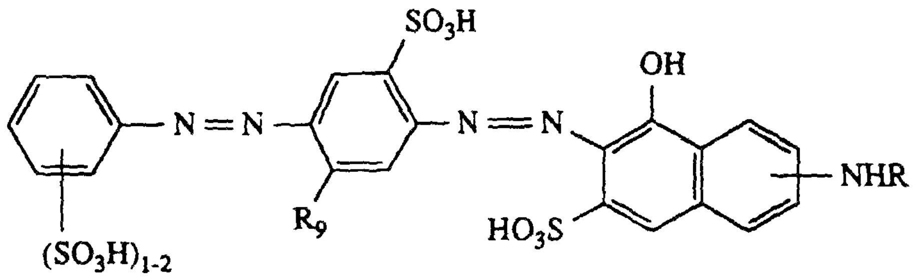

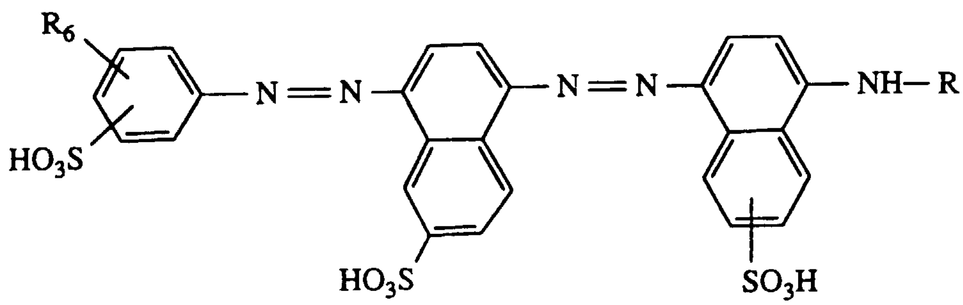

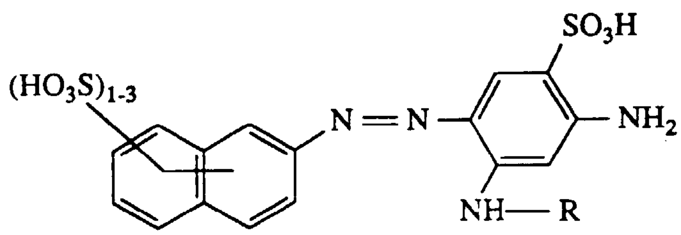

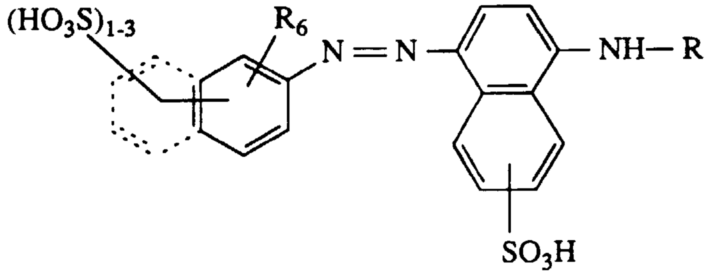

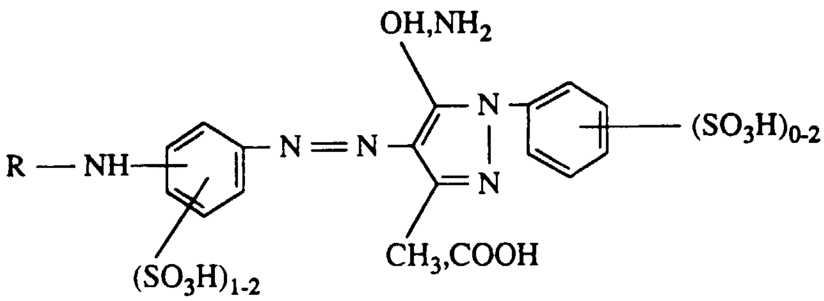

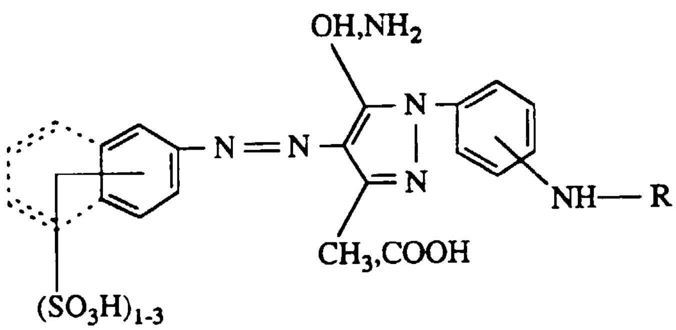

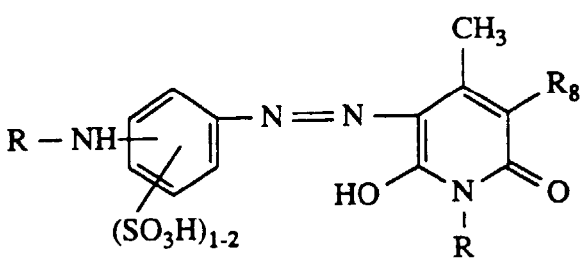

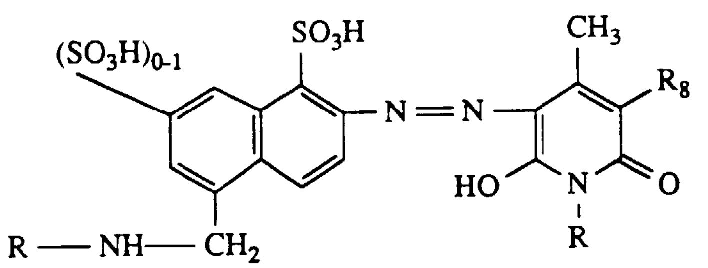

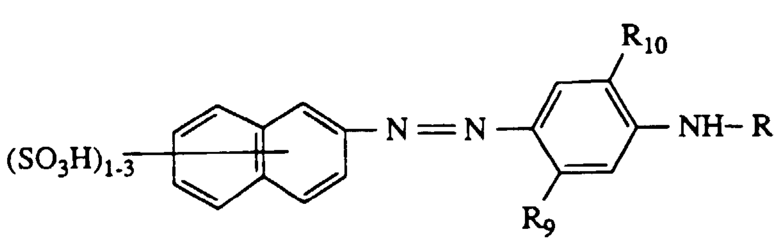

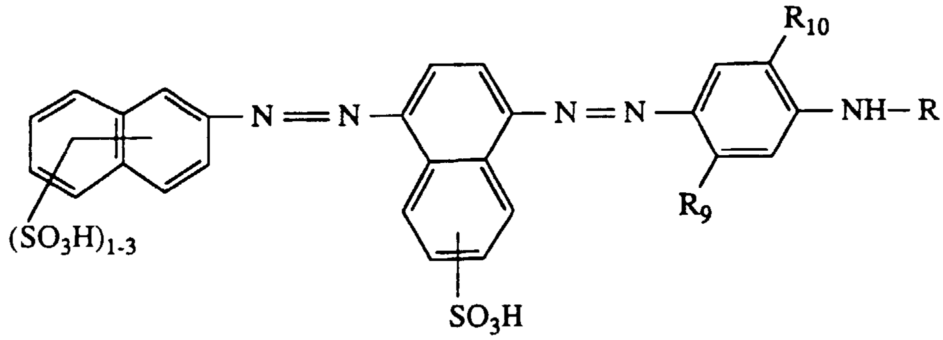

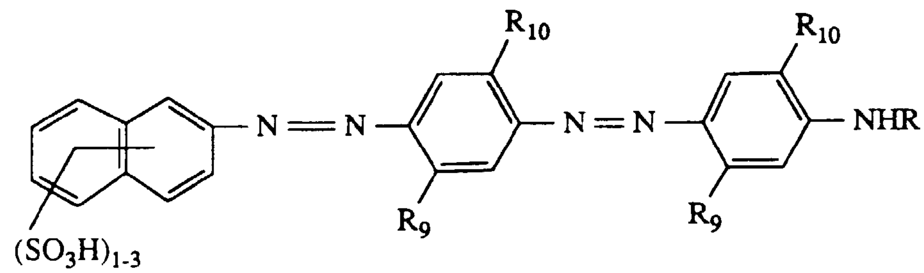

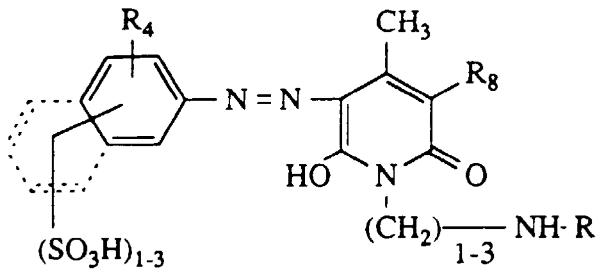

wonn

$R_8$ = H, $SO_3H$, $CH_2SO_3H$, Cl, $C_1$-$C_4$-Alkylsulfonyl, CN, Carbonamid, insbesondere $CONH_2$,

$R_9$ = H, $C_1$-$C_4$-Alkyl, $C_1$-$C_4$-Alkoxy, Acylamino, insbesondere $C_1$-$C_4$-Alkylcarbonylamino oder Arylcarbonylamino wie gegebenenfalls substituiertes Phenylcarbonylamino, $C_1$-$C_4$-Alkylsulfonylamino, Cl, Br, Aminocarbonylamino, $C_1$-$C_4$-Alkylsulfonylamino, Arylsulfonylamino,

$R_{10}$= H, $C_1$-$C_4$-Alkyl, $C_1$-$C_4$-Alkoxy, OH, $SO_3H$.

Die durch Strichelungen angedeuteten kondensierten Ringe stehen für alternativ mögliche Naphthalinsysteme.

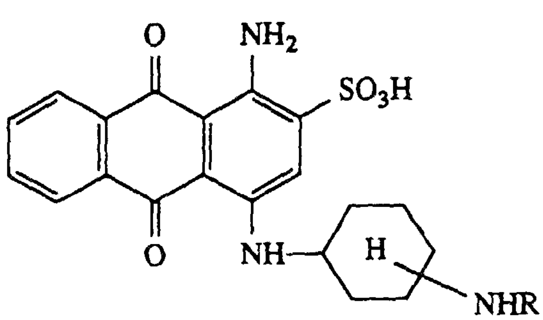

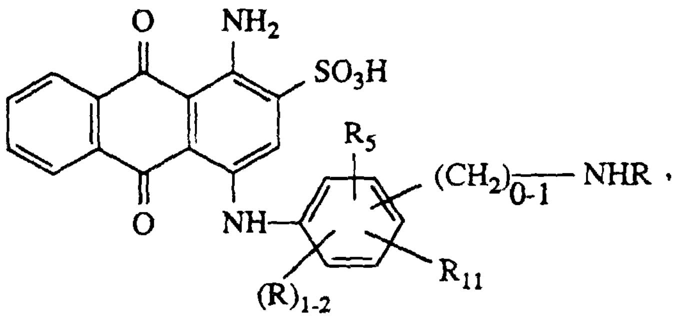

worin

$R_5$ = H, Methyl, Methoxy, Chlor

$R_{11}$= H, $SO_3H$ und

R = H, Methyl, Ethyl ist.

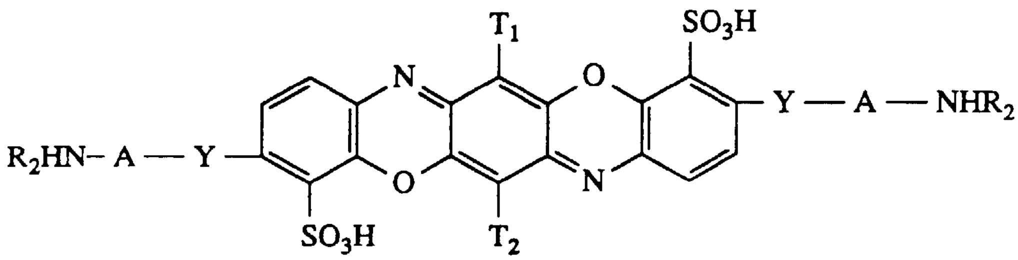

worin

Y = 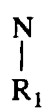 ,

O und
$T_1$, $T_2$ = H, Cl, Br, $C_1$-$C_2$-A-C, $OCH_3$, $OC_2H_5$, Acylamino, $C_1$-$C_2$-Alkoxycarbonyl ist.

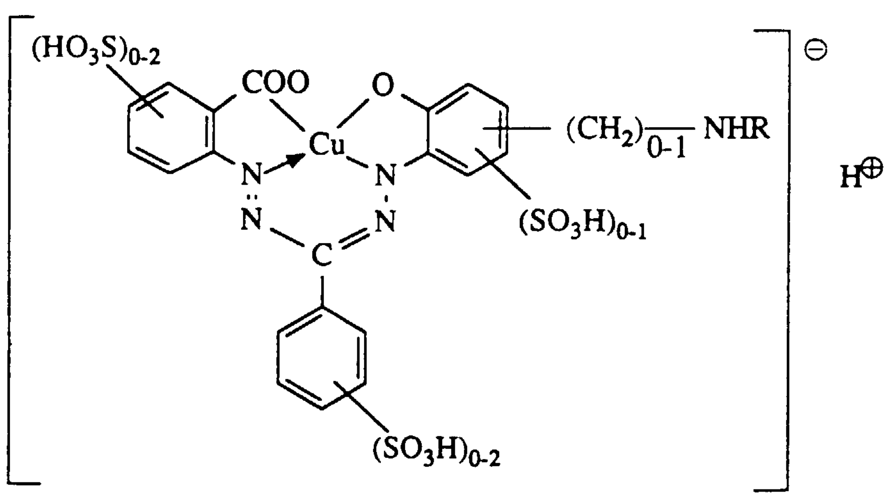

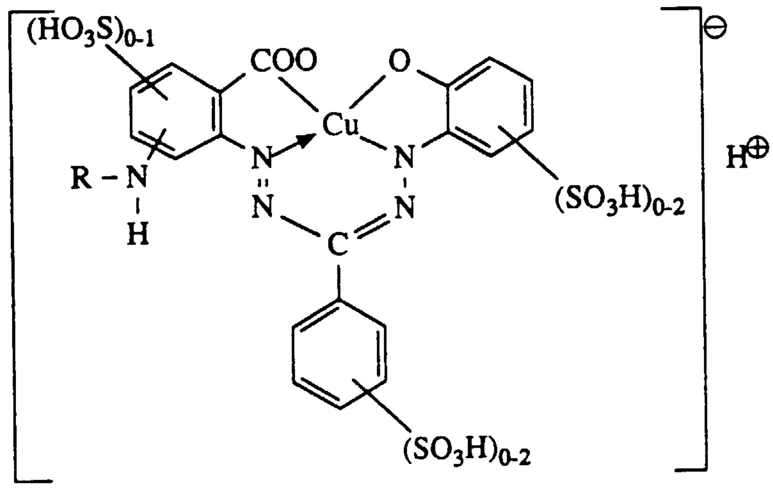

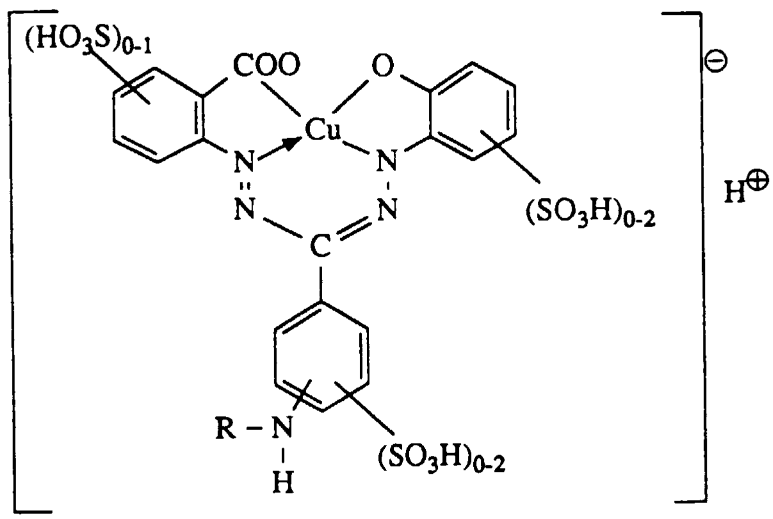

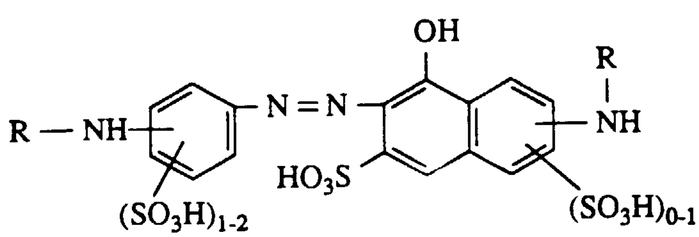

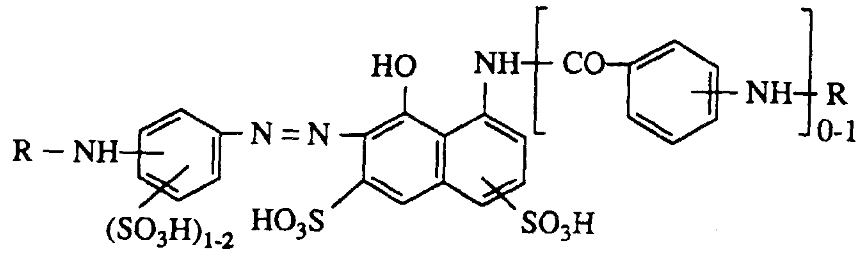

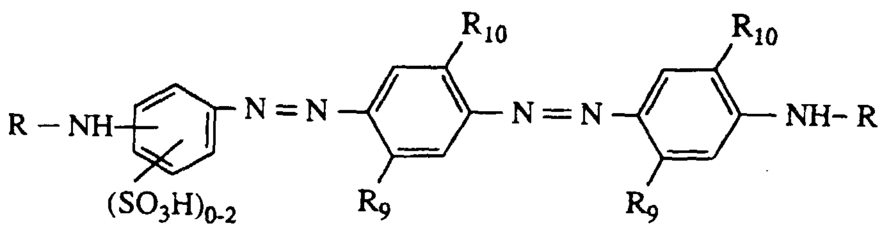

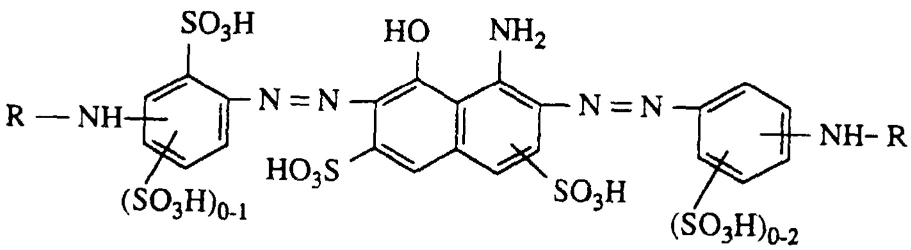

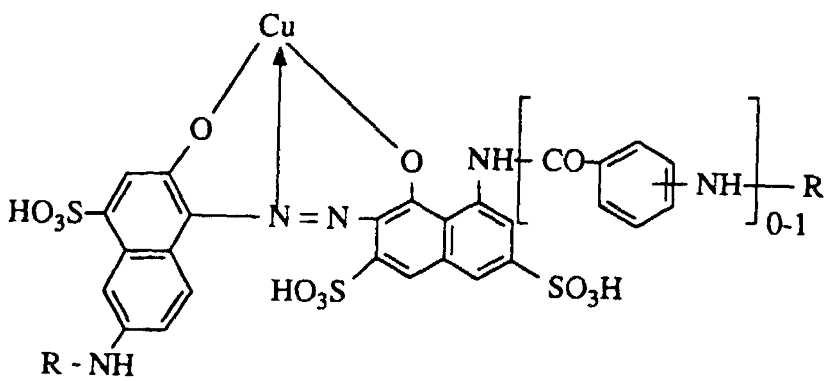

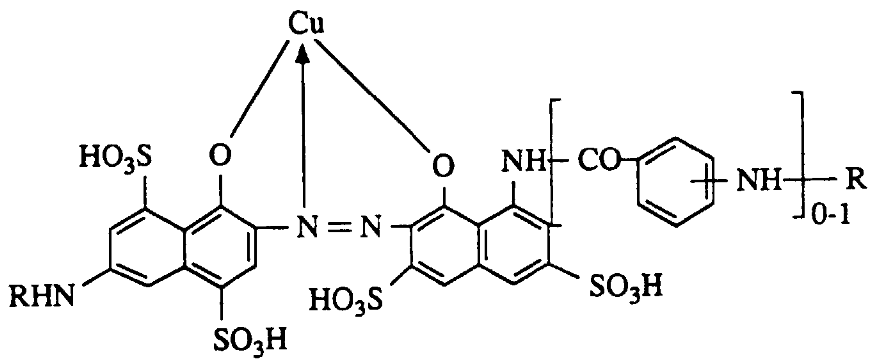

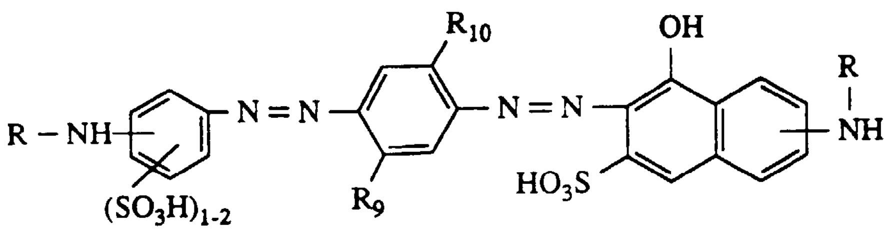

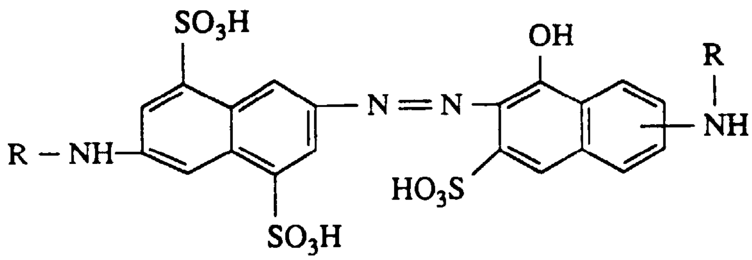

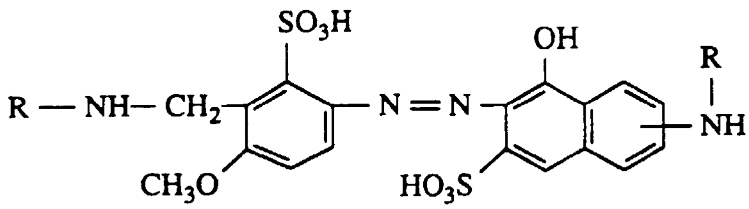

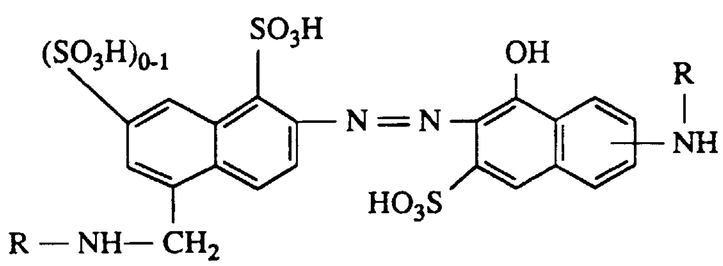

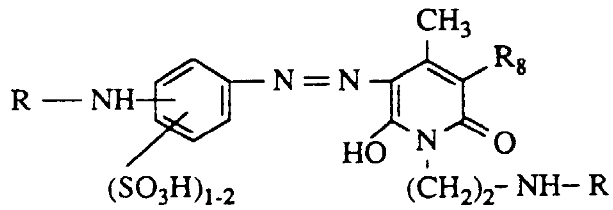

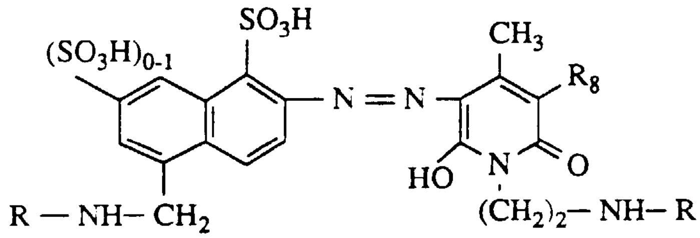

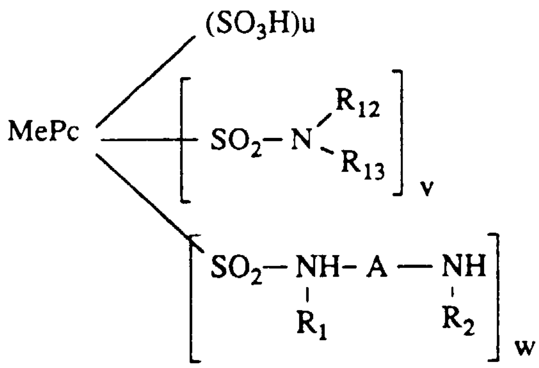

,

worin

| | |
|---|---|
| Me = | Cu, Ni ist, |
| u + v + w = | 3,4-4,0 ist, mit der Maßgabe, daß |
| u = | 0,8-2,0, |
| v = | 0-1,0, |
| w = | 1,0-3,0 ist und |
| $R_1$, $R_2$ und A | die oben angegebenen Bedeutungen haben, |
| $R_{12}$ und $R_{13}$ = | H, $C_1$-$C_2$-Alkyl, gegebenenfalls substituiert durch OH, $OSO_3H$, $SO_3H$ oder COOH ist. |

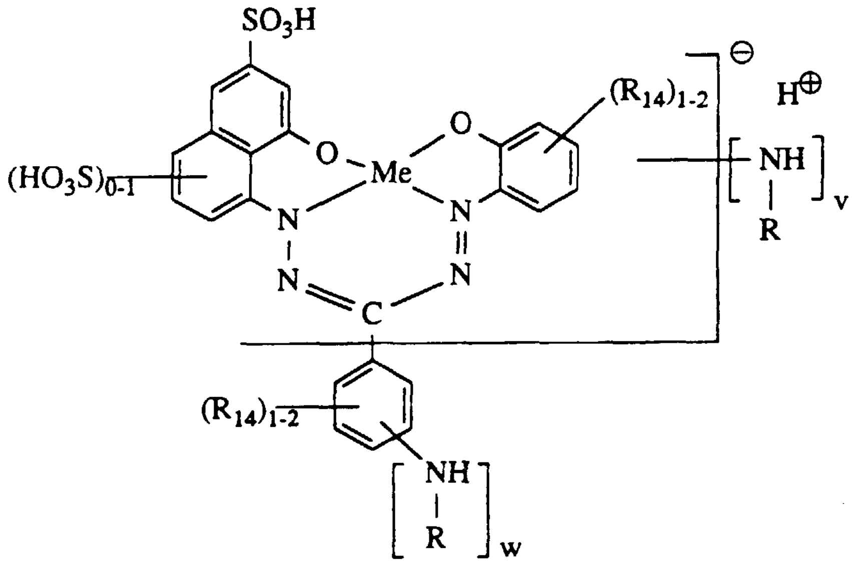

v,w = 0 oder 1, wobei w ungleich v,

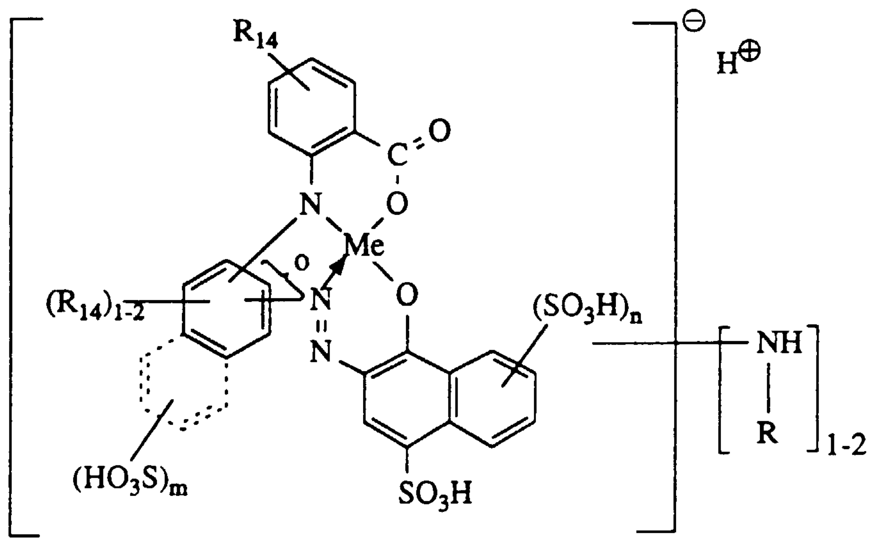

$R_{14}$= H, $C_1$-$C_4$-Alkyl, $C_1$-$C_4$-Alkoxy, OH, Halogen, COOH, $NO_2$, $SO_3H$, Sulfonamido, $C_1$-$C_4$-Alkylcarbonylamino, gegebenenfalls substituiertes Phenylcarbonylamino, $C_1$-$C_4$-Alkylsulfonylamino, gegebenenfalls substituiertes Phenylsulfonylamino,

Me = zweiwertiges Metallatom, vorzugsweise Fe, Cu, Zn, Co, Ni,

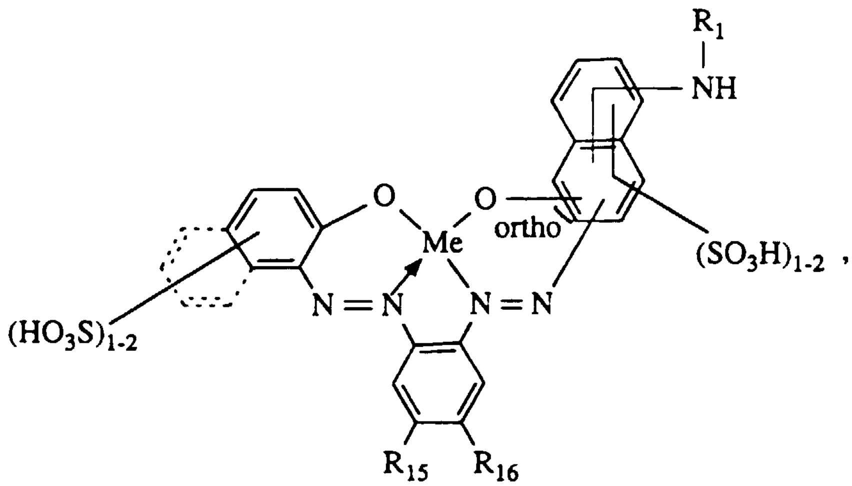

worin

$R_{15}$= $C_1$-$C_4$-Alkyl, Halogen, insbesondere Chlor, $C_1$-$C_4$-Alkoxy, $C_1$-$C_4$-Alkylcarbonylamino, Arylcarbonylamino, Aralkylcarbonylamino,

$R_{16}$= $C_1$-$C_4$-Alkoxy, oder $R_{15}$ und $R_{16}$ einen Ring bilden und folgende Bedeutung haben:

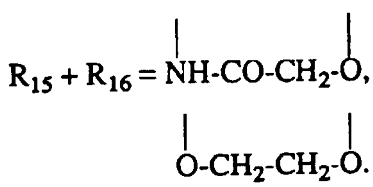

Beispiel 1

1.1 18,8 g 2,4-Diaminobenzolsulfonsäure werden in 80 ml Wasser durch Neutralisation mit 10 %iger Lithiumhydroxid-Lösung gelöst und bei 25 bis 30°C mit 15,4 g 4,6-Difluor-5-chlorpyrimidin bei pH 5,5 bis 6,0 kondensiert. Nach Beendigung des Lithiumhydroxid-Verbrauches setzt man zu der Lösung des Kondensationsproduktes 19,3 g Cyanurchlorid, hält die Temperatur auf 20 bis 25°C und den pH-Wert mit Lithiumhydroxid auf 5,0. Wenn sich keine diazotierbare Aminogruppe mehr nachweisen läßt, ist die zweite Kondensationsstufe abgeschlossen und eine Lösung bzw. dickflüssige Suspension der Verbindung

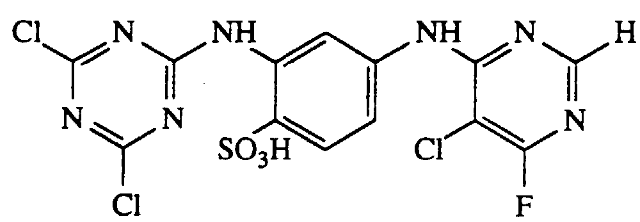

in Form ihres Li-salzes entstanden.

1.2 46,5 g 1-Amino-4-(2'-aminomethyl-4'-methyl-6'-sulfo-phenylamino)-anthrachinon-2-sulfonsäure werden in 300 ml Waser und 10 g Caprolactam unter Neutralisation bei pH 7 und 70°C gelöst. Nach Abkühlen auf Raumtemperatur gibt man die Lösung zu dem Kondensationsprodukt des Beispiels 1.1 und hält in der Reaktionsmischung den pH-Wert mit 10 %iger Sodalösung oder Lithiumhydroxid-Lösung auf 6,0 bis 6,5. Wenn der Verbrauch an alkalischem Kondensationsmittel nach mehreren Stunden zum Stillstand gekommen ist und eine chromatographische Probe das Verschwinden des farbigen Eduktes anzeigt, wird die Lösung mit 20 % Natriumchlorid ausgesalzen, der Farbstoff abgesaugt und mit 20 %iger Natriumchloridlösung gewaschen und bei 50°C im Vakuum getrocknet. Der Farbstoff der Formel

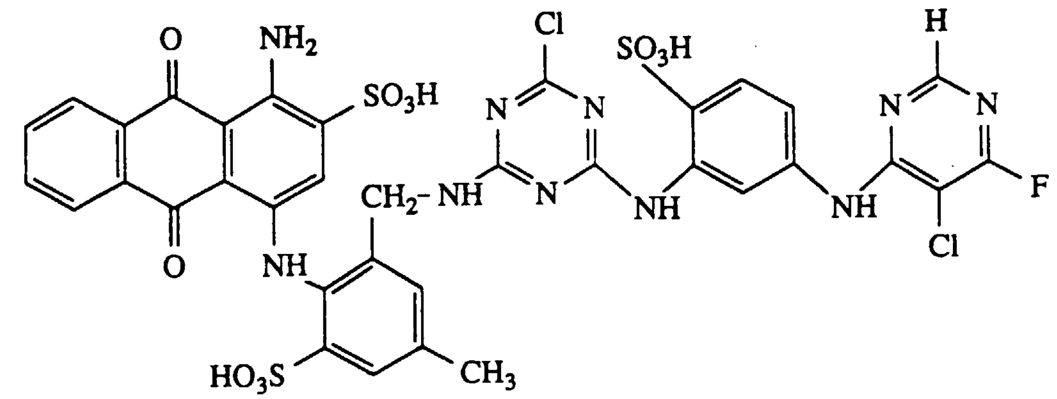

färbt Baumwolle und Zellwolle nach den bekannten Druck- und Continue-Verfahren in brillanten rotstichigen Blautönen mit hoher Fixierausbeute und hervorragenden Naßechtheiten. $\lambda_{max}$ = 621 nm, 583 nm in $H_2O$.

Beispiel 2

Setzt man im Beispiel 1.1 das Kondensationsprodukt aus 2,4-Diaminobenzol und 4,6-Difluor-5-chlorpyrimidin statt mit Cyanurchlorid mit 14,2 g Cyanurfluorid bei 0 bis 5°C und pH 4,5 bis 5,0 um und kondensiert anschließend das erhaltene Difluortriazinylprodukt mit dem Farbkörper des Beispiels 1.2 bei 0 bis 10°C und pH 6,0, so erhält man einen Farbstoff der Formel,

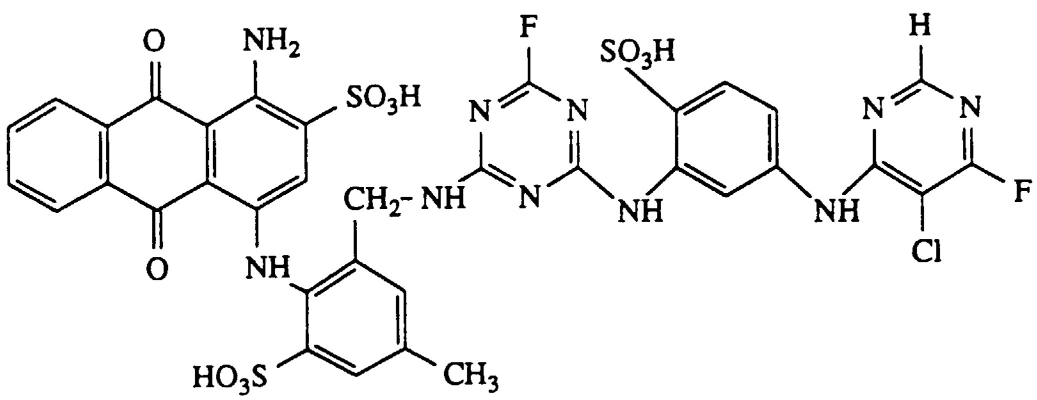

der nach entsprechender Aufarbeitung Cellulosefasern ebenfalls mit hohen Fixierausbeuten in Brillantblautönen anfärbt. $\lambda_{max}$ = 621 nm, 583 nm in $H_2O$.

Beispiel 3

In eine neutralisierte Lösung von 41,9 g 1-Amino-4-(3'-amino-2'-methyl-5'-sulfophenylamino)-anthrachinon-2-sulfonsäure in 500 ml Waser trägt man bei 10 bis 15°C das in Beispiel 2 angeführte Kondensationsprodukt aus 18,8 g 2,4-Diaminobenzolsulfonsäure, 15,4 g 4,6-Difluor-5-chlorpyrimidin und 14,2 g Cyanurfluorid erhaltene Kondensationsprodukt ein und hält den pH-Wert mit 10 %iger Sodalösung auf 5,5 bis 6,0. Nach beendeter Umsetzung wird der Farbstoff mit Natriumchlorid ausgesalzen, abgesaugt und mit 10 %iger Natriumchloridlösung gewaschen. Das nach Trocknung im Vakuum bei 40°C erhaltene blaue Pulver entspricht der Formel

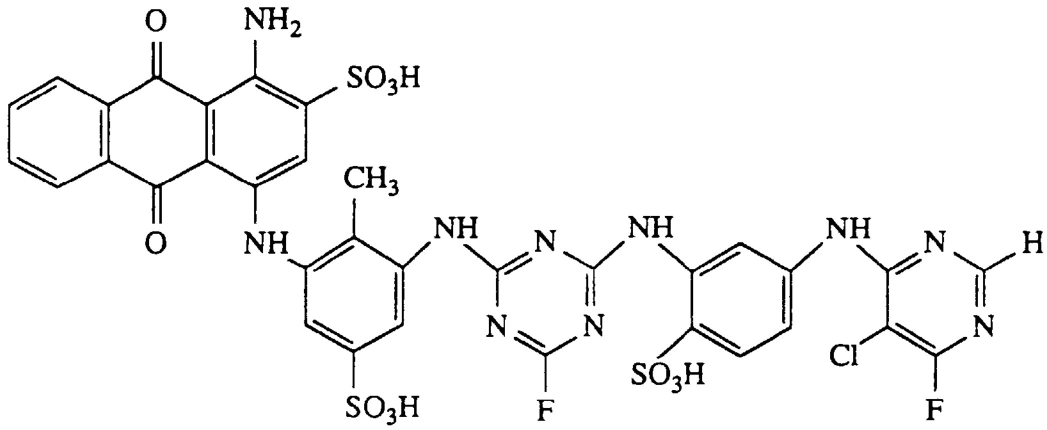

und färbt Baumwolle in neutralen Blautönen. $\lambda_{max}$ = 611 nm in $H_2O$.

Beispiel 4

39,9 g 4-Amino-6-(4'-fluor-5'-chlor-6'-pyrimidinyl-amino)-benzol-1,3-disulfonsäure (hergestellt durch Sulfierung des Kondensationsproduktes von 2,4-Diaminobenzolsulfonsäure mit 4,6-Difluor-5-chlorpyrimidin in der 4,5fachen Menge 20 bis 30 %igem Oleum, Austragen der Oleumlösung auf Eis-Wasser und Eliminierung der Schwefelsäure durch Fällung mit Calciumcarbonat) werden in 250 ml Wasser mit 19,4 g Cyanurchlorid bei 15°C und pH 4,5 bis 5,0 kondensiert. Nach beendeter Kondensation stellt man den pH-Wert auf 7 und die Temperatur auf 20°C.

Man läßt nun eine auf pH 11,5 gestellte Lösung von 34,8 g 1-Amino-4-(4'-amino-cyclohexylamino)-anthrachinon-2-sulfonsäure in 380 ml Wasser so zulaufen, daß im Reaktionsgemisch durch gleichzeitige Zudosierung von 2n Natronlauge ein pH-Wert von 8,5 bis 9,0 eingehalten wird. Der erhaltene Feststoff wird mit Kaliumchlorid ausgesalzen, abgesaugt, gewaschen und bei 50°C im Vakuum getrocknet. Er entspricht der Formel

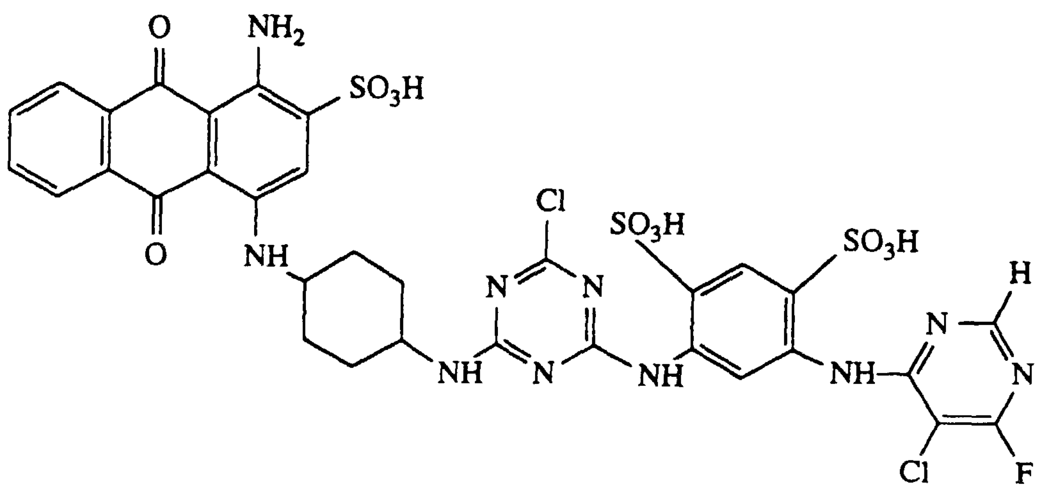

und färbt und druckt Cellulosefasern nach den bekannten Techniken in leuchtend blauen Tönen mit sehr guten Fixierausbeuten. $\lambda_{max}$ = 634 nm, 592 nm in $H_2O$.

Beispiel 5

53,1 g 1-Amino-4-(3'-amino-5'-sulfo-2',4',6'-trimethylphenylamino)-anthrachinon-2-sulfonsäure werden in 530 Teilen Wasser bei pH 6 gelöst.

12,4 g Cyanurchlorid werden in 100 ml Methylethylketon gelöst und die Lösung auf 100 g Eis ausgetragen. Man läßt nun die Farbstofflösung zu der Cyanurchloridsuspension bei 0 bis 10°C zutropfen und hält im Reaktionsgemisch mit 10 %iger Sodalösung den pH-Wert auf 4,5. Nach beendeter Umsetzung gibt man 41,8 g des Kondensationsproduktes aus 2,5-Diaminobenzol-1,4-disulfosäure und 4,6-Difluor-5-chlorpyrimidin in Form einer wäßrigen Natriumsalzlösung hinzu, hält den pH-Wert auf 6,0, die Temperatur 3 Stunden bei 25°C, später bei 35 bis 40°C. Nach beendeter

Kondensation wird das Produkt ausgesalzen und getrocknet.

Der erhaltene Farbstoff der Formel

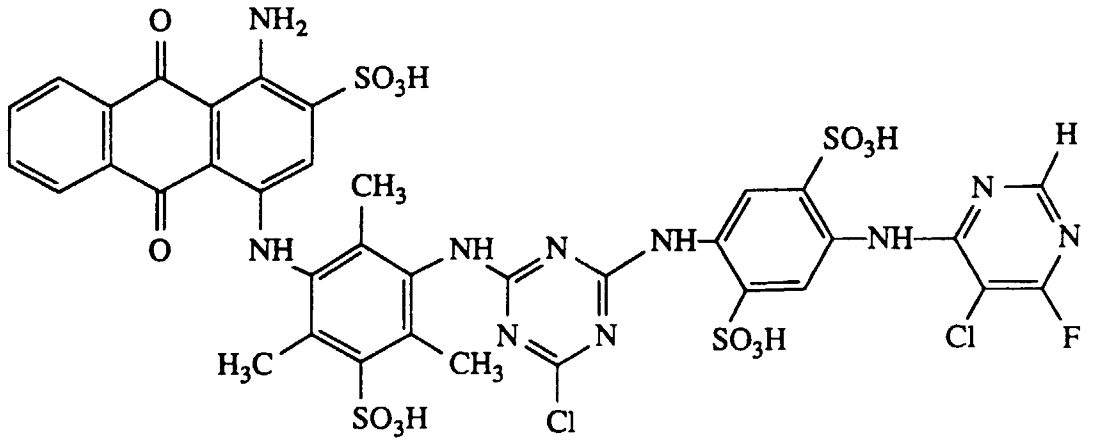

gibt auf Cellulosefasern in den bekannten Continue- und Druckverfahren brillante rotstichig blaue Färbungen mit sehr guten Fixierausbeuten.

Beispiel 6

6.1 18,8 g 2,5-Diaminobenzolsulfonsäure werden in 150 ml Wasser analog Beispiel 1.1 mit 15,4 g 4,6-Difluor-5-chlorpyrimidin kondensiert. Zur Lösung des Kondensationsproduktes läßt man 14,2 g Cyanurfluorid bei 0 bis 5°C zutropfen und hält den pH-Wert dabei auf 4,5 bis 5,0. Zu dem entstandenen Produkt der Formel

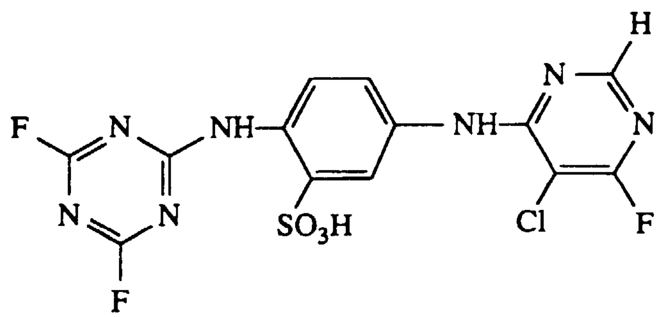

gibt man eine neutralisierte Lösung von 45 g 1-Amino-4-(4'-N-methylamino-methyl-2'-sulfo-phenylamino)-anthrachinon-2-sulfonsäure in 600 ml Wasser, hält den pH-Wert auf 5,5 bis 6,0 und läßt die Temperatur im Laufe von 3 Stunden allmählich auf 15°C ansteigen. Nach beendeter Umsetzung wird der Farbstoff durch Aussalzen isoliert, unter Zusatz von 3 % primärem und sekundärem Natriumphosphat bei pH 6,0 gepuffert und getrocknet. Das Produkt der Formel

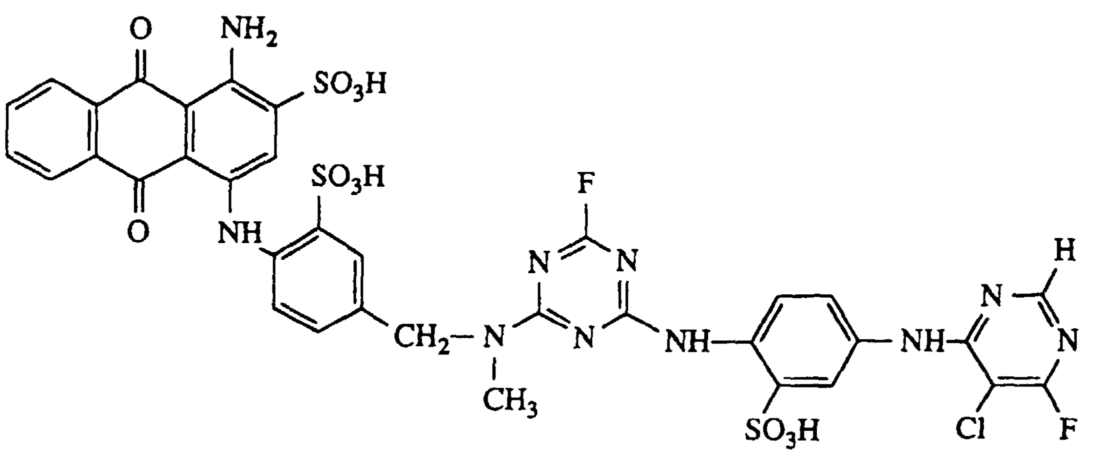

färbt Cellulosefasern nach den für Reaktivfarbstoffe üblichen Färbetechniken in neutralen Blautönen. $\lambda_{max}$ = 600 nm in $H_2O$.

Beispiel 7

In eine neutralisierte Lösung von 21 g 1-Amino-4-(3'-amino-4'-sulfo-phenylamino)-anthrachinon-2-sulfonsäure in 250 ml Wasser trägt man das aus 9,4 g 2,4-Diaminobenzolsulfonsäure, 7,7 g 4,6-Difluor-5-chlorpyrimidin und 9,65 g Cyanurchlorid gemäß den Angaben des Beispiels 1.1 hergestellte Kondensationsprodukt ein, hält die Temperatur auf 25°C und den pH-Wert mit 20 %iger Sodalösung oder 10 %iger Lithiumhydroxid-Lösung auf 6,0 bis 6,5. Die Isolierung des Produktes durch Aussalzen und anschließendes Trocknen ergibt einen Farbstoff der Formel,

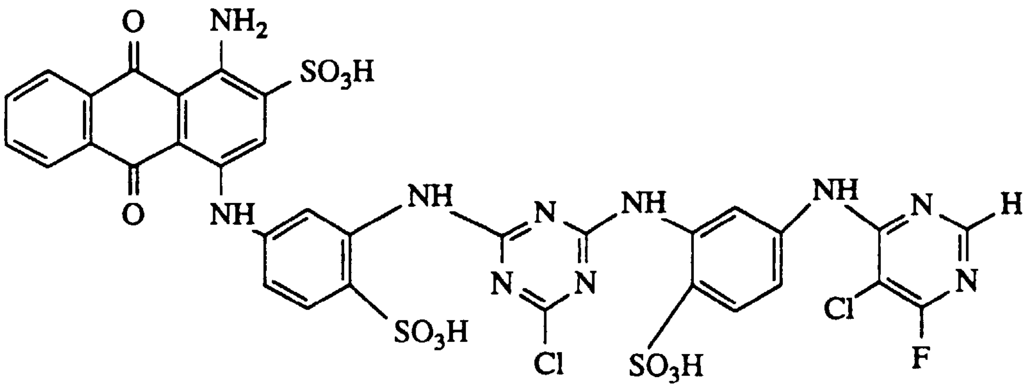

der Baumwolle in blauen Tönen mit guter Fixierausbeute anfärbt. $\lambda_{max}$ = 596 nm in $H_2O$.

In Analogie zu den Beispielen 1 bis 7 lassen sich auch folgende Farbstoffe der allgemeinen Formel

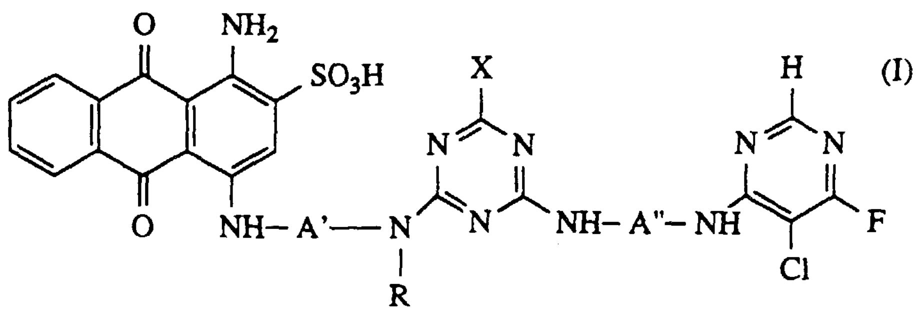

(I)

mit den in der untenstehenden Tabelle angegebenen Substituentenbedeutungen herstellen.

Tabelle 1

| Nr. | A' | R | X | A" |
|---|---|---|---|---|
| 8 | 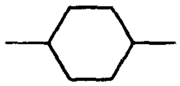 | H | F | 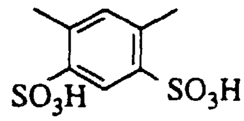 |
| 9 | 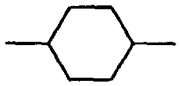 | H | F | 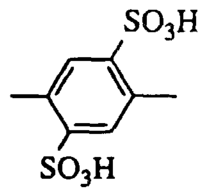 |
| 10 | 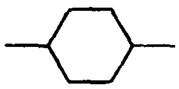 | H | Cl | 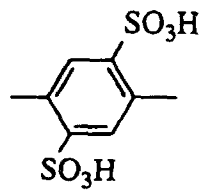 |
| 11 | 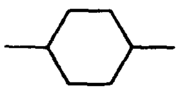 | H | F | 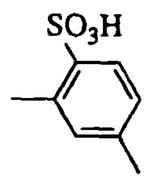 |

Tabelle 1 (Fortsetzung)

| Nr. | A' | R | X | A" |
| --- | --- | --- | --- | --- |
| 12 | 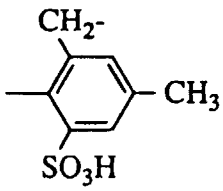 | H | Cl | 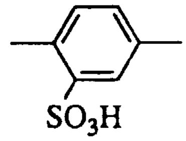 |
| 13 | 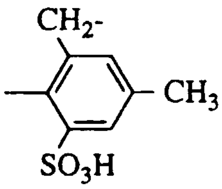 | H | Cl | 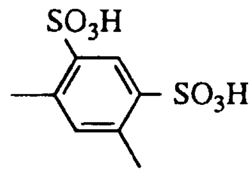 |
| 14 | 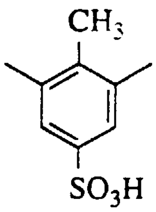 | H | F | 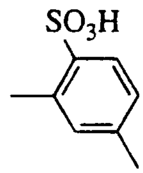 |
| 15 | 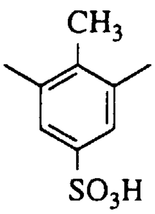 | H | F | 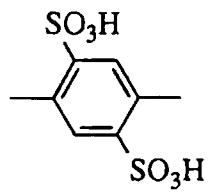 |
| 16 | 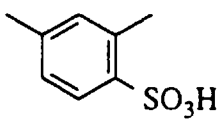 | H | F | 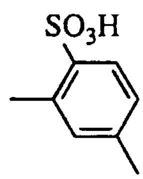 |
| 17 | 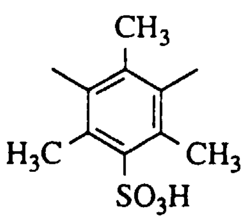 | H | F | 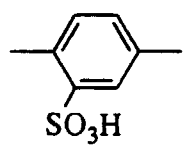 |

Tabelle 1 (Fortsetzung)

| Nr. | A' | R | X | A" |
|---|---|---|---|---|
| 18 | 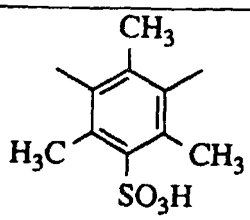 | H | Cl | 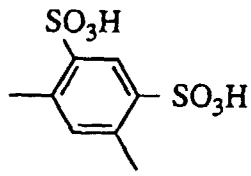 |
| 19 | 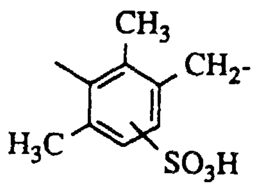 | $CH_3$ | F | 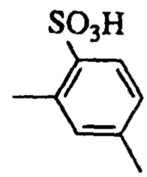 |
| 20 | 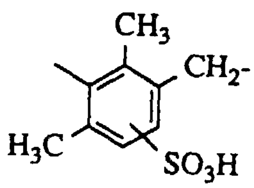 | $CH_3$ | Cl | 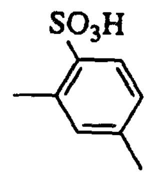 |
| 21 | 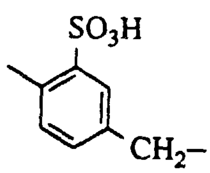 | $CH_3$ | Cl | 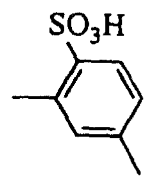 |
| 22 | 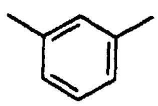 | H | F | 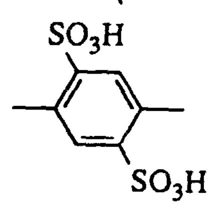 |
| 23 | 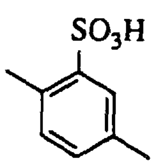 | $CH_3$ | F | 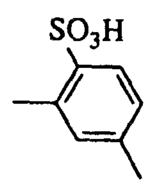 |
| 24 | 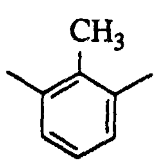 | H | F | 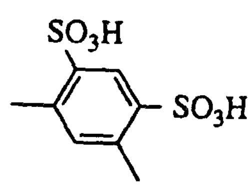 |

Beispiel 25

17,6 g Triphendioxazinverbindung der Formel

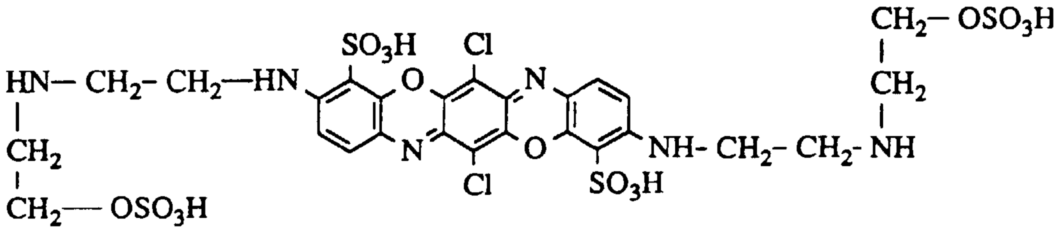

werden in 600 ml Wasser durch Einstellen eines pH-Wertes von 9 mit 2n Natronlauge gelöst. Zu der Lösung gibt man bei 0 bis 10°C das Kondensationsprodukt der Formel

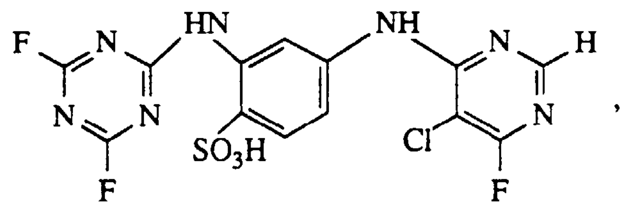

das man aus 9,8 g 2,4-Diaminobenzolsulfonsäure, 8,0 g 4,6-Difluor-5-chlorpyrimidin und 7,2 g Cyanurfluorid hergestellt hat, und hält den pH-Wert im Reaktionsgemisch auf 8,5 bis 9,0. Nach beendeter Umsetzung wird der Farbstoff der Formel

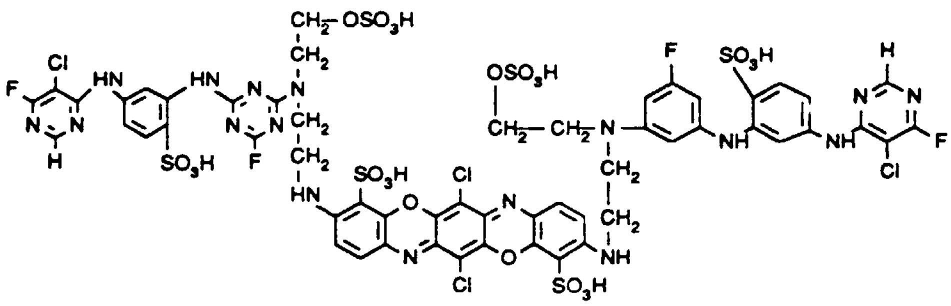

durch Aussalzen isoliert und bei 50°C im Vakuum getrocknet.

Beispiel 26

47,3 g 4-Amino-6-(4'-fluor-5'-chlor-6'-pyrimidinylamino)-benzolsulfonsäure werden in 350 ml Wasser mit 22,4 g Cyanurchlorid nach den Angaben des Beispiels 4 kondensiert.

30,0 g Triphendioxazin-Verbindung der Formel

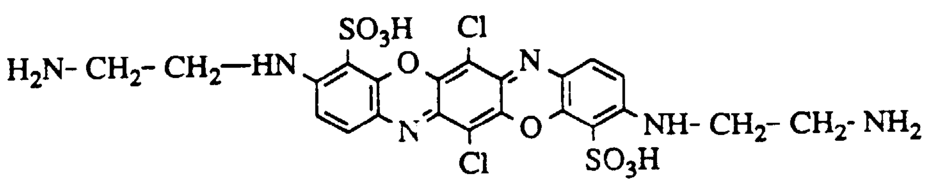

werden in 500 ml durch Zugabe von 70 ml 2n Natronlauge gelöst.

Man gibt beide Produkte gleichmäßig in 80 ml vorgelegtes Wasser bei 20°C gleichmäßig so ein, daß im gebildeten Reaktionsgemisch sich ein pH-Wert von 9,0 bis 9,5 einstellt. Nach Zusammengeben der Komponenten hält man den pH-Wert weiter mit 2n Natronlauge bis zur Beendigung der Kondensation.

Der entstandene Feststoff der Formel

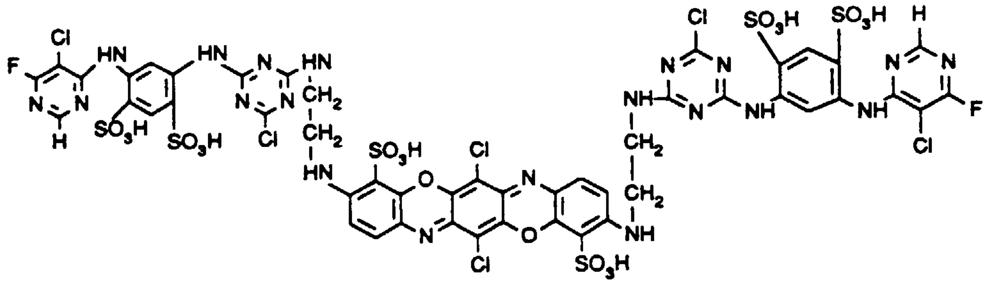

(II)

wird ausgesalzen und im Vakuum bei 50°C getrocknet. Er färbt Baumwolle in kräftigen Blautönen. $\lambda_{max}$ = 623 nm in $H_2O$.

In Analogie zu den Beispielen 25 und 26 lassen sich weiteie Triphendioxazin-Reaktivfarbstoffe der allgemeinen Formel

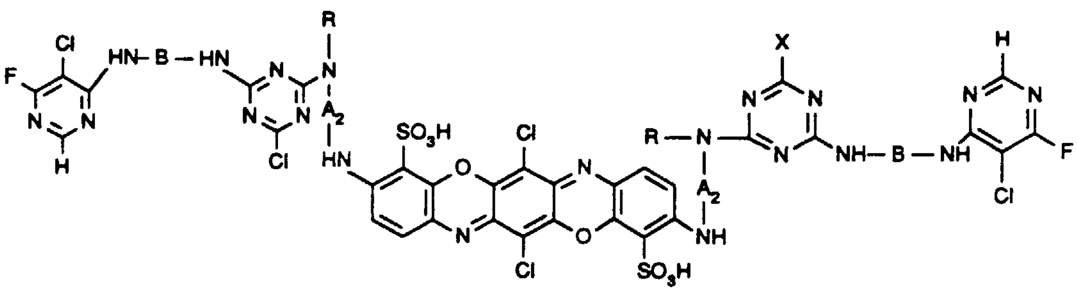

mit den in der Tabelle angegebenen Substituenten-Bedeutungen herstellen. (Farbkennzahl nach Color Index Hue Indication).

Tabelle 2

| Nr. | $A_2$ | R | X | B | Farbkennzahl |
|---|---|---|---|---|---|
| 27 | $-(CH_2)_3-$ | H | F | 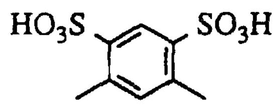 | 14 |
| 28 | $-(CH_2)_2-$ | H | F | 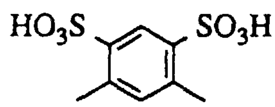 | 14 |
| 29 | $-(CH_2)_4-$ | H | Cl | 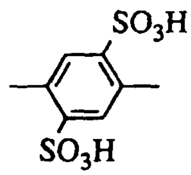 | 14 |
| 30 | $-(CH_2)_3-$ | $CH_3$ | F | 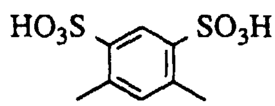 | 14 |
| 31 | $-(CH_2)_2-$ | $CH_2-CH_2-OSO_3H$ | F | 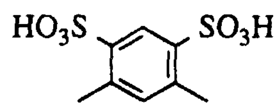 | 14 |
| 32 | $-(CH_2)_3-$ | H | F | 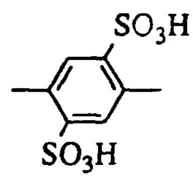 | 14 |

Beispiel 33

48,2 g Kupferphthalocyaninkomponente der Formel,

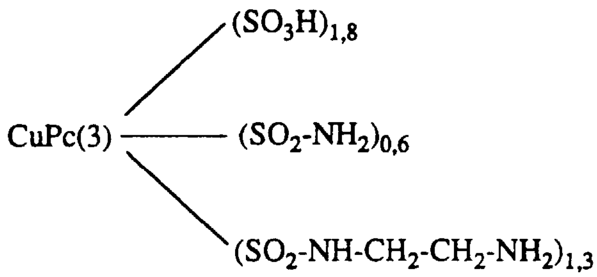

hergestellt nach den Angaben der Europäischen Patentschrift 0 073 267, werden in 450 ml Wasser bei pH 7 gelöst. Man gibt nun bei 20 bis 25°C eine Suspension des Kondensationsproduktes zu, die vorher nach den Angaben des Beispiels 1 aus 12,5 g 2,4-Diaminobenzolsulfonsäure, 10,3 g 4,6-Difluor-5-chlorpyrimidin und 12,9 g Cyanurchlorid hergestellt wurde, und hält im Reaktionsgemisch durch Zugabe von 2n Natronlauge den pH-Wert auf 7,0 bis 7,5. Ist der Natronlaugeverbrauch zum Stillstand gekommen, wird der gebildete Farbstoff der Formel

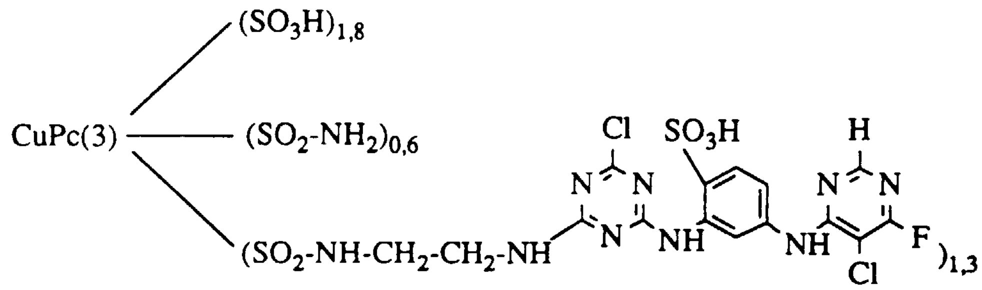

mit Natriumchlorid ausgesalzen und getrocknet. Das blaugrünge Pulver gibt auf Baumwolle und Zellwolle klare türkisblaue Drucke und Färbungen mit guter Fixierausbeute und hervorragenden Naßechtheiten. $\lambda_{max}$ = 669 nm, 627 nm in $H_2O$.

Beispiel 34

Setzt man im Beispiel 33 anstelle der Kupferphthalocyaninkomponente äquimolare Mengen einer Nickelphthalocyaninkomponente der Formel

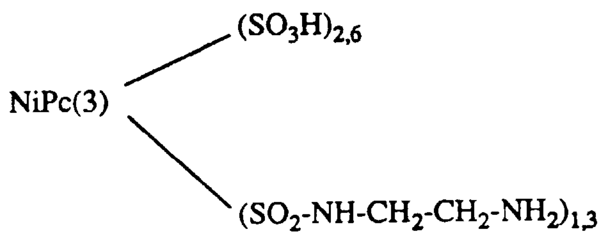

ein, die man nach den Angaben der Deutschen Offenlegungsschrift 3 405 204 hergestellt hat, so erhält man einen Nickelphthalocyanin-Farbstoff der Formel

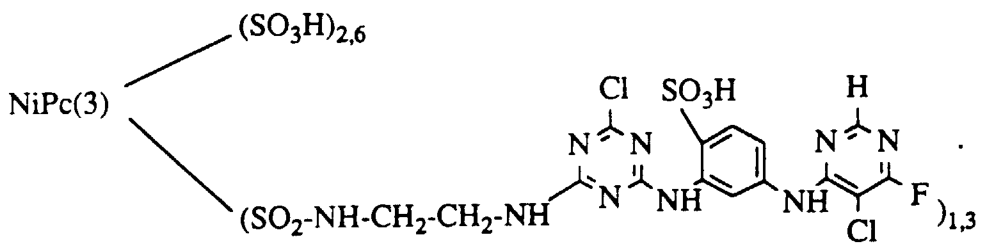

$\lambda_{max}$ = 662 nm in $H_2O$.
Der Farbstoff gibt auf Baumwolle und Zellwolle klare bläulich-grüne Färbungen mit guter Fixierausbeute und ausgezeichneten Naßechtheiten.

Analog lassen sich weitere Metallphthalocyanin-Reaktivfarbstoffe der allgemeinen Formel

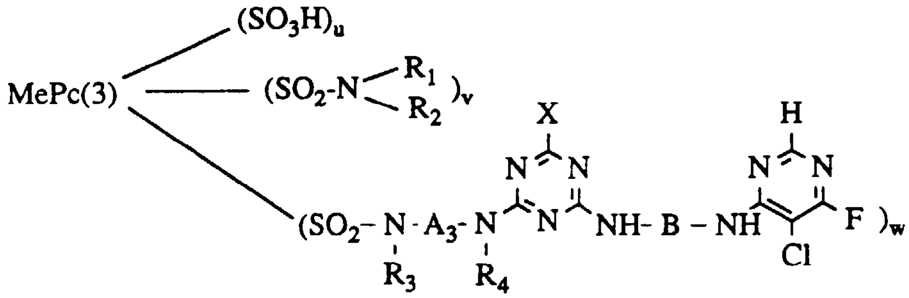

(III)

aufbauen, deren Substituentenbedeutungen und Indizes aus den Beispielen Nr. 35 bis 50 der nachfolgenden Tabelle hervorgehen.

Tabelle 3: Phthalocyanin-Reaktivfarbstoffe der Formel III

| Nr. | Me | $R_1$ | $R_2$ | $R_3$ | $R_4$ | $A_3$ | X | B | u | v | w |
|---|---|---|---|---|---|---|---|---|---|---|---|
| 35 | Cu | H | H | $CH_3$ | $CH_3$ | $-(CH_2)_2-$ | Cl | 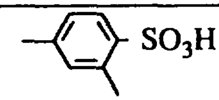 | 1,9 | 0,8 | 1,1 |
| 36 | Cu | - | - | H | H | $-(CH_2)_2-$ | Cl | 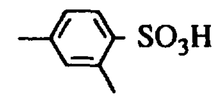 | 2,6 | 0 | 1,3 |
| 37 | Cu | H | $CH_2$-$CH_2$-$SO_3H$ | H | H | $-(CH_2)_2-$ | Cl | 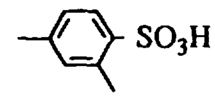 | 2,0 | 0,6 | 1,3 |
| 38 | Cu | $CH_3$ | $CH_2$-$CH_2$-$SO_3H$ | H | H | $-CH_2)_2-$ | F | 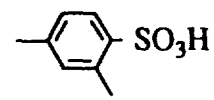 | 1,9 | 0,6 | 1,3 |
| 39 | Cu | H | H | H | H | $-(CH_2)_2-$ | F | 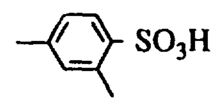 | 1,9 | 0,6 | 1,3 |
| 40 | Cu | H | H | H | H | 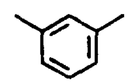 | Cl | 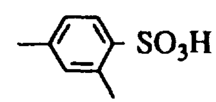 | 2,6 | 0 | 1,3 |
| 41 | Cu | H | $CH_2$-$CH_2$-$OSO_3H$ | H | $CH_3$ | $-(CH_2)_3-$ | Cl | 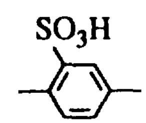 | 2,4 | 0,5 | 1,0 |

Tabelle 3: Phthalocyanin-Reaktivfarbstoffe der Formel III (Fortsetzung)

| Nr. | Me | $R_1$ | $R_2$ | $R_3$ | $R_4$ | $A_3$ | X | B | u | v | w |
|---|---|---|---|---|---|---|---|---|---|---|---|
| 42 | Cu | H | H | H | H | $-(CH_2)_2-$ | Cl | 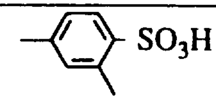 | 1,9 | 0,5 | 1,0 |
| 43 | Cu | H | H | H | H | $-(CH_2)_3-$ | Cl | 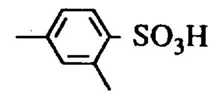 | 2,4 | 0,4 | 1,5 |
| 44 | Ni | H | H | H | H | $-(CH_2)_2-$ | Cl | 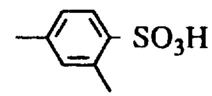 | 2,1 | 0,4 | 1,3 |
| 45 | Ni | H | H | $CH_3$ | $CH_3$ | $-(CH_2)_2-$ | F | 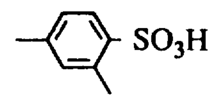 | 2,7 | 0 | 1,2 |
| 46 | Cu | H | H | $R_3+R_4= CH_2-CH_2$ | | $-(CH_2)_2-$ | Cl | 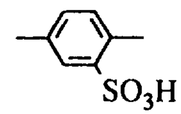 | 2,1 | 0,5 | 1,3 |
| 47 | Cu | H | H | H | H | 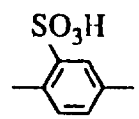 | Cl | 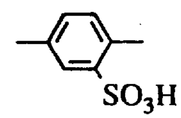 | 2,2 | 0,5 | 1,2 |

**Tabelle 3: Phthalocyanin-Reaktivfarbstoffe der Formel III (Fortsetzung)**

| Nr. | Me | $R_1$ | $R_2$ | $R_3$ | $R_4$ | $A_3$ | X | B | u | v | w |
|---|---|---|---|---|---|---|---|---|---|---|---|
| 48 | Cu | H | H | $CH_3$ | $CH_3$ | $-(CH_2)_2-$ | F | 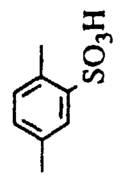 | 2,2 | 0,5 | 1,3 |
| 49 | Ni | - | - | $R_3$-$R_4$=$-CH_2-CH_2-CH_2-$ | | $-(CH_2)_2-$ | Cl | 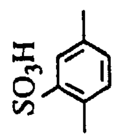 | 2,5 | 0 | 1,3 |
| 50 | Ni | - | - | H | H | $-(CH_2)_2-$ | Cl | 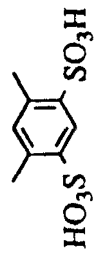 | 2,4 | 0 | 1,4 |

Beispiel 51

40 g 1-Amino-4-(2'-aminomethyl-4'-methyl-6'-sulfophenylamino)-anthrachinon-2-sulfo nsäure werden in 800 ml Wasser und 100 ml Aceton durch Neutralisation mit ca. 45 ml 2n Natronlauge bei pH 7 gelöst. Man kühlt auf 10°C ab und tropft eine Lösung von 17,5 g Cyanurchlorid in 100 ml Aceton in 15 bis 20 Minuten ein. Während des Eintropfens hält man den pH-Wert im Reaktionsgemisch mit 2n Sodalösung auf 6,0 bis 7,0. Wenn der Sodaverbrauch etwa 1 Stunde nach der Cyanurchlorid-Zugabe zum Stillstand gekommen ist, gibt man eine mit konz. Salzsäure auf pH 6 gestellte Lösung von 40 g 2-(2-Aminoethyl)-aminoethanol in 100 ml Wasser zu, steigert die Temperatur auf 20 bis 25°C und hält den pH-Wert mit 2n Natronlauge auf 5,5 bis 6,0. Nach beendeter Kondensation wird der Farbstoff, der im wesentlichen der Formel

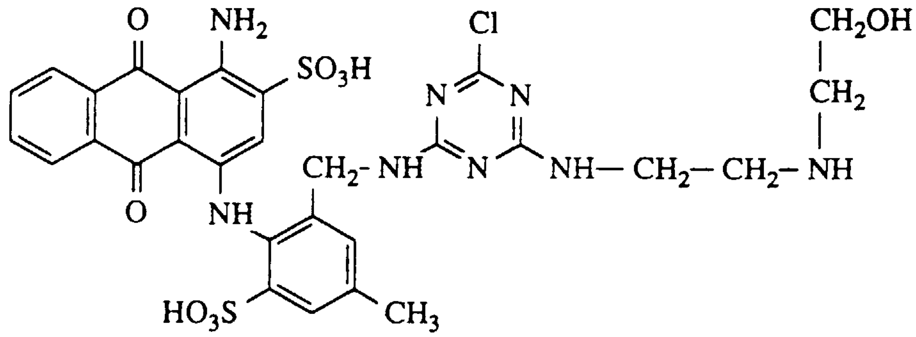

entspricht, ausgesalzen, abgesaugt, mit gesättigter Natriumchloridlösung aminfrei gewaschen und erneut in 500 ml Wasser gelöst.

Zu der Lösung gibt man bei 25°C 14,6 g 4,6-Difluor-5-chlorpyrimidin und hält den pH-Wert mit 2n Natronlauge auf 7,5 bis 8,0. Wenn der Natronlaugeverbrauch zum Stillstand gekommen ist und sich obiges Zwischenprodukt nicht mehr nachweisen läßt, wird das entstandene Produkt der Formel

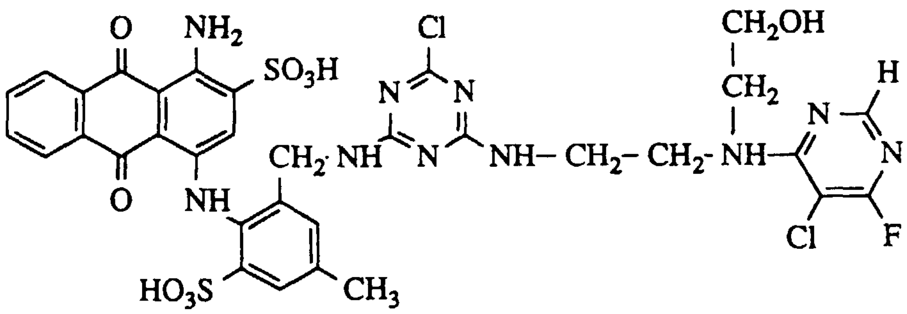

ausgesalzen und bei 50°C im Vakuum getrocknet.

Der Farbstoff gibt auf Cellulosefasern brillante rotstichig blaue Drucke mit ausgezeichneten Naßechtheiten. $\lambda_{max}$ = 624 nm, 587 nm in $H_2O$.

Beispiel 52

Setzt man im Beispiel 51 anstelle des 2-(2-Aminoethyl)-aminoethanols den entsprechenden Schwefelsäurehalbester ein, so erhält man einen Farbstoff der Formel,

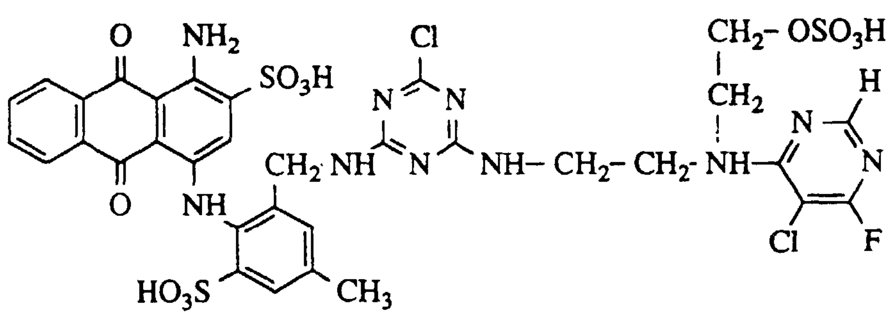

der in Druck- und Continueprozessen auf Baumwolle ähnliche Echtheitseigenschaften aufweist wie der Farbstoff des Beispiels 51. $\lambda_{max}$ = 624 nm, 587 nm in $H_2O$.

Weitere Anthrachinon-Farbstoffe mit Alkylendiaminbrückenglied zwischen Halogentriazinyl- und 6-Fluor-5-chlor4-pyrimidinyl-Rest erhält bei man bei Einsatz folgender Komponenten:

Tabelle 4

| | | | | |
|---|---|---|---|---|
| 53 | 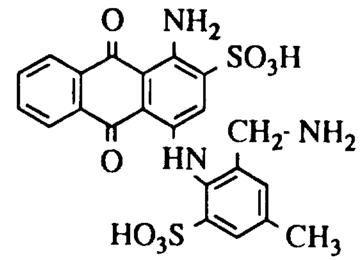 | 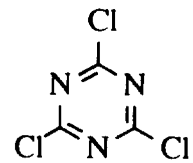 | 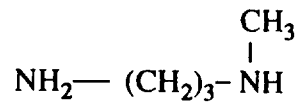 | 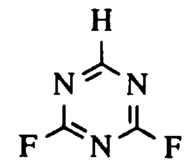 |
| 54 | 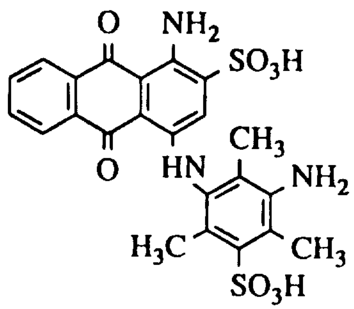 | 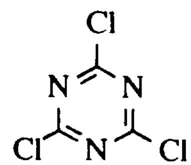 | 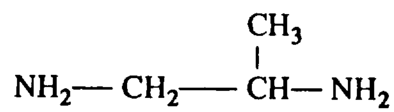 | 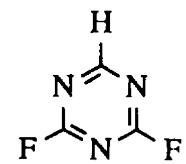 |
| 55 | 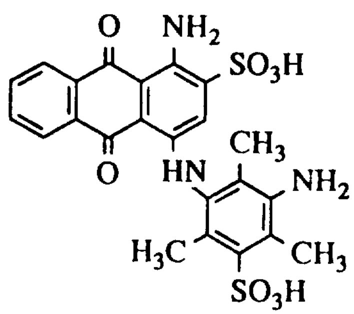 | 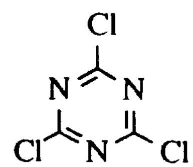 | 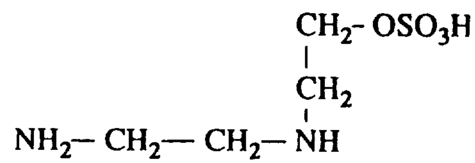 | 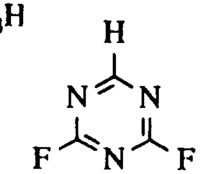 |

**Tabelle 4** (Fortsetzung)

| | | | | |
|---|---|---|---|---|
| 56 | 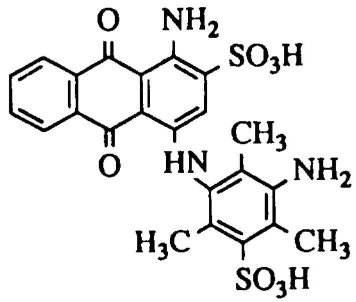 | 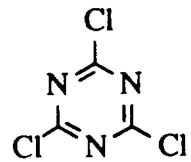 | 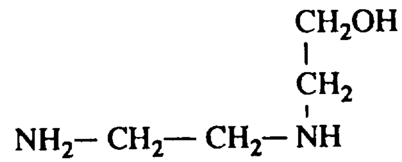 | 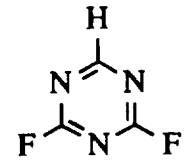 |
| 57 | 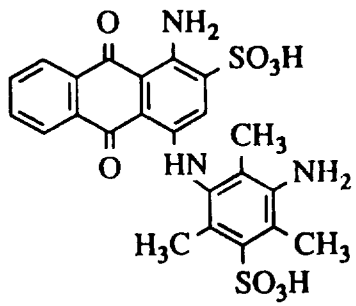 | 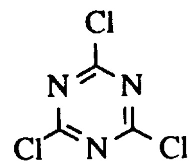 | 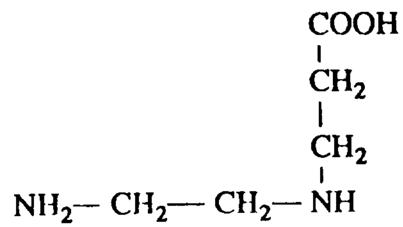 | 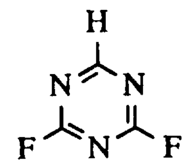 |
| 58 | 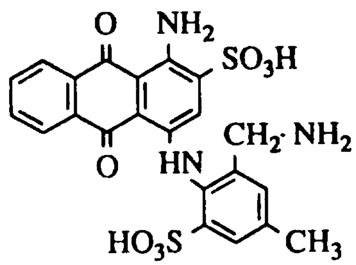 | 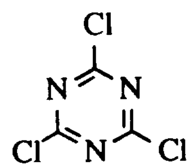 | $NH_2-CH_2-CH_2-NH_2$ | 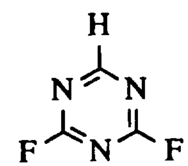 |

Tabelle 4 (Fortsetzung)

| | | | | |
|---|---|---|---|---|
| 59 | 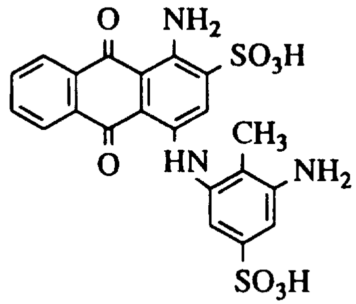 | 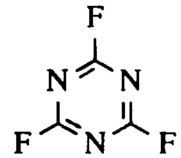 | 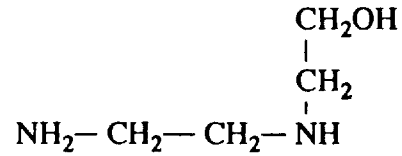 | 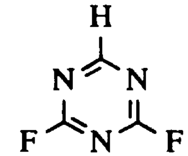 |
| 60 | 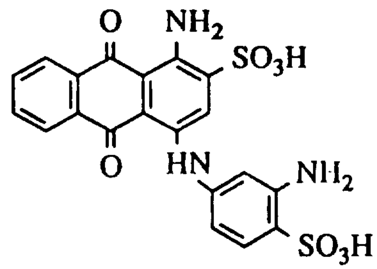 | 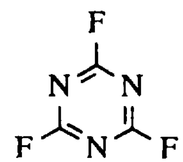 | 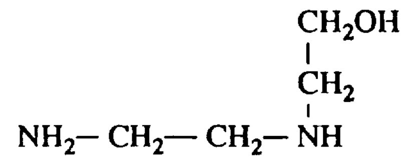 | 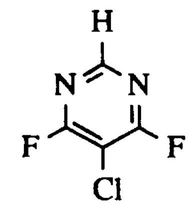 |
| 61 | 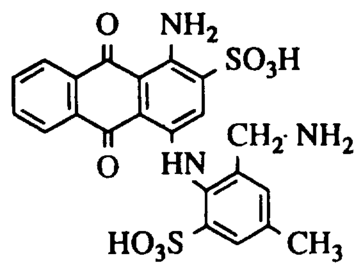 | 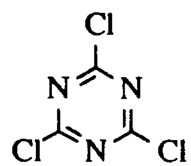 | 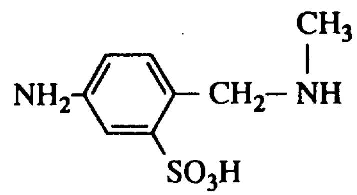 | 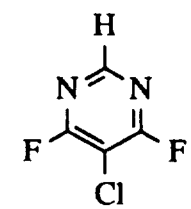 |

**Tabelle 4 (Fortsetzung)**

| | | | | |
|---|---|---|---|---|
| 62 | 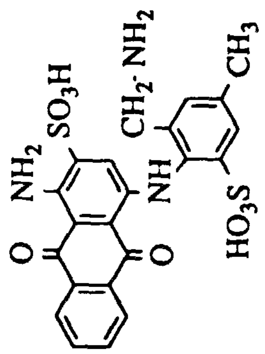 | 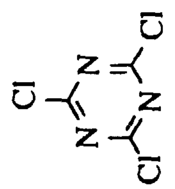 | 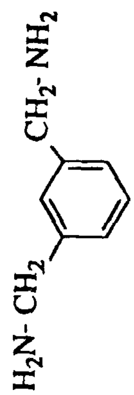 | 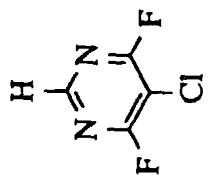 |
| 63 | 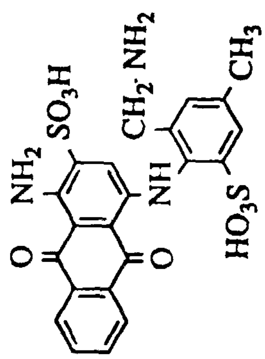 | 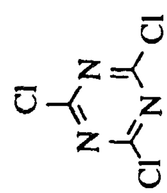 | 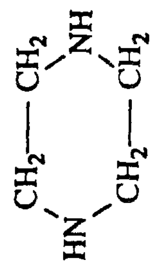 | 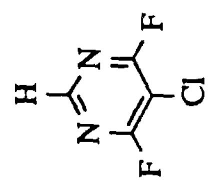 |

Beispiel 64

39,7 g Kupferphthalocyaninverbindung der Formel,

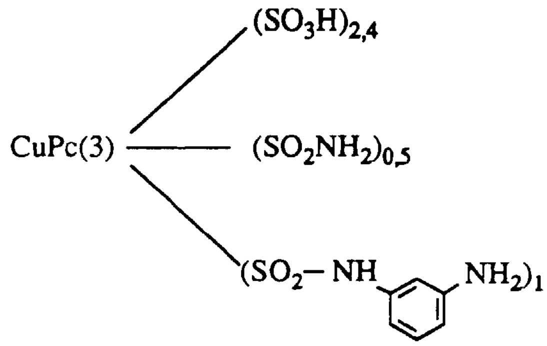

hergestellt durch Kondensation von Kupferphthalocyanintetrasulfochlorid-sulfonsäure mit 3-Aminoacetanilid und Ammoniak und nachfolgende Verseifung der Acetylaminogruppe mit verdünnter Natronlauge, werden bei pH 7 in 450 ml Wasser gelöst.

Man läßt die Lösung zu einer Cyanurchloridsuspension zulaufen, die man durch Lösen von 7,6 g Cyanurchlorid in 40 ml Methylethylketon und Ausgießen der Lösung auf 60 g Eis hergestellt hat. Während des Zulaufens der Farbbase hält man im Reaktionsgemisch durch Außenkühlung die Temperatur auf 0 bis 5°C und den pH-Wert mit 10 %iger Sodalösung auf 4,5 bis 5,0. Nach beendeter Kondensation wird die erhaltene Lösung mit einer auf pH = 5,0 gestellten Lösung von 4,2 g 2-(2-Aminoethyl)-aminoethanol in 40 ml Wasser versetzt.

Man steigert die Temperatur auf 20 bis 25°C und hebt den pH-Wert des Reaktionsgemisches im Laufe einer Stunde mit 2n Natronlauge von 5,0 auf 6,0 bis 6,5 an. Wenn der Stillstand des Natronlaugeverbrauches die Beendigung der Kondensation anzeigt, gibt man zum Reaktionsgemisch 7,2 g 4,6-Difluor-5-chlorpyrimidin hinzu, hält die Temperatur auf 25 bis 28°C und den pH-Wert durch Zugabe weiterer Natronlauge auf 6,5 bis 7,0. Nach mehreren Stunden ist die Kondensation beendet. Der Farbstoff wird ausgesalzen, abgesaugt und im Vakuum getrocknet. Er entspricht der Formel

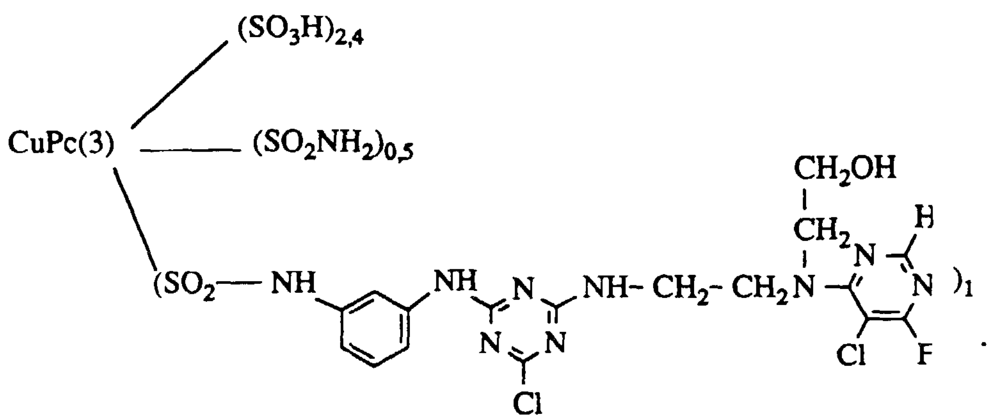

Er färbt Baumwolle in klarem Türkiston mit guten Fixierausbeuten und ausgezeichneten Naßechtheiten. $\lambda_{max}$ = 668 nm in $H_2O$.

Weitere Metallphthalocyanin-Reaktivfarbstoffe der allgemeinen Formel,

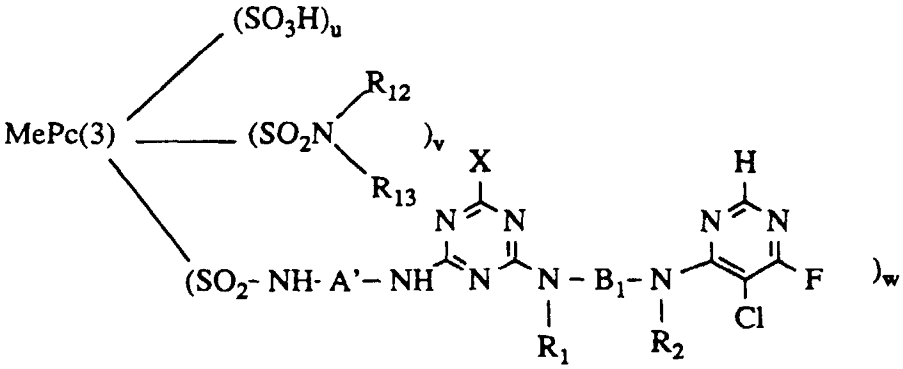

(IV)

deren Substituenten und Indices-Bedeutungen aus der nachstehenden Tabelle hervorgehen, lassen sich analog aufbauen

Tabelle 5

| Nr. | Me | $R_{12}$ | $R_{13}$ | $R_1$ | $R_2$ | A' | $B_1$ | X | u | v | w |
|---|---|---|---|---|---|---|---|---|---|---|---|
| 65 | Cu | H | H | H | $C_2H_5$ | 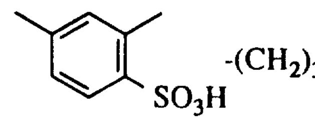 | $-(CH_2)_3-$ | F | 1,1 | 0,5 | 2,3 |
| 66 | Cu | - | - | H | H | 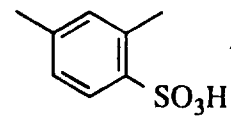 | 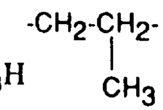 | Cl | 1,4 | 0 | 2,5 |
| 67 | Ni | H | H | H | $CH_2-CH_2OH$ | 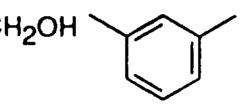 | $-(CH_2)_2-$ | Cl | 1,3 | 0 | 2,5 |
| 68 | Cu | $CH_3$ | $CH_2-CH_2-SO_3H$ | H | $CH_3$ | 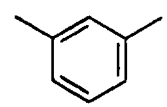 | $-(CH_2)_3-$ | Cl | 1,1 | 0,4 | 2,5 |
| 69 | Ni | H | H | H | H | 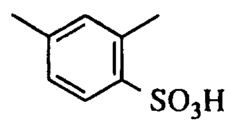 | 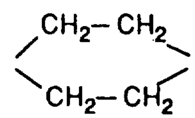 | F | 1,1 | 0,5 | 2,3 |

Beispiel 70

26 g des Natriumsalzes der Verbindung der Formel

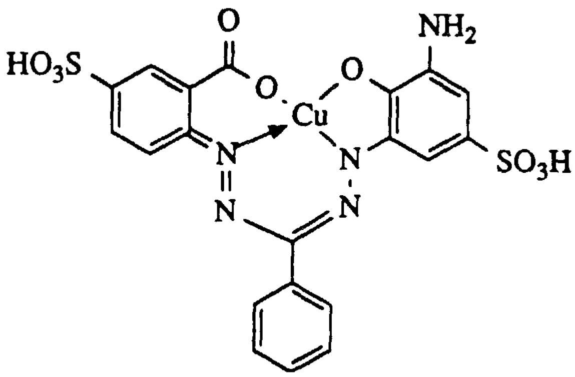

werden in 200 ml Wasser bei pH 7,5 gelöst. Man kühlt auf 0°C ab und gibt 9 g Cyanurchlorid zu und hält dabei den pH-Wert durch Zugabe von Sodalösung bei 5,5. Nach beendeter Umsetzung wird eine neutralisierte Lösung von 9,5 g 2,5-Diaminobenzol-1,4-disulfonsäure in 100 ml Wasser zugetropft Der pH-Wert wird dabei mit Sodalösung bei 7 gehalten. Man läßt die Temperatur innerhalb von 2 h auf 25°C steigen. Nach beendeter Kondensation salzt man den gebildeten Farbstoff aus und saugt ab.

Der erhaltene Farbstoff der Formel

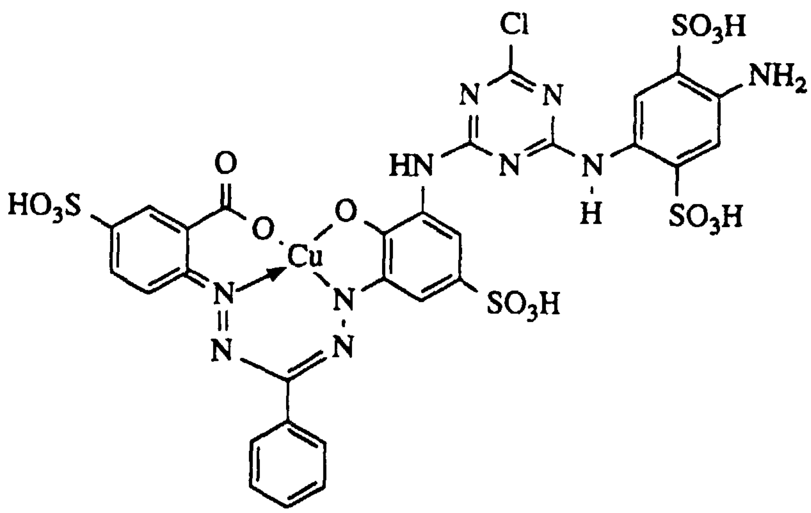

wird als Paste in 300 ml Wasser suspendiert; der pH-Wert der Mischung wird mit 10 %iger Natronlauge auf 8 bis 9 gestellt. Bei 40 bis 50°C werden dann während 30 min 7 g 5-Chlor-4,6-difluorpyrimidin zugegeben, dabei wird der pH-Wert mit 10 %iger Natronlauge auf 8 bis 9 gehalten.

Nach beendeter Umsetzung wird der Farbstoff ausgesalzen, isoliert, getrocknet und gemahlen.

Der so erhaltene Farbstoff der Formel

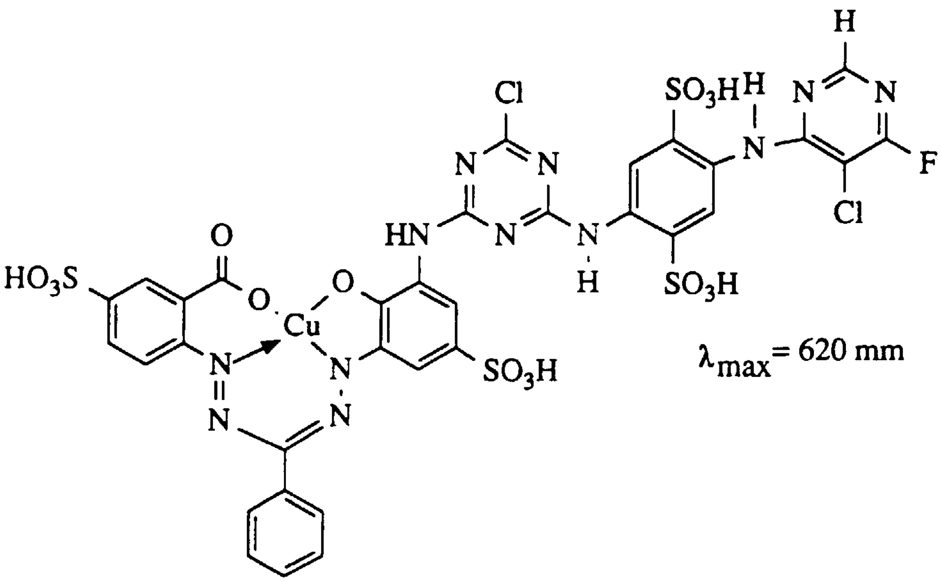

$\lambda_{max}$ = 620 mm

färbt Baumwolle in echten blauen Tönen.

Beispiel 71

20 g 2,5-Diaminobenzolsulfonsäure werden in 200 ml Wasser bei pH 6,5 bis 7,5 gelöst. Bei 20°C werden 12 g 5-Chlor-4,6-Difluorpyrimidin zugegeben, der pH wird auf 6 bis 7 gehalten. Man erwärmt zur Vervollständigung der Kondensation auf 35 bis 45°C. Die resultierende trübe Lösung des Zwischenprodukts der Formel

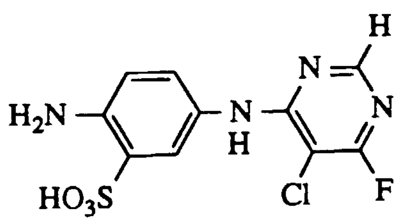

wird klar filtriert, anschließend auf -5°C abgekühlt und mit 9 ml Cyanurfluorid versetzt. Der pH wird dabei mit 10 %iger Natronlauge auf 6 gehalten.

35 g des Natriumsalzes der Verbindung der Formel

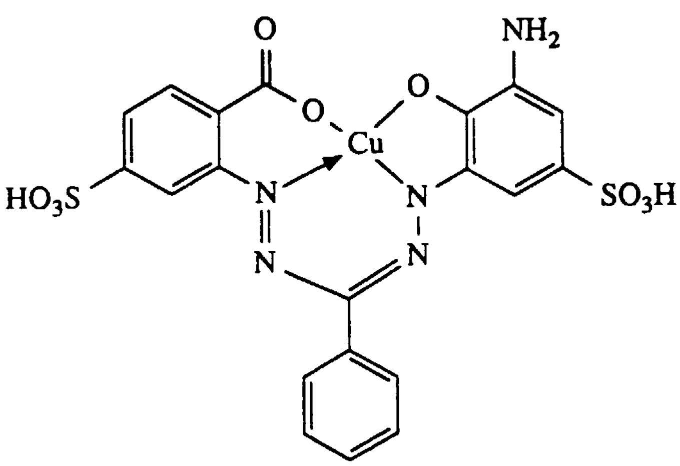

werden in 200 ml Wasser bei pH 7 bis 8 gelöst und portionsweise der Lösung der oben hergestellten Komponente der Formel

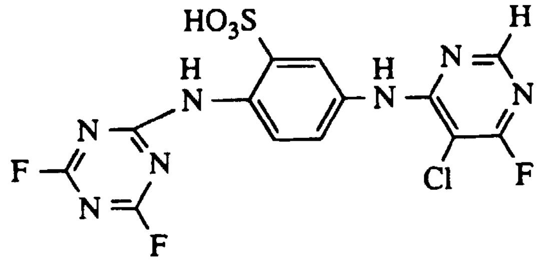

zugesetzt. Dabei wird der pH mit 10 %iger Natronlauge auf 7 gehalten. Man läßt die Temperatur innerhalb von 2 h auf 20°C steigen. Der resultierende Farbstoff der Formel

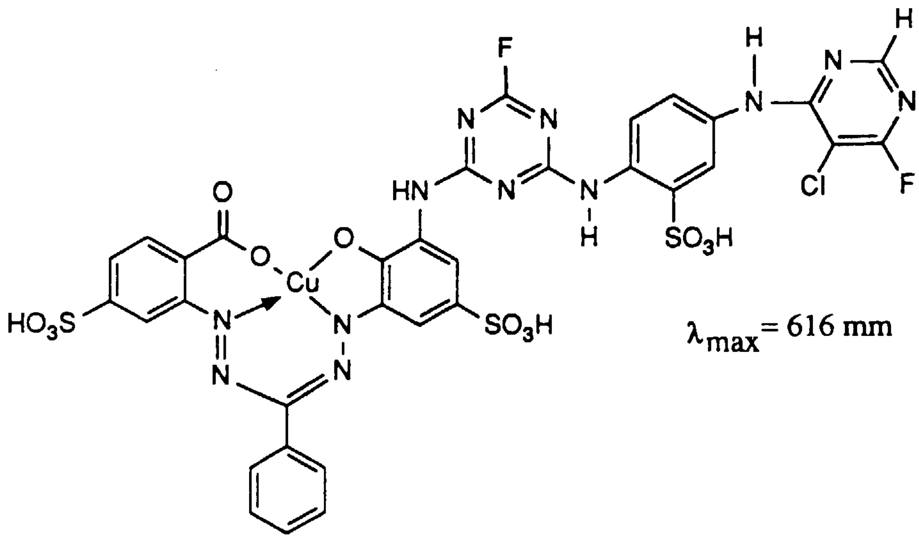

$\lambda_{max}$ = 616 mm

wird ausgesalzen, abfiltriert und getrocknet. Er färbt Baumwolle aus langer Flotte mit sehr guten Fixierausbeuten in blauen Tönen.

Beispiel 72

Weitere wertvolle erfindungsgemäße blaue Formazanfarbstoffe erhält man nach den Angaben der Beispiele 70 oder 71 durch Umsetzung der in Tabelle 6 angegebenen Komponenten.

In der Brücke -$A_4$- ist das mit * gekennzeichnete N-Atom an das C-Atom der Triazinringe gebunden.

Die erhaltenen Farbstoffe besitzen sehr gute faserreaktive Farbstoffeigenschaften und liefern nach den für Cellulosefasern üblichen Färbe- und Druckverfahren farbstarke echte Färbungen und Drucke mit sehr hohen Fixierausbeuten.

**Tabelle 6:**

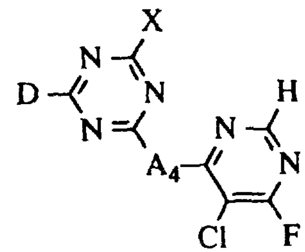

| Nr. | D | Trihalogentriazin | $A_4$ | $\lambda_{max}$ |
|---|---|---|---|---|
| 73 | N-(2-Carboxy-4-sulfophenyl)-N'-(2'-hydroxy-3'-amino-5'-sulfo-phenyl)-ms-phenylformazan, Cu-Komplex, | 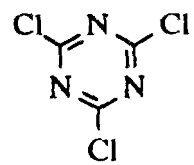 | 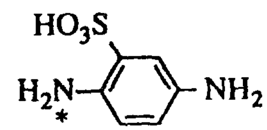 | 624 nm |
| 74 | N-(2-Carboxy-4-sulfophenyl)-N'-(2'-hydroxy-3'-amino-5'-sulfo-phenyl)-ms-phenylformazan, Cu-Komplex, | 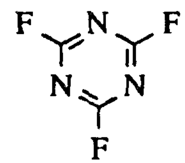 | 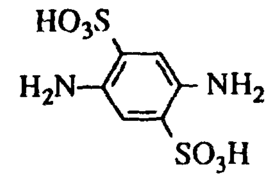 | 616 nm |
| 75 | N-(2-Carboxy-4-sulfophenyl)-N'-(2'-hydroxy-3'-amino-5'-sulfo-phenyl)-ms-phenylformazan, Cu-Komplex, | 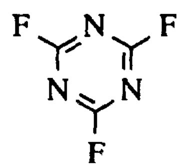 | 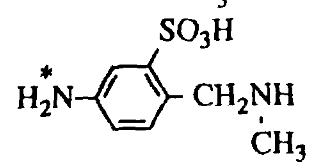 | 626 nm |

Tabelle 6: (Fortsetzung)

| Nr. | D | Trihalogentriazin | $A_4$ | $\lambda_{max}$ |
|---|---|---|---|---|
| 76 | N-(2-Carboxy-4-sulfophenyl)-N'-(2'-hydroxy-3'-amino-5'-sulfo-phenyl)-ms-phenylformazan, Cu-Komplex, | 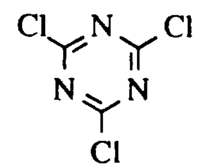 | 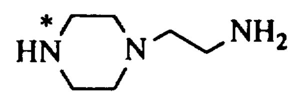 | 620 nm |
| 77 | N-(2-Carboxy-4-sulfophenyl)-N'-(2'-hydroxy-3'-amino-5'-sulfo-phenyl)-ms-phenylformazan, Cu-Komplex, | 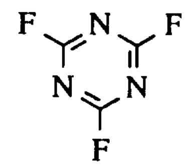 | 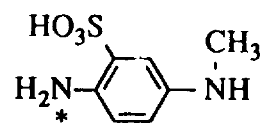 | 622 nm |
| 78 | N-(2-Carboxy-5-sulfophenyl)-N'-(2'-hydroxy-3'-amino-5'-sulfo-phenyl)-ms-phenylformazan, Cu-Komplex, | 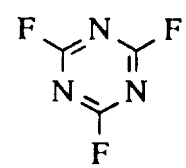 | 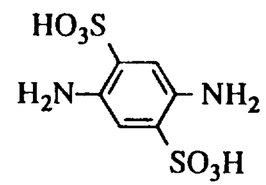 | 610 nm |
| 79 | N-(2-Carboxy-5-sulfophenyl)-N'-(2'-hydroxy-3'-amino-5'-sulfo-phenyl)-ms-phenylformazan, Cu-Komplex, | 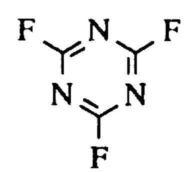 | 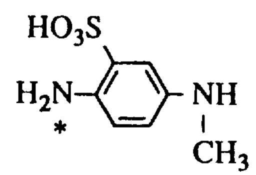 | 616 nm |

Tabelle 6: (Fortsetzung)

| Nr. | D | Trihalogentriazin | $A_4$ | $\lambda_{max}$ |
|---|---|---|---|---|
| 80 | N-(2-Carboxy-5-sulfophenyl)-N'-(2'-hydroxy-3'-amino-5'-sulfo-phenyl)-ms-phenylformazan, Cu-Komplex, | 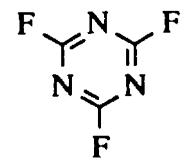 | 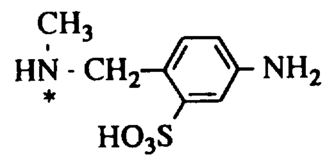 | 618 nm |
| 81 | N-(2-Carboxy-5-sulfophenyl)-N'-(2'-hydroxy-3'-amino-5'-sulfo-phenyl)-ms-phenylformazan, Cu-Komplex, | 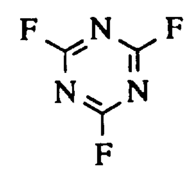 | 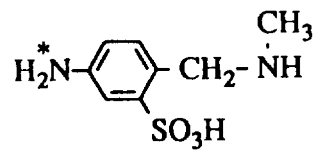 | 620 nm |
| 82 | N-(2-Carboxy-5-sulfophenyl)-N'-(2'-hydroxy-3'-amino-5'-sulfo-phenyl)-ms-phenylformazan, Cu-Komplex, | 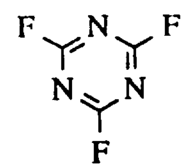 | 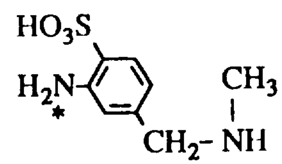 | 622 nm |
| 83 | N-(2-Carboxy-5-sulfophenyl)-N'-(2'-hydroxy-3'-amino-5'-sulfo-phenyl)-ms-phenylformazan, Cu-Komplex, | 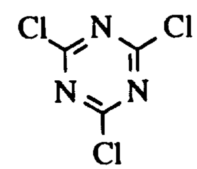 | 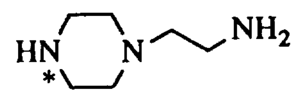 | 614 nm |

Tabelle 6: (Fortsetzung)

| Nr. | D | Trihalogentriazin | $A_4$ | $\lambda_{max}$ |
|---|---|---|---|---|
| 84 | N-(2-Carboxy-5-sulfophenyl)-N'-(2'-hydroxy-3'-amino-5'-sulfophenyl)-ms-phenylformazan, Cu-Komplex, | 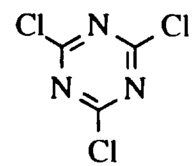 | 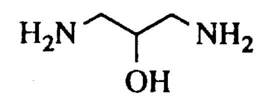 | 616 nm |
| 85 | N-(2-Carboxy-5-sulfophenyl)-N'-(2'-hydroxy-3'-amino-5'-sulfophenyl)-ms-phenylformazan, Cu-Komplex, | 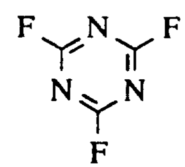 | 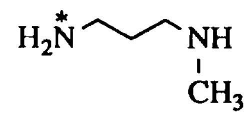 | 614 nm |
| 86 | N-(2-Carboxy-5-sulfophenyl)-N'-(2'-hydroxy-3'-amino-5'-sulfophenyl)-ms-phenylformazan, Cu-Komplex, | 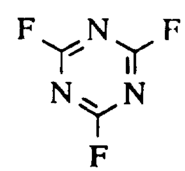 | 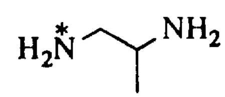 | 610 nm |
| 87 | N-(2-Carboxy-5-sulfophenyl)-N'-(2'-hydroxy-3'-amino-5'-sulfophenyl)-ms-phenylformazan, Cu-Komplex, | 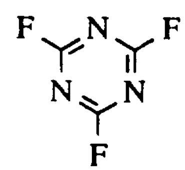 | 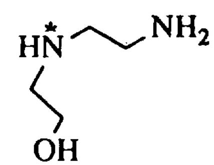 | 612 nm |

Tabelle 6: (Fortsetzung)

| Nr. | D | Trihalogentriazin | $A_4$ | $\lambda_{max}$ |
| --- | --- | --- | --- | --- |
| 88 | N-(2-Carboxy-5-sulfophenyl)-N'-(2'-hydroxy-3'-amino-5'-sulfophenyl)-ms-phenylformazan, Cu-Komplex, | 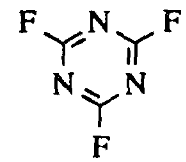 | 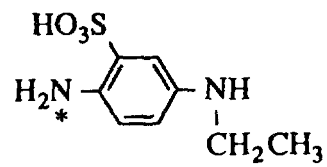 | 615 nm |
| 89 | N-(2-Carboxy-4-aminophenyl)-N'-(2'-hydroxy-5'-sulfophenyl)-ms-(2"-sulfophenyl)-formazan, Cu-Komplex, | 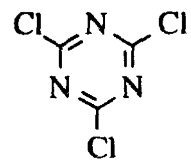 | 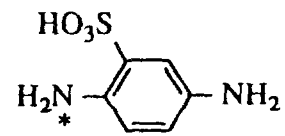 | 600 nm |
| 90 | N-(2-Carboxy-4-aminophenyl)-N'-(2'-hydroxy-5'-sulfophenyl)-ms-(2"-sulfophenyl)-formazan, Cu-Komplex, | 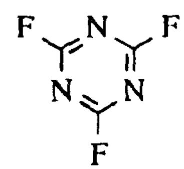 | 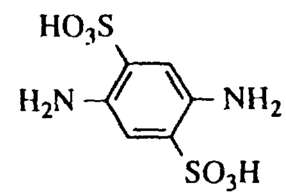 | 600 nm |
| 91 | N-(2-Carboxy-5-aminophenyl)-N'-(2'-hydroxy-3'-amino-5'-sulfophenyl)-ms-(2"-sulfophenyl)-formazan, Cu-Komplex, | 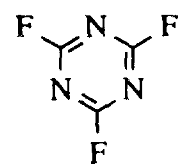 | 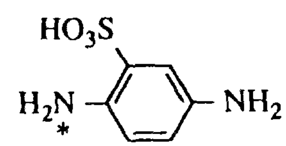 | 592 nm |

Tabelle 6: (Fortsetzung)

| Nr. | D | Trihalogentriazin | $A_4$ | $\lambda_{max}$ |
|---|---|---|---|---|
| 92 | N-(2-Carboxy-4-aminophenyl)-N'-(2'-hydroxy-3',5'-disulfophenyl)-ms-(2"-sulfophenyl)-formazan, Cu-Komplex, | 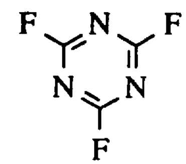 | 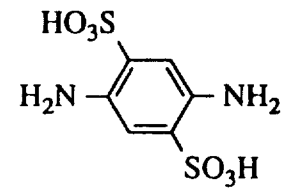 | 608 nm |
| 93 | N-(2-Carboxy-5-sulfophenyl)-N'-(2'-hydroxy-5'-amino-3'-sulfophenyl)-ms-phenylformazan, Cu-Komplex, | 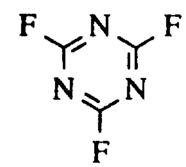 | 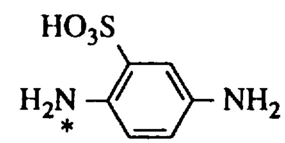 | 634 nm |
| 94 | N-(2-Carboxy-5-sulfophenyl)-N'-(2'-hydroxy-5'-amino-3'-sulfophenyl)-ms-phenylformazan, Cu-Komplex, | 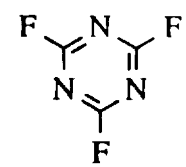 | 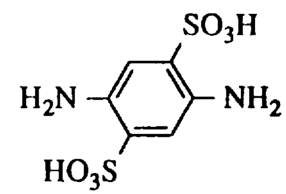 | 636 nm |
| 95 | N-(2-Carboxy-4-sulfophenyl)-N'-(2'-hydroxy-5'-amino-3'-sulfophenyl)-ms-phenylformazan, Cu-Komplex, | 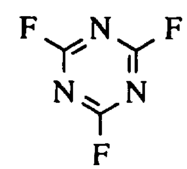 | 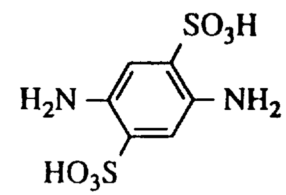 | 638 nm |

Tabelle 6: (Fortsetzung)

| Nr. | D | Trihalogentriazin | $A_4$ | $\lambda_{max}$ |
|---|---|---|---|---|
| 96 | N-(2-Carboxy-4-sulfophenyl)-N'-(2'-hydroxy-5'-sulfophenyl)-ms-(3"-aminophenyl)-formazan, Cu-Komplex, | 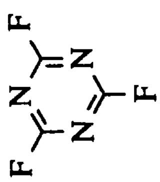 | 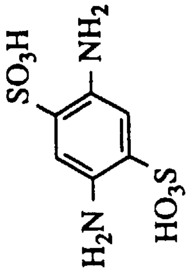 | 622 nm |

Beispiel 97

97.1 9,9 g 2,4-Diaminobenzolsulfonsäure werden in 100 ml Wasser mit LiOH bei pH 6,5 gelöst. Zu dieser Lösung werden bei 35 bis 40°C 7,6 g 4,6-Difluor-5-chlorpyrimidin in 30 min zugetropft und gleichzeitig der pH mit $Li_2CO_3$ bei 6,5 gehalten. Nach 2 h werden 100 g Eis und 1 g NaF zugesetzt. Bei 0°C werden 6,6 g Cyanurfluorid zugegeben, der pH sinkt auf ca. 3,7 bis 3,8. Nach 5 min ist die 2. Kondensation abgeschlossen und man erhält nach Filtration eine dunkle Lösung der Verbindung

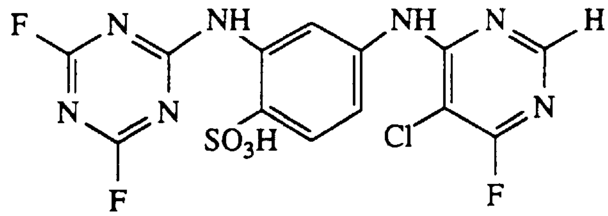

in Form ihres Li-Salzes.

97.2 10,4 g 7-Amino-4-hydroxy-2-naphthalinsulfonsäure werden in 150 ml Wasser bei pH 7 mit LiOH gelöst und die Kondensationslösung aus Beispiel 97.1 zugegeben. Der pH wird dabei mit $Na_2CO_3$-Lösung auf 5,5 gehalten. Nach 20 min wird der pH auf 6,5 angehoben und nach weiteren 20 min wird eine Suspension von diazotierter 1,5-Naphthalinsulfonsäure (14,1 g) zugegeben und der pH auf 6,5 angehoben.

Nach 1 h ist die Azokupplung beendet und der Farbstoff wird ausgesalzen, isoliert und getrocknet, er hat die Formel

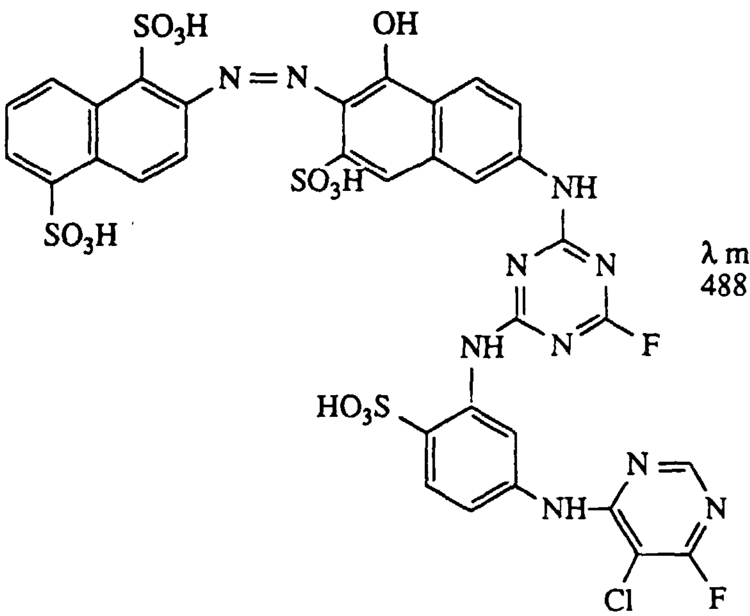

λ max = 488 nm ($H_2O$)

und färbt Baumwolle in brillanten orangen Farbtönen mit sehr guten Naßechtheiten.

97.3 Ein weiterer Weg, den Farbstoff aus Beispiel 97.2 herzustellen besteht darin, den Azofarbstoff der Formel

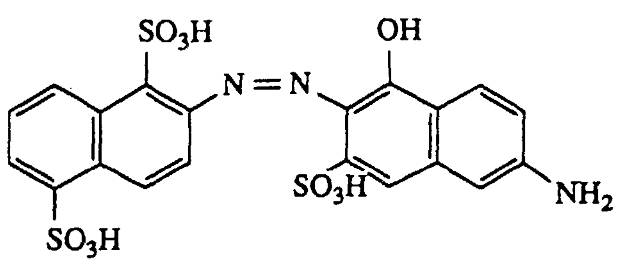

mit der Reaktivkomponente aus Beispiel 97.1 bei pH 7 bis 7,5 kondensiert.

Durch Variation der Diazokomponente (D), Kupplungskomponente (K) und Diamine (W) können die Farbstoffe der allgemeinen Formel

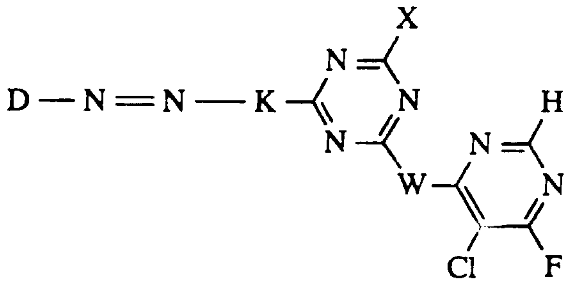

oder

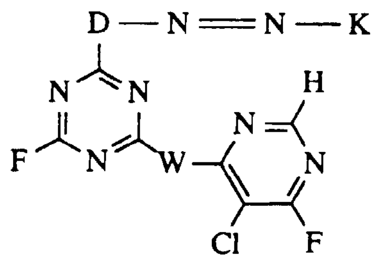

analog den Beispielen 1 und 97 hergestellt werden, sie färben Baumwolle in den angegebenen Tönen.

Tabelle 7

| Nr. | X | D | K | W | Farbton $\lambda_{max}$ ($H_2O$) |
|---|---|---|---|---|---|
| 98 | F | 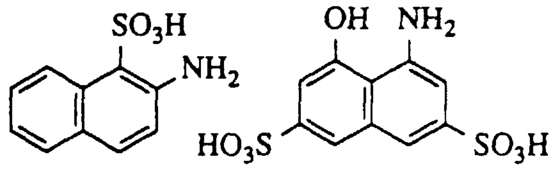 | | 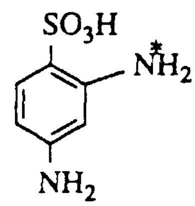 | blaust. Rot 544 nm |
| 99 | F | 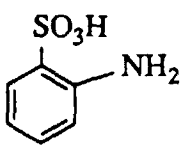 | 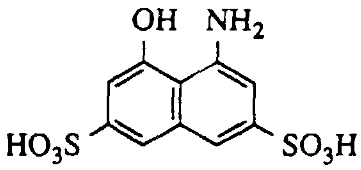 | 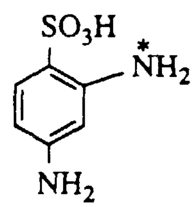 | gelbst. Rot |
| 100 | F | 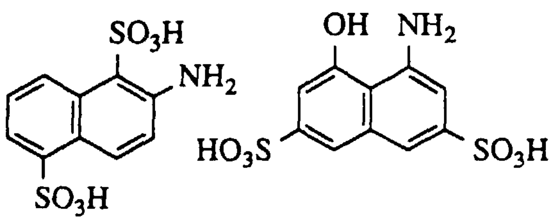 | | 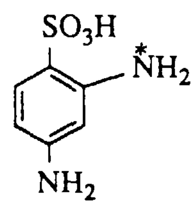 | blaust. Rot |
| 101 | Cl | 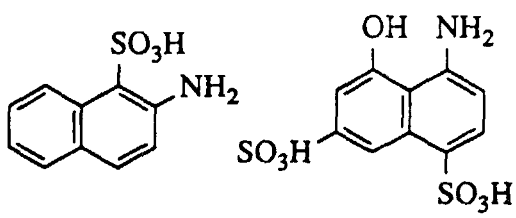 | | 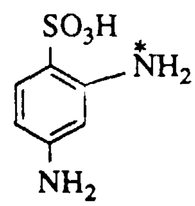 | Rot |
| 102 | F | 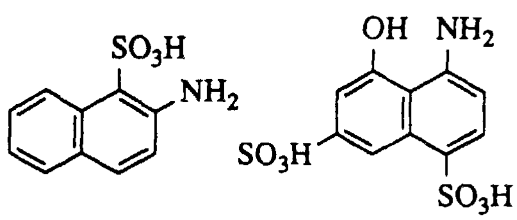 | | 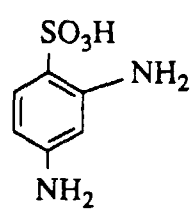 | Rot |

Tabelle 7 (Fortsetzung)

| Nr. | X | D | K | W | Farbton $\lambda_{max}$ ($H_2O$) |
| --- | --- | --- | --- | --- | --- |
| 103 | F | 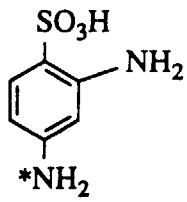 | 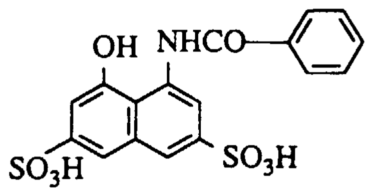 | 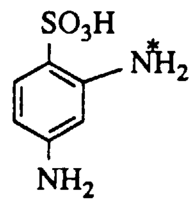 | Rot 515 nm |
| 104 | F | 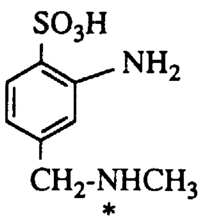 | 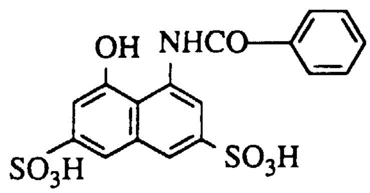 | 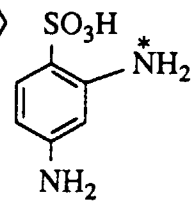 | Rot |
| 105 | F | 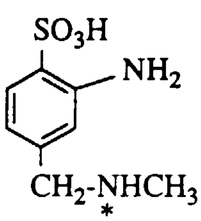 | 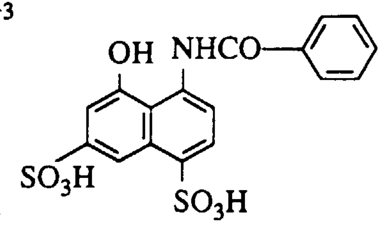 | 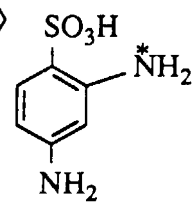 | gelbst. Rot |
| 106 | F | 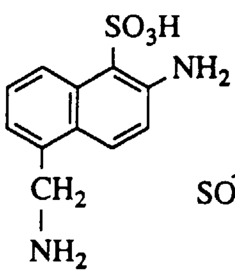 | 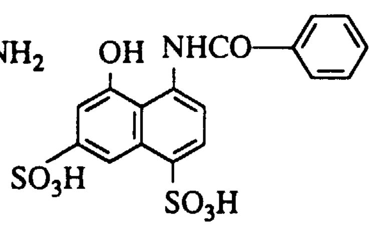 | 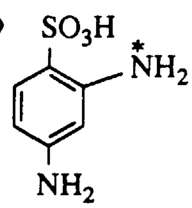 | blaust. Rot 514 nm |
| 107 | F | 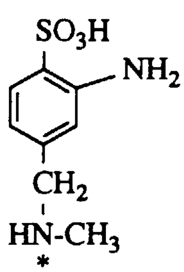 | 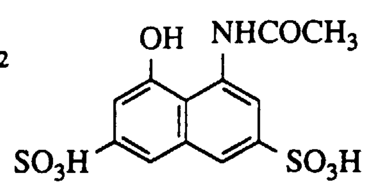 | 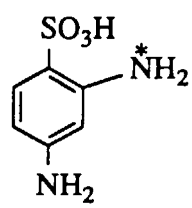 | Rot 504, 526 nm |

Tabelle 7 (Fortsetzung)

| Nr. | X | D | K | W | Farbton $\lambda_{max}$ ($H_2O$) |
|---|---|---|---|---|---|
| 108 | F | 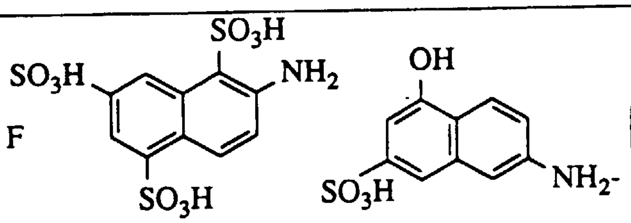 | | 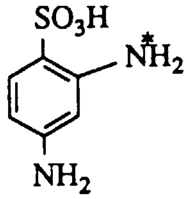 | orange |
| 109 | F | 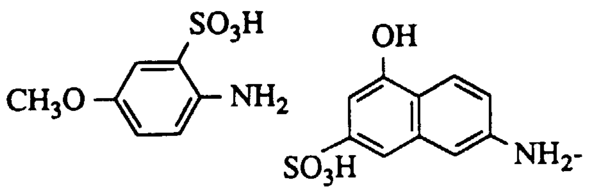 | | 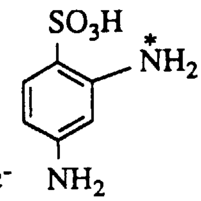 | Scharlach 503 nm |
| 110 | F | 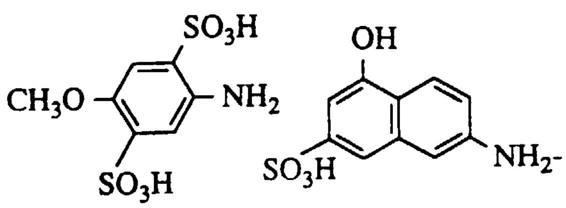 | | 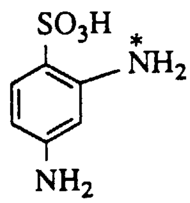 | Orange 498 nm |
| 111 | F | 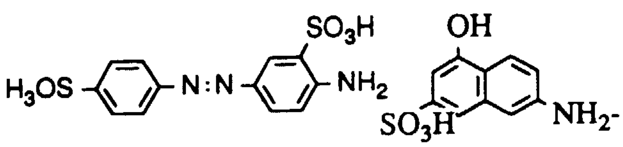 | | 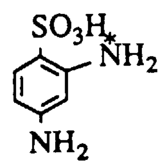 | Rot |
| 112 | F | 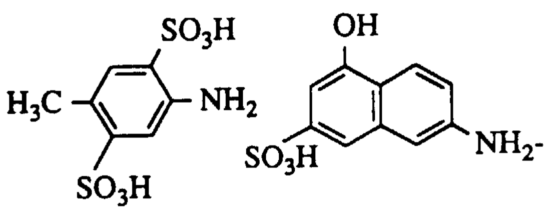 | | 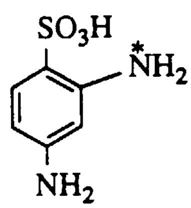 | Orange |

Tabelle 7 (Fortsetzung)

| Nr. | X | D | K | W | Farbton $\lambda_{max}$ ($H_2O$) |
|---|---|---|---|---|---|
| 113 | F | 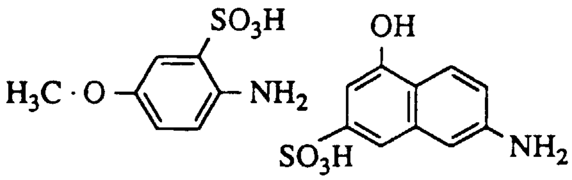 | | 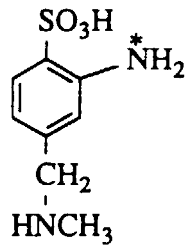 | Scharlach 504 nm |
| 114 | F | 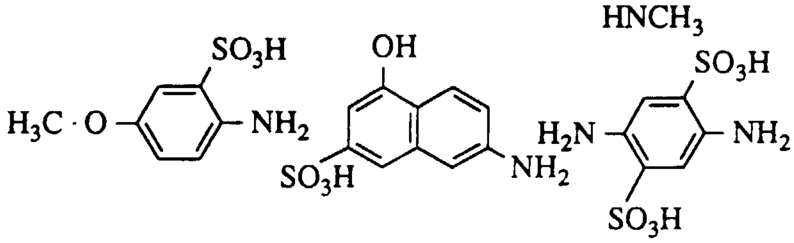 | | | Scharlach 504 nm |
| 115 | F | 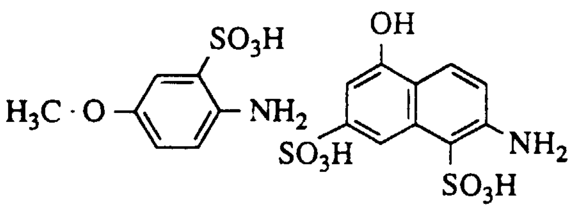 | | 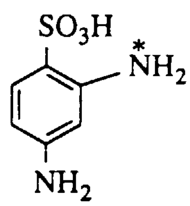 | Scharlach |
| 116 | F | 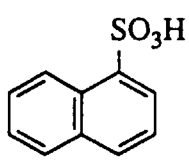 | 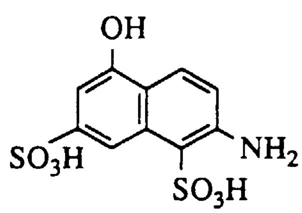 | 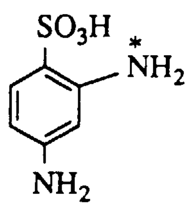 | Scharlach |
| 117 | F | 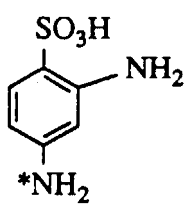 | 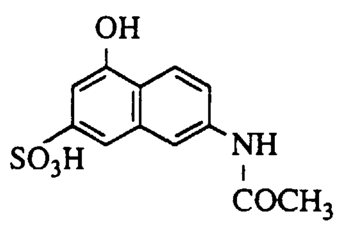 | 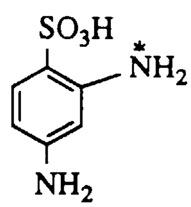 | Orange |

Tabelle 7 (Fortsetzung)

| Nr. | X | D | K | W | Farbton $\lambda_{max}$ ($H_2O$) |
|---|---|---|---|---|---|
| 118 | F | 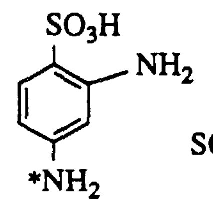 | 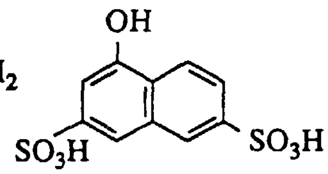 | 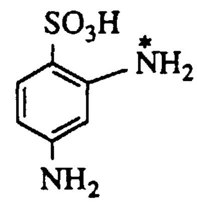 | Orange 488 nm |
| 119 | F | 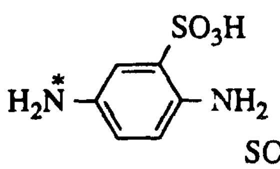 | 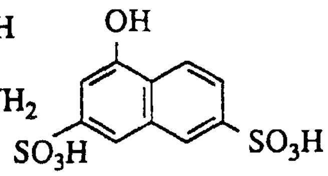 | 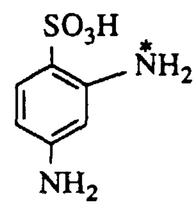 | blaust. Rot |
| 120 | F | 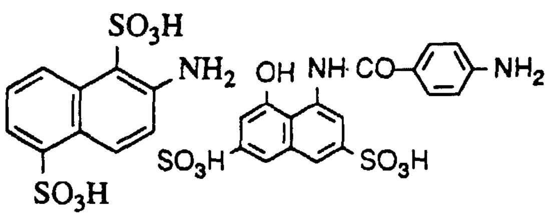 | | 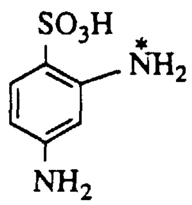 | blaust. Rot |
| 121 | F | 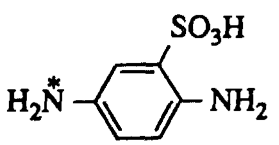 | 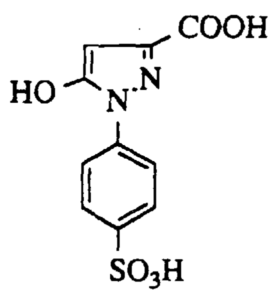 | 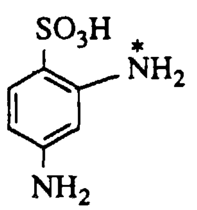 | Goldgelb $\lambda_{max}$ = 448nm |

+) Die mit * gekennzeichneten N-Atome sind mit dem Triazinylrest verbunden.

Beispiel 122

23,6 g 7-Amino-1,3-naphthalindisulfonsäure-mono-Natriumsalz wurden in 150 ml Wasser/30 g Eis und 20 ml konzentrierter Salzsäure angerührt und bei 5 bis 10°C tropfenweise mit 17 ml einer wäßrigen Natriumnitritlösung (300 g $NaNO_2$/l) versetzt. Nach einer Stunde Rühren bei 5 bis 10°C wurde die überschüssige salpetrige Säure mit Amidosulfonsäure entfernt.

Diese cremefarbene Suspension dosierte man nun innerhalb von 30 Minuten zu einer neutralen Lösung der Kupplungskomponente, die aus 13,5 g N-(3-Aminophenyl)-acetamidhydrochlorid, 50 ml Wasser, 50 g Eis und ca. 30 ml einer 10 %igen wäßrigen Lithiumhydroxidlösung bereitet worden war. Dabei hielt man den pH-Wert der Reaktionsmischung mit 20 %iger wäßriger Kaliumhydrogencarbonatlösung konstant bei 6,0 bis 6,5. Die Temperatur sollte nach Möglichkeit 10°C nicht übersteigen. Nach erfolgter Zugabe rührte man 30 Minuten nach, wobei man den pH-Wert weiterhin konstant hielt.

15,2 g 2,4-Diaminobenzolsulfonsäure-mono-Natriumsalz wurden in 100 ml Wasser angerührt und mit 10 %iger Lithiumhydroxidlösung bei pH 6 gelöst. Die Lösung wurde auf 40°C erwärmt und mit 12 g 5-Chlor-4,6-difluorpyrimidin

versetzt. Während dieser Kondensationsreaktion hielt man den pH-Wert mit Lithiumhydroxidlösung konstant bei 5,8 bis 6,2. Nach 2 Stunden bei 40°C war kaum noch eine pH-Änderung zu beobachten und die Kondensation nach HPLC-Analyse vollständig. Das ausgefallene Lithiumfluorid wurde durch Filtration abgetrennt. Mit ca. 200 g Eis wurde anschließend auf 0°C abgekühlt und bei dieser Temperatur mit 10g Trifluor-s-triazin umgesetzt. Unter gleichzeitiger Dosierung von 10 %iger Lithiumhydroxidlösung hielt man den pH-Wert der Zweitkondensation konstant zwischen 6,0 und 6,5. Nach 15 Minuten bei 0 bis 2°C war die Reaktion beendet.

Zu dieser farblosen Kondensationslösung dosierte man bei 0°C und innerhalb von 20 Minuten die oben hergestellte, 8°C warme rotbraune Kupplungslösung und hielt dabei mit 20 %iger Sodalösung den pH-Wert konstant zwischen 7,0 und 7,2.

Innerhalb von 3 Stunden wurde bei konstantem pH 7,0 bis 7,2 auf 25°C erwärmt. Nach einer weiteren Nachrührphase von einer Stunde war die Umsetzung vollständig. Die Farbstofflösung wurde geklärt, um unlösliche Bestandteile, wie Lithiumfluorid, abzutrennen, und mit 50 g Natriumchlorid ausgesalzen. Der ausgefallene Farbstoff wurde abgenutscht und getrocknet. Man erhielt 61 g eines orangeroten Pulvers ($\lambda_{max}$ = 406 nm ($H_2O$)), dem die Struktur

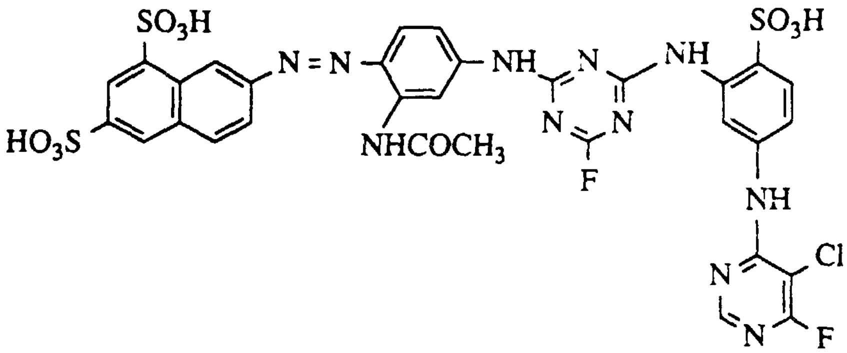

zukommt und das Baumwolle in goldgelben, hochechten Farbtönen färbt.

Durch Variation der Diazokomponente D-$NH_2$, der Kupplungskomponente mit $R^1$ und $R^2$ sowie der Diaminoverbindung waren in Analogie zu Beispiel 122 weitere wertvolle goldgelbe Reaktivfarbstoffe der Formel

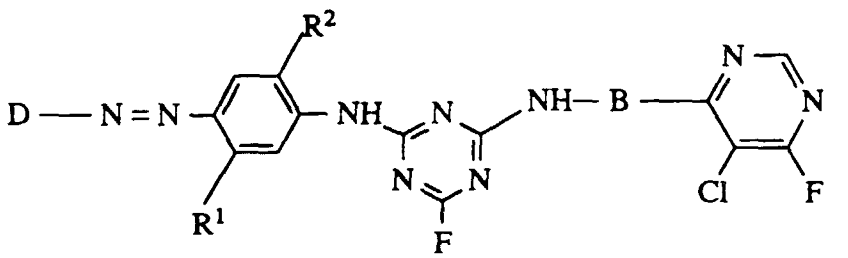

zugänglich, z.B. die in nachfolgender Tabelle 8.

Tabelle 8

| Bsp. | D | $R^1$ | $R^2$ | B*) | $\lambda_{max}$ ($H_2O$) |
|---|---|---|---|---|---|
| 123 | 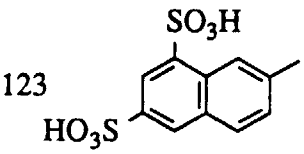 | $CH_3$ | H | 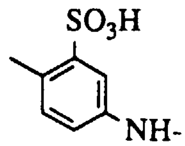 | |
| 124 | 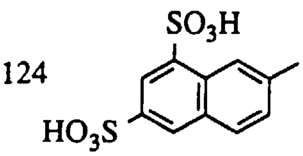 | H | $OCH_3$ | 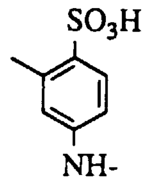 | |
| 125 | 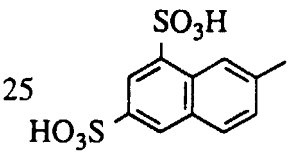 | $NHCONH_2$ | H | 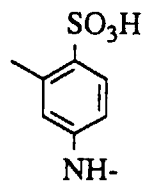 | |
| 126 | 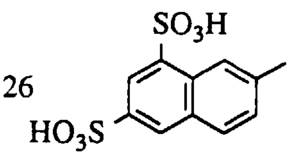 | $NHCOCH_2OH$ | H | 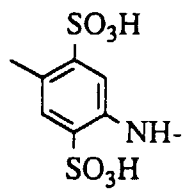 | 408 nm |
| 127 | 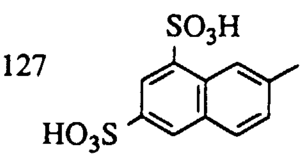 | $NHCOCH_2OSO_3H$ | H | 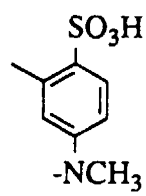 | 412 nm |
| 128 | 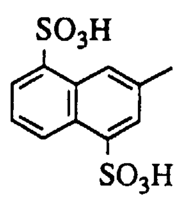 | $CH_3$ | H | 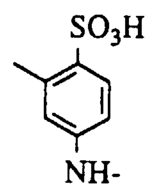 | |
| 129 | 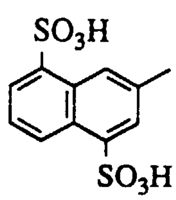 | H | $OCH_3$ | 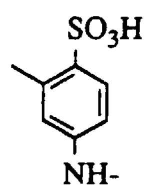 | |

Tabelle 8 (Fortsetzung)

| Bsp. | D | $R^1$ | $R^2$ | B*) | $\lambda_{max}$ ($H_2O$) |
|---|---|---|---|---|---|
| 130 | 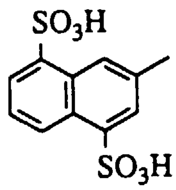 | $OCH_3$ | $CH_3$ | 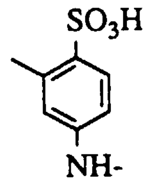 | |
| 131 | 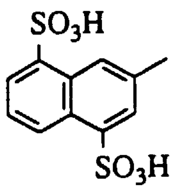 | $NHCOCH_3$ | H | 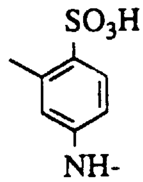 | |
| 132 | 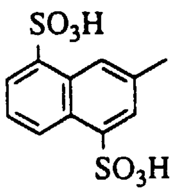 | $NHCOCH_3$ | H | 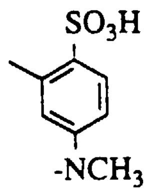 | |
| 133 | 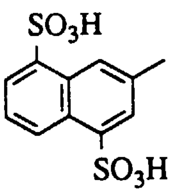 | $NHCONH_2$ | H | 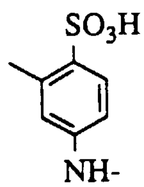 | |
| 134 | 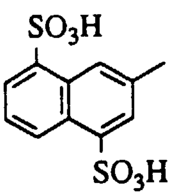 | $NHCOCH_3$ | H | 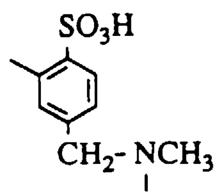 | |
| 135 | 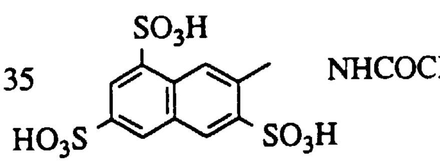 | $NHCOCH_3$ | H | 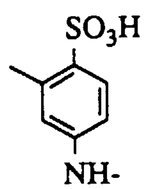 | 408 nm |

Tabelle 8 (Fortsetzung)

| Bsp. | D | $R^1$ | $R^2$ | B*) | $\lambda_{max}$ ($H_2O$) |
|---|---|---|---|---|---|
| 136 | 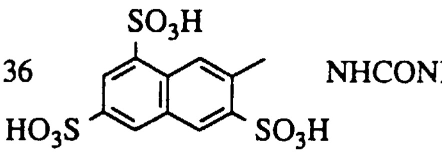 | $NHCONH_2$ | H | 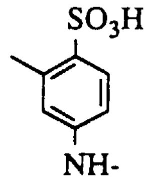 | 426 nm |
| 137 | 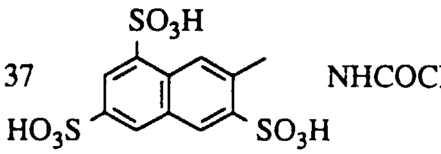 | $NHCOCH_3$ | H | 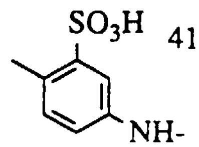 | 410 nm |
| 138 | 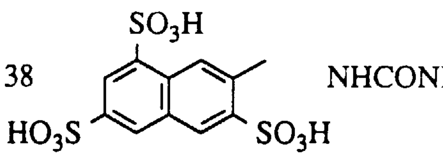 | $NHCONH_2$ | H | 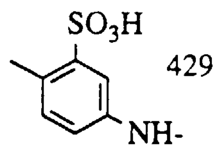 | 429 nm |
| 139 | 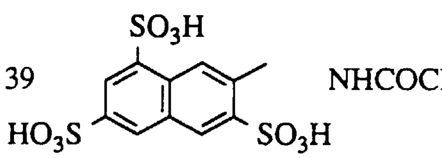 | $NHCOCH_3$ | H | 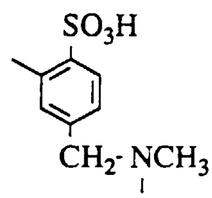 | |
| 140 | 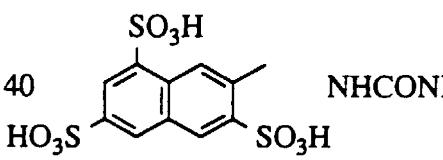 | $NHCONH_2$ | H | 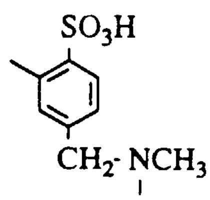 | |
| 141 | 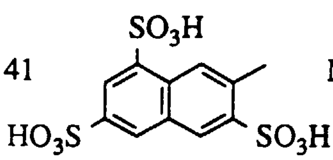 | $NHCONH_2$ | H | 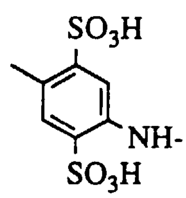 | |

Tabelle 8 (Fortsetzung)

| Bsp. | D | $R^1$ | $R^2$ | B*) | $\lambda_{max}$ ($H_2O$) |
|---|---|---|---|---|---|
| 142 | 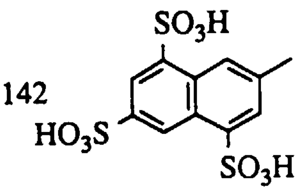 | $NHCOCH_3$ | H | 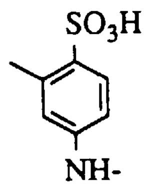 | |
| 143 | 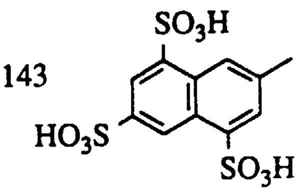 | $NHCONH_2$ | H | 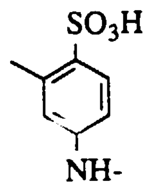 | |
| 144 | 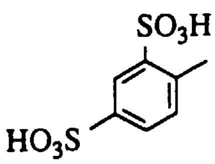 | $NHCOCH_3$ | H | 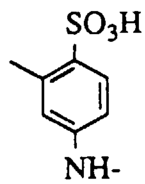 | 391 nm |
| 145 | 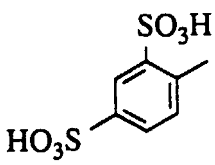 | $NHCONH_2$ | H | 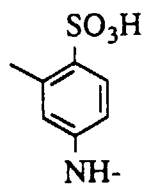 | 395 nm |
| 146 | 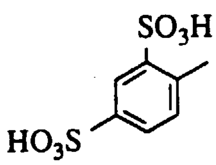 | $NHCOCH_2OH$ | H | 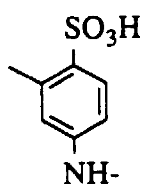 | 392 nm |
| 147 | 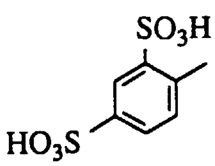 | $NHCOCH_3$ | H | 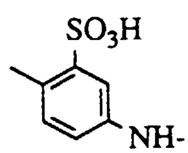 | 394 nm |

Tabelle 8 (Fortsetzung)

| Bsp. | D | $R^1$ | $R^2$ | B*) | $\lambda_{max}$ ($H_2O$) |
|---|---|---|---|---|---|
| 148 | 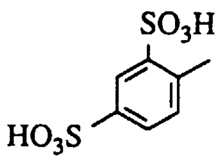 | $NHCONH_2$ | H | 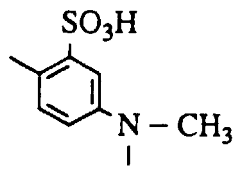 | |
| 149 | 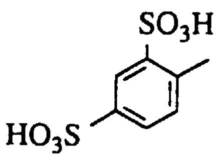 | $NHCOCH_3$ | H | 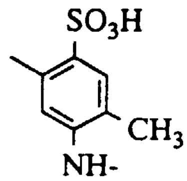 | 392 nm |
| 150 | 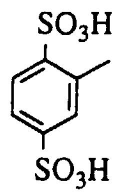 | $NHCOCH_3$ | H | 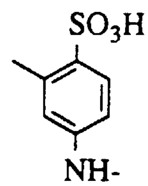 | |
| 151 | 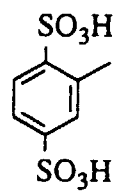 | $NHCONH_2$ | H | 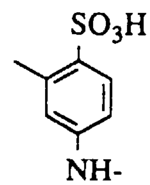 | |
| 152 | 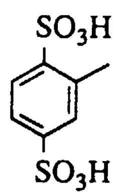 | $NHCONH_2$ | H | 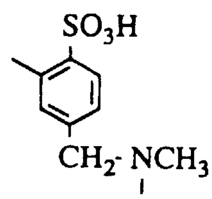 | |
| 153 | 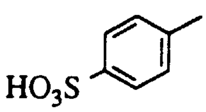 | $NHCOCH_2OSO_3H$ | H | 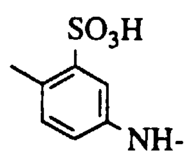 | |

*) Der Pyrimidinyl-Rest ist immer an das N-Atom von B gebunden.

Ersetzt man in Beispiel 122 und den Beispielen der Tabelle 8 Trifluortriazin durch Cyanurchlorid, so erhält man vergleichbar hochechte goldgelbe bifunktionelle Reaktivfarbstoffe, die sich lediglich in einer um 20°C höheren Färbetemperatur unterscheiden.

Beispiel 154

Eine neutrale wäßrige Lösung von 30,9 g 2-Amino-3,6,8-naphthalintrisulfonsäuredinatriumsalz und 6 g Natriumnitrit in 200 ml Wasser wurde innerhalb von 15 Minuten zu einer Mischung aus 40 ml konzentrierter Salzsäure, 50 g Eis und 50 ml Wasser zudosiert. Nach weiteren 30 Minuten Rühren bei 5 bis 10°C war die Diazotierung beendet. Der

Nitritüberschuß wurde mit Amidosulfonsäure entfernt.

Diese Suspension gab man nun innerhalb von 30 Minuten zu einer neutralen Suspension der Kupplungskomponente, die aus 13,5 g N-(3-Aminophenyl)-harnstoff und 100 ml Wasser bereitet worden war. Dabei hielt man den pH-Wert der Reaktionsmischung mit 20 %iger wäßriger Kaliumhydrogencarbonatlösung konstant bei 6,0 bis 6,5. Die Temperatur sollte nach Möglichkeit 15°C nicht übersteigen. Nach erfolgter Zugabe rührte man 15 Minuten nach, wobei man den pH-Wert der orangeroten Lösung weiterhin konstant hielt.

Zu dieser rotbraunen Kupplungslösung fügte man soviel Eis, bis eine Temperatur von 0°C erreicht war. Es wurde zügig mit 12 g Cyanurfluorid versetzt und dabei gleichzeitig der pH-Wert durch Zugabe einer 20 %igen Kaliumhydrogencarbonatlösung konstant bei 6,0 bis 6,2 gehalten. Die Kondensation war nach 10 Minuten beendet. Mit wenigen Tropfen Salzsäure wurde ein pH-Wert von 5,8 eingestellt, und diese Lösung mit einer Lösung von 5,8 g 1,2-Diaminopropan in 10 ml Wasser, die ebenfalls mit Salzsäure auf pH 5,8 eingestellt war, versetzt. Anschließend erwärmte man innerhalb von 2 Stunden die rote Reaktionsmischung auf 20°C und hielt dabei den pH-Wert mit Kaliumhydrogencarbonatlösung bei 5,8 bis 5,9. Dabei resultierte kurzzeitig eine Lösung, aus der während einer einstündigen Nachrührphase bei pH 6,0 bis 6,1 ein orangeroter Niederschlag ausfiel. Dieses Farbstoffzwischenprodukt wurde abgesaugt, und die isolierte feuchte Paste in 200 ml Wasser bei pH 6,0 angerührt. Anschließend wurde mit 12 g 5-Chlor-4,6-difluorpyrimidin versetzt, auf 45°C aufgeheizt und bei pH 7,5 bis 8,0 kondensiert. Die pH-Steuerung erfolgte mittels Sodalösung. Die Kondensation war nach ca. 2 Stunden beendet. Die Farbstofflösung wurde klarfiltriert und mit 25 g Kochsalz ausgesalzen. Nach Abnutschen und Trocknen resultierten 58 g eines orangeroten Pulvers ($\lambda_{max}$ = 428 nm ($H_2O$)), dem die Struktur

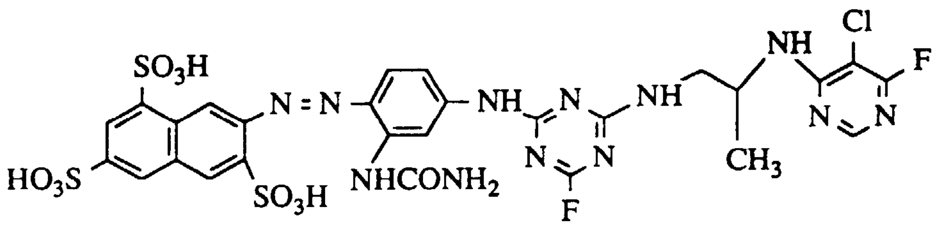

zukommt und das Baumwolle in rotstichig gelben Farbtönen färbt.

Durch Variation der Diazokomponente $D\text{-}NH_2$, der Kupplungskomponente mit $R^1$ sowie der aliphatischen Diaminoverbindung waren in Analogie zu Beispiel 154 weitere wertvolle gelbe bis goldgelbe Farbtöne der folgenden Struktur herstellbar.

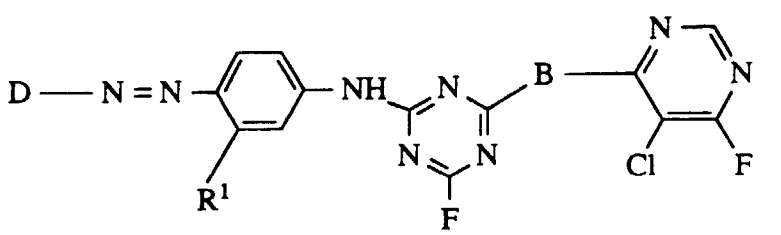

Tabelle 9

| Bsp. | D | $R^1$ | B*) | $\lambda_{max}$ ($H_2O$) |
|---|---|---|---|---|
| 155 | 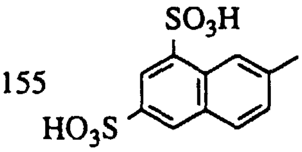 | $CH_3$ | -NH-$CH_2CH_2\overset{*}{N}H$- | |
| 156 | 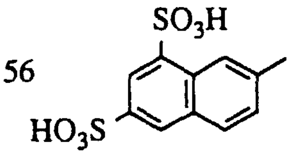 | $OCH_3$ | -NH-$CH_2$-CH($CH_3$)-$\overset{*}{N}H$- | |
| 157 | 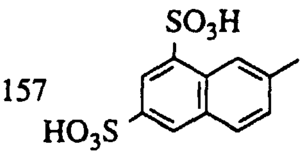 | $NHCOCH_3$ | -NH-$CH_2$-CH($CH_3$)-$\overset{*}{N}H$- | |
| 158 | 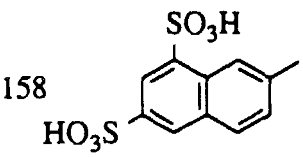 | $NHCOCH_2OSO_3H$ | -NH<br>\|<br>$CH_2$-CH($CH_3$)-$\overset{*}{N}H$- | 408 nm |
| 159 | 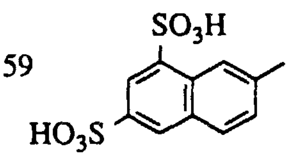 | $NHCOCH_3$ | 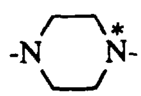 | |
| 160 | 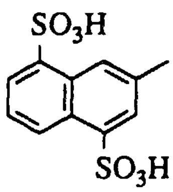 | $NHCOCH_3$ | -NH-$CH_2$-CH($CH_3$)-$\overset{*}{N}H$ | |
| 161 | 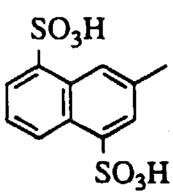 | $NHCOCH_3$ | -NH-$CH_2$-CH(OH)-$CH_2$-$\overset{*}{N}H$ | |

Tabelle 9 (Fortsetzung)

| Bsp. | D | $R^1$ | B*) | $\lambda_{max}$ ($H_2O$) |
|---|---|---|---|---|
| 162 | 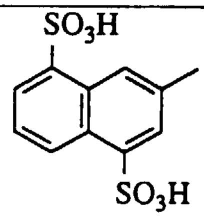 | $NHCONH_2$ | $-NHCH_2CH_2\overset{*}{N}H-$ | |
| 163 | 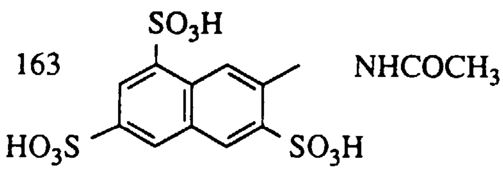 | $NHCOCH_3$ | $-NHCH_2CH_2\overset{*}{N}H-$ | 412 nm |
| 164 | 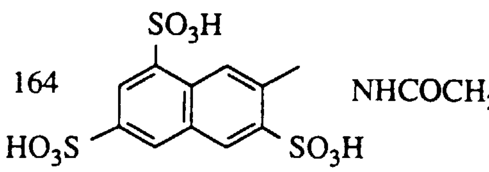 | $NHCOCH_2OH$ | $-NHCH_2CH_2\overset{*}{N}H-$ | 410 nm |
| 165 | 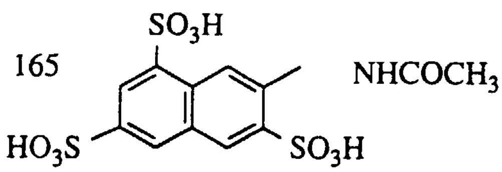 | $NHCOCH_3$ | $-NHCH_2-CH(CH_3)-\overset{*}{N}H-$ | 412 nm |
| 166 | 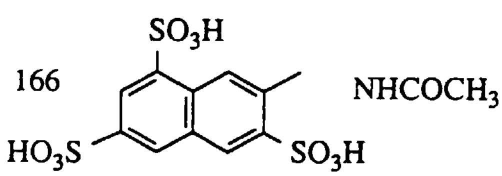 | $NHCOCH_3$ | 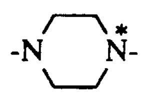 | 416 nm |
| 167 | 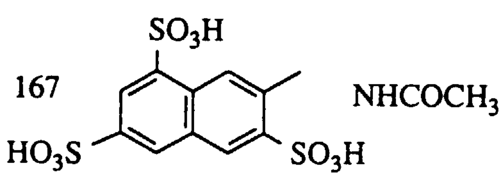 | $NHCOCH_3$ | 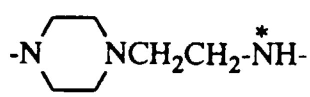 | 410 nm |

Tabelle 9 (Fortsetzung)

| Bsp. | D | $R^1$ | B*) | $\lambda_{max}$ ($H_2O$) |
|---|---|---|---|---|
| 168 | 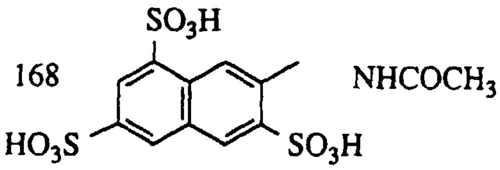 | $NHCOCH_3$ | $NH-(CH_2)_4-CH(CO_2H)-\overset{\bullet}{N}H-$ | |
| 169 | 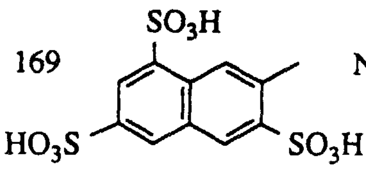 | $NHCOCH_3$ | $NH-(CH_2)_3-\overset{*}{N}H-$ | 412 nm |
| 170 | 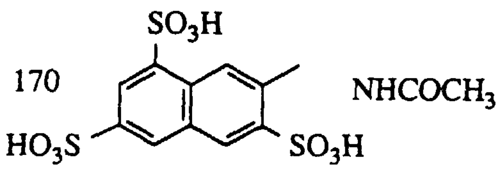 | $NHCOCH_3$ | $-NH-(CH_2)_3-\overset{*}{N}H-$<br>$CH_3$ | |
| 171 | 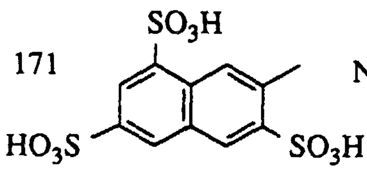 | $NHCONH_2$ | $-NH-CH_2CH_2-\overset{*}{N}H-$ | 426 nm |
| 172 | 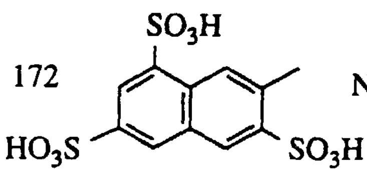 | $NHCONH_2$ | $-NHCH_2CH(OH)CH_2-\overset{\bullet}{N}H-$ | 428 nm |
| 173 | 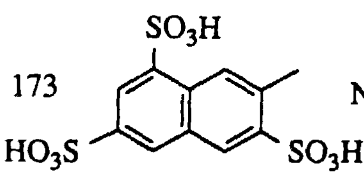 | $NHCONH_2$ | 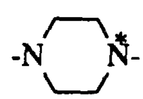 | 432 nm |

Tabelle 9 (Fortsetzung)

| Bsp. | D | $R^1$ | B*) | $\lambda_{max}$ ($H_2O$) |
|---|---|---|---|---|
| 174 | 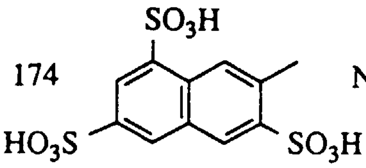 | $NHCONH_2$ | 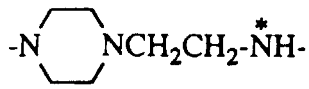 | 416 nm |
| 175 | 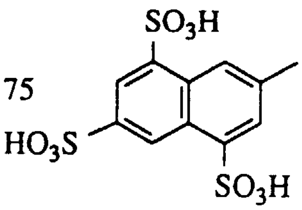 | $NHCOCH_3$ | $-NHCH_2CH(CH_3)\overset{*}{N}H-$ | |
| 176 | 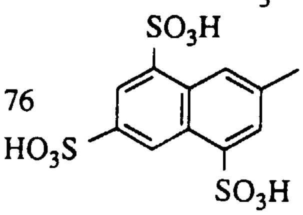 | $NHCONH_2$ | $-NHCH_2CH(CH_3)\overset{*}{N}H-$ | |
| 177 | 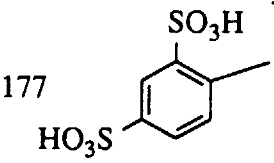 | $NHCOCH_3$ | $-NHCH_2CH_2\overset{*}{N}H-$ | 396 nm |
| 178 | 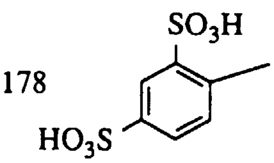 | $NHCOCH_3$ | $-NHCH_2CH(CH_3)\overset{*}{N}H-$ | 397 nm |
| 179 | 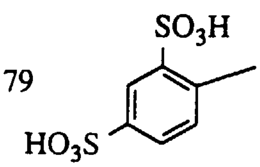 | $NHCONH_2$ | $-NHCH_2CH(CH_3)\overset{*}{N}H-$ | 410 nm |

Tabelle 9 (Fortsetzung)

| Bsp. | D | $R^1$ | B*) | $\lambda_{max}$ ($H_2O$) |
|---|---|---|---|---|
| 180 | 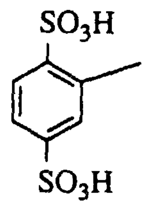 | $NHCOCH_3$ | -NHCH₂CH(CH₃)N*H- | |
| 181 | 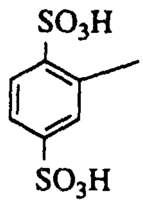 | $NHCONH_2$ | 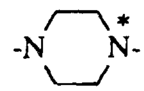 | |
| 182 | 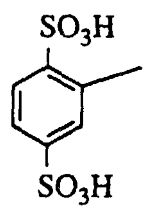 | $NHCONH_2$ | 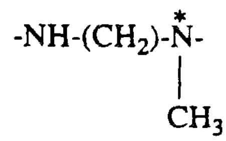 | |

*) Der Pyrimidinylrest ist immer an das N-Atom mit dem * gebunden.

Ersetzt man in Beispiel 154 und den Beispielen der Tabelle 9 Trifluortriazin durch Cyanurchlorid, so erhält man vergleichbar hochechte goldgelbe Reaktivfarbstoffe, wie

Beispiel 183

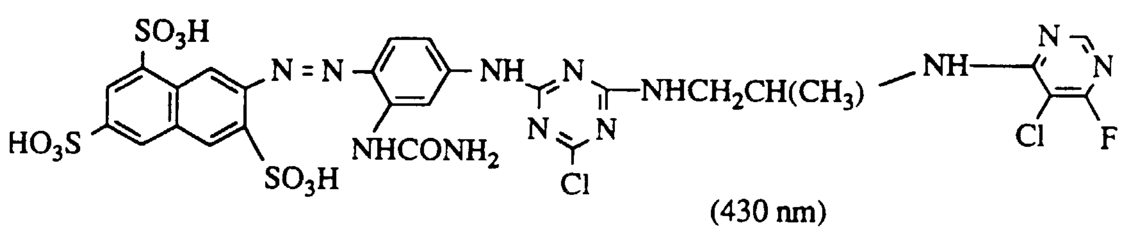

(430 nm)

Beispiel 184

Wie in Beispiel 122 beschrieben wurden 15,2 g 2,4-Diaminobenzolsulfonsäuremono-Na-salz zunächst mit 12 g 5-Chlor-4,6-difluorpyrimidin und danach mit 10 g Trifluor-s-triazin (Cyanurfluorid) kondensiert.

Zu dieser Lösung fügte man bei 0°C und pH 6,0 bis 6,2 30 g der Farbbase der Formel

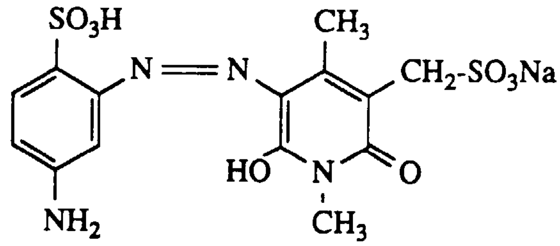

und hielt anschließend mit 20 %iger Sodalösung den pH-Wert konstant bei 7,0. Innerhalb von 3 Stunden wurde bei pH 7,0 bis 7,2 auf 25°C erwärmt. Die Farbstofflösung wurde durch Filtration geklärt und mit 50 g Natriumchlorid versetzt. Es wurde 1 Stunde gerührt und der ausgefallene Farbstoff durch Abnutschen isoliert.

Nach dem Trocknen und Mahlen erhielt man ca. 60 g eines gelben Pulvers ($\lambda_{max}$ = 424 nm ($H_2O$)), dem die Struktur

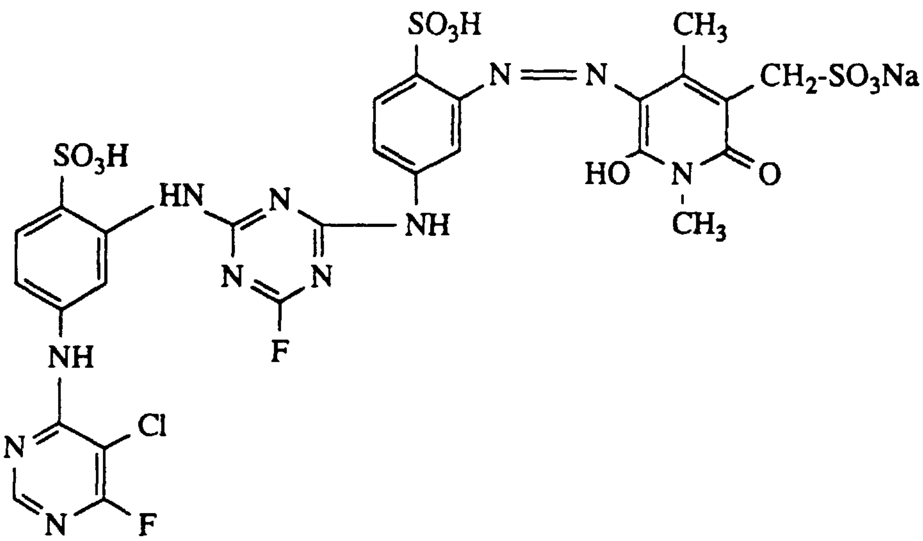

zukommt und das Baumwolle in brillanten grünstichig gelben Tönen färbt.

Durch Variation der Pyridonkupplungskomponente und der Diaminoverbindung lassen sich analog zu Beispiel 122 bzw. 154 folgende weitere grünstichig gelbe Farbstoffe herstellen:

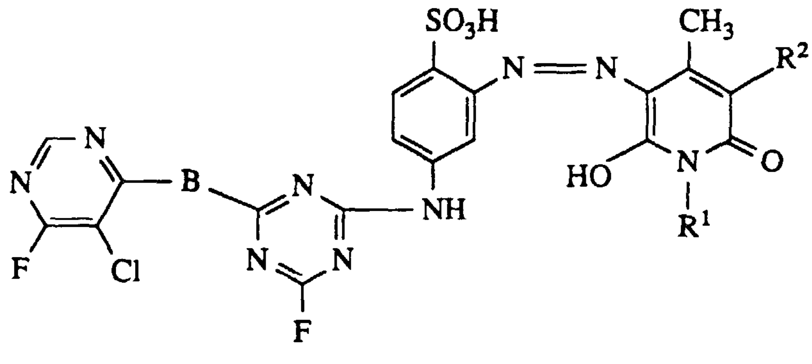

Tabelle 10

| Bsp. | B | $R^1$ | $R^2$ |
|---|---|---|---|
| 184 | 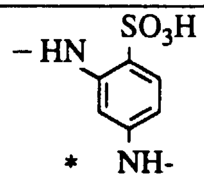 | $C_2H_5$ | $CH_2$-$SO_3H$ |
| 185 | 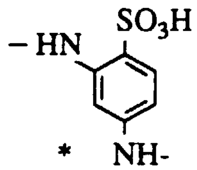 | $CH_2CH_2SO_3H$ | H |
| 186 | 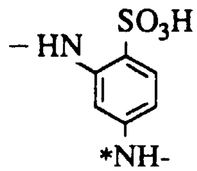 | $CH_2CH_2SO_3H$ | $CONH_2$ |
| 187 | 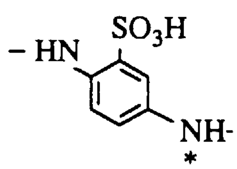 | $CH_3$ | $CH_2$-$SO_3H$ |
| 188 | 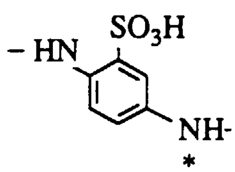 | $C_2H_5$ | $CH_2$-$SO_3H$ |
| 189 | 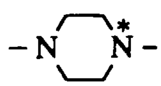 | $C_2H_5$ | $CH_2$-$SO_3H$ |
| 190 | 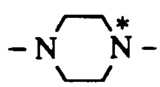 | $CH_3$ | $CH_2$-$SO_3H$ |
| 191 | NH-$CH_2$-$CH_2$-$\overset{*}{N}H$ | $CH_3$ | $CH_2$-$SO_3H$ |
| 192 | NH-$CH_2$-$CH_2$-$\overset{*}{N}H$ | $CH_2CH_2SO_3H$ | H |

**Die mit * gekennzeichneten N-Atome sind mit dem Pyrimidinylrest verbunden.**

Ersetzt man die Farbbase in Beispiel 184 durch einen vergleichbaren Pyrazolonchromophor, so lassen sich auch Farbstoffe, wie

Beispiel 193

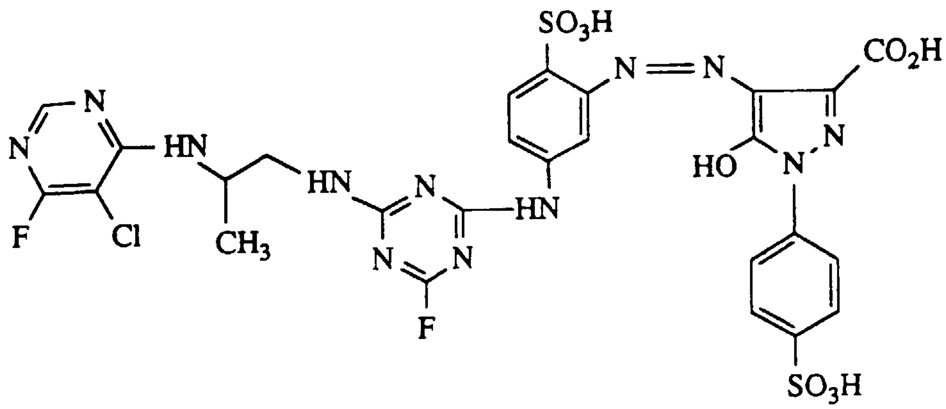

herstellen, das Baumwolle mit klaren gelben Nuancen färbt ($\lambda_{max}$ = 448 nm ($H_2O$)).

Setzt man die in der folgenden Tabelle 11 aufgeführten Aminoazo-Verbindungen analog Beispiel 97.3 unter geeigneten Bedingungen mit der Reaktivkomponente aus Beispiel 97.1 um, so erhält man Farbstoffe, die Baumwolle in den angegebenen Farbtönen anfärben.

Tabelle 11

| Bsp. | Aminoazoverbindung | Farbton |
|---|---|---|
| 194 | 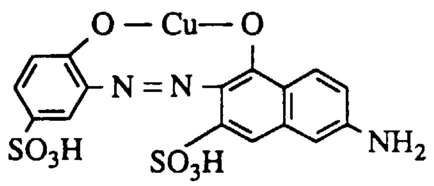 | Rubin |
| 195 | 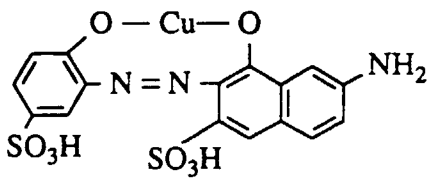 | Rubin |
| 196 | 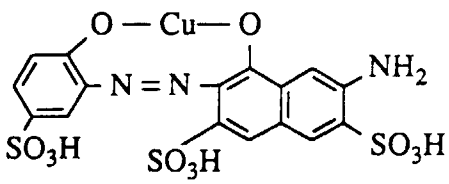 | Rubin |
| 197 | 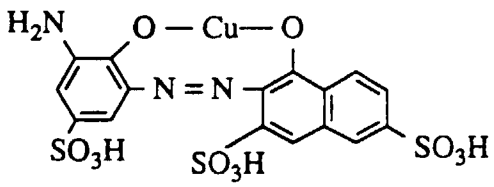 | Rubin |
| 198 | 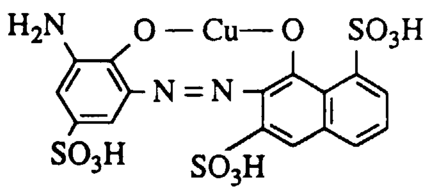 | Rubin |
| 199 | 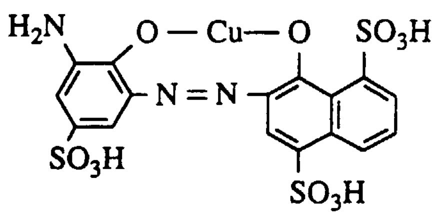 | Rubin |

Tabelle 11 (Fortsetzung)

| Bsp. | Aminoazoverbindung | Farbton |
|---|---|---|
| 200 | 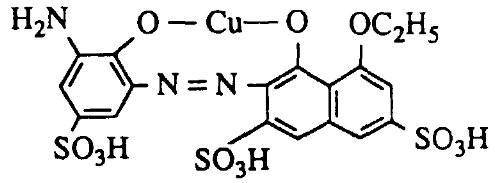 | Rubin |
| 201 | 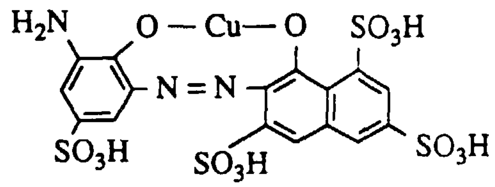 | Rubin |
| 202 | 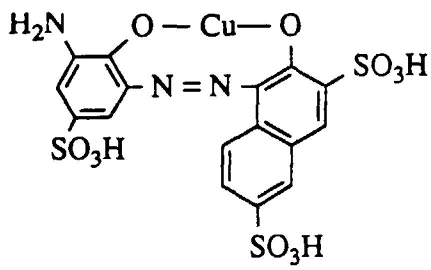 | Rubin |
| 203 | 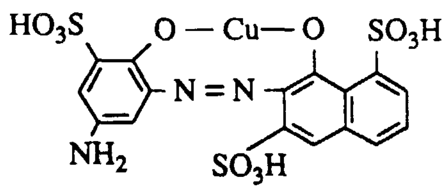 | Rubin |
| 204 | 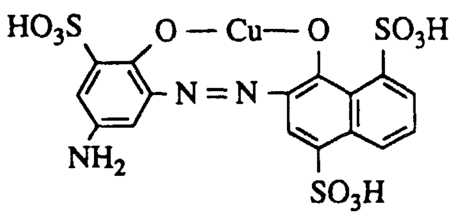 | Rubin |
| 205 | 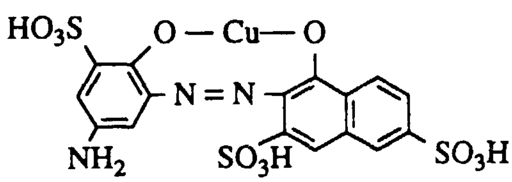 | Rubin |

Tabelle 11 (Fortsetzung)

| Bsp. | Aminoazoverbindung | Farbton |
|---|---|---|
| 206 | 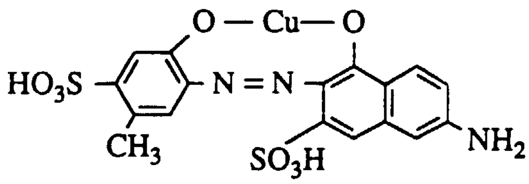 | Rubin |
| 207 | 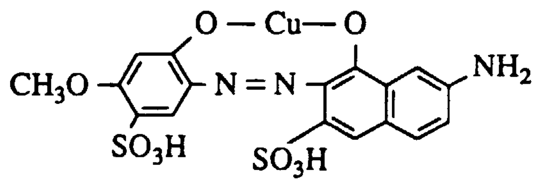 | Rubin |
| 208 | 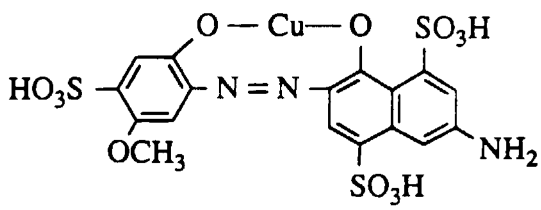 | Rotviolett |
| 209 | 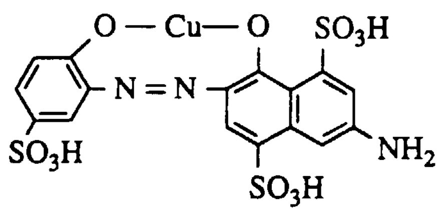 | Rubin |
| 210 | 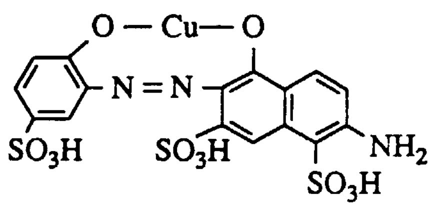 | Rubin |
| 211 | 1:2-Cr-Komplex von 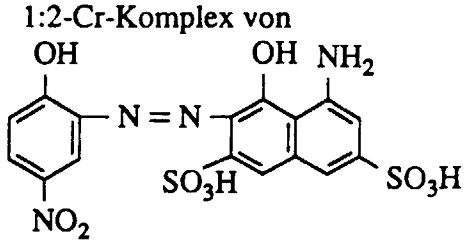 | graublau (schwarz) |

Tabelle 11 (Fortsetzung)

| Bsp. | Aminoazoverbindung | Farbton |
|---|---|---|
| | 1:2 Co-Komplex von | |
| 212 | 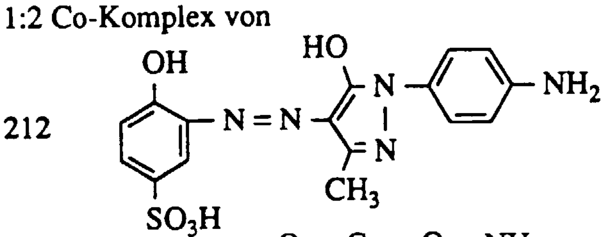 | gelbbraun |
| 213 | 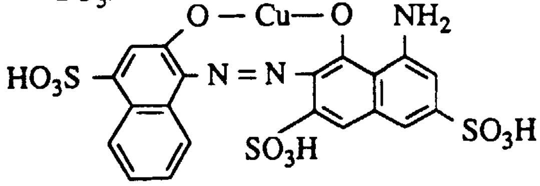 | Blau |
| 214 | 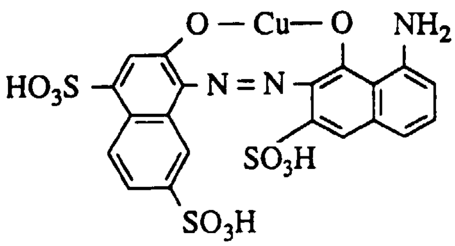 | Blau |
| 215 | 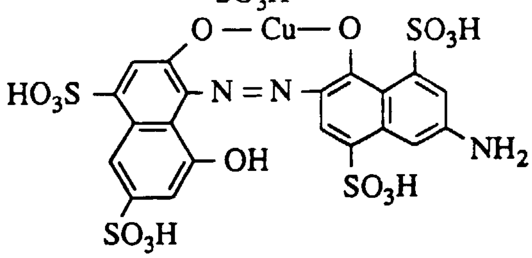 | Blau |
| 216 | 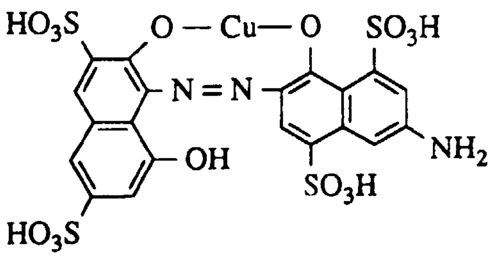 | Blau |
| 217 | 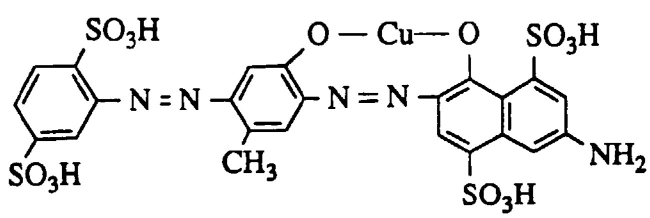 | Marineblau |

Setzt man die gemäß Beispiel 97.2 oder 97.3 erhaltenen Kondensationsprodukte aus den in der folgenden Tabelle 12 aufgeführten Aminoazo-Verbindungen mit der Reaktivkomponente aus Beispiel 97.1 in bekannter Weise bei pH 5 bis 7 und 20°C bis 60°C in wäßriger Lösung mit äquimolaren Mengen Wasserstoffperoxid um, so erhält man Kupferkomplex-Farbstoffe, die Baumwolle in den angegebenen Tönen anfärben, z.B. aus der Aminoazo-Verbindung von Beispiel 218 den Farbstoff der Formel

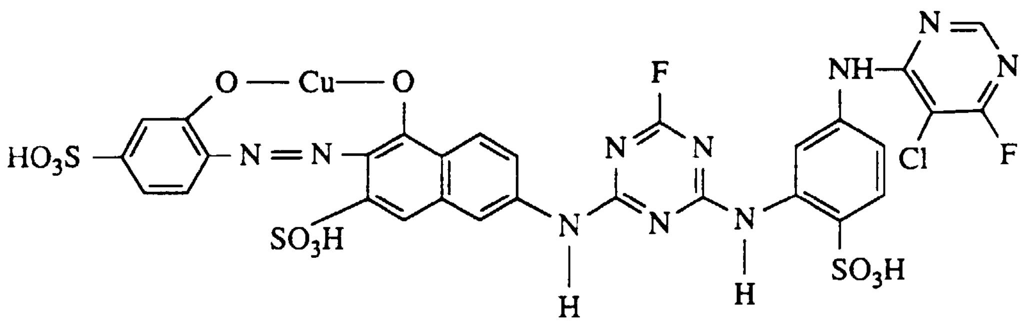

Tabelle 12

| Bsp. | Aminoazoverbindung | Farbton |
|---|---|---|
| 218 | 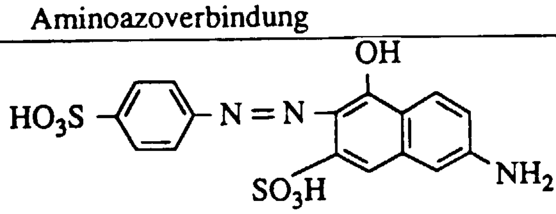 | Rubin |
| 219 | 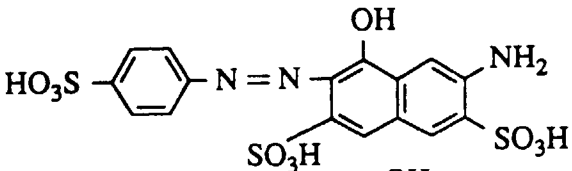 | Rubin |
| 220 | 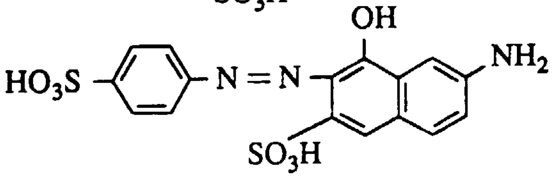 | Rubin |
| 221 | 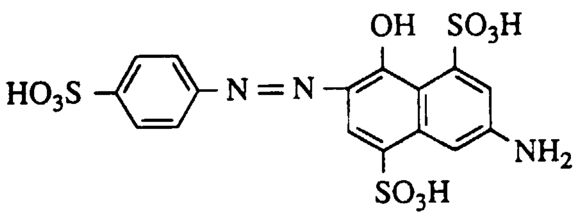 | Rubin |
| 222 | 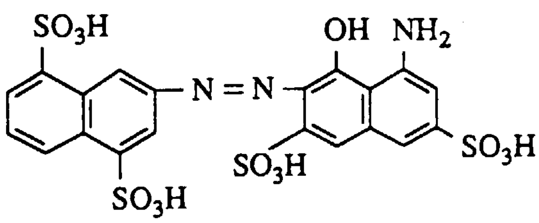 | Blau |
| 223 | 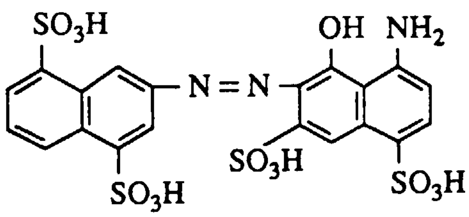 | Blau |
| 224 | 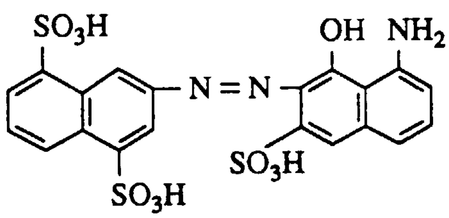 | Blau |

Tabelle 12 (Fortsetzung)

| Bsp. | Aminoazoverbindung | Farbton |
|---|---|---|
| 225 | 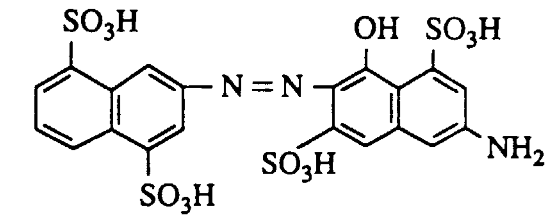 | Blau |
| 226 | 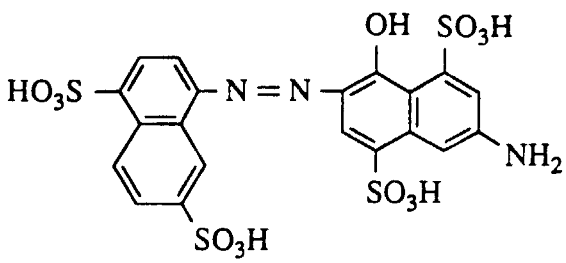 | Marineblau |

Setzt man Aminodisazofarbstoffe der allgemeinen Formel

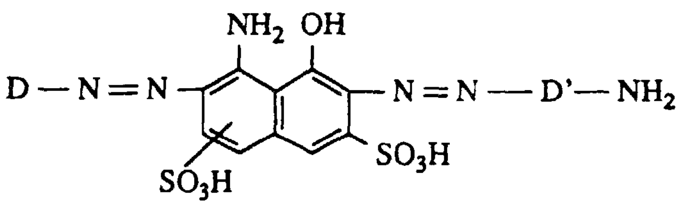

mit der Reaktivkomponente aus Beispiel 97.1 analog Beispiel 97 um, so erhält man die Farbstoffe der allgemeinen Formel

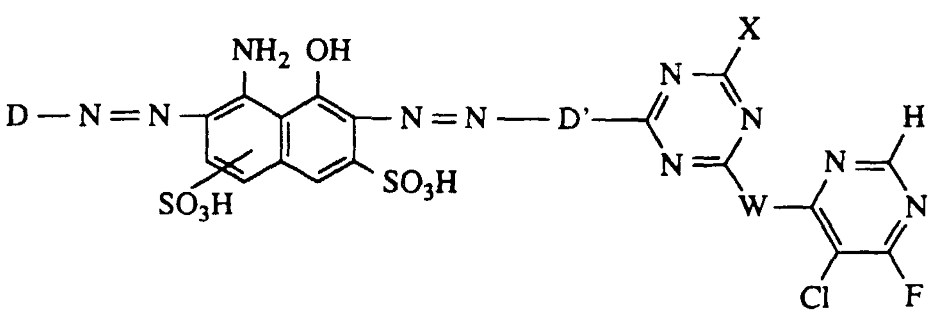

der Tabelle 13, sie färben Baumwolle in den angegebenen Farbtönen.

Tabelle 13

| Nr. | Y | D | K | D' | W | Farbton |
|---|---|---|---|---|---|---|
| 227 | F | 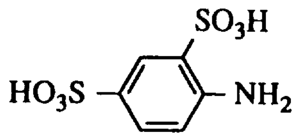 | 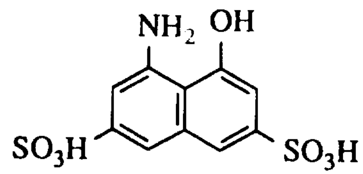 | 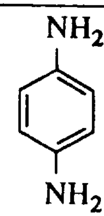 | 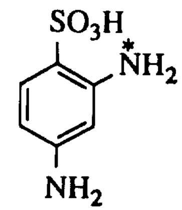 | Schwarz |
| 228 | F | 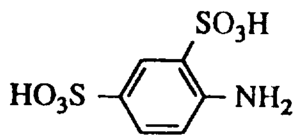 | 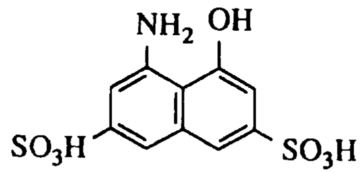 | 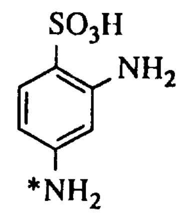 | 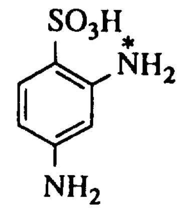 | Marineblau Schwarz |
| 229 | F | 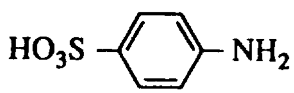 | 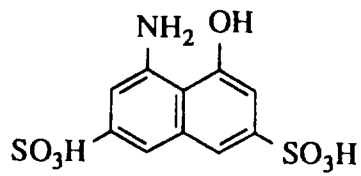 | 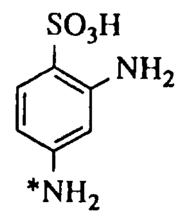 | 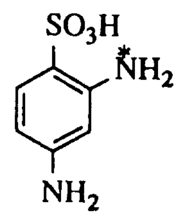 | Marineblau Schwarz |
| 230 | F | 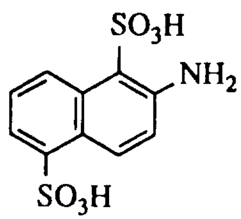 | 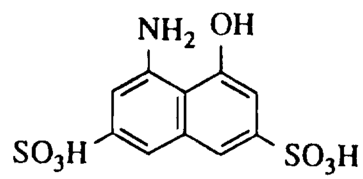 | 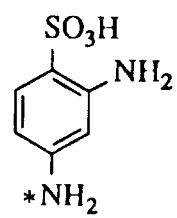 | 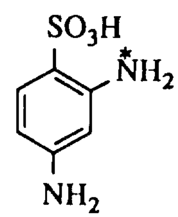 | Schwarz |

Tabelle 13 (Fortsetzung)

| Nr. | Y | D | K | D' | W | Farbton |
|---|---|---|---|---|---|---|
| 231 | F | 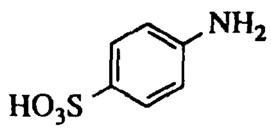 | 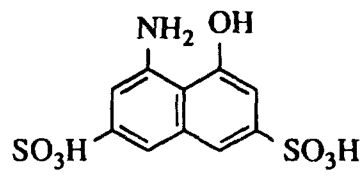 | 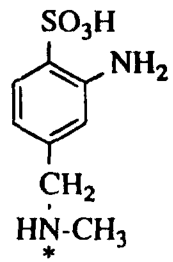 | 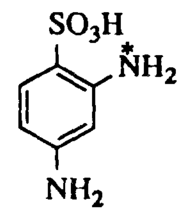 | Marineblau |
| 232 | F | 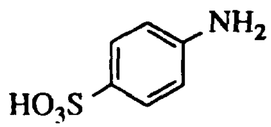 | 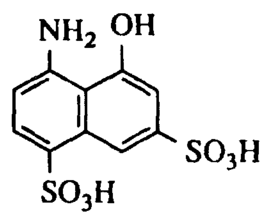 | 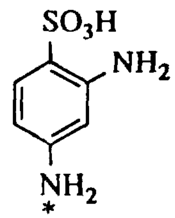 | 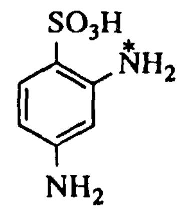 | Marineblau |
| 233 | F | 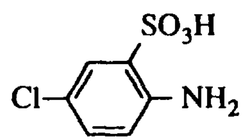 | 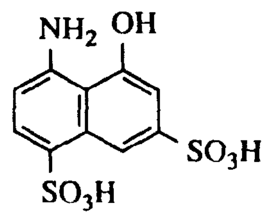 | 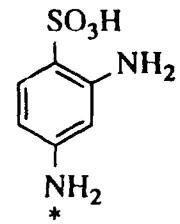 | 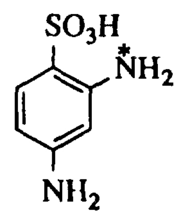 | Marineblau |

+) Die mit * gekennzeichneten N-Atome sind mit dem Triazinylrest verbunden.

Analog Beispiel 97.3 lassen sich folgende Farbstoffe herstellen, sie färben Baumwolle in den angegebenen Farbtönen

234

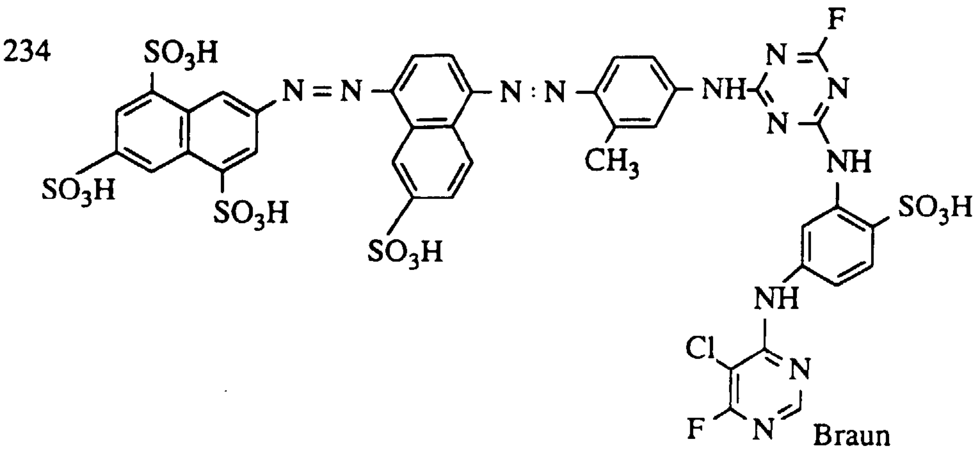

Braun

$\lambda_{max}$: 456 ($H_2O$)

235

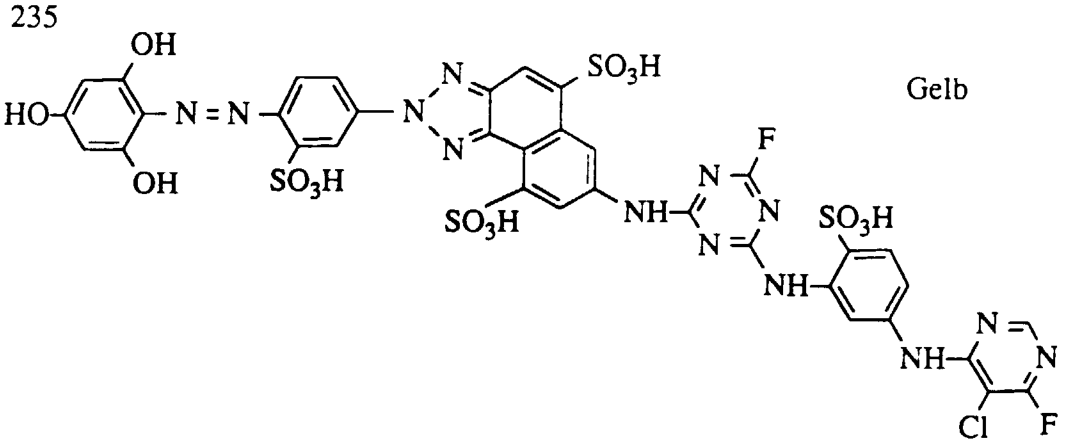

Gelb

Beispiel 236

18,8 g 2,4-Diaminobenzolsulfonsäure werden in 80 ml Wasser durch Neutralisation mit 10 %iger Lithiumhydroxid-Lösung gelöst und bei 25 bis 40°C mit 15,4 g 2,4,6-Trifluorpyrimidin bei pH 5,5 bis 6,0 kondensiert Nach Beendigung des Lithiumhydroxid-Verbrauches setzt man zu der Lösung des Kondensationsproduktes 19,3 g Cyanurchlorid, hält die Temperatur auf 20 bis 25°C und den pH-Wert mit Lithiumhydroxid auf 5,0. Wenn sich keine diazotierbare Aminogruppe mehr nachweisen läßt, ist die zweite Kondensationsstufe abgeschlossen und eine Lösung bzw. dickflüssige Suspension der Verbindung

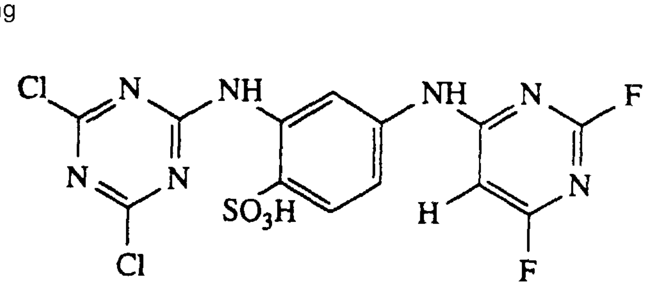

in Form ihres Li-salzes entstanden.

46,5 g 1-Amino-4-(2'-aminomethyl-4'-methyl-6'-sulfo-phenylamino)-anthrachinon-2-sulfonsäure werden in 300 ml Waser und 10 g Caprolactam unter Neutralisation bei pH 7 und 70°C gelöst. Nach Abkühlen auf Raumtemperatur gibt man die Lösung zu dem Kondensationsprodukt des Beispiels 1.1 und hält in der Reaktionsmischung den pH-Wert mit 10 %iger Sodalösung oder Lithiumhydroxid-Lösung auf 6,0 bis 6,5. Wenn der Verbrauch an alkalischem Kondensationsmittel nach mehreren Stunden zum Stillstand gekommen ist und eine chromatographische Probe das Verschwinden des farbigen Eduktes anzeigt, wird die Lösung mit 20 % Natriumchlorid ausgesalzen, der Farbstoff abgesaugt und mit 20 %iger Natriumchloridlösung gewaschen und bei 50°C im Vakuum getrocknet. Der Farbstoff der Formel

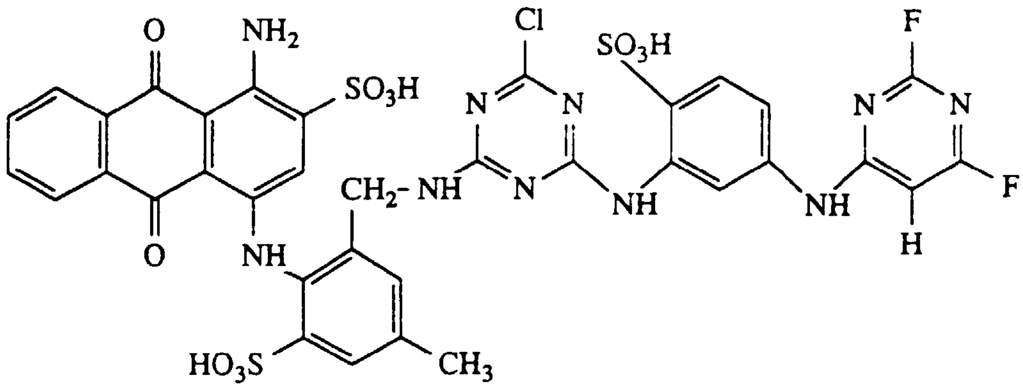

färbt Baumwolle und Zellwolle nach den bekannten Druck- und Continue-Verfahren in brillanten rotstichigen Blautönen mit hoher Fixierausbeute und hervorragenden Naßechtheiten. $\lambda_{max}$ = 621 nm, 583 nm in $H_2O$.

Beispiel 237

Setzt man im Beispiel 236 das Kondensationsprodukt aus 2,4-Diaminobenzol und 2,4,6-Trifluorpyrimidin statt mit Cyanurchlorid mit 14,2 g Cyanurfluorid bei 0 bis 5°C und pH 4,5 bis 5,0 um und kondensiert anschließend das erhaltene Difluortriazinylprodukt mit dem Farbkörper des Beispiels 1.2 bei 0 bis 10°C und pH 6,0, so erhält man einen Farbstoff der Formel,

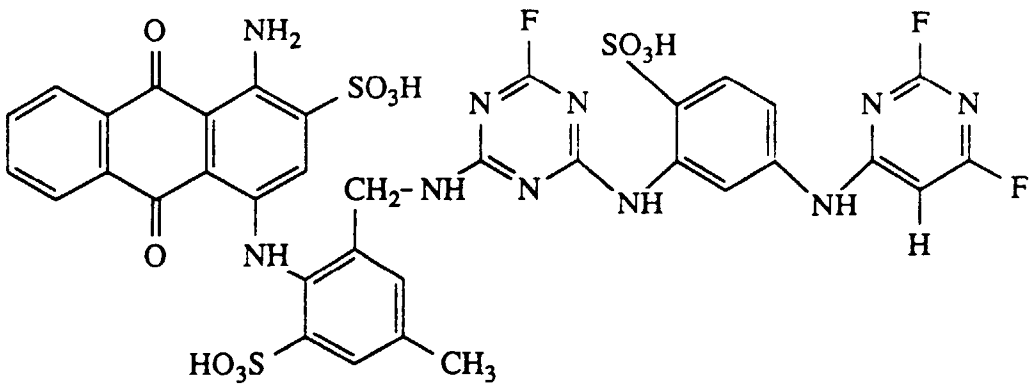

der nach entsprechender Aufarbeitung Cellulosefasem ebenfalls mit hohen Fixierausbeuten in Brillantblautönen anfärbt. $\lambda_{max}$ = 621 nm, 583 nm in $H_2O$.

Beispiel 238

In eine neutralisierte Lösung von 41,9 g 1-Amino-4-(3'-amino-2'-methyl-5'-sulfophenylamino)-anthrachinon-2-sulfonsäure in 500 ml Waser trägt man bei 10 bis 15°C das in Beispiel 237 angeführte Kondensationsprodukt aus 18,8 g 2,4-Diaminobenzolsulfonsäure, 15,4 g 2,4,6-Trifluorpyrimidin und 14,2 g Cyanurfluorid erhaltene Kondensationsprodukt ein und hält den pH-Wert mit 10 %iger Sodalösung auf 5,5 bis 6,0. Nach beendeter Umsetzung wird der Farbstoff mit Natriumchlorid ausgesalzen, abgesaugt und mit 10 %iger Natriumchloridlösung gewaschen. Das nach Trocknung im Vakuum bei 40°C erhaltene blaue Pulver entspricht der Formel

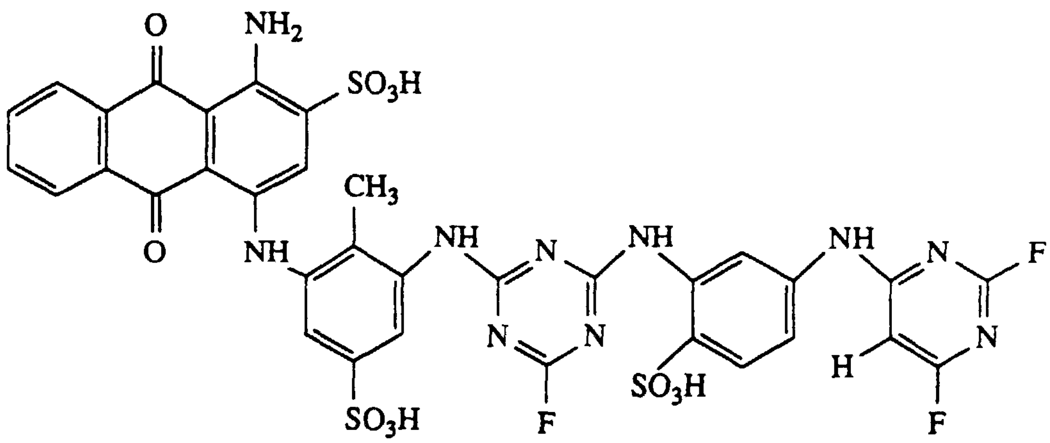

und färbt Baumwolle in neutralen Blautönen. $\lambda_{max}$ = 611 nm in $H_2O$.

Beispiel 239

39,9 g 4-Amino-6-(2',4'-difluor-6'-pyrimidinyl-amino)-benzol-1,3-disulfonsäure (hergestellt durch Sulfierung des Kondensationsproduktes von 2,4-Diaminobenzolsulfonsäure mit 2,4,6-Trifluorpyrimidin in der 4,5fachen Menge 20 bis 30 %igem Oleum, Austragen der Oleumlösung auf Eis-Wasser und Eliminierung der Schwefelsäure durch Fällung mit Calciumcarbonat) werden in 250 ml Wasser mit 19,4 g Cyanurchlorid bei 15°C und pH 4,5 bis 5,0 kondensiert. Nach beendeter Kondensation stellt man den pH-Wert auf 7 und die Temperatur auf 20°C.

Man läßt nun eine auf pH 11,5 gestellte Lösung von 34,8 g 1-Amino-4-(4'-aminocyclohexylamino)-anthrachinon-2-sulfonsäure in 380 ml Wasser so zulaufen, daß im Reaktionsgemisch durch gleichzeitige Zudosierung von 2n Natronlauge ein pH-Wert von 8,5 bis 9,0 eingehalten wird. Der erhaltene Feststoff wird mit Kaliumchlorid ausgesalzen, abgesaugt, gewaschen und bei 50°C im Vakuum getrocknet. Er entspricht der Formel

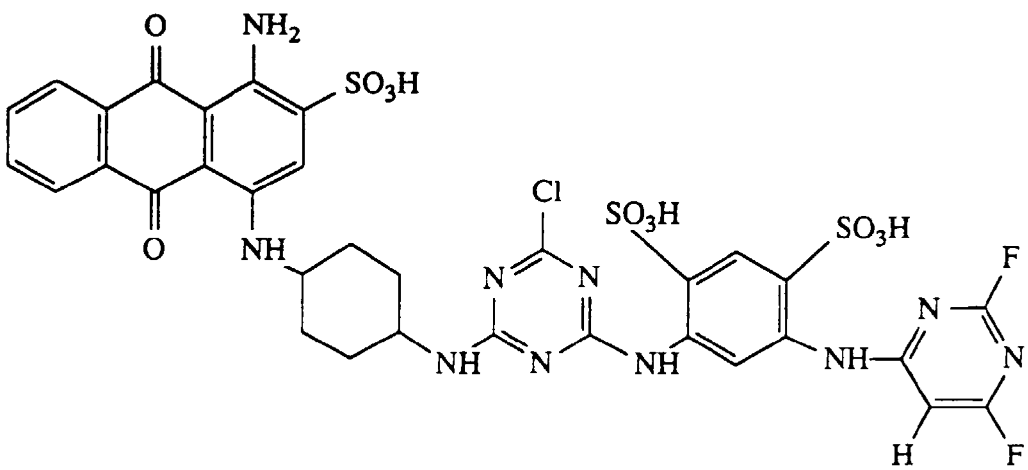

und färbt und druckt Cellulosefasern nach den bekannten Techniken in leuchtend blauen Tönen mit sehr guten Fixierausbeuten. $\lambda_{max}$ = 634 nm, 592 nm in $H_2O$.

Beispiel 240

53,1 g 1-Amino-4-(3'-amino-5'-sulfo-2',4',6'-trimethylphenylamino)-anthrachinon-2-sulfonsäure werden in 530 Teilen Wasser bei pH 6 gelöst.

12,4 g Cyanurchlorid werden in 100 ml Methylethylketon gelöst und die Lösung auf 100 g Eis ausgetragen. Man läßt nun die Farbstofflösung zu der Cyanurchloridsuspension bei 0 bis 10°C zutropfen und hält im Reaktionsgemisch mit 10 %iger Sodalösung den pH-Wert auf 4,5. Nach beendeter Umsetzung gibt man 41,8 g des Kondensationsproduktes aus 2,5-Diaminobenzol-1,4-disulfosäure und 2,4,6-Trifluor-pyrimidin in Form einer wäßrigen Natriumsalzlösung

hinzu, hält den pH-Wert auf 6,0, die Temperatur 3 Stunden bei 25°C, später bei 35 bis 40°C. Nach beendeter Kondensation wird das Produkt ausgesalzen und getrocknet.

Der erhaltene Farbstoff der Formel

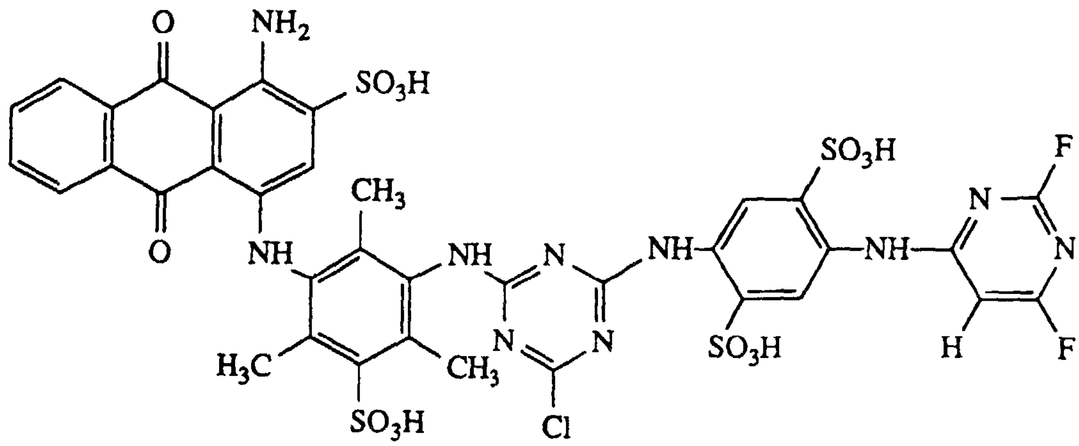

gibt auf Cellulosefasern in den bekannten Continue- und Druckverfahren brillante rotstichig blaue Färbungen mit sehr guten Fixierausbeuten.

Beispiel 241

18,8 g 2,5-Diaminobenzolsulfonsäure werden in 150 ml Wasser analog Beispiel 236 mit 15,4 g 2,4,6-Trifluorpyrimidin kondensiert. Zur Lösung des Kondensationsproduktes läßt man 14,2 g Cyanurfluorid bei 0 bis 5°C zutropfen und hält den pH-Wert dabei auf 4,5 bis 5,0. Zu dem entstandenen Produkt der Formel

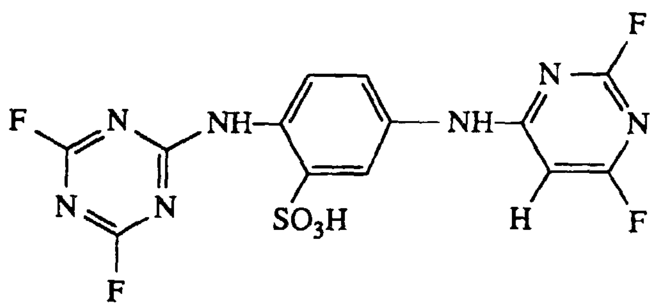

gibt man eine neutralisierte Lösung von 45 g 1-Amino-4-(4'-N-methylaminomethyl-2'-sulfo-phenylamino)-anthrachinon-2-sulfonsäure in 600 ml Wasser, hält den pH-Wert auf 5,5 bis 6,0 und läßt die Temperatur im Laufe von 3 Stunden allmählich auf 15°C ansteigen. Nach beendeter Umsetzung wird der Farbstoff durch Aussalzen isoliert, unter Zusatz von 3 % primärem und sekundärem Natriumphosphat bei pH 6,0 gepuffert und getrocknet. Das Produkt der Formel

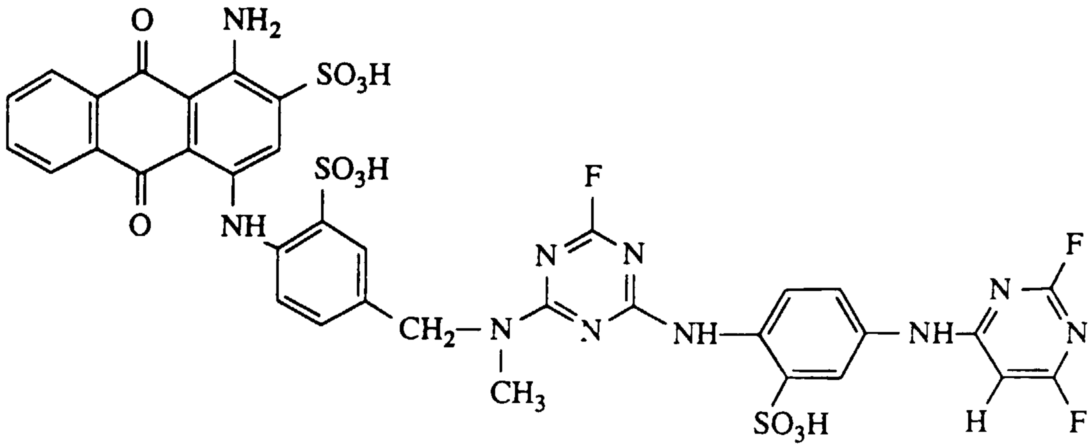

färbt Cellulosefasern nach den für Reaktivfarbstoffe üblichen Färbetechniken in neutralen Blautönen. $\lambda_{max}$ = 600 nm in $H_2O$.

Beispiel 242

In eine neutralisierte Lösung von 21 g 1-Amino-4-(3'-amino-4'-sulfo-phenylamino)-anthrachinon-2-sulfonsäure in 250 ml Wasser trägt man das aus 9,4 g 2,4-Diaminobenzolsulfonsäure, 7,7 g 2,4,6-Trifluorpyrimidin und 9,65 g Cyanurchlorid gemäß den Angaben des Beispiels 236 hergestellte Kondensationsprodukt ein, hält die Temperatur auf 25°C und den pH-Wert mit 20 %iger Sodalösung oder 10 %iger Lithiumhydroxid-Lösung auf 6,0 bis 6,5. Die Isolierung des Produktes durch Aussalzen und anschließendes Trocknen ergibt einen Farbstoff der Formel,

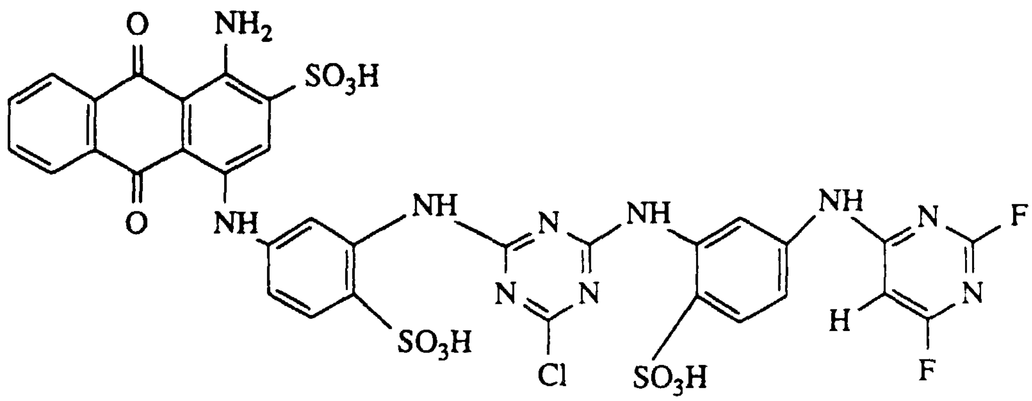

der Baumwolle in blauen Tönen mit guter Fixierausbeute anfärbt.
$\lambda_{max}$ = 596 nm in $H_2O$.

In Analogie zu den Beispielen 236 bis 242 lassen sich auch folgende Farbstoffe der allgemeinen Formel

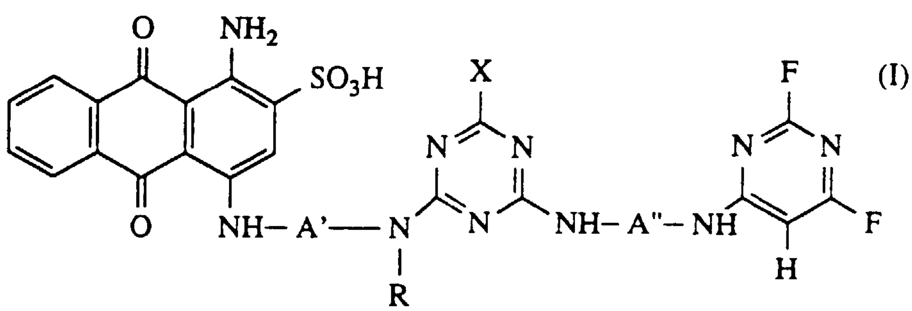
(I)

mit den in der untenstehenden Tabelle angegebenen Substituentenbedeutungen herstellen.

Tabelle 14

| Nr. | A' | R | X | A" |
|---|---|---|---|---|
| 243 | 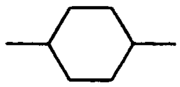 | H | F | 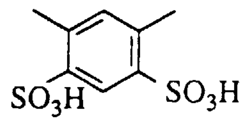 |
| 244 | 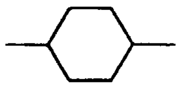 | H | F | 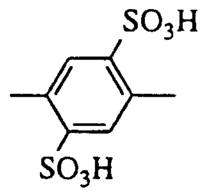 |
| 245 | 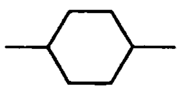 | H | Cl | 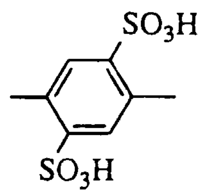 |
| 246 | 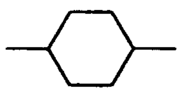 | H | F | 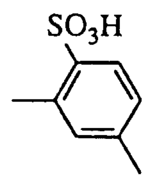 |

Tabelle 14 (Fortsetzung)

| Nr. | A' | R | X | A" |
|---|---|---|---|---|
| 247 | 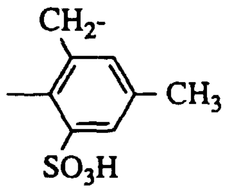 | H | Cl | 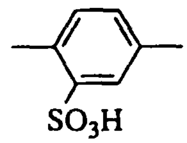 |
| 248 | 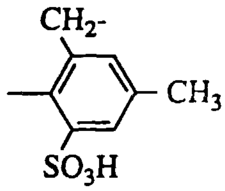 | H | Cl | 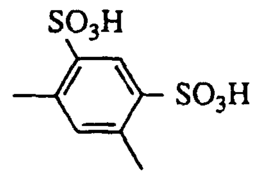 |
| 249 | 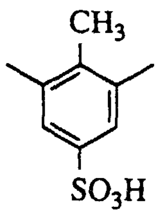 | H | F | 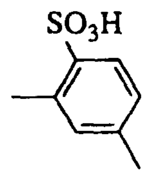 |
| 250 | 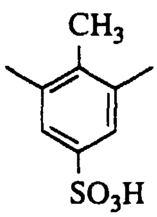 | H | F | 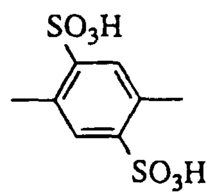 |
| 251 | 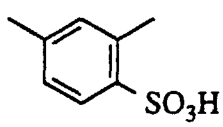 | H | F | 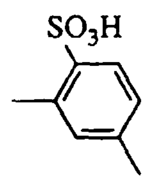 |
| 252 | 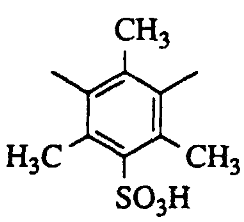 | H | F | 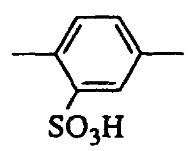 |

Tabelle 14 (Fortsetzung)

| Nr. | A' | R | X | A'' |
|---|---|---|---|---|
| 253 | 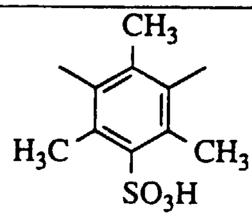 | H | Cl | 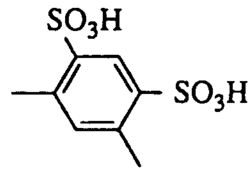 |
| 254 | 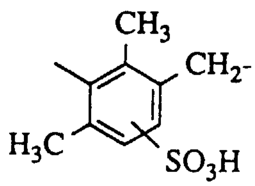 | $CH_3$ | F | 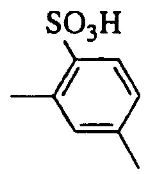 |
| 255 | 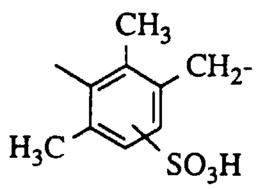 | $CH_3$ | Cl | 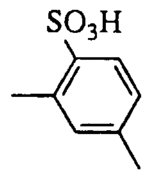 |
| 256 | 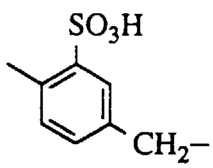 | $CH_3$ | Cl | 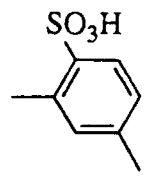 |
| 257 | 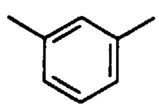 | H | F | 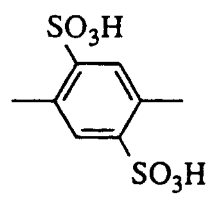 |
| 258 | 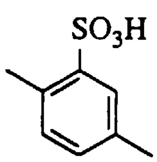 | $CH_3$ | F | 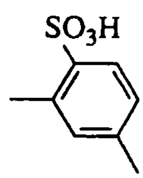 |
| 259 | 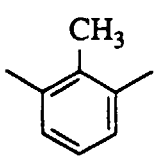 | H | F | 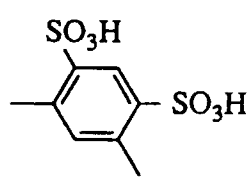 |

Beispiel 260

17,6 g Triphendioxazinverbindung der Formel

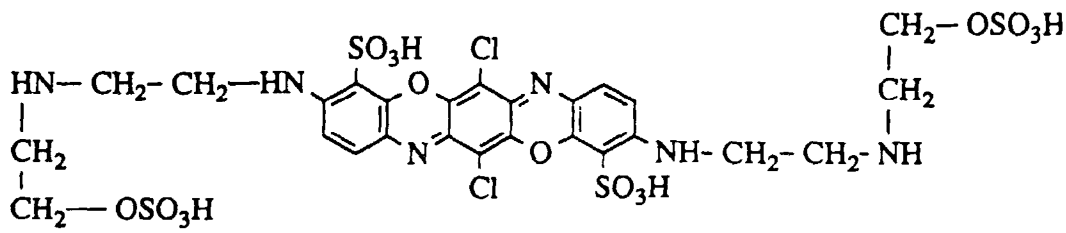

werden in 600 ml Wasser durch Einstellen eines pH-Wertes von 9 mit 2n Natronlauge gelöst. Zu der Lösung gibt man bei 0 bis 10°C das Kondensationsprodukt der Formel

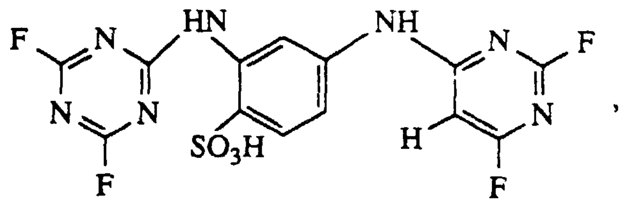

das man aus 9,8 g 2,4-Diaminobenzolsulfonsäure, 8,0 g 2,4,6-Trifluorpyrimidin und 7,2 g Cyanurfluorid hergestellt hat, und hält den pH-Wert im Reaktionsgemisch auf 8,5 bis 9,0. Nach beendeter Umsetzung wird der Farbstoff der Formel

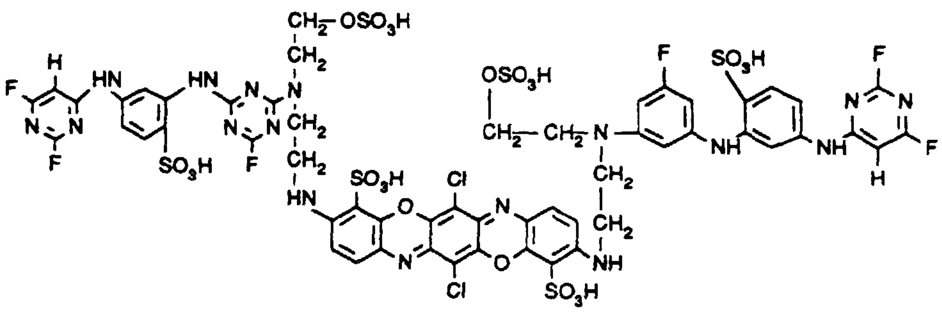

durch Aussalzen isoliert und bei 50°C im Vakuum getrocknet.

Beispiel 261

47,3 g 4-Amino-6-(2',4'-difluor-6'-pyrimidinylamino)-benzolsulfonsäure werden in 350 ml Wasser mit 22,4 g Cyanurchlorid nach den Angaben des Beispiels 239 kondensiert.

30,0 g Triphendioxazin-Verbindung der Formel

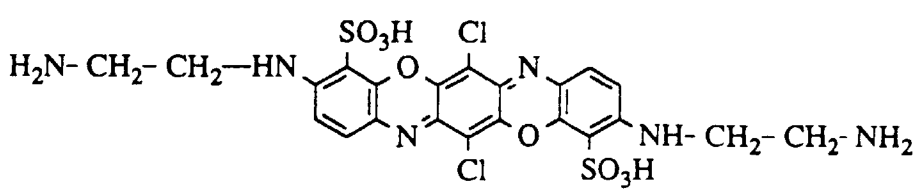

werden in 500 ml durch Zugabe von 70 ml 2n Natronlauge gelöst.

Man gibt beide Produkte gleichmäßig in 80 ml vorgelegtes Wasser bei 20°C gleichmäßig so ein, daß im gebildeten Reaktionsgemisch sich ein pH-Wert von 9,0 bis 9,5 einstellt. Nach Zusammengeben der Komponenten hält man den pH-Wert weiter mit 2n Natronlauge bis zur Beendigung der Kondensation.

Der entstandene Feststoff der Formel

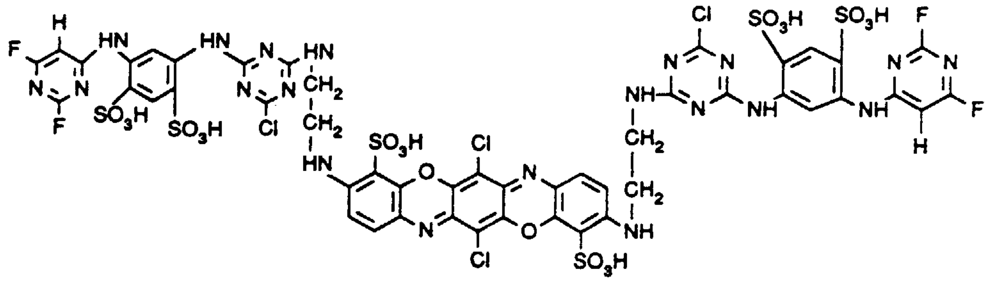

(II)

wird ausgesalzen und im Vakuum bei 50°C getrocknet. Er färbt Baumwolle in kräftigen Blautönen. $\lambda_{max}$ = 623 nm in $H_2O$.

In Analogie zu den Beispielen 260 und 261 lassen sich weitere Triphendioxazin-Reaktivfarbstoffe der allgemeinen Formel

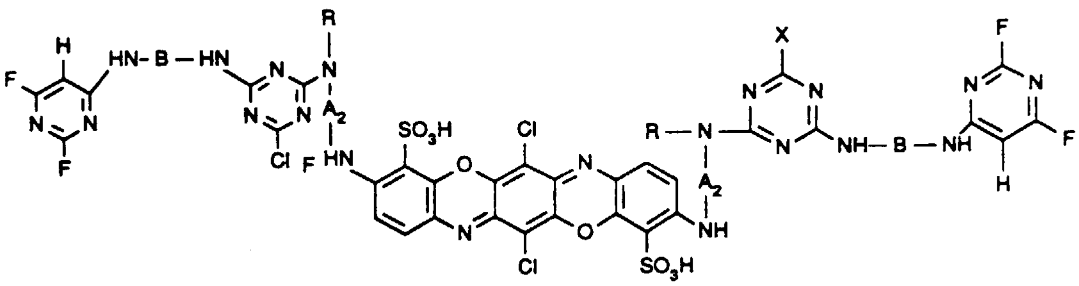

mit den in der Tabelle angegebenen Substituenten-Bedeutungen herstellen. (Farbkennzahl nach Color Index Hue Indication).

Tabelle 15

| Nr. | $A_2$ | R | X | B | Farbkennzahl |
|---|---|---|---|---|---|
| 262 | $-(CH_2)_3-$ | H | F | 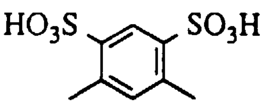 | 14 |
| 263 | $-(CH_2)_2-$ | H | F | 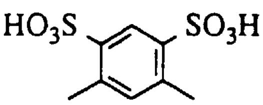 | 14 |
| 264 | $-(CH_2)_4-$ | H | Cl | 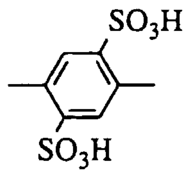 | 14 |
| 265 | $-(CH_2)_3-$ | $CH_3$ | F | 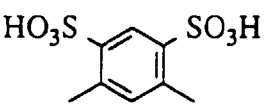 | 14 |
| 266 | $-(CH_2)_2-$ | $CH_2-CH_2-OSO_3H$ | F | 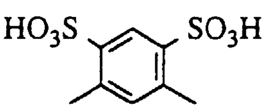 | 14 |
| 267 | $-(CH_2)_3-$ | H | F | 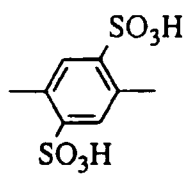 | 14 |

Beispiel 268

48,2 g Kupferphthalocyaninkomponente der Formel,

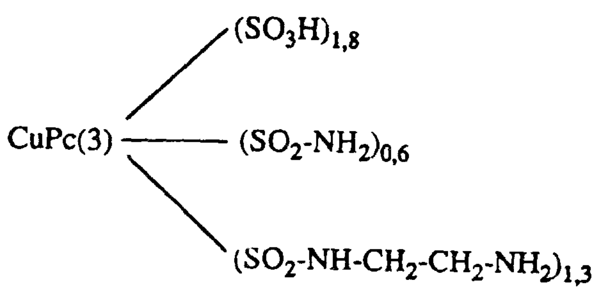

hergestellt nach den Angaben der Europäischen Patentschrift 0 073 267, werden in 450 ml Wasser bei pH 7 gelöst. Man gibt nun bei 20 bis 25°C eine Suspension des Kondensationsproduktes zu, die vorher nach den Angaben des Beispiels 236 aus 12,5 g 2,4-Diaminobenzolsulfonsäure, 10,3 g 2,4,6-Trifluorpyrimidin und 12,9 g Cyanurchlorid hergestellt wurde, und hält im Reaktionsgemisch durch Zugabe von 2n Natronlauge den pH-Wen auf 7,0 bis 7,5. Ist der

Natronlaugeverbrauch zum Stillstand gekommen, wird der gebildete Farbstoff der Formel

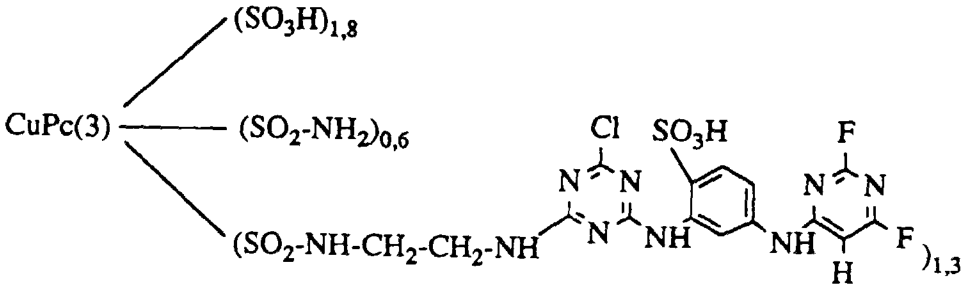

mit Natriumchlorid ausgesalzen und getrocknet Das blaugrünge Pulver gibt auf Baumwolle und Zellwolle klare türkisblaue Drucke und Färbungen mit guter Fixierausbeute und hervorragenden Naßechtheiten. $\lambda_{max}$ = 669 nm, 627 nm in $H_2O$.

Beispiel 269

Setzt man im Beispiel 268 anstelle der Kupferphthalocyaninkomponente äquimolare Mengen einer Nickelphthalocyaninkomponente der Formel

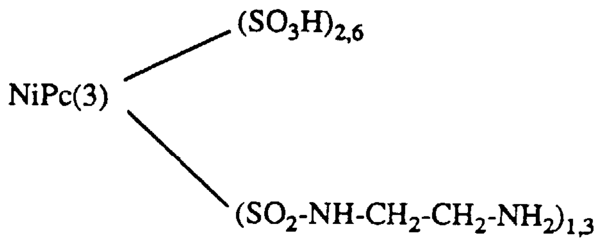

ein, die man nach den Angaben der Deutschen Offenlegungsschrift 3 405 204 hergestellt hat, so erhält man einen Nickelphthalocyanin-Farbstoff der Formel

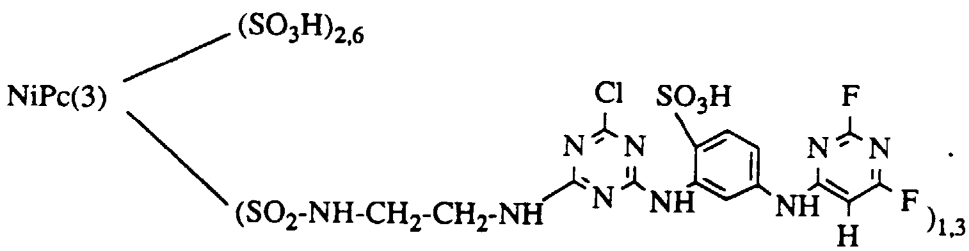

$\lambda_{max}$ = 662 nm in $H_2O$.
Der Farbstoff gibt auf Baumwolle und Zellwolle klare bläulich-grüne Färbungen mit guter Fixierausbeute und ausgezeichneten Naßechtheiten.

Analog lassen sich weitere Metallphthalocyanin-Reaktivfarbstoffe der allgemeinen Formel

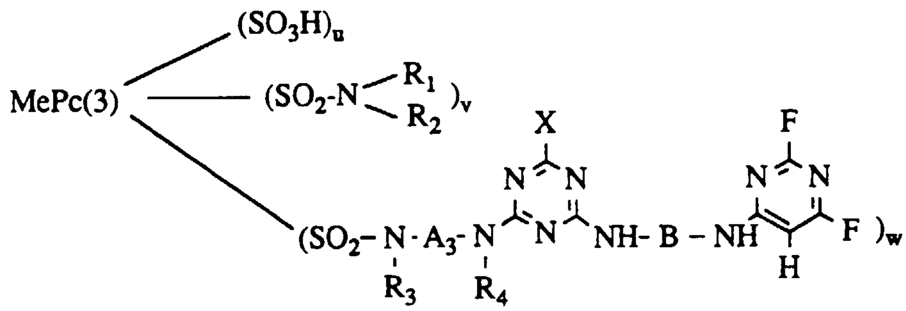

(III)

aufbauen, deren Substituentenbedeutungen und Indizes aus den Beispielen Nr. 270 bis 285 der nachfolgenden Tabelle hervorgehen.

Tabelle 16: Phthalocyanin-Reaktivfarbstoffe der Formel III

| Nr. | Me | $R_1$ | $R_2$ | $R_3$ | $R_4$ | $A_3$ | X | B | u | v | w |
|---|---|---|---|---|---|---|---|---|---|---|---|
| 270 | Cu | H | H | $CH_3$ | $CH_3$ | $-(CH_2)_2-$ | Cl | 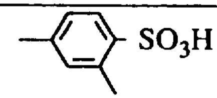 | 1,9 | 0,8 | 1,1 |
| 271 | Cu | - | - | H | H | $-(CH_2)_2-$ | Cl | 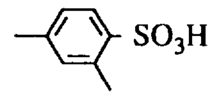 | 2,6 | 0 | 1,3 |
| 272 | Cu | H | $CH_2-CH_2-SO_3H$ | H | H | $-(CH_2)_2-$ | Cl | 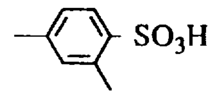 | 2,0 | 0,6 | 1,3 |
| 273 | Cu | $CH_3$ | $CH_2-CH_2-SO_3H$ | H | H | $-CH_2)_2-$ | F | 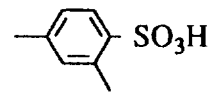 | 1,9 | 0,6 | 1,3 |
| 274 | Cu | H | H | H | H | $-(CH_2)_2-$ | F | 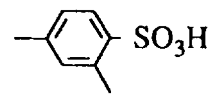 | 1,9 | 0,6 | 1,3 |
| 275 | Cu | H | H | H | H | 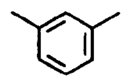 | Cl | 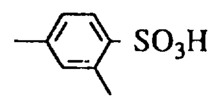 | 2,6 | 0 | 1,3 |
| 276 | Cu | H | $CH_2-CH_2-OSO_3H$ | H | $CH_3$ | $-(CH_2)_3-$ | Cl | 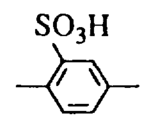 | 2,4 | 0,5 | 1,0 |

T a b e l l e 16: Phthalocyanin-Reaktivfarbstoffe der Formel III (Fortsetzung)

| Nr. | Me | $R_1$ | $R_2$ | $R_3$ | $R_4$ | $A_3$ | X | B | u | v | w |
|---|---|---|---|---|---|---|---|---|---|---|---|
| 277 | Cu | H | H | H | H | $-(CH_2)_2-$ | Cl | 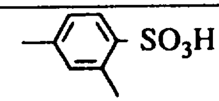 | 1,9 | 0,5 | 1,0 |
| 278 | Cu | H | H | H | H | $-(CH_2)_3-$ | Cl | 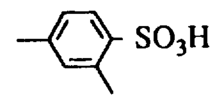 | 2,4 | 0,4 | 1,5 |
| 279 | Ni | H | H | H | H | $-(CH_2)_2-$ | Cl | 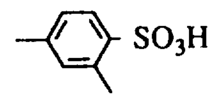 | 2,1 | 0,4 | 1,3 |
| 280 | Ni | H | H | $CH_3$ | $CH_3$ | $-(CH_2)_2-$ | F | 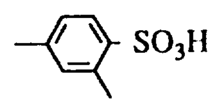 | 2,7 | 0 | 1,2 |
| 281 | Cu | H | H | $R_3+R_4= CH_2-CH_2$ | | $-(CH_2)_2-$ | Cl | 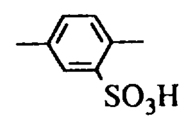 | 2,1 | 0,5 | 1,3 |
| 282 | Cu | H | H | H | H | 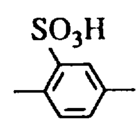 | Cl | 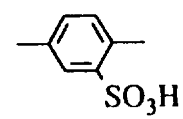 | 2,2 | 0,5 | 1,2 |

Tabelle 16: Phthalocyanin-Reaktivfarbstoffe der Formel III (Fortsetzung)

| Nr. | Me | $R_1$ | $R_2$ | $R_3$ | $R_4$ | $A_3$ | X | B | u | v | w |
|---|---|---|---|---|---|---|---|---|---|---|---|
| 283 | Cu | H | H | $CH_3$ | $CH_3$ | $-(CH_2)_2-$ | F | 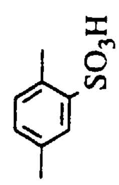 | 2,2 | 0,5 | 1,3 |
| 284 | Ni | - | - | $R_3$-$R_4$=$-CH_2-CH_2-$ | | $-(CH_2)_2-$ | Cl | 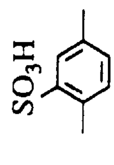 | 2,5 | 0 | 1,3 |
| 285 | Ni | - | - | H | H | $-(CH_2)_2-$ | Cl | 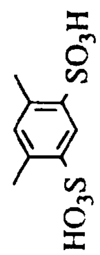 | 2,4 | 0 | 1,4 |

Beispiel 286

40 g 1-Amino-4-(2'-aminomethyl-4'-methyl-6'-sulfophenylamino)-anthrachinon-2-sulfonsäure werden in 800 ml Wasser und 100 ml Aceton durch Neutralisation mit ca. 45 ml 2n Natronlauge bei pH 7 gelöst Man kühlt auf 10°C ab und tropft eine Lösung von 17,5 g Cyanurchlorid in 100 ml Aceton in 15 bis 20 Minuten ein. Während des Eintropfens hält man den pH-Wert im Reaktionsgemisch mit 2n Sodalösung auf 6,0 bis 7,0. Wenn der Sodaverbrauch etwa 1 Stunde nach der Cyanurchlorid-Zugabe zum Stillstand gekommen ist, gibt man eine mit konz. Salzsäure auf pH 6 gestellte Lösung von 40 g 2-(2-Aminoethyl)-aminoethanol in 100 ml Wasser zu, steigert die Temperatur auf 20 bis 25°C und hält den pH-Wert mit 2n Natronlauge auf 5,5 bis 6,0. Nach beendeter Kondensation wird der Farbstoff, der im wesentlichen der Formel

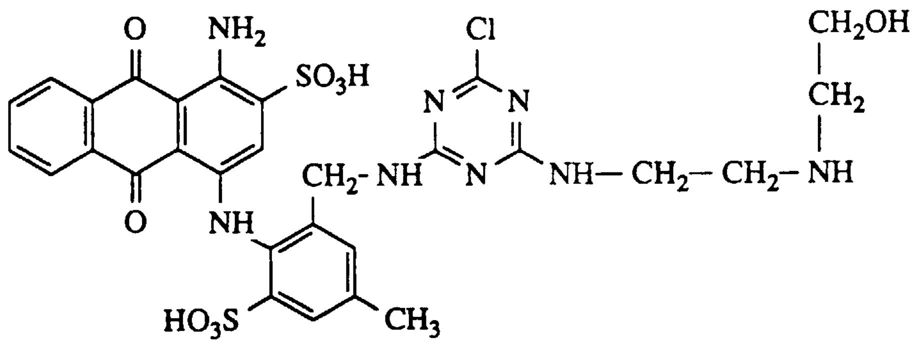

entspricht, ausgesalzen, abgesaugt, mit gesättigter Natriumchloridlösung aminfrei gewaschen und erneut in 500 ml Wasser gelöst.

Zu der Lösung gibt man bei 25°C 14,6 g 2,4,6-Trifluorpyrimidin und hält den pH-Wert mit 2n Natronlauge auf 7,5 bis 8,0. Wenn der Natronlaugeverbrauch zum Stillstand gekommen ist und sich obiges Zwischenprodukt nicht mehr nachweisen läßt, wird das entstandene Produkt der Formel

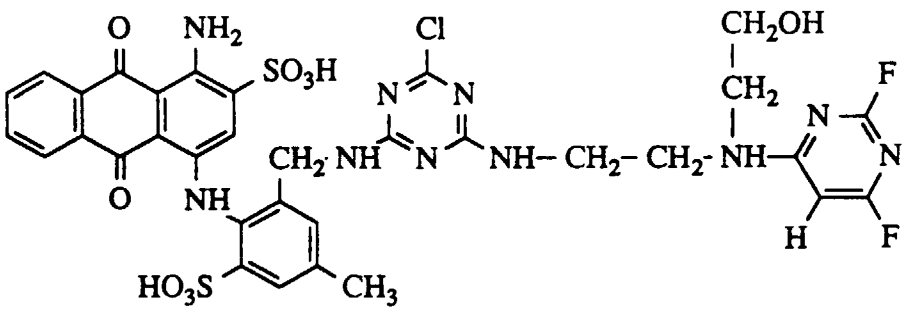

ausgesalzen und bei 50°C im Vakuum getrocknet.

Der Farbstoff gibt auf Cellulosefasern brillante rotstichig blaue Drucke mit ausgezeichneten Naßechtheiten. $\lambda_{max}$ = 624 nm, 587 nm in $H_2O$.

Beispiel 287

Setzt man im Beispiel 286 anstelle des 2-(2-Aminoethyl)-aminoethanols den entsprechenden Schwefelsäurehalbester ein, so erhält man einen Farbstoff der Formel,

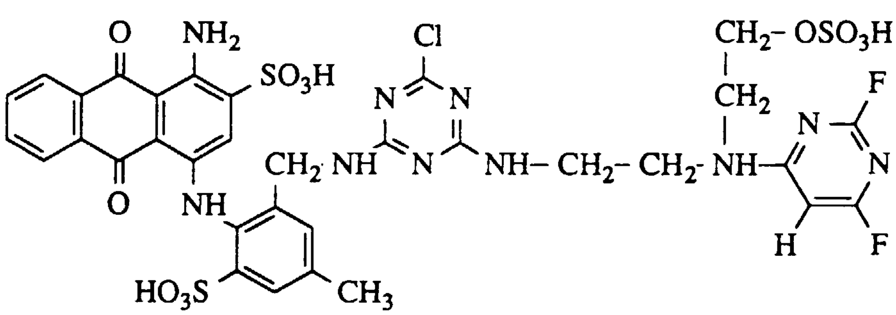

der in Druck- und Continueprozessen auf Baumwolle ähnliche Echtheitseigenschaften aufweist wie der Farbstoff des Beispiels 51. $\lambda_{max}$ = 624 nm, 587 nm in $H_2O$.

Weitere Anthrachinon-Farbstoffe mit Alkylendiaminbrückenglied zwischen Halogentriazinyl- und 2,6-Difluor-4-pyrimidinyl-Rest erhält bei man bei Einsatz folgender Komponenten:

Tabelle 17

| | | | | |
|---|---|---|---|---|
| 288 | 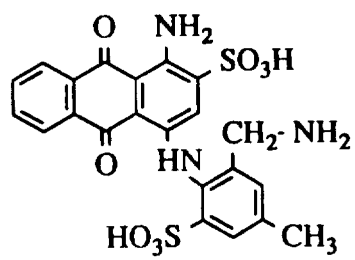 | 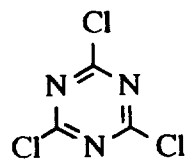 | 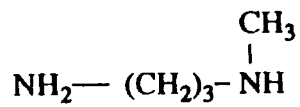 | 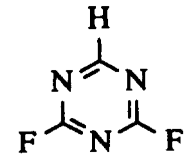 |
| 289 | 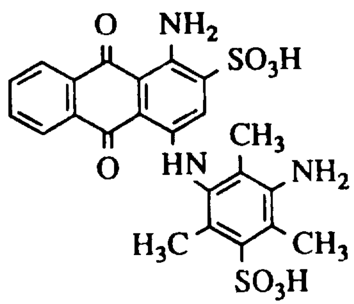 | 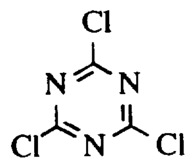 | 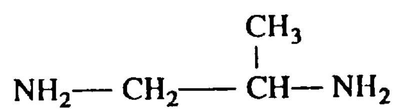 | 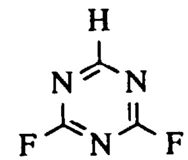 |
| 290 | 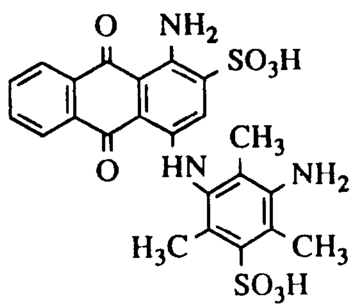 | 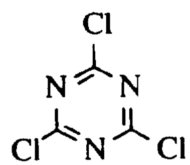 | 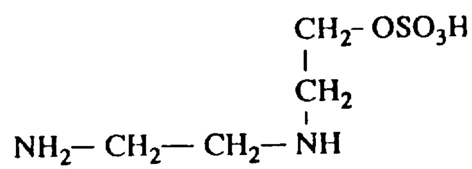 | 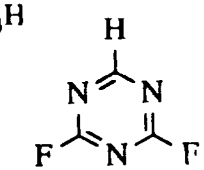 |

Tabelle 17 (Fortsetzung)

| | | | | |
|---|---|---|---|---|
| 291 | 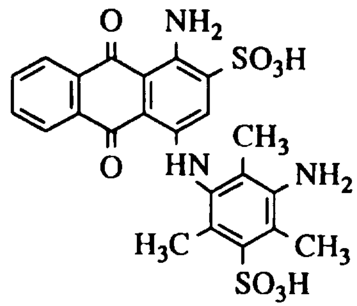 | 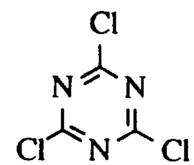 | 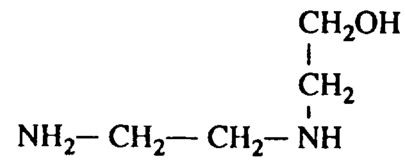 | 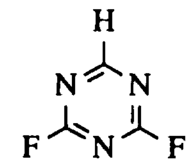 |
| 292 | 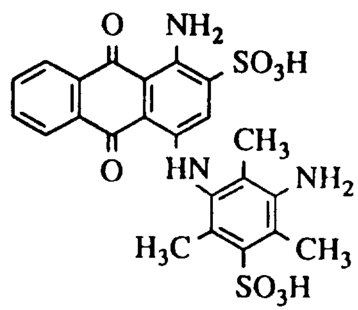 | 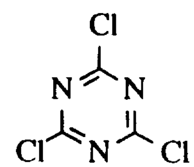 | 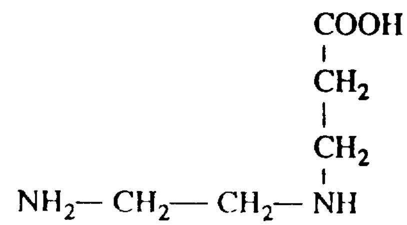 | 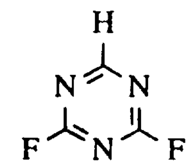 |
| 293 | 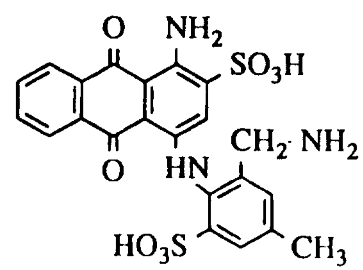 | 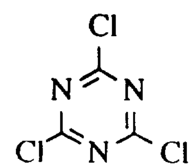 | $NH_2-CH_2-CH_2-NH_2$ | 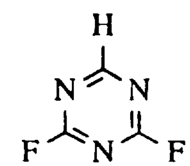 |

Tabelle 17 (Fortsetzung)

| | | | | |
|---|---|---|---|---|
| 294 | 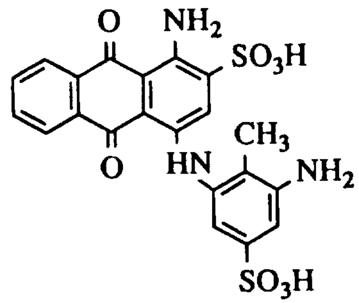 | 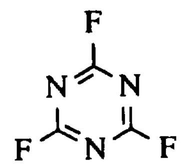 | 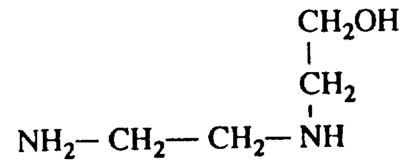 | 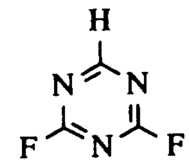 |
| 295 | 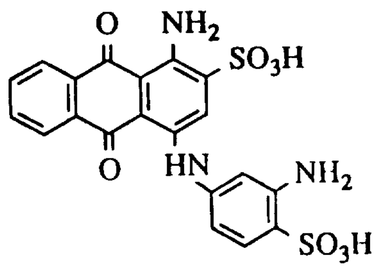 | 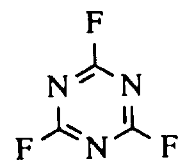 | 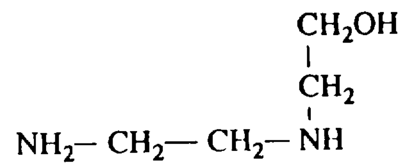 | 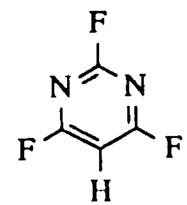 |
| 296 | 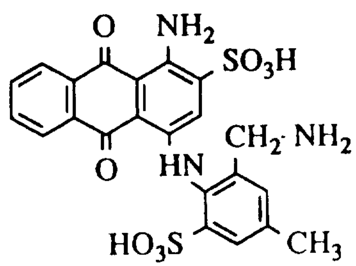 | 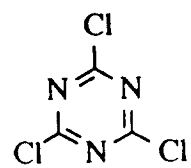 | 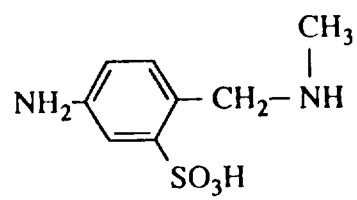 | 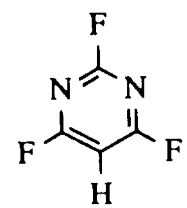 |

Tabelle 17 (Fortsetzung)

| | | | | |
|---|---|---|---|---|
| 297 | 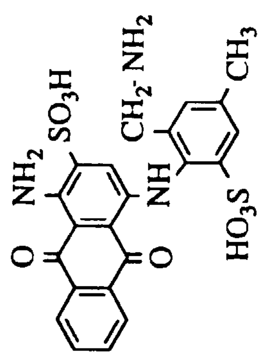 | 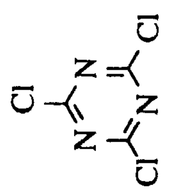 | 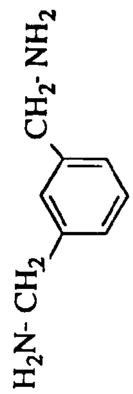 | 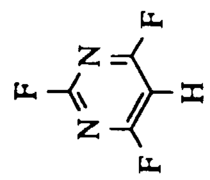 |
| 298 | 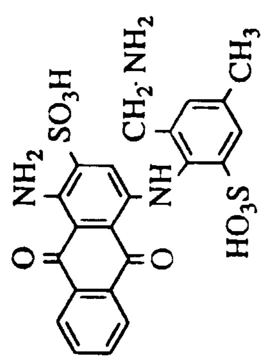 | 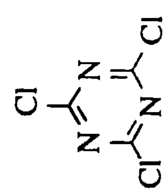 | 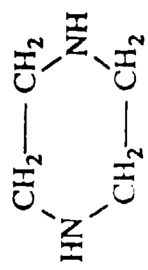 | 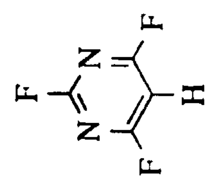 |

Beispiel 299

39,7 g Kupferphthalocyaninverbindung der Formel,

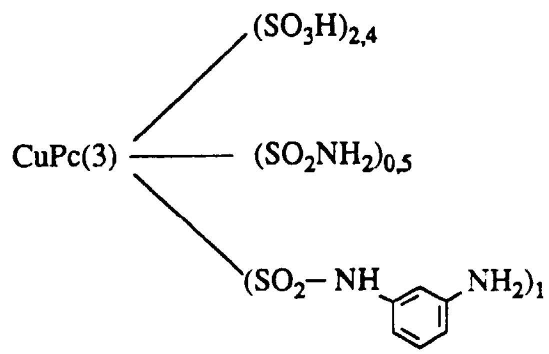

hergestellt durch Kondensation von Kupferphthalocyanintetrasulfochlorid-sulfonsäure mit 3-Aminoacetanilid und Ammoniak und nachfolgende Verseifung der Acetylaminogruppe mit verdünnter Natronlauge, werden bei pH 7 in 450 ml Wasser gelöst.

Man läßt die Lösung zu einer Cyanurchloridsuspension zulaufen, die man durch Lösen von 7,6 g Cyanurchlorid in 40 ml Methylethylketon und Ausgießen der Lösung auf 60 g Eis hergestellt hat. Während des Zulaufens der Farbbase hält man im Reaktionsgemisch durch Außenkühlung die Temperatur auf 0 bis 5°C und den pH-Wert mit 10 %iger Sodalösung auf 4,5 bis 5,0. Nach beendeter Kondensation wird die erhaltene Lösung mit einer auf pH = 5,0 gestellten Lösung von 4,2 g 2-(2-Aminoethyl)-aminoethanol in 40 ml Wasser versetzt.

Man steigert die Temperatur auf 20 bis 25°C und hebt den pH-Wert des Reaktionsgemisches im Laufe einer Stunde mit 2n Natronlauge von 5,0 auf 6,0 bis 6,5 an. Wenn der Stillstand des Natronlaugeverbrauches die Beendigung der Kondensation anzeigt, gibt man zum Reaktionsgemisch 7,2 g 2,4,6-Trifluorpyrimidin hinzu, hält die Temperatur auf 25 bis 28°C und den pH-Wert durch Zugabe weiterer Natronlauge auf 6,5 bis 7,0. Nach mehreren Stunden ist die Kondensation beendet. Der Farbstoff wird ausgesalzen, abgesaugt und im Vakuum getrocknet. Er entspricht der Formel

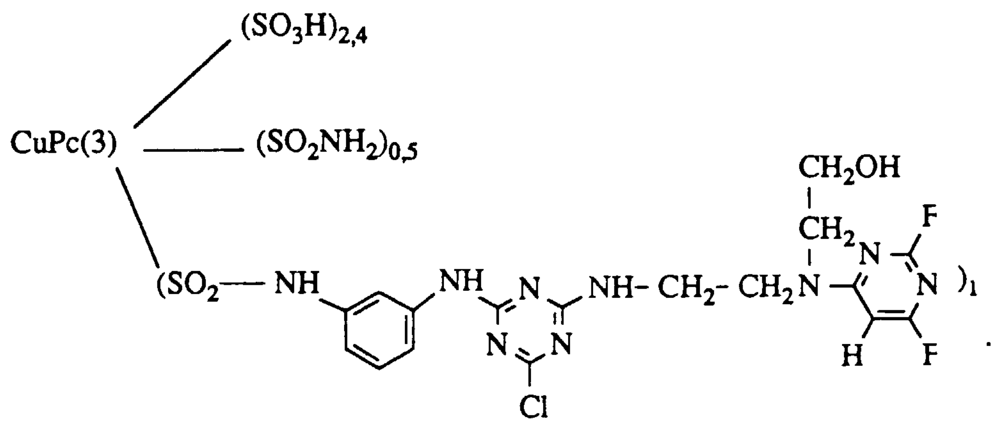

Er färbt Baumwolle in klarem Türkiston mit guten Fixierausbeuten und ausgezeichneten Naßechtheiten. $\lambda_{max}$ = 668 nm in $H_2O$.

Weitere Metallphthalocyanin-Reaktivfarbstoffe der allgemeinen Formel,

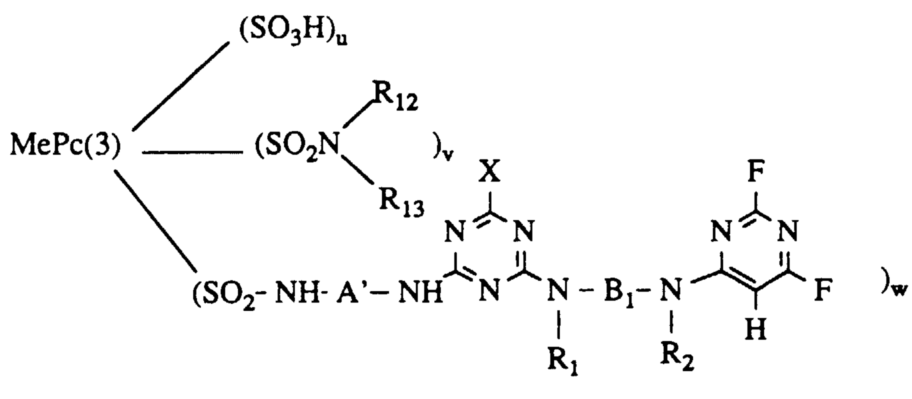

(IV)

deren Substituenten und Indices-Bedeutungen aus der nachstehenden Tabelle hervorgehen, lassen sich analog aufbauen

**Tabelle 18**

| Nr. Me | $R_{12}$ | $R_{13}$ | $R_1$ | $R_2$ | A' | $B_1$ | X | u | v | w |
|---|---|---|---|---|---|---|---|---|---|---|
| 300Cu | H | H | H | $C_2H_5$ | 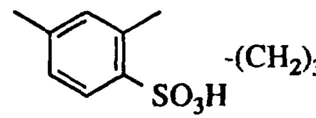 | $-(CH_2)_3-$ | F | 1,1 | 0,5 | 2,3 |
| 301Cu | - | - | H | H | 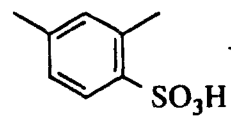 | 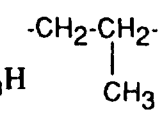 | Cl | 1,4 | 0 | 2,5 |
| 302Ni | H | H | H | $CH_2$-$CH_2OH$ | 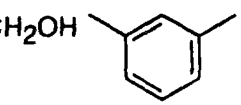 | $-(CH_2)_2-$ | Cl | 1,3 | 0 | 2,5 |
| 303Cu | $CH_3$ | $CH_2$-$CH_2$-$SO_3H$ | H | $CH_3$ | 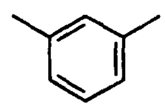 | $-(CH_2)_3-$ | Cl | 1,1 | 0,4 | 2,5 |
| 304Ni | H | H | H | H | 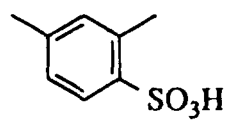 | 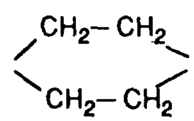 | F | 1,1 | 0,5 | 2,3 |

Beispiel 305

26 g des Natriumsalzes der Verbindung der Formel

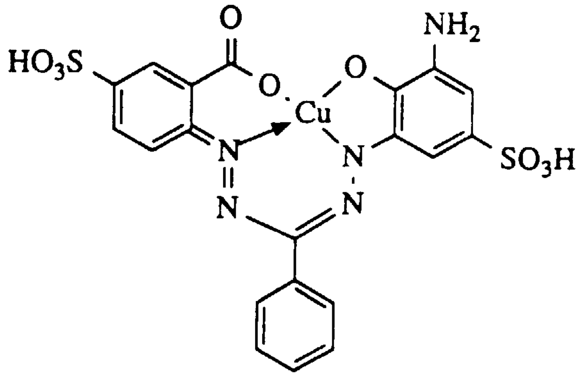

werden in 200 ml Wasser bei pH 7,5 gelöst. Man kühlt auf 0°C ab und gibt 9 g Cyanurchlorid zu und hält dabei den pH-Wert durch Zugabe von Sodalösung bei 5,5. Nach beendeter Umsetzung wird eine neutralisierte Lösung von 9,5 g 2,5-Diaminobenzol-1,4-disulfonsäure in 100 ml Wasser zugetropft Der pH-Wert wird dabei mit Sodalösung bei 7 gehalten. Man läßt die Temperatur innerhalb von 2 h auf 25°C steigen. Nach beendeter Kondensation salzt man den gebildeten Farbstoff aus und saugt ab.

Der erhaltene Farbstoff der Formel

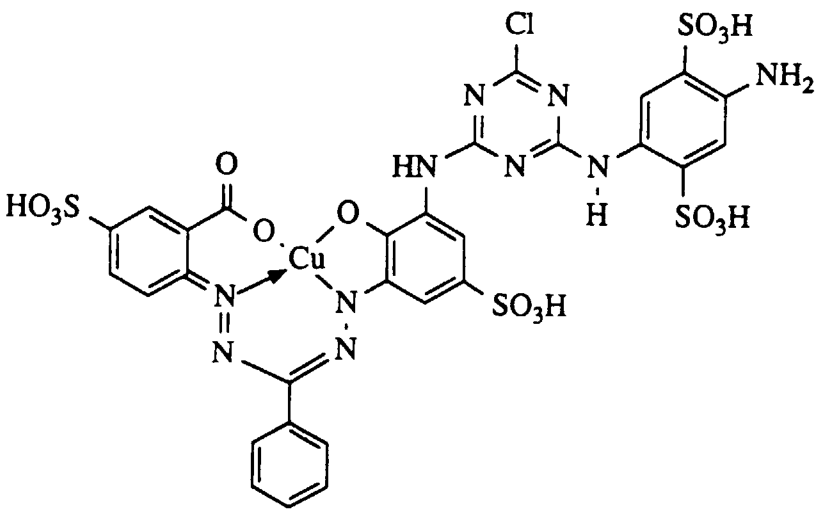

wird als Paste in 300 ml Wasser suspendiert; der pH-Wert der Mischung wird mit 10 %iger Natronlauge auf 8 bis 9 gestellt. Bei 40 bis 50°C werden dann während 30 min 7 g 2,4,6-Trifluorpyrimidin zugegeben, dabei wird der pH-Wert mit 10 %iger Natronlauge auf 8 bis 9 gehalten.

Nach beendeter Umsetzung wird der Farbstoff ausgesalzen, isoliert, getrocknet und gemahlen.

Der so erhaltene Farbstoff der Formel

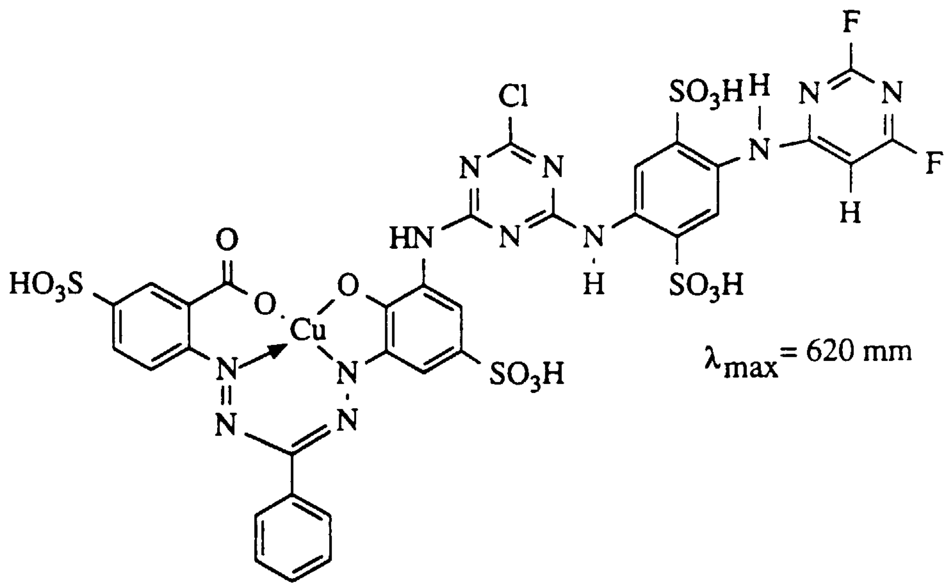

$\lambda_{max}$ = 620 mm

färbt Baumwolle in echten blauen Tönen.

Beispiel 306

20 g 2,5-Diaminobenzolsulfonsäure werden in 200 ml Wasser bei pH 6,5 bis 7,5 gelöst. Bei 20°C werden 12 g 2,4,6-Trifluorpyrimidin zugegeben, der pH wird auf 6 bis 7 gehalten. Man erwärmt zur Vervollständigung der Kondensation auf 35 bis 45°C. Die resultierende trübe Lösung des Zwischenprodukts der Formel

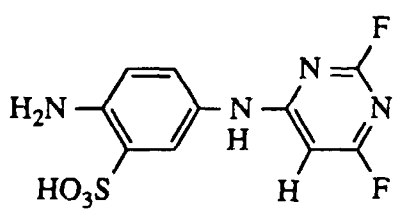

wird klar filtriert, anschließend auf -5°C abgekühlt und mit 9 ml Cyanurfluorid versetzt. Der pH wird dabei mit 10 %iger Natronlauge auf 6 gehalten.

35 g des Natriumsalzes der Verbindung der Formel

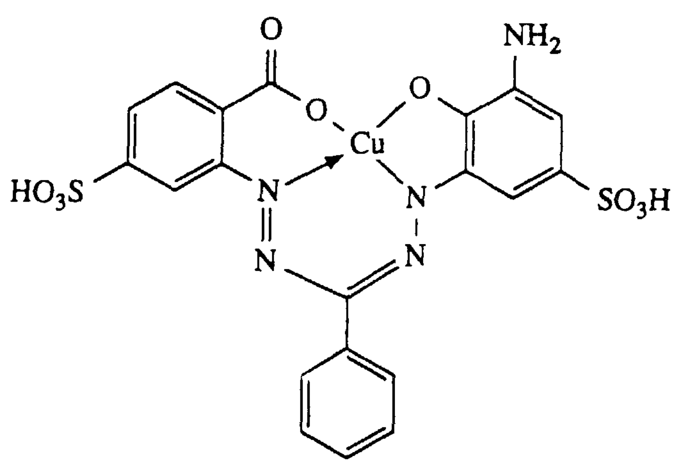

werden in 200 ml Wasser bei pH 7 bis 8 gelöst und portionsweise der Lösung der oben hergestellten Komponente der Formel

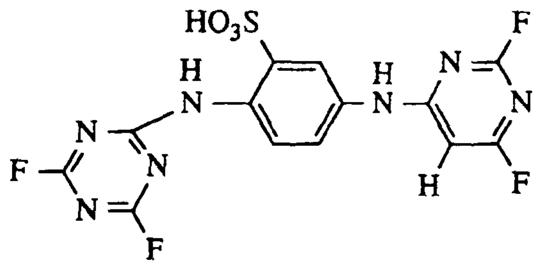

zugesetzt. Dabei wird der pH mit 10 %iger Natronlauge auf 7 gehalten. Man läßt die Temperatur innerhalb von 2 h auf 20°C steigen. Der resultierende Farbstoff der Formel

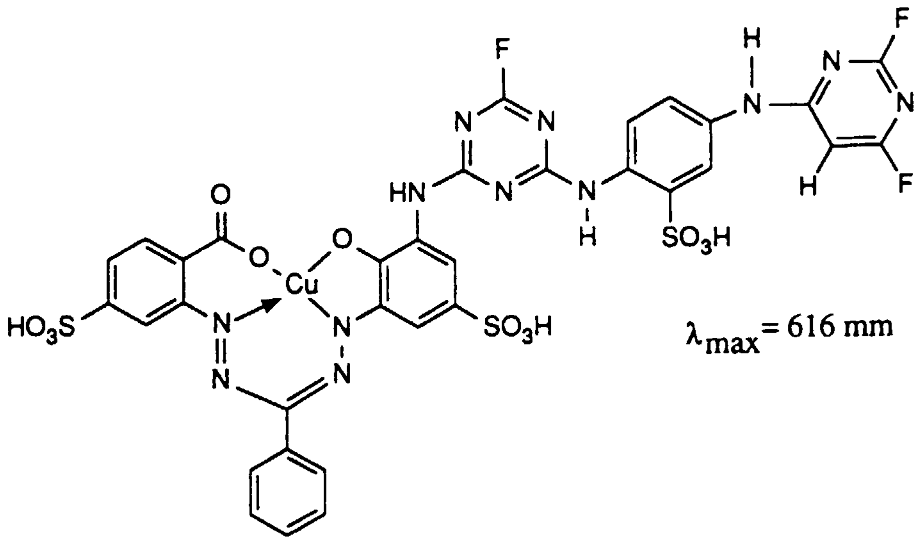

$\lambda_{max}$ = 616 mm

wird ausgesalzen, abfiltriert und getrocknet. Er färbt Baumwolle aus langer Flotte mit sehr guten Fixierausbeuten in blauen Tönen.

Beispiel 307

Weitere wertvolle erfindungsgemäße blaue Formazanfarbstoffe erhält man nach den Angaben der Beispiele 305 oder 306 durch Umsetzung der in Tabelle 6 angegebenen Komponenten.

In der Brücke -$A_4$- ist das mit * gekennzeichnete N-Atom an das C-Atom der Triazinringe gebunden.

Die erhaltenen Farbstoffe besitzen sehr gute faserreaktive Farbstoffeigenschaften und liefern nach den für Cellulosefasern üblichen Färbe- und Druckverfahren farbstarke echte Färbungen und Drucke mit sehr hohen Fixierausbeuten.

Tabelle 19:

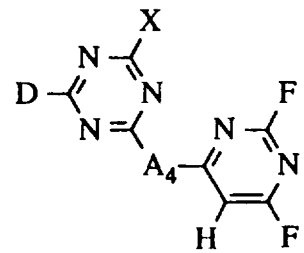

| Nr. | D | Trihalogentriazin | $A_4$ | $\lambda_{max}$ |
|---|---|---|---|---|
| 308 | N-(2-Carboxy-4-sulfophenyl)-N'-(2'-hydroxy-3'-amino-5'-sulfo-phenyl)-ms-phenylformazan, Cu-Komplex, | 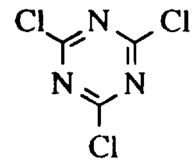 | 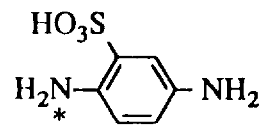 | 624 nm |
| 309 | N-(2-Carboxy-4-sulfophenyl)-N'-(2'-hydroxy-3'-amino-5'-sulfo-phenyl)-ms-phenylformazan, Cu-Komplex, | 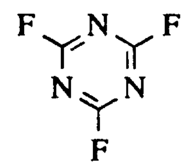 | 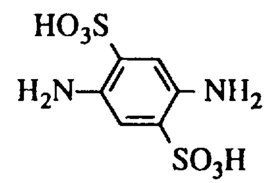 | 616 nm |
| 310 | N-(2-Carboxy-4-sulfophenyl)-N'-(2'-hydroxy-3'-amino-5'-sulfo-phenyl)-ms-phenylformazan, Cu-Komplex, | 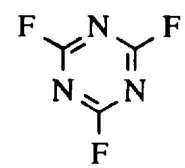 | 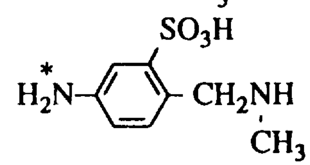 | 626 nm |

Tabelle 19: (Fortsetzung)

| Nr. | D | Trihalogentriazin | $A_4$ | $\lambda_{max}$ |
|---|---|---|---|---|
| 311 | N-(2-Carboxy-4-sulfophenyl)-N'-(2'-hydroxy-3'-amino-5'-sulfo-phenyl)-ms-phenylformazan, Cu-Komplex, | 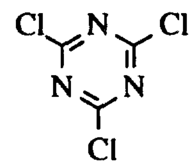 | 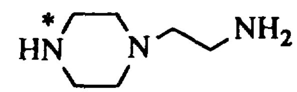 | 620 nm |
| 312 | N-(2-Carboxy-4-sulfophenyl)-N'-(2'-hydroxy-3'-amino-5'-sulfo-phenyl)-ms-phenylformazan, Cu-Komplex, | 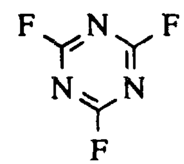 | 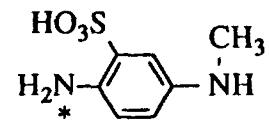 | 622 nm |
| 313 | N-(2-Carboxy-5-sulfophenyl)-N'-(2'-hydroxy-3'-amino-5'-sulfo-phenyl)-ms-phenylformazan, Cu-Komplex, | 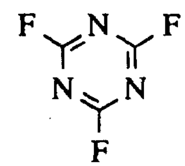 | 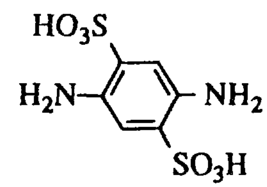 | 610 nm |
| 314 | N-(2-Carboxy-5-sulfophenyl)-N'-(2'-hydroxy-3'-amino-5'-sulfo-phenyl)-ms-phenylformazan, Cu-Komplex, | 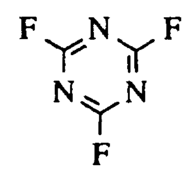 | 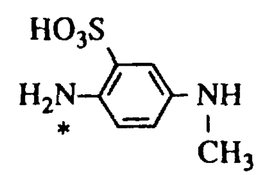 | 616 nm |

Tabelle 19: (Fortsetzung)

| Nr. | D | Trihalogentriazin | $A_4$ | $\lambda_{max}$ |
|---|---|---|---|---|
| 315 | N-(2-Carboxy-5-sulfophenyl)-N'-(2'-hydroxy-3'-amino-5'-sulfophenyl)-ms-phenylformazan, Cu-Komplex, | 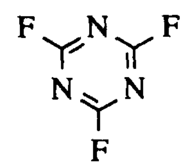 | 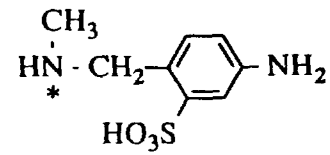 | 618 nm |
| 316 | N-(2-Carboxy-5-sulfophenyl)-N'-(2'-hydroxy-3'-amino-5'-sulfophenyl)-ms-phenylformazan, Cu-Komplex, | 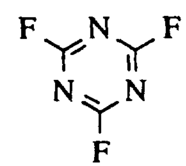 | 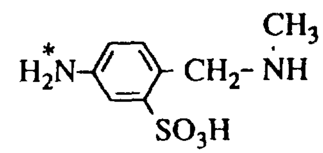 | 620 nm |
| 317 | N-(2-Carboxy-5-sulfophenyl)-N'-(2'-hydroxy-3'-amino-5'-sulfophenyl)-ms-phenylformazan, Cu-Komplex, | 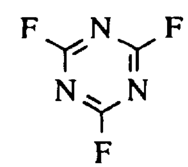 | 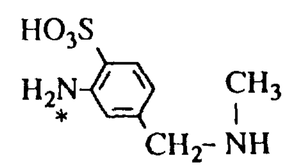 | 622 nm |
| 318 | N-(2-Carboxy-5-sulfophenyl)-N'-(2'-hydroxy-3'-amino-5'-sulfophenyl)-ms-phenylformazan, Cu-Komplex, | 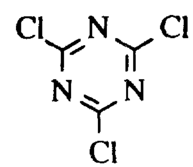 | 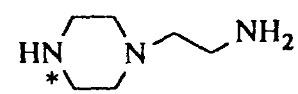 | 614 nm |

T a b e l l e 19: (Fortsetzung)

| Nr. | D | Trihalogentriazin | $A_4$ | $\lambda_{max}$ |
|---|---|---|---|---|
| 319 | N-(2-Carboxy-5-sulfophenyl)-N'-(2'-hydroxy-3'-amino-5'-sulfophenyl)-ms-phenylformazan, Cu-Komplex, | 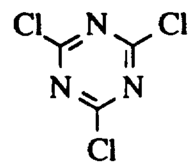 | 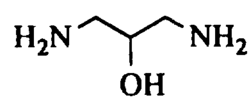 | 616 nm |
| 320 | N-(2-Carboxy-5-sulfophenyl)-N'-(2'-hydroxy-3'-amino-5'-sulfophenyl)-ms-phenylformazan, Cu-Komplex, | 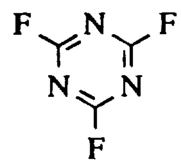 | 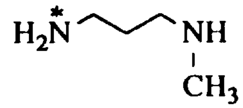 | 614 nm |
| 321 | N-(2-Carboxy-5-sulfophenyl)-N'-(2'-hydroxy-3'-amino-5'-sulfophenyl)-ms-phenylformazan, Cu-Komplex, | 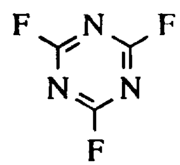 | 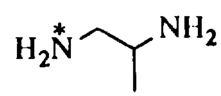 | 610 nm |
| 322 | N-(2-Carboxy-5-sulfophenyl)-N'-(2'-hydroxy-3'-amino-5'-sulfophenyl)-ms-phenylformazan, Cu-Komplex, | 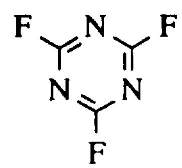 | 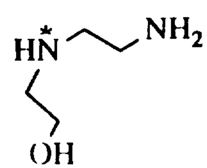 | 612 nm |

Tabelle 19: (Fortsetzung)

| Nr. | D | Trihalogentriazin | $A_4$ | $\lambda_{max}$ |
|---|---|---|---|---|
| 323 | N-(2-Carboxy-5-sulfophenyl)-N'-(2'-hydroxy-3'-amino-5'-sulfophenyl)-ms-phenylformazan, Cu-Komplex, | 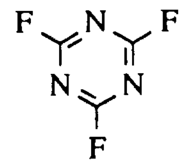 | 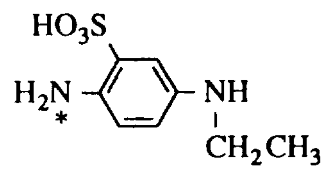 | 615 nm |
| 324 | N-(2-Carboxy-4-aminophenyl)-N'-(2'-hydroxy-5'-sulfophenyl)-ms-(2"-sulfophenyl)-formazan, Cu-Komplex, | 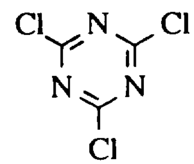 | 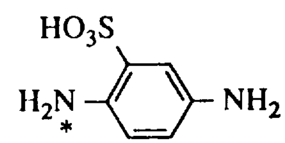 | 600 nm |
| 325 | N-(2-Carboxy-4-aminophenyl)-N'-(2'-hydroxy-5'-sulfophenyl)-ms-(2"-sulfophenyl)-formazan, Cu-Komplex, | 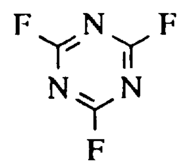 | 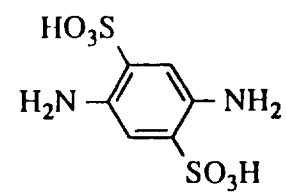 | 600 nm |
| 326 | N-(2-Carboxy-5-aminophenyl)-N'-(2'-hydroxy-3'-amino-5'-sulfophenyl)-ms-(2"-sulfophenyl)-formazan, Cu-Komplex, | 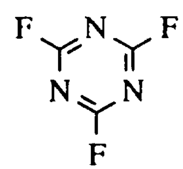 | 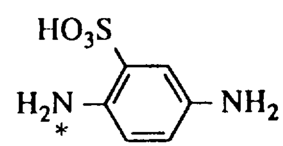 | 592 nm |

Tabelle 19: (Fortsetzung)

| Nr. | D | Trihalogentriazin | $A_4$ | $\lambda_{max}$ |
|---|---|---|---|---|
| 327 | N-(2-Carboxy-4-aminophenyl)-N'-(2'-hydroxy-3',5'-disulfophenyl)-ms-(2"-sulfophenyl)-formazan, Cu-Komplex, | 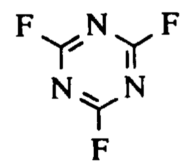 | 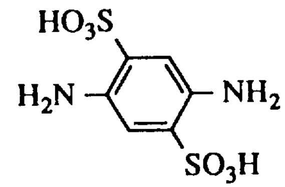 | 608 nm |
| 328 | N-(2-Carboxy-5-sulfophenyl)-N'-(2'-hydroxy-5'-amino-3'-sulfophenyl)-ms-phenylformazan, Cu-Komplex, | 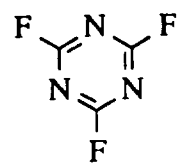 | 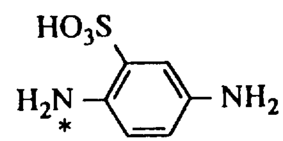 | 634 nm |
| 329 | N-(2-Carboxy-5-sulfophenyl)-N'-(2'-hydroxy-5'-amino-3'-sulfophenyl)-ms-phenylformazan, Cu-Komplex, | 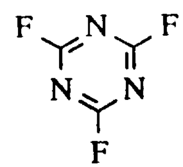 | 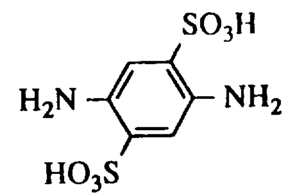 | 636 nm |
| 330 | N-(2-Carboxy-4-sulfophenyl)-N'-(2'-hydroxy-5'-amino-3'-sulfophenyl)-ms-phenylformazan, Cu-Komplex, | 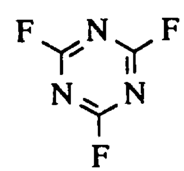 | 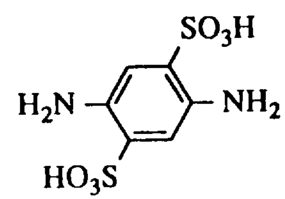 | 638 nm |

Tabelle 19: (Fortsetzung)

| Nr. | D | Trihalogentriazin | $A_4$ | $\lambda_{max}$ |
|---|---|---|---|---|
| 331 | N-(2-Carboxy-4-sulfophenyl)-N'-(2'-hydroxy-5'-sulfophenyl)-ms-(3''-aminophenyl)-formazan, Cu-Komplex, | 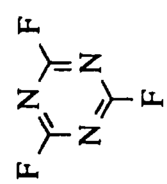 | 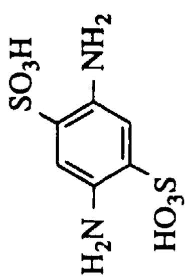 | 622 nm |

Beispiel 332

332.1

9,9 g 2,4-Diaminobenzolsulfonsäure werden in 100 ml Wasser mit LiOH bei pH 6,5 gelöst. Zu dieser Lösung werden bei 35 bis 40°C 7,6 g 2,4,6-Trifluorpyrimidin in 30 min zugetropft und gleichzeitig der pH mit $Li_2CO_3$ bei 6,5 gehalten. Nach 2 h werden 100 g Eis und 1 g NaF zugesetzt. Bei 0°C werden 6,6 g Cyanurfluorid zugegeben, der pH sinkt auf ca. 3,7 bis 3,8. Nach 5 min ist die 2. Kondensation abgeschlossen und man erhält nach Filtration eine dunkle Lösung der Verbindung

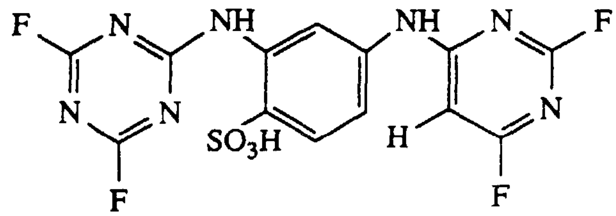

in Form ihres Li-Salzes.

332.1

10,4 g 7-Amino-4-hydroxy-2-naphthalinsulfonsäure werden in 150 ml Wasser bei pH 7 mit LiOH gelöst und die Kondensationslösung aus Beispiel 332.1 zugegeben. Der pH wird dabei mit $Na_2CO_3$-Lösung auf 5,5 gehalten. Nach 20 min wird der pH auf 6,5 angehoben und nach weiteren 20 min wird eine Suspension von diazotierter 1,5-Naphthalinsulfonsäure (14,1 g) zugegeben und der pH auf 6,5 angehoben.

Nach 1 h ist die Azokupplung beendet und der Farbstoff wird ausgesalzen, isoliert und getrocknet, er hat die Formel

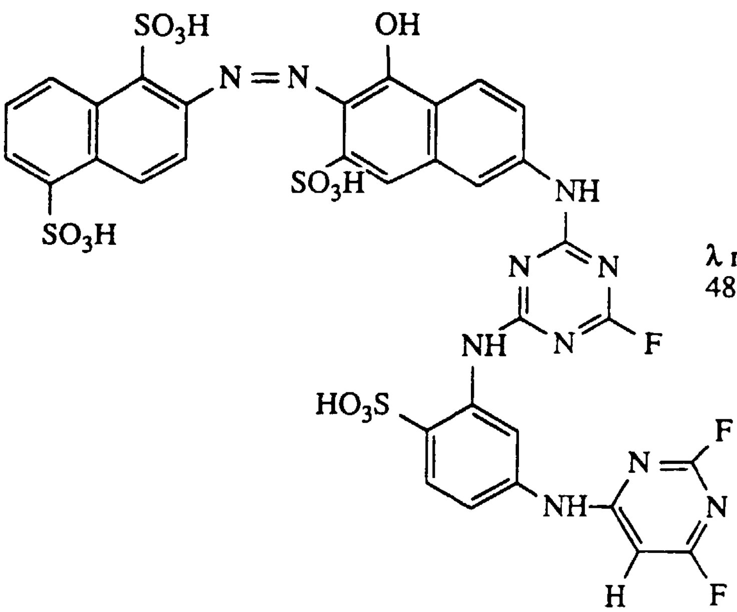

$\lambda$ max = 488 nm ($H_2O$)

und färbt Baumwolle in brillanten orangen Farbtönen mit sehr guten Naßechtheiten.

332.3

Ein weiterer Weg, den Farbstoff aus Beispiel 332.2 herzustellen besteht darin, den Azofarbstoff der Formel

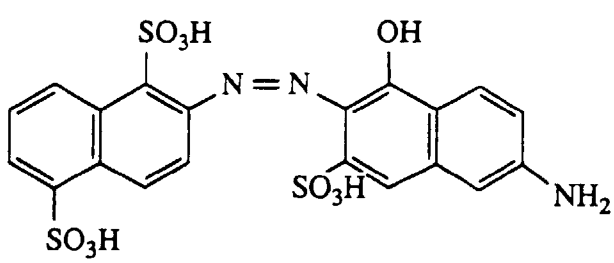

mit der Reaktivkomponente aus Beispiel 332.1 bei pH 7 bis 7,5 kondensiert.

Durch Variation der Diazokomponente (D), Kupplungskomponente (K) und Diamine (W) können die Farbstoffe der

allgemeinen Formel

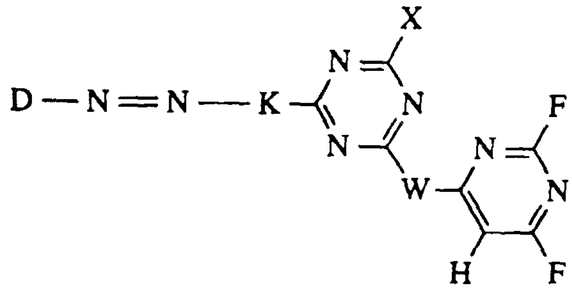

oder

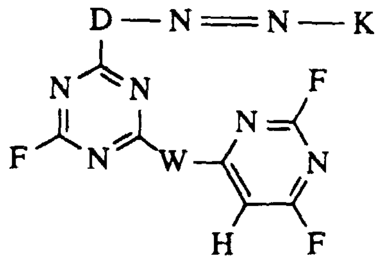

analog den Beispielen 236 und 332 hergestellt werden, sie färben Baumwolle in den angegebenen Tönen.

Tabelle 20

| Nr. | X | D | K | W | Farbton $\lambda_{max}$ ($H_2O$) |
|---|---|---|---|---|---|
| 333 | F | 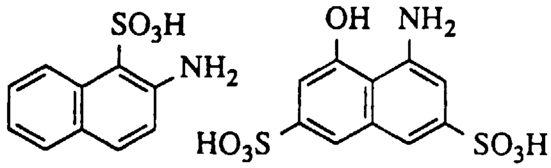 | | 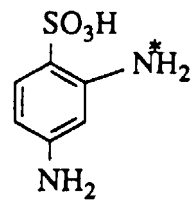 | blaust. Rot 544 nm |
| 334 | F | 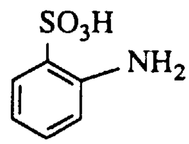 | 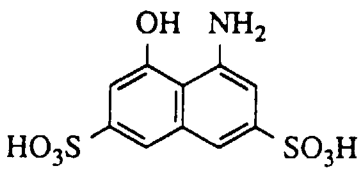 | 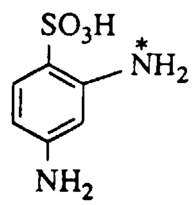 | gelbst. Rot |
| 335 | F | 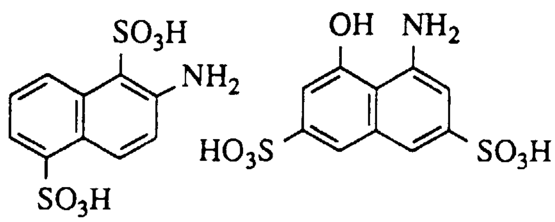 | | 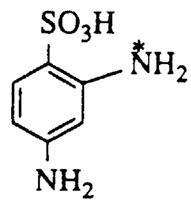 | blaust. Rot |
| 336 | Cl | 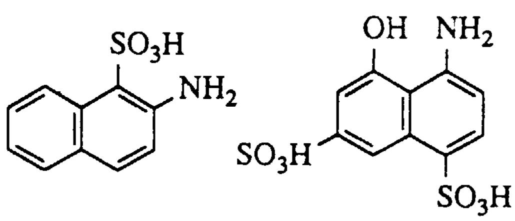 | | 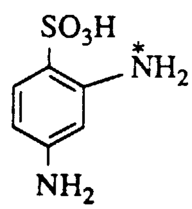 | Rot |
| 337 | F | 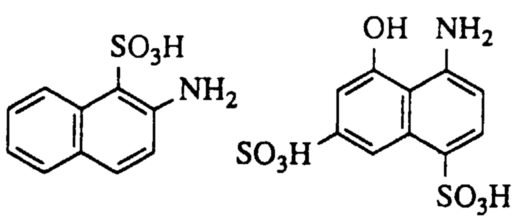 | | 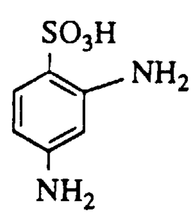 | Rot |

T a b e l l e 20 (Fortsetzung)

| Nr. | X | D | K | W | Farbton $\lambda_{max}$ ($H_2O$) |
|---|---|---|---|---|---|
| 338 | F | 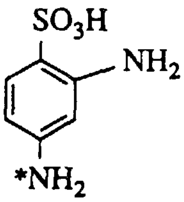 | 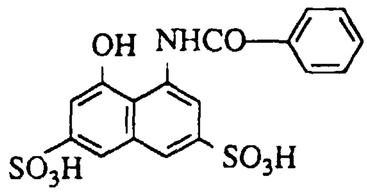 | 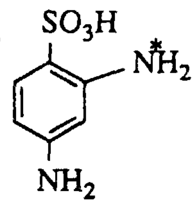 | Rot<br>515 nm |
| 339 | F | 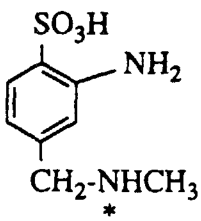 | 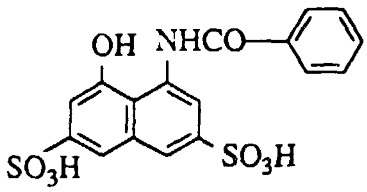 | 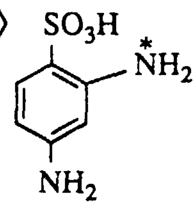 | Rot |
| 340 | F | 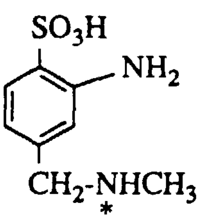 | 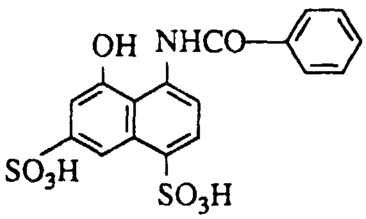 | 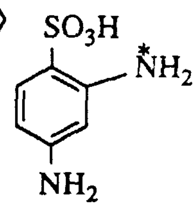 | gelbst. Rot |
| 341 | F | 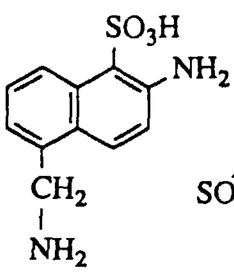 | 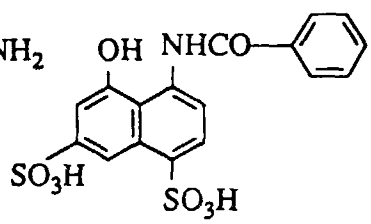 | 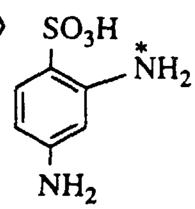 | blaust. Rot<br>514 nm |
| 342 | F | 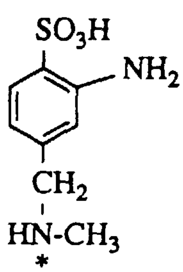 | 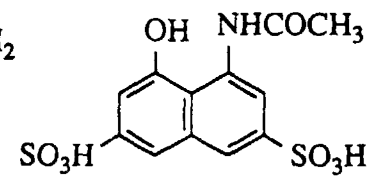 | 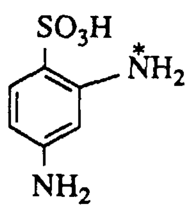 | Rot<br>504, 526 nm |

Tabelle 20 (Fortsetzung)

| Nr. | X | D | K | W | Farbton $\lambda_{max}$ ($H_2O$) |
|---|---|---|---|---|---|
| 343 | F | 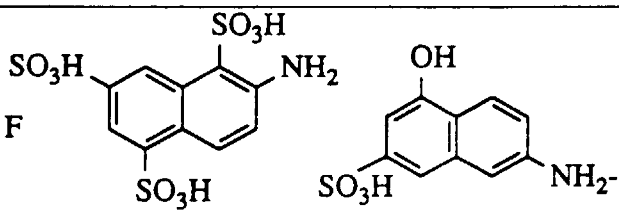 | | 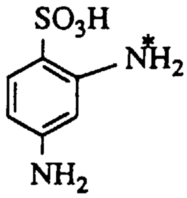 | orange |
| 344 | F | 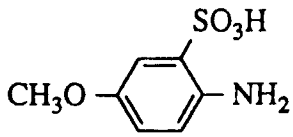 | 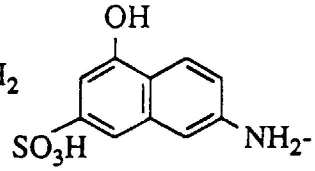 | 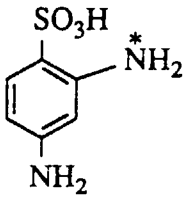 | Scharlach 503 nm |
| 345 | F | 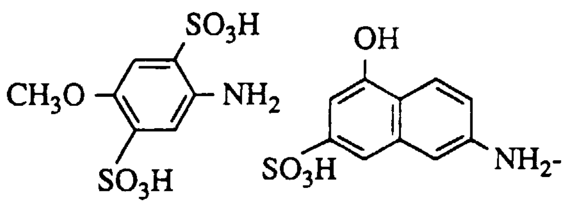 | | 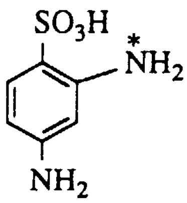 | Orange 498 nm |
| 346 | F | 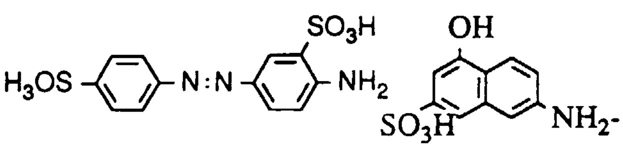 | | 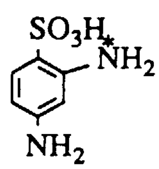 | Rot |
| 347 | F | 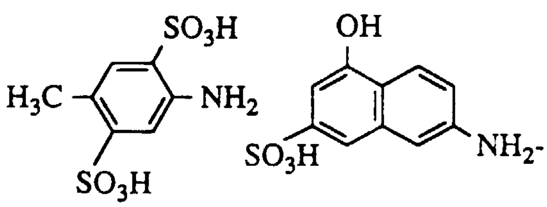 | | 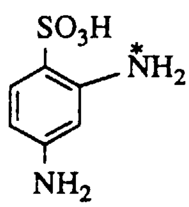 | Orange |

Tabelle 20 (Fortsetzung)

| Nr. | X | D | K | W | Farbton $\lambda_{max}$ ($H_2O$) |
|---|---|---|---|---|---|
| 348 | F | 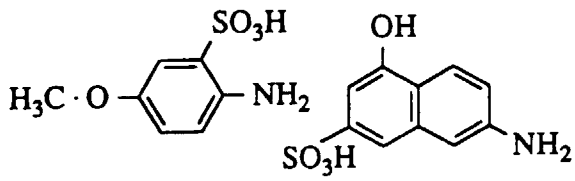 | | 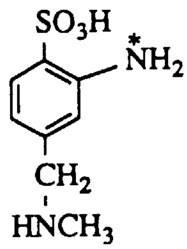 | Scharlach 504 nm |
| 349 | F | 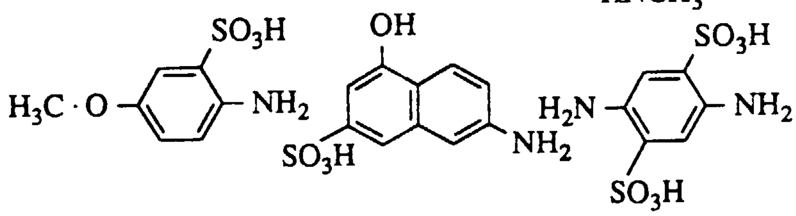 | | | Scharlach 504 nm |
| 350 | F | 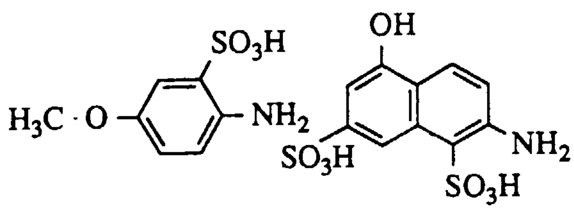 | | 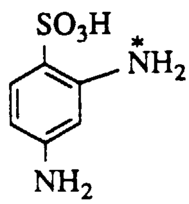 | Scharlach |
| 351 | F | 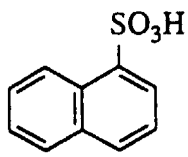 | 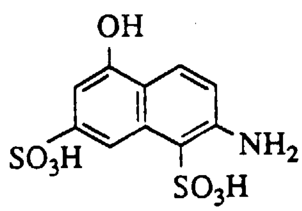 | 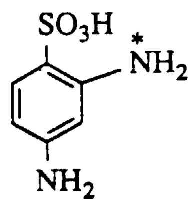 | Scharlach |
| 352 | F | 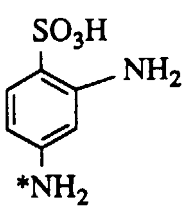 | 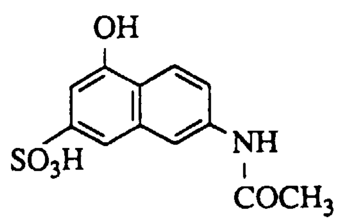 | 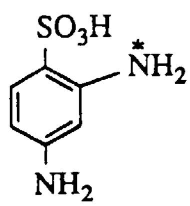 | Orange |

Tabelle 20 (Fortsetzung)

| Nr. | X | D | K | W | Farbton $\lambda_{max}$ ($H_2O$) |
|---|---|---|---|---|---|
| 353 | F | 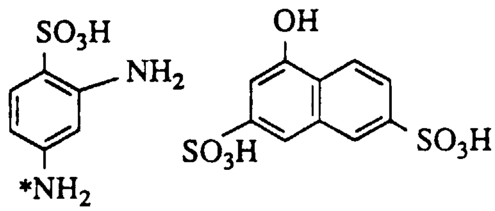 | | 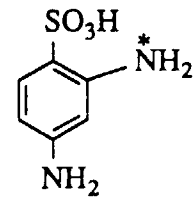 | Orange 488 nm |
| 354 | F | 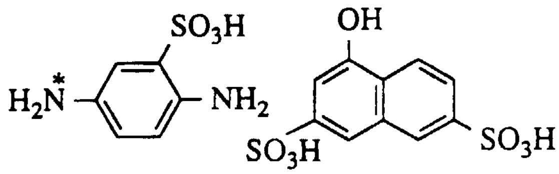 | | 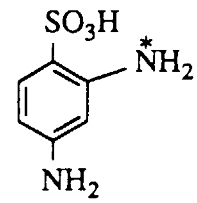 | blaust. Rot |
| 355 | F | 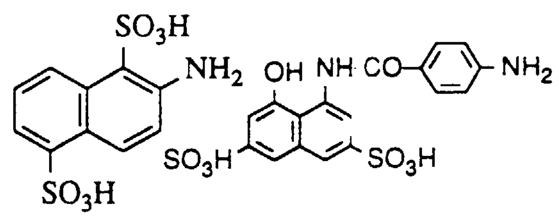 | | 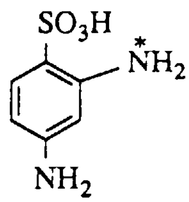 | blaust. Rot |
| 356 | F | 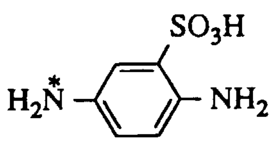 | 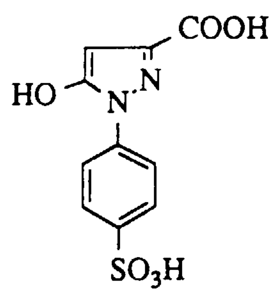 | 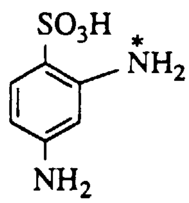 | Goldgelb $\lambda_{max}$ = 448nm |

+) Die mit * gekennzeichneten N-Atome sind mit dem Triazinylrest verbunden.

Beispiel 357

23,6 g 7-Amino-1,3-naphthalindisulfonsäure-mono-Natriumsalz wurden in 150 ml Wasser/30 g Eis und 20 ml konzentrierter Salzsäure angerührt und bei 5 bis 10°C tropfenweise mit 17 ml einer wäßrigen Natriumnitritlösung (300 g $NaNO_2$/l) versetzt. Nach einer Stunde Rühren bei 5 bis 10°C wurde die überschüssige salpetrige Säure mit Amidosulfonsäure entfernt.

Diese cremefarbene Suspension dosierte man nun innerhalb von 30 Minuten zu einer neutralen Lösung der Kupplungskomponente, die aus 13,5 g N-(3-Aminophenyl)-acetamidhydrochlorid, 50 ml Wasser, 50 g Eis und ca. 30 ml einer 10 %igen wäßrigen Lithiumhydroxidlösung bereitet worden war. Dabei hielt man den pH-Wert der Reaktionsmischung mit 20 %iger wäßriger Kaliumhydrogencarbonatlösung konstant bei 6,0 bis 6,5. Die Temperatur sollte nach Möglichkeit 10°C nicht übersteigen. Nach erfolgter Zugabe rührte man 30 Minuten nach, wobei man den pH-Wert weiterhin konstant hielt.

15,2 g 2,4-Diaminobenzolsulfonsäure-mono-Natriumsalz wurden in 100 ml Wasser angerührt und mit 10 %iger Lithiumhydroxidlösung bei pH 6 gelöst. Die Lösung wurde auf 40°C erwärmt und mit 12 g 2,4,6-Trifluorpyrimidin versetzt. Während dieser Kondensationsreaktion hielt man den pH-Wert mit Lithiumhydroxidlösung konstant bei 5,8 bis 6,2. Nach 2 Stunden bei 40°C war kaum noch eine pH-Änderung zu beobachten und die Kondensation nach HPLC-Analyse vollständig. Das ausgefallene Lithiumfluorid wurde durch Filtration abgetrennt. Mit ca. 200 g Eis wurde anschließend auf 0°C abgekühlt und bei dieser Temperatur mit 10 g Trifluor-s-triazin umgesetzt. Unter gleichzeitiger Dosierung von 10 %iger Lithiumhydroxidlösung hielt man den pH-Wert der Zweitkondensation konstant zwischen 6,0 und 6,5. Nach 15 Minuten bei 0 bis 2°C war die Reaktion beendet.

Zu dieser farblosen Kondensationslösung dosierte man bei 0°C und innerhalb von 20 Minuten die oben hergestellte, 8°C warme rotbraune Kupplungslösung und hielt dabei mit 20 %iger Sodalösung den pH-Wert konstant zwischen 7,0 und 7,2.

Innerhalb von 3 Stunden wurde bei konstantem pH 7,0 bis 7,2 auf 25°C erwärmt. Nach einer weiteren Nachrührphase von einer Stunde war die Umsetzung vollständig. Die Farbstofflösung wurde geklärt, um unlösliche Bestandteile, wie Lithiumfluorid, abzutrennen, und mit 50 g Natriumchlorid ausgesalzen. Der ausgefallene Farbstoff wurde abgenutscht und getrocknet. Man erhielt 61 g eines orangeroten Pulvers ($\lambda_{max}$ = 406 nm ($H_2O$)), dem die Struktur

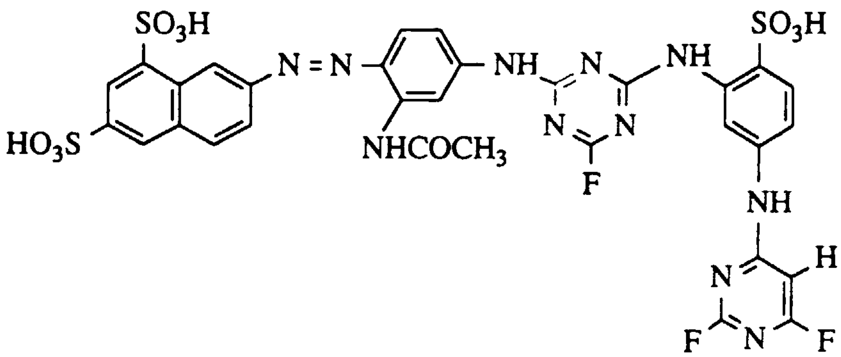

zukommt und das Baumwolle in goldgelben, hochechten Farbtönen färbt.

Durch Variation der Diazokomponente D-$NH_2$, der Kupplungskomponente mit $R^1$ und $R^2$ sowie der Diaminoverbindung waren in Analogie zu Beispiel 357 weitere wertvolle goldgelbe Reaktivfarbstoffe der Formel

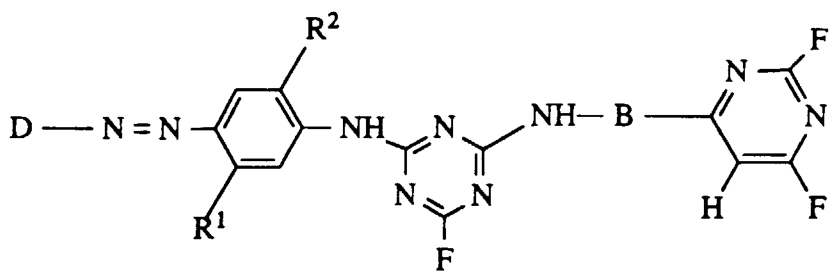

zugänglich, z.B. die in nachfolgender Tabelle 21.

Tabelle 21

| Bsp. | D | $R^1$ | $R^2$ | B*) | $\lambda_{max}$ ($H_2O$) |
|---|---|---|---|---|---|
| 358 | 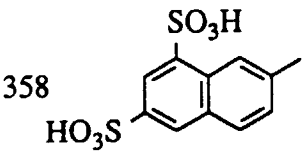 | $CH_3$ | H | 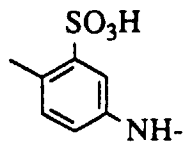 | |
| 359 | 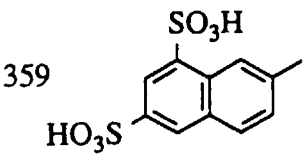 | H | $OCH_3$ | 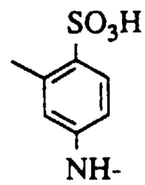 | |
| 360 | 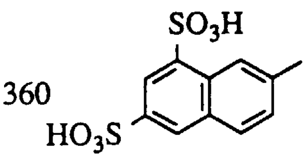 | $NHCONH_2$ | H | 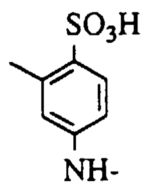 | |
| 361 | 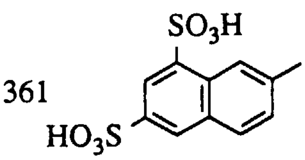 | $NHCOCH_2OH$ | H | 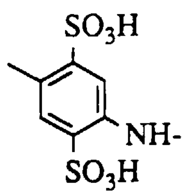 | 408 nm |
| 362 | 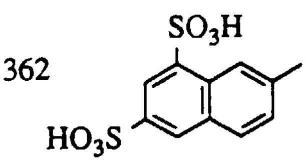 | $NHCOCH_2OSO_3H$ | H | 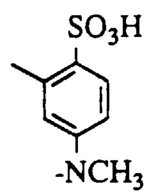 | 412 nm |
| 363 | 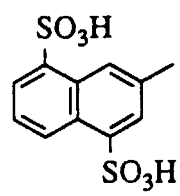 | $CH_3$ | H | 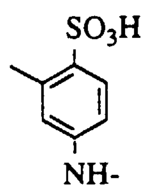 | |
| 364 | 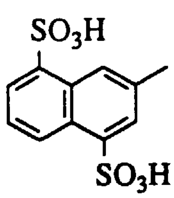 | H | $OCH_3$ | 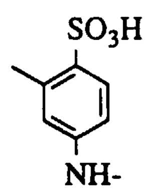 | |

Tabelle 21 (Fortsetzung)

| Bsp. | D | $R^1$ | $R^2$ | B*) | $\lambda_{max}$ ($H_2O$) |
|---|---|---|---|---|---|
| 365 | 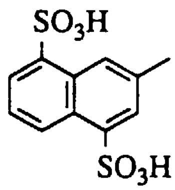 | $OCH_3$ | $CH_3$ | 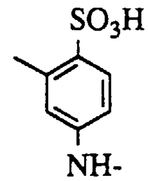 | |
| 366 | 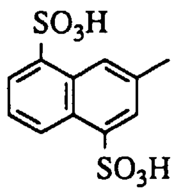 | $NHCOCH_3$ | H | 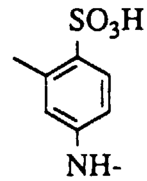 | |
| 367 | 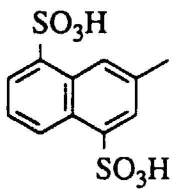 | $NHCOCH_3$ | H | 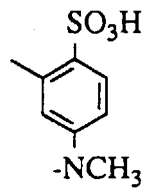 | |
| 368 | 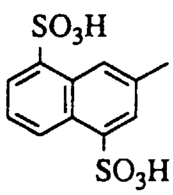 | $NHCONH_2$ | H | 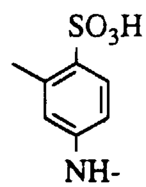 | |
| 369 | 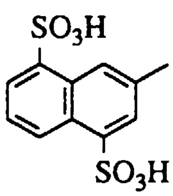 | $NHCOCH_3$ | H | 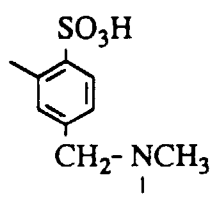 | |
| 370 | 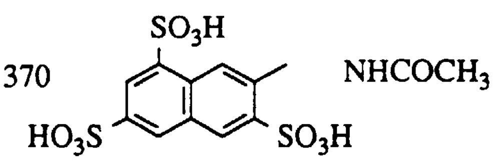 | $NHCOCH_3$ | H | 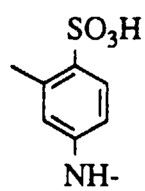 | 408 nm |

Tabelle 21 (Fortsetzung)

| Bsp. | D | $R^1$ | $R^2$ | B*) | $\lambda_{max}$ ($H_2O$) |
|---|---|---|---|---|---|
| 371 | 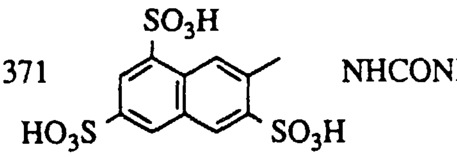 | $NHCONH_2$ | H | 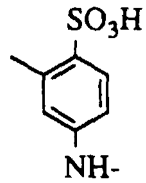 | 426 nm |
| 372 | 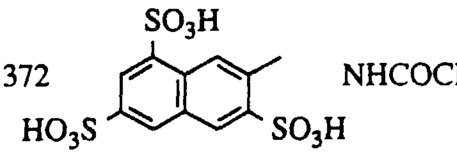 | $NHCOCH_3$ | H | 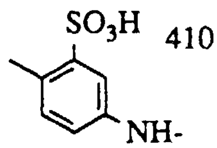 | 410 nm |
| 373 | 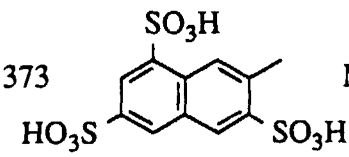 | $NHCONH_2$ | H | 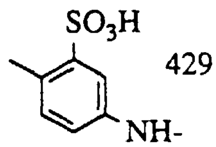 | 429 nm |
| 374 | 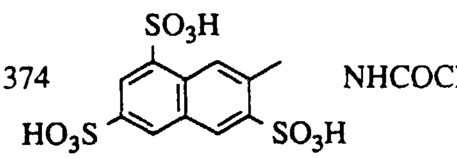 | $NHCOCH_3$ | H | 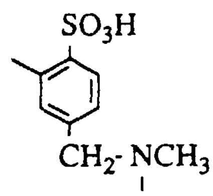 | |
| 375 | 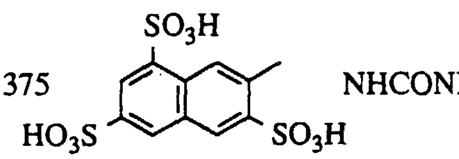 | $NHCONH_2$ | H | 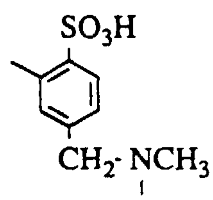 | |
| 376 | 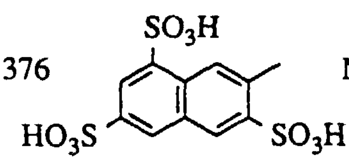 | $NHCONH_2$ | H | 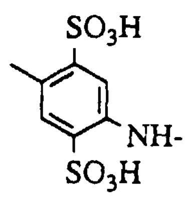 | |

Tabelle 21 (Fortsetzung)

| Bsp. | D | $R^1$ | $R^2$ | B*) | $\lambda_{max}$ ($H_2O$) |
|---|---|---|---|---|---|
| 377 | 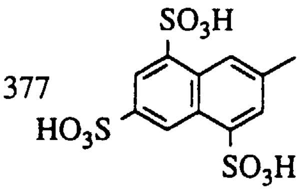 | $NHCOCH_3$ | H | 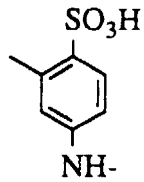 | |
| 378 | 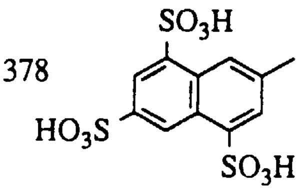 | $NHCONH_2$ | H | 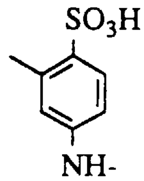 | |
| 379 | 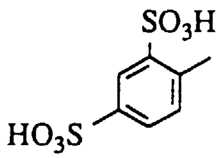 | $NHCOCH_3$ | H | 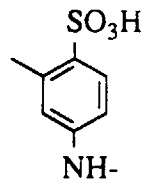 | 391 nm |
| 380 | 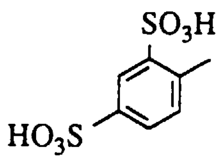 | $NHCONH_2$ | H | 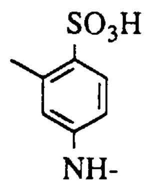 | 395 nm |
| 381 | 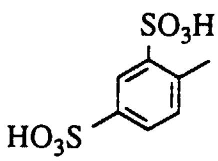 | $NHCOCH_2OH$ | H | 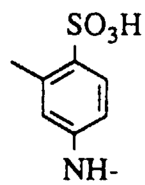 | 392 nm |
| 382 | 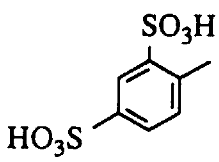 | $NHCOCH_3$ | H | 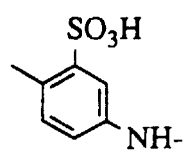 | 394 nm |

Tabelle 21 (Fortsetzung)

| Bsp. | D | $R^1$ | $R^2$ | B*) | $\lambda_{max}$ ($H_2O$) |
|---|---|---|---|---|---|
| 383 | 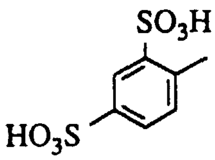 | $NHCONH_2$ | H | 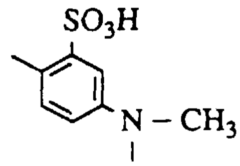 | |
| 384 | 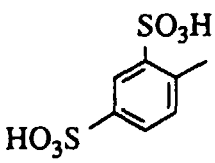 | $NHCOCH_3$ | H | 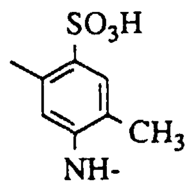 | 392 nm |
| 385 | 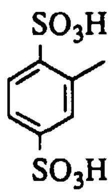 | $NHCOCH_3$ | H | 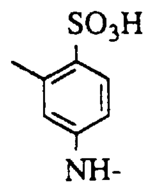 | |
| 386 | 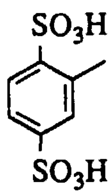 | $NHCONH_2$ | H | 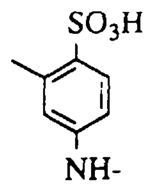 | |
| 387 | 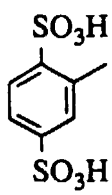 | $NHCONH_2$ | H | 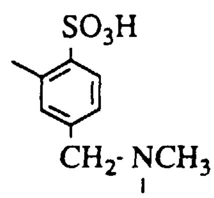 | |
| 388 | 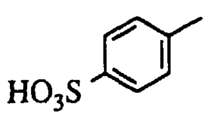 | $NHCOCH_2OSO_3H$ | H | 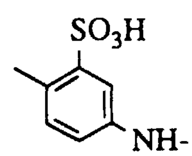 | |

*) Der Pyrimidinyl-Rest ist immer an das N-Atom von B gebunden.

Ersetzt man in Beispiel 357 und den Beispielen der Tabelle 21 Trifluortriazin durch Cyanurchlorid, so erhält man vergleichbar hochechte goldgelbe bifunktionelle Reaktivfarbstoffe, die sich lediglich in einer um 20°C höheren Färbetemperatur unterscheiden.

Beispiel 389

Eine neutrale wäßrige Lösung von 30,9 g 2-Amino-3,6,8-naphthalintrisulfonsäuredinatriumsalz und 6 g Natriumnitrit in 200 ml Wasser wurde innerhalb von 15 Minuten zu einer Mischung aus 40 ml konzentrierter Salzsäure, 50 g

Eis und 50 ml Wasser zudosiert. Nach weiteren 30 Minuten Rühren bei 5 bis 10°C war die Diazotierung beendet. Der Nitritüberschuß wurde mit Amidosulfonsäure entfernt.

Diese Suspension gab man nun innerhalb von 30 Minuten zu einer neutralen Suspension der Kupplungskomponente, die aus 13,5 g N-(3-Aminophenyl)-harnstoff und 100 ml Wasser bereitet worden war. Dabei hielt man den pH-Wert der Reaktionsmischung mit 20 %iger wäßriger Kaliumhydrogencarbonatlösung konstant bei 6,0 bis 6,5. Die Temperatur sollte nach Möglichkeit 15°C nicht übersteigen. Nach erfolgter Zugabe rührte man 15 Minuten nach, wobei man den pH-Wert der orangeroten Lösung weiterhin konstant hielt.

Zu dieser rotbraunen Kupplungslösung fügte man soviel Eis, bis eine Temperatur von 0°C erreicht war. Es wurde zügig mit 12 g Cyanurfluorid versetzt und dabei gleichzeitig der pH-Wert durch Zugabe einer 20 %igen Kaliumhydrogencarbonatlösung konstant bei 6,0 bis 6,2 gehalten. Die Kondensation war nach 10 Minuten beendet. Mit wenigen Tropfen Salzsäure wurde ein pH-Wert von 5,8 eingestellt, und diese Lösung mit einer Lösung von 5,8 g 1,2-Diaminopropan in 10 ml Wasser, die ebenfalls mit Salzsäure auf pH 5,8 eingestellt war, versetzt. Anschließend erwärmte man innerhalb von 2 Stunden die rote Reaktionsmischung auf 20°C und hielt dabei den pH-Wert mit Kaliumhydrogencarbonatlösung bei 5,8 bis 5,9. Dabei resultierte kurzzeitig eine Lösung, aus der während einer einstündigen Nachrührphase bei pH 6,0 bis 6,1 ein orangeroter Niederschlag ausfiel. Dieses Farbstoffzwischenprodukt wurde abgesaugt, und die isolierte feuchte Paste in 200 ml Wasser bei pH 6,0 angerührt. Anschließend wurde mit 12 g 2,4,6-Trifluorpyrimidin versetzt, auf 45°C aufgeheizt und bei pH 7,5 bis 8,0 kondensiert. Die pH-Steuerung erfolgte mittels Sodalösung. Die Kondensation war nach ca. 2 Stunden beendet. Die Farbstofflösung wurde klarfiltriert und mit 25 g Kochsalz ausgesalzen. Nach Abnutschen und Trocknen resultierten 58 g eines orangeroten Pulvers ($\lambda_{max}$ = 428 nm ($H_2O$)), dem die Struktur

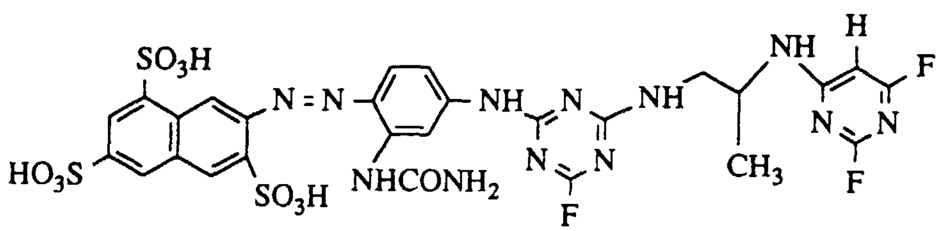

zukommt und das Baumwolle in rotstichig gelben Farbtönen färbt.

Durch Variation der Diazokomponente $D-NH_2$, der Kupplungskomponente mit $R^1$ sowie der aliphatischen Diaminoverbindung waren in Analogie zu Beispiel 389 weitere wertvolle gelbe bis goldgelbe Farbtöne der folgenden Struktur herstellbar.

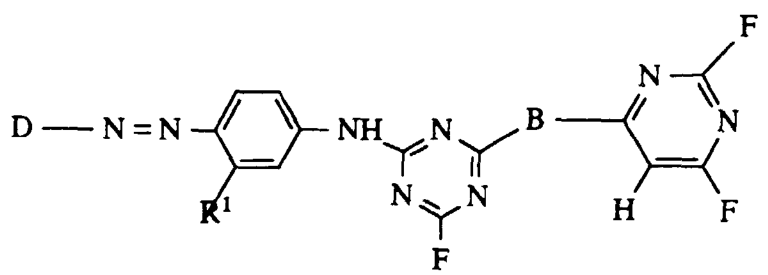

Tabelle 22

| Bsp. | D | $R^1$ | B*) | $\lambda_{max}$ ($H_2O$) |
|---|---|---|---|---|
| 390 | 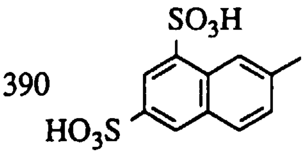 | $CH_3$ | $-NH-CH_2CH_2\overset{*}{N}H-$ | |
| 391 | 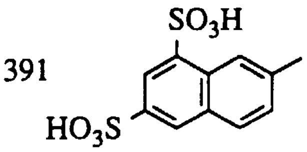 | $OCH_3$ | $-NH-CH_2-CH(CH_3)-\overset{*}{N}H-$ | |
| 392 | 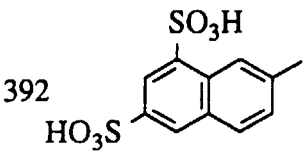 | $NHCOCH_3$ | $-NH-CH_2-CH(CH_3)-\overset{*}{N}H-$ | |
| 393 | 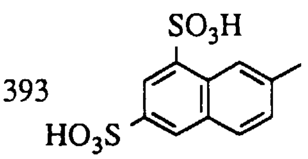 | $NHCOCH_2OSO_3H$ | -NH<br>\|<br>$CH_2-CH(CH_3)-\overset{*}{N}H-$ | 408 nm |
| 394 | 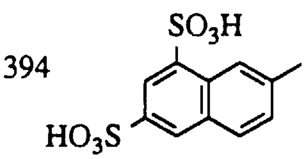 | $NHCOCH_3$ | 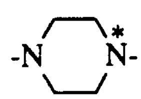 | |
| 395 | 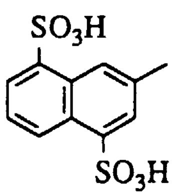 | $NHCOCH_3$ | $-NH-CH_2-CH(CH_3)-\overset{*}{N}H$ | |
| 396 | 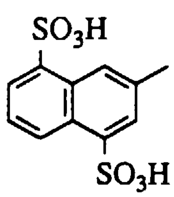 | $NHCOCH_3$ | $-NH-CH_2-CH(OH)-CH_2-\overset{*}{N}H$ | |

Tabelle 22 (Fortsetzung)

| Bsp. | D | $R^1$ | B*) | $\lambda_{max}$ ($H_2O$) |
|---|---|---|---|---|
| 397 | 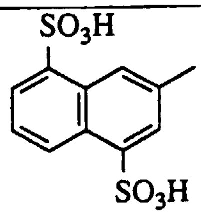 | $NHCONH_2$ | $-NHCH_2CH_2\overset{*}{N}H-$ | |
| 398 | 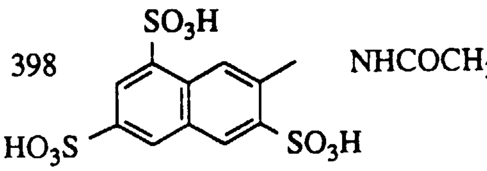 | $NHCOCH_3$ | $-NHCH_2CH_2\overset{*}{N}H-$ | 412 nm |
| 399 | 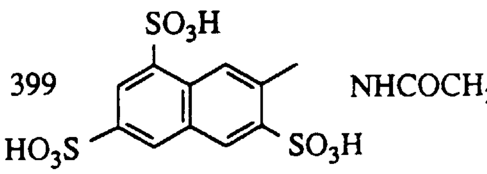 | $NHCOCH_2OH$ | $-NHCH_2CH_2\overset{*}{N}H-$ | 410 nm |
| 400 | 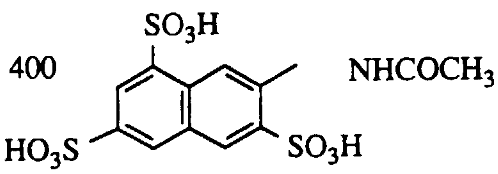 | $NHCOCH_3$ | $-NHCH_2-CH(CH_3)-\overset{*}{N}H-$ | 412 nm |
| 401 | 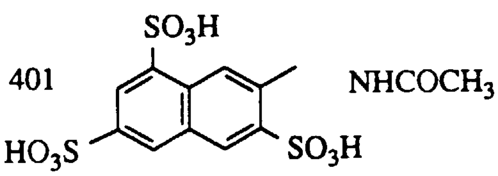 | $NHCOCH_3$ | 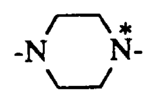 | 416 nm |
| 402 | 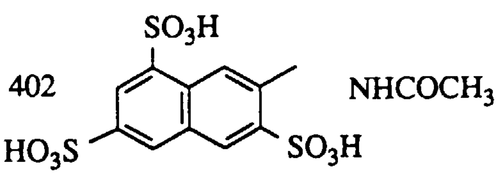 | $NHCOCH_3$ | 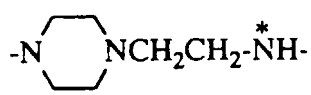 | 410 nm |

Tabelle 22 (Fortsetzung)

| Bsp. | D | $R^1$ | B*) | $\lambda_{max}$ ($H_2O$) |
|---|---|---|---|---|
| 403 | 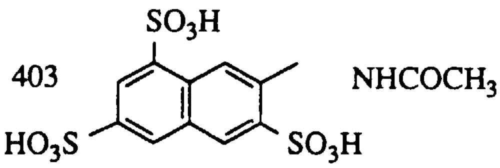 | $NHCOCH_3$ | NH-$(CH_2)_4$-CH($CO_2$H)-$\overset{\bullet}{N}$H- | |
| 404 | 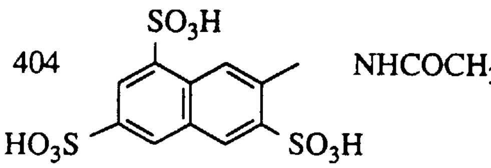 | $NHCOCH_3$ | NH-$(CH_2)_3$-$\overset{*}{N}$H- | 412 nm |
| 405 | 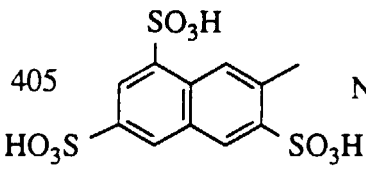 | $NHCOCH_3$ | 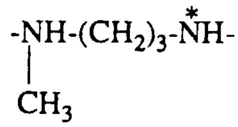 | |
| 406 | 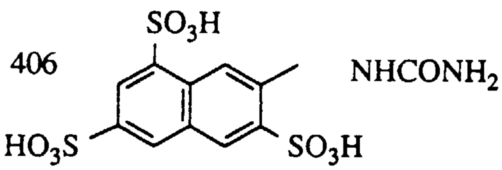 | $NHCONH_2$ | -NH-$CH_2CH_2$-$\overset{*}{N}$H- | 426 nm |
| 407 | 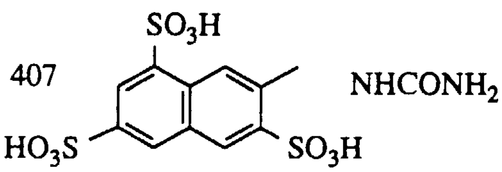 | $NHCONH_2$ | -NHCH$_2$CH(OH)CH$_2$-$\overset{\bullet}{N}$H- | 428 nm |
| 408 | 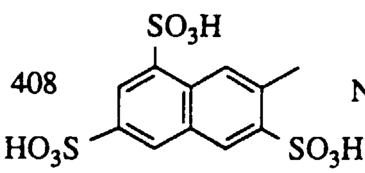 | $NHCONH_2$ | 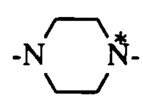 | 432 nm |

Tabelle 22 (Fortsetzung)

| Bsp. | D | $R^1$ | B*) | $\lambda_{max}$ ($H_2O$) |
|---|---|---|---|---|
| 409 | 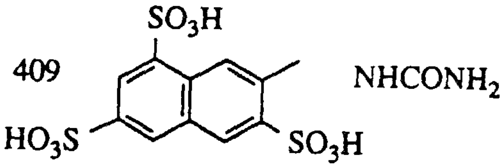 | $NHCONH_2$ | 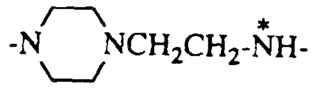 | 416 nm |
| 410 | 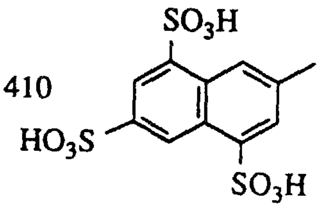 | $NHCOCH_3$ | $-NHCH_2CH(CH_3)\overset{*}{N}H-$ | |
| 411 | 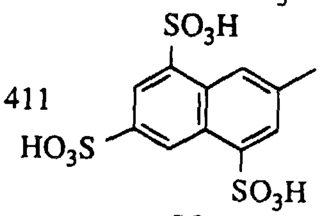 | $NHCONH_2$ | $-NHCH_2CH(CH_3)\overset{*}{N}H-$ | |
| 412 | 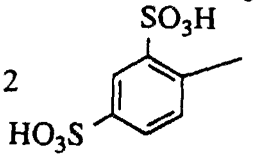 | $NHCOCH_3$ | $-NHCH_2CH_2\overset{*}{N}H-$ | 396 nm |
| 413 | 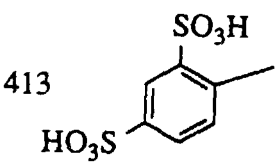 | $NHCOCH_3$ | $-NHCH_2CH(CH_3)\overset{*}{N}H-$ | 397 nm |
| 414 | 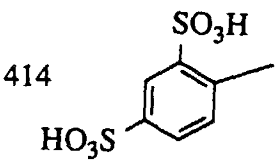 | $NHCONH_2$ | $-NHCH_2CH(CH_3)\overset{*}{N}H-$ | 410 nm |

Tabelle 22 (Fortsetzung)

| Bsp. | D | $R^1$ | B*) | $\lambda_{max}$ ($H_2O$) |
|---|---|---|---|---|
| 415 | 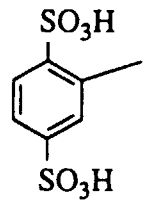 | $NHCOCH_3$ | $-NHCH_2CH(CH_3)\overset{*}{N}H-$ | |
| 416 | 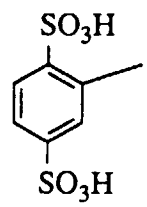 | $NHCONH_2$ | 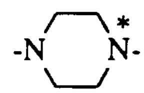 | |
| 417 | 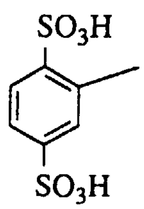 | $NHCONH_2$ | 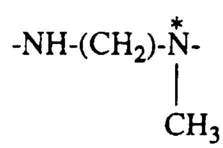 | |

*) Der Pyrimidinylrest ist immer an das N-Atom mit dem * gebunden.

Ersetzt man in Beispiel 389 und den Beispielen der Tabelle 22 Trifluortriazin durch Cyanurchlorid, so erhält man vergleichbar hochechte goldgelbe Reaktivfarbstoffe, wie

Beispiel 418

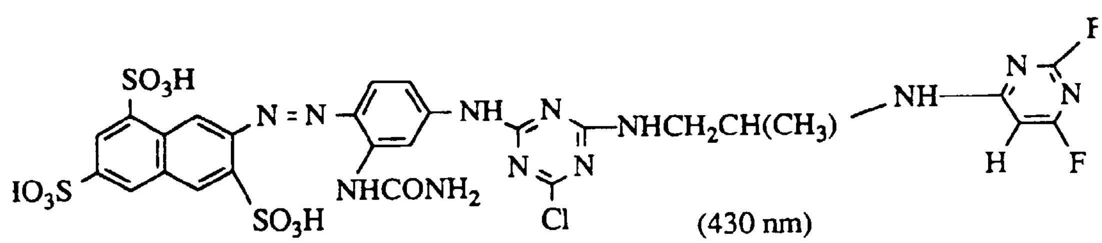

(430 nm)

Beispiel 419

Wie in Beispiel 357 beschrieben wurden 15,2 g 2,4-Diaminobenzolsulfonsäure-mono-Na-salz zunächst mit 12 g 2,4,6-Trifluorpyrimidin und danach mit 10 g Trifluor-s-triazin (Cyanurfluorid) kondensiert.

Zu dieser Lösung fügte man bei 0°C und pH 6,0 bis 6,2 30 g der Farbbase der Formel

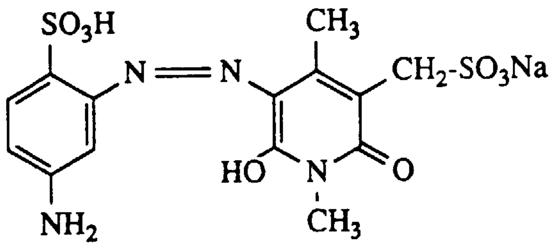

und hielt anschließend mit 20 %iger Sodalösung den pH-Wert konstant bei 7,0. Innerhalb von 3 Stunden wurde bei pH 7,0 bis 7,2 auf 25°C erwärmt. Die Farbstofflösung wurde durch Filtration geklärt und mit 50 g Natriumchlorid versetzt. Es wurde 1 Stunde gerührt und der ausgefallene Farbstoff durch Abnutschen isoliert.

Nach dem Trocknen und Mahlen erhielt man ca. 60 g eines gelben Pulvers ($\lambda_{max}$ = 424 nm ($H_2O$)), dem die Struktur

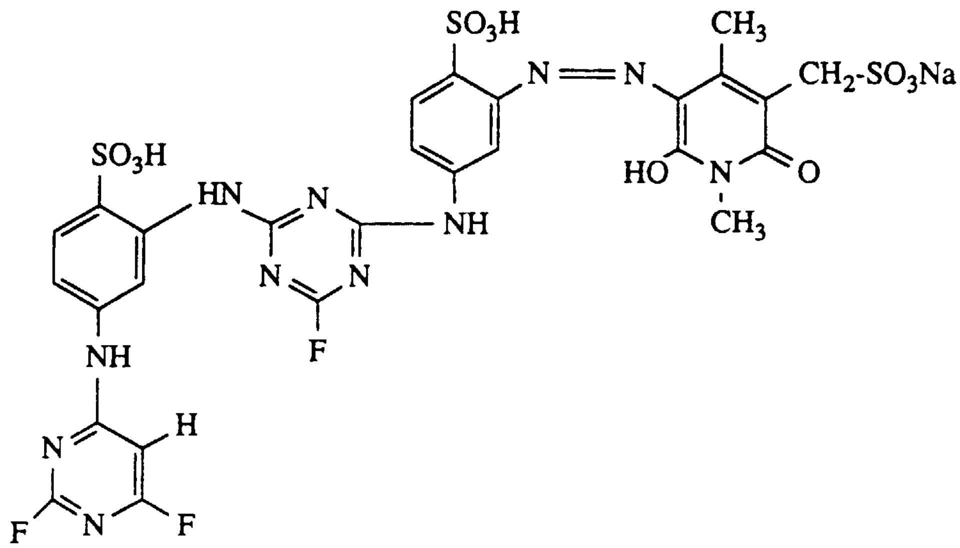

zukommt und das Baumwolle in brillanten grünstichig gelben Tönen färbt.

Durch Variation der Pyridonkupplungskomponente und der Diaminoverbindung lassen sich analog zu Beispiel 357 bzw. 389 folgende weitere grünstichig gelbe Farbstoffe herstellen:

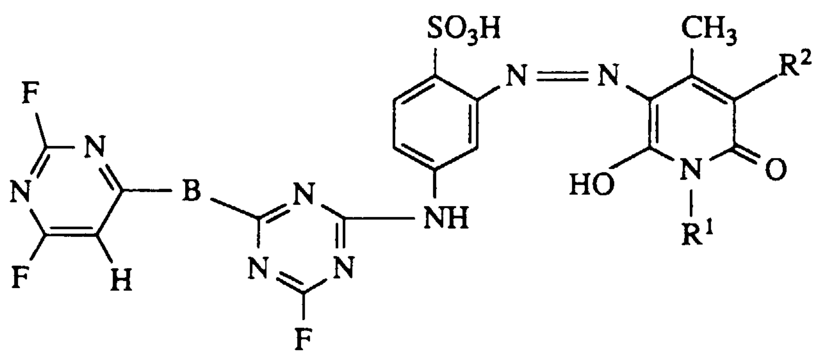

Tabelle 23

| Bsp. | B | $R^1$ | $R^2$ |
|---|---|---|---|
| 419 | 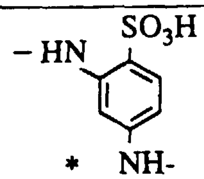 | $C_2H_5$ | $CH_2$-$SO_3H$ |
| 420 | 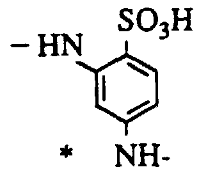 | $CH_2CH_2SO_3H$ | H |
| 421 | 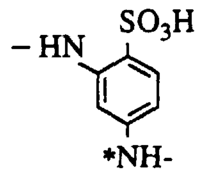 | $CH_2CH_2SO_3H$ | $CONH_2$ |
| 422 | 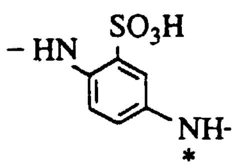 | $CH_3$ | $CH_2$-$SO_3H$ |
| 423 | 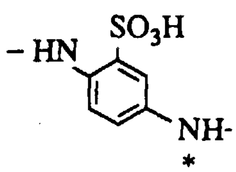 | $C_2H_5$ | $CH_2$-$SO_3H$ |
| 424 | 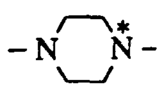 | $C_2H_5$ | $CH_2$-$SO_3H$ |
| 425 | 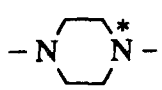 | $CH_3$ | $CH_2$-$SO_3H$ |
| 426 | NH-$CH_2$-$CH_2$-*NH | $CH_3$ | $CH_2$-$SO_3H$ |
| 427 | NH-$CH_2$-$CH_2$-*NH | $CH_2CH_2SO_3H$ | H |

**Die mit * gekennzeichneten N-Atome sind mit dem Pyrimidinylrest verbunden.**

Ersetzt man die Farbbase in Beispiel 419 durch einen vergleichbaren Pyrazolonchromophor, so lassen sich auch Farbstoffe, wie

Beispiel 428

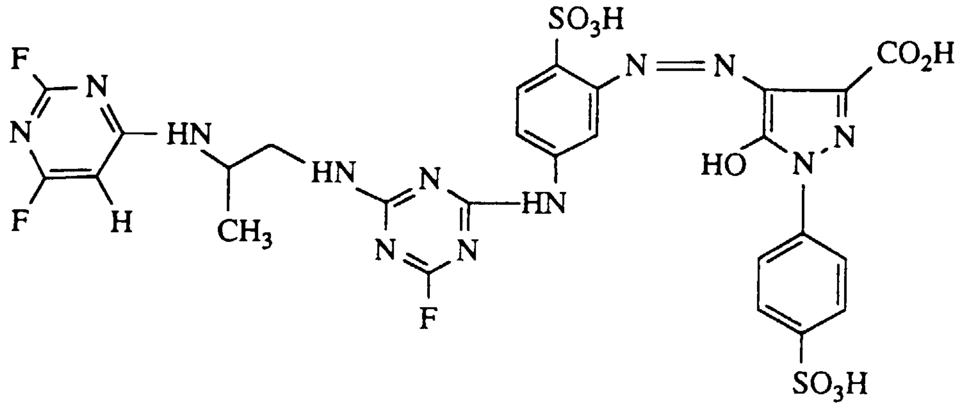

herstellen, das Baumwolle mit klaren gelben Nuancen färbt ($\lambda_{max}$ = 448 nm ($H_2O$)).

Setzt man die in der folgenden Tabelle 24 aufgeführten Aminoazo-Verbindungen analog Beispiel 332.3 unter geeigneten Bedingungen mit der Reaktivkomponente aus Beispiel 332.1 um, so erhält man Farbstoffe, die Baumwolle in den angegebenen Farbtönen anfärben.

Tabelle 24

| Bsp. | Aminoazoverbindung | Farbton |
|---|---|---|
| 429 | 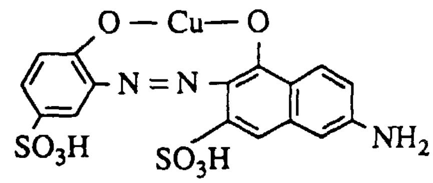 | Rubin |
| 430 | 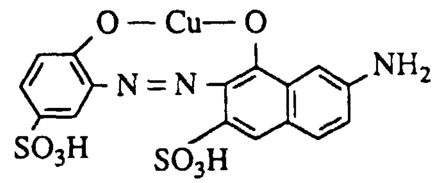 | Rubin |
| 431 | 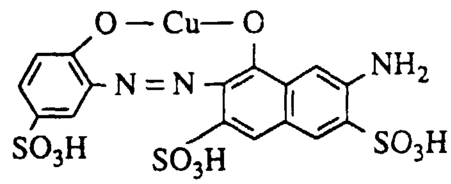 | Rubin |
| 432 | 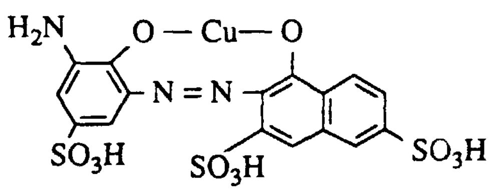 | Rubin |
| 433 | 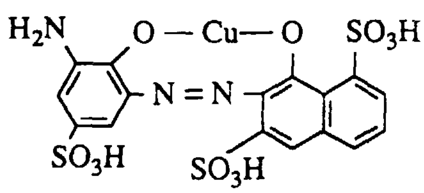 | Rubin |
| 434 | 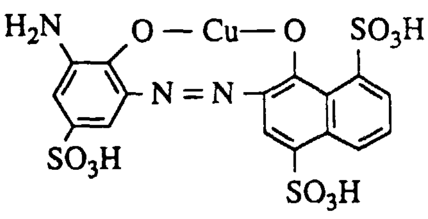 | Rubin |

Tabelle 24 (Fortsetzung)

| Bsp. | Aminoazoverbindung | Farbton |
|---|---|---|
| 435 | 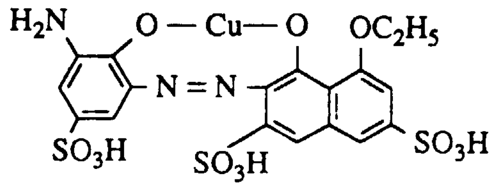 | Rubin |
| 436 | 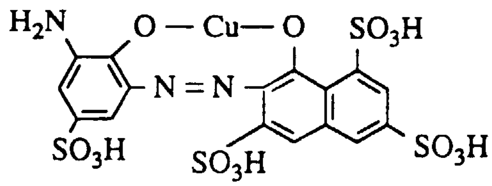 | Rubin |
| 437 | 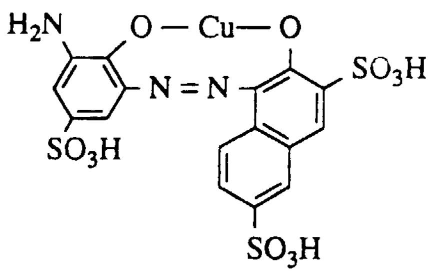 | Rubin |
| 438 | 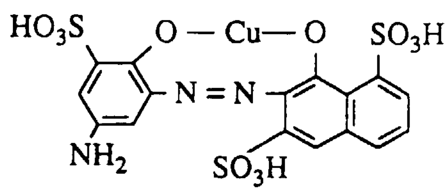 | Rubin |
| 439 | 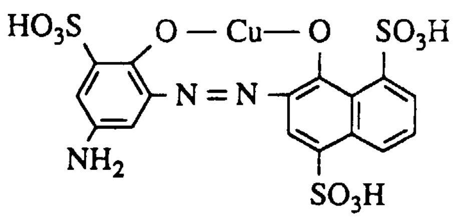 | Rubin |
| 440 | 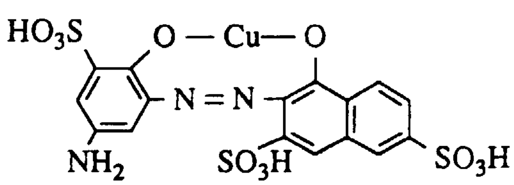 | Rubin |

Tabelle 24 (Fortsetzung)

| Bsp. | Aminoazoverbindung | Farbton |
|---|---|---|
| 441 | 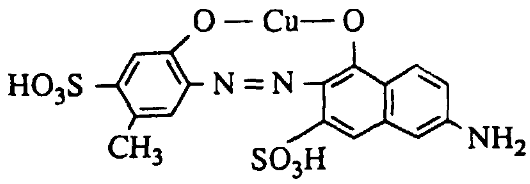 | Rubin |
| 442 | 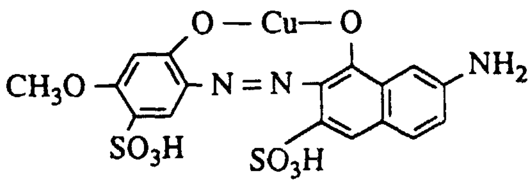 | Rubin |
| 443 | 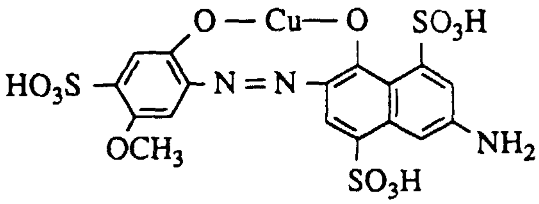 | Rotviolett |
| 444 | 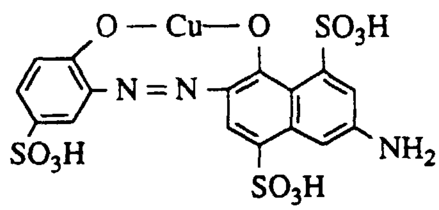 | Rubin |
| 445 | 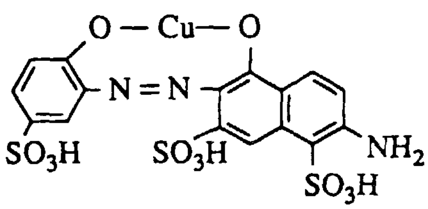 | Rubin |
| 446 | 1:2-Cr-Komplex von 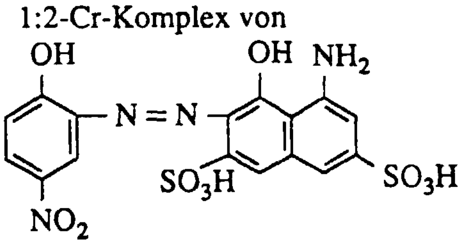 | graublau (schwarz) |

Tabelle 24 (Fortsetzung)

| Bsp. | Aminoazoverbindung | Farbton |
|---|---|---|
| | 1:2 Co-Komplex von | |
| 447 | 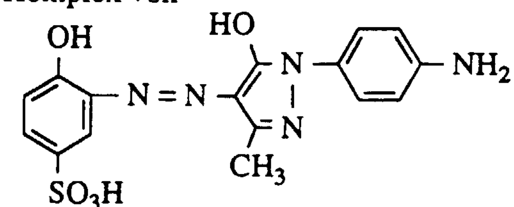 | gelbbraun |
| 448 | 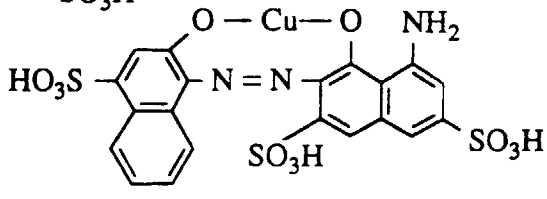 | Blau |
| 449 | 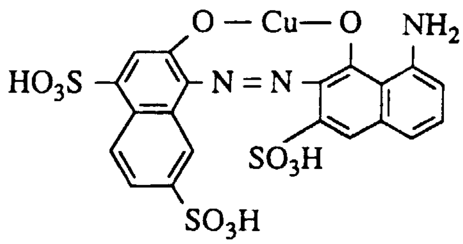 | Blau |
| 450 | 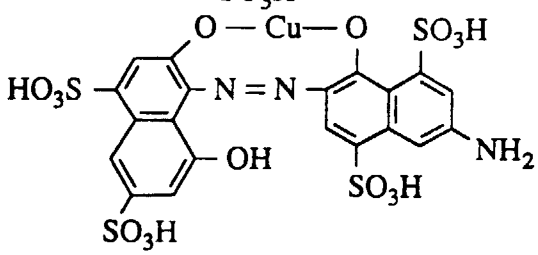 | Blau |
| 451 | 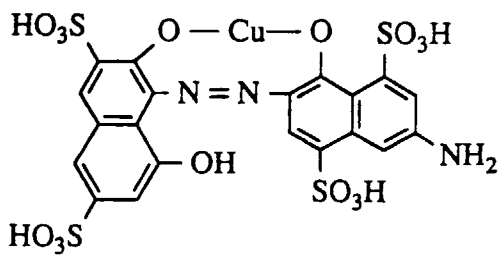 | Blau |
| 452 | 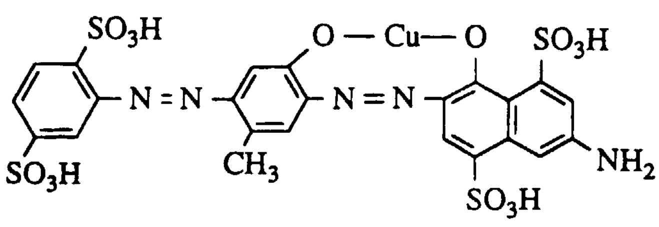 | Marineblau |

Setzt man die gemäß Beispiel 332.2 oder 332.3 erhaltenen Kondensationsprodukte aus den in der folgenden Tabelle 25 aufgeführten Aminoazo-Verbindungen mit der Reaktivkomponente aus Beispiel 332.1 in bekannter Weise bei pH 5 bis 7 und 20°C bis 60°C in wäßriger Lösung mit äquimolaren Mengen Wasserstoffperoxid um, so erhält man Kupferkomplex-Farbstoffe, die Baumwolle in den angegebenen Tönen anfärben, z.B. aus der Aminoazo-Verbindung von Beispiel 453 den Farbstoff der Formel

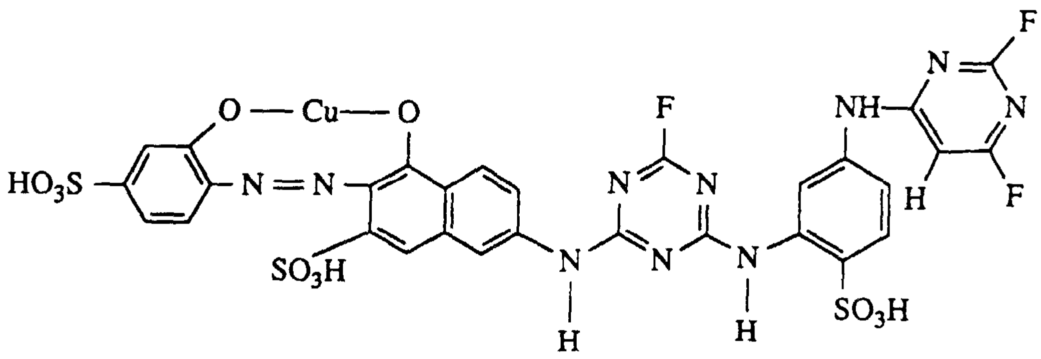

Tabelle 25

| Bsp. | Aminoazoverbindung | Farbton |
|---|---|---|
| 453 | 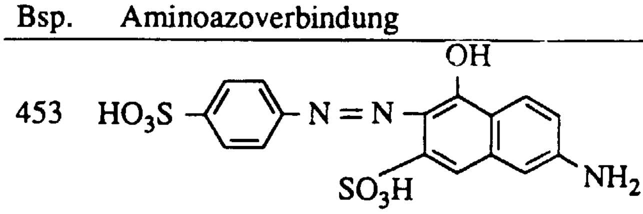 | Rubin |
| 454 | 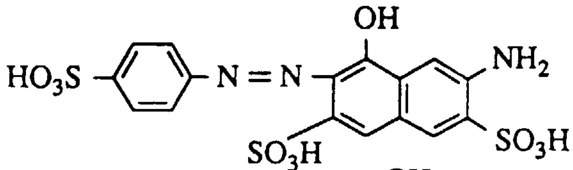 | Rubin |
| 455 | 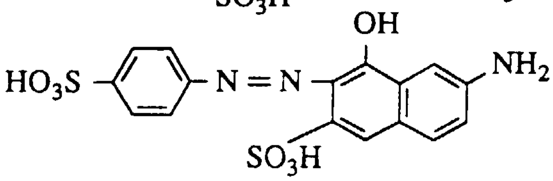 | Rubin |
| 456 | 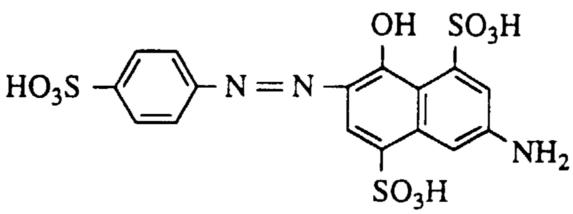 | Rubin |
| 457 | 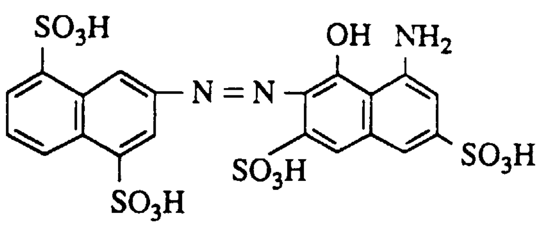 | Blau |
| 458 | 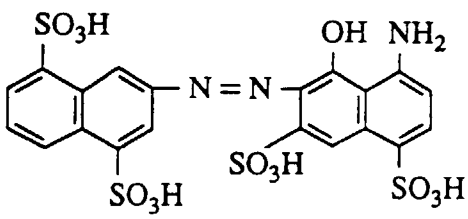 | Blau |
| 459 | 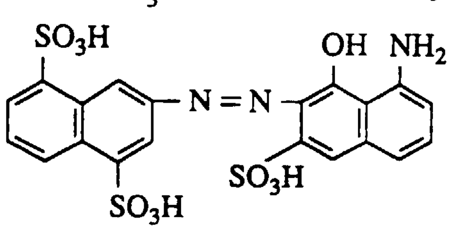 | Blau |

Tabelle 25 (Fortsetzung)

| Bsp. | Aminoazoverbindung | Farbton |
|---|---|---|
| 460 | 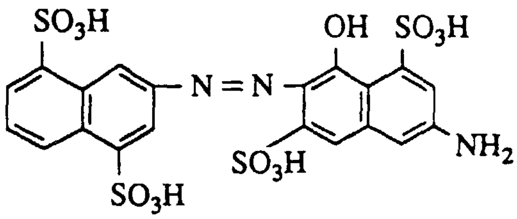 | Blau |
| 461 | 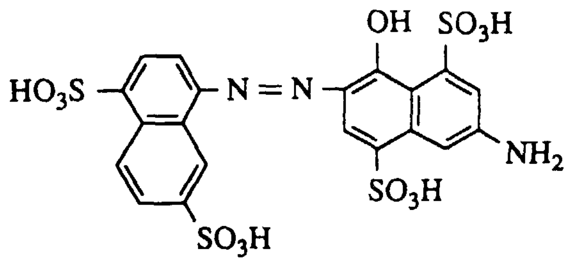 | Marineblau |

Setzt man Aminodisazofarbstoffe der allgemeinen Formel

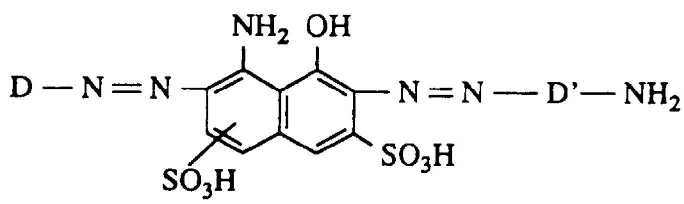

mit der Reaktivkomponente aus Beispiel 332.1 analog Beispiel 332 um, so erhält man die Farbstoffe der allgemeinen Formel

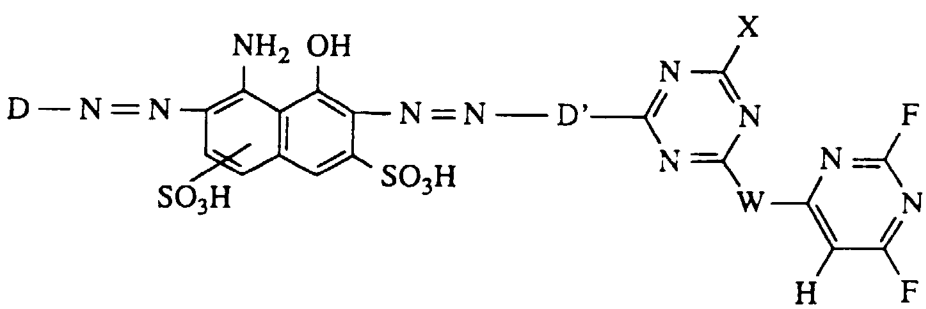

der Tabelle 26, sie färben Baumwolle in den angegebenen Farbtönen.

Tabelle 26

| Nr. | Y | D | K | D' | W | Farbton |
|---|---|---|---|---|---|---|
| 462 | F | 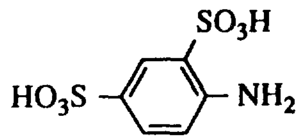 | 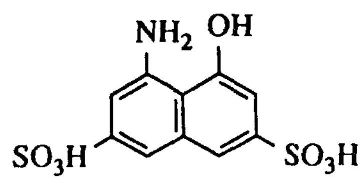 | 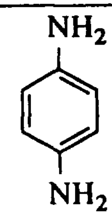 | 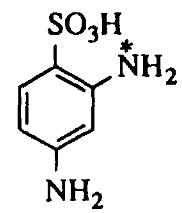 | Schwarz |
| 463 | F | 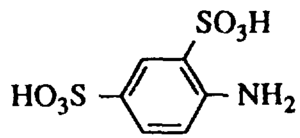 | 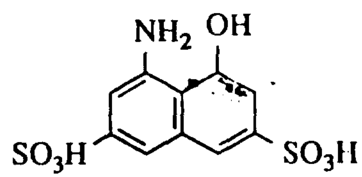 | 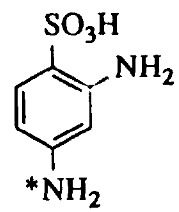 | 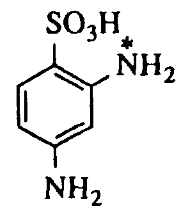 | Marineblau/ Schwarz |
| 464 | F | 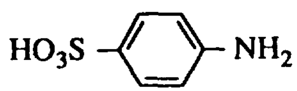 | 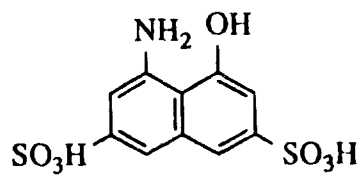 | 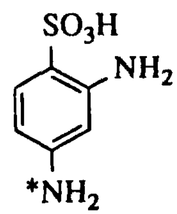 | 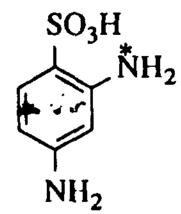 | Marineblau/ Schwarz |
| 465 | F | 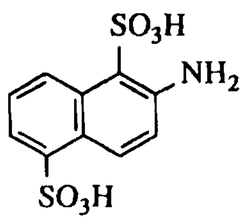 | 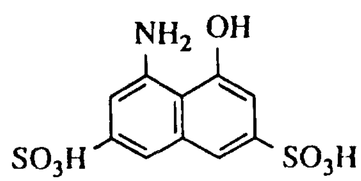 | 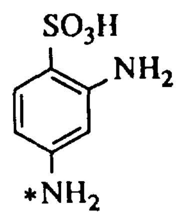 | 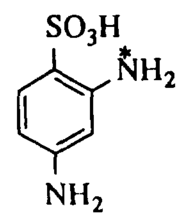 | Schwarz |

Tabelle 26 (Fortsetzung)

| Nr. | Y | D | K | D' | W | Farbton |
|---|---|---|---|---|---|---|
| 466 | F | 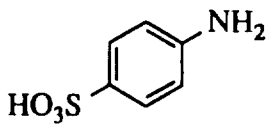 | 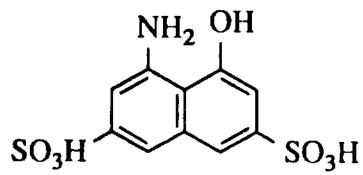 | 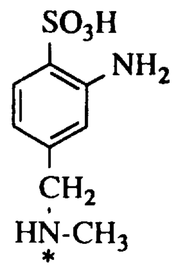 | 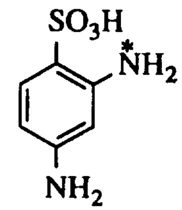 | Marineblau |
| 467 | F | 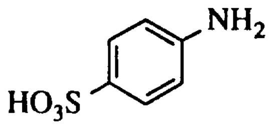 | 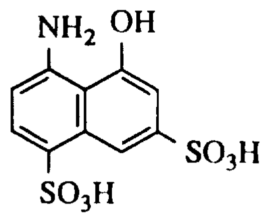 | 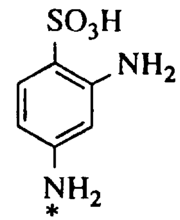 | 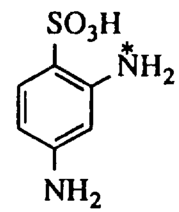 | Marineblau |
| 468 | F | 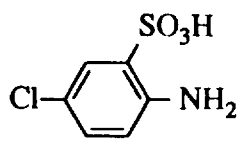 | 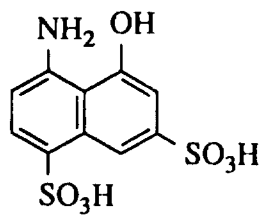 | 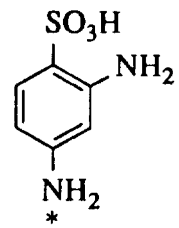 | 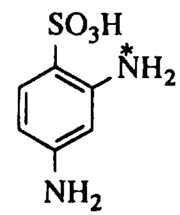 | Marineblau |

+) Die mit * gekennzeichneten N-Atome sind mit dem Triazinylrest verbunden.

Analog Beispiel 332.3 lassen sich folgende Farbstoffe herstellen, sie färben Baumwolle in den angegebenen Farbtönen

469

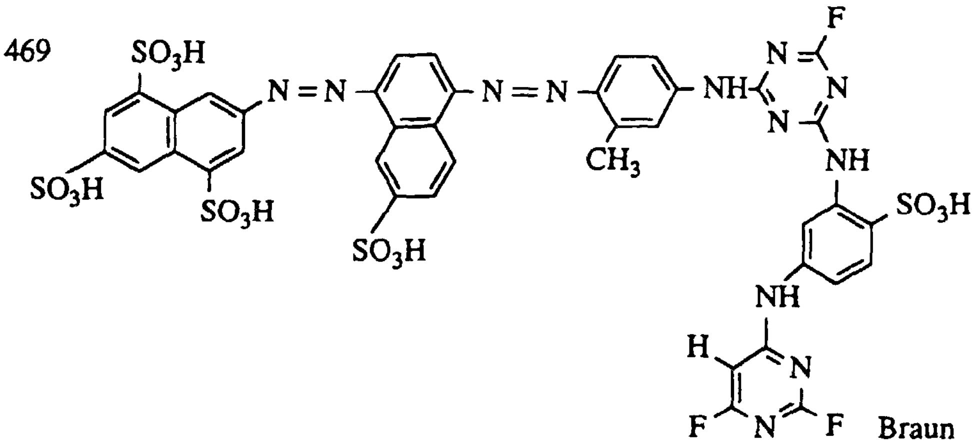

Braun

$\lambda_{max}$: 456 ($H_2O$)

470

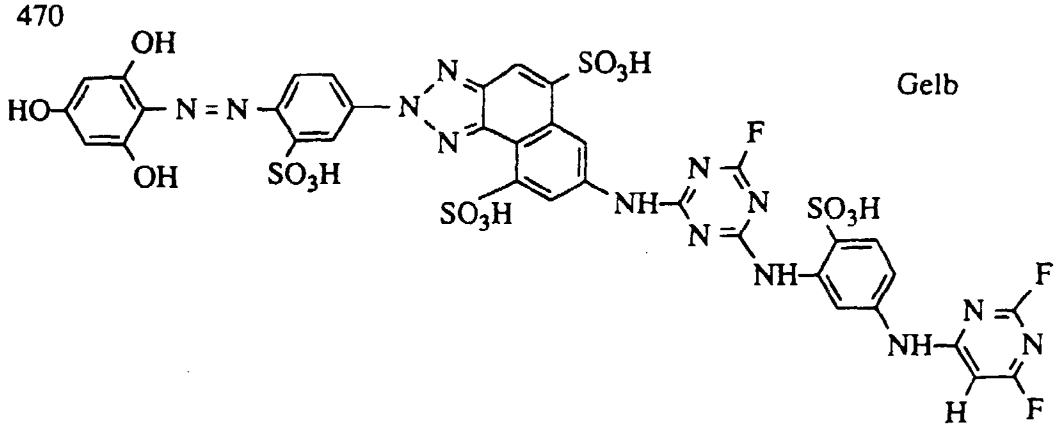

Gelb

**Patentansprüche**

1. Reaktivfarbstoffe der Formel (1)

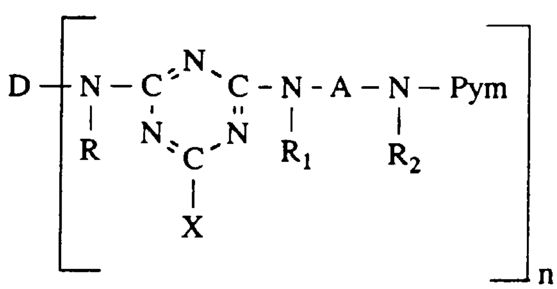

(1),

worin bedeuten

| | |
|---|---|
| D | der Rest eines organisches Farbstoffes, |
| R, $R_1$ und $R_2$ | unabhängig voneinander Wasserstoff oder gegebenenfalls substituiertes $C_{1-4}$-Alkyl, |
| A | ein gegebenenfalls substituiertes aliphatisches, aromatisches oder aromatisch-aliphatisches Brückenglied, |

X Cl, F

Pym die Reste

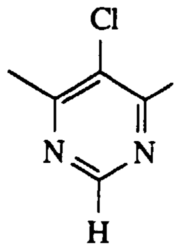

oder

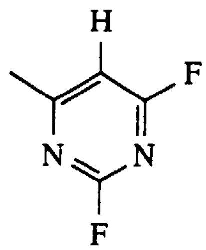

n 1 oder 2.

2. Reaktivfarbstoffe gemäß Anspruch 1 der Formel (1a)

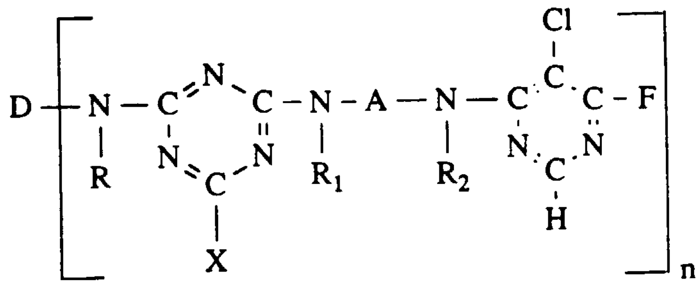

(1a),

worin
D, R, $R_1$, $R_2$, A, X und ndie in Anspruch 1 genannte Bedeutung haben.

3. Reaktivfarbstoffe gemäß Anspruch 1 der Formel (1b)

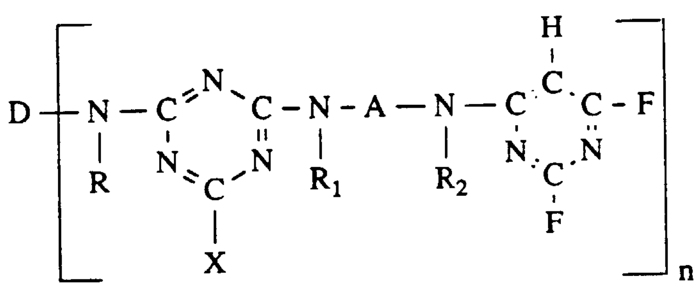

(1b),

worin
D, R, $R_1$, $R_2$, A, X und ndie in Anspruch 1 genannte Bedeutung haben.

4. Reaktivfarbstoffe gemäß wenigstens einem der vorhergehenden Ansprüche, dadurch gekennzeichnet, daß D der Rest eines sulfogruppenhaltigen organischen Farbstoffes der Mono- oder Polyazo-, Metallkomplexazo-, Anthrachinon-, Phthalocyanin-, Formazan-, Azomethin-, Dioxazin-, Phenazin-, Stilben-, Triphenylmethan-, Xanthen-, Thioxanthon-, Nitroaryl-, Naphthochinon-, Pyrenchinon- oder Perylentetracarbonimid-Reihe ist.

5. Reaktivfarbstoffe gemäß wenigstens einem der vorhergehenden Ansprüche, dadurch gekennzeichnet, daß R = Methyl, Ethyl, Propyl, Isopropyl, Butyl, Isobutyl, sek.-Butyl, tert.-Butyl, β-Chlorethyl, β-Hydroxyethyl, β-Hydroxybutyl, β-Cyanethyl, β-Sulfatoethyl, Carboxymethyl, Sulfomethyl oder Wasserstoff.

6. Reaktivfarbstoffe gemäß wenigstens einem der vorhergehenden Ansprüche, dadurch gekennzeichnet, daß $R_1$ und $R_2$ = unabhängig voneinander Wasserstoff, Methyl, Ethyl, β-Hydroxyethyl, β-Sulfatoethyl bedeuten.

**7.** Reaktivfarbstoffe gemäß wenigstens einem der vorhergehenden Ansprüche, dadurch gekennzeichnet, daß A = Alkylenrest mit 2 bis 6 Kohlenstoffatomen, ein Naphthylenrest, der Rest eines Diphenyls oder Stilbens oder ein Phenylenrest, wobei der Rest A unsubstituiert oder substituiert ist mit Fluor, Chlor und Brom, Alkylgruppen mit 1 bis 4 Kohlenstoffatomen, Alkoxygruppen mit 1 bis 4 Kohlenstoffatomen, Carboxy, Hydroxy oder Sulfo.

**8.** Reaktivfarbstoffe gemäß wenigstens einem der vorhergehenden Ansprüche, dadurch gekennzeichnet, daß bedeuten

a)

| | |
|---|---|
| D | der Rest eines sulfogruppenhaltigen organischen Farbstoffes der Mono- oder Polyazo-, Metallkomplexazo-, Anthrachinon-, Phthalocyanin-, Formazan- oder Dioxazin-Reihe, |
| n | 1 oder 2, |
| X | Cl oder F, |
| R | für Wasserstoff, Methyl oder Ethyl steht, |
| $R_1$, $R_2$ | unabhängig voneinander für H oder $C_1$-$C_4$-Alkyl, das durch OR, $OSO_3H$, $SO_3H$, COOR oder Halogen substituiert sein kann, steht, |
| A | für ein gegebenenfalls substituiertes Phenylen oder ein gegebenenfalls substituiertes aromatisch-aliphatisches Brückenglied oder für ein gegebenenfalls durch Heteroatome oder Heteroatome wie NR, O oder S enthaltende Gruppierungen unterbrochenes, geradkettiges oder verzweigtes $C_1$-$C_6$-Alkylen, das mit OR, $OSO_3H$, $SO_3H$, COOR oder Halogen substituiert sein kann, steht. |

oder

b) Farbstoffe der Formel (1),
worin

| | |
|---|---|
| A, n, D, R, $R_1$ und $R_2$ | die Bedeutung haben wie unter a) und |
| X = | F. |

**9.** Reaktivfarbstoffe gemäß wenigstens einem der vorhergehenden Ansprüche, dadurch gekennzeichnet, daß sie wenigstens einer der folgenden Formeln entsprechen

c)

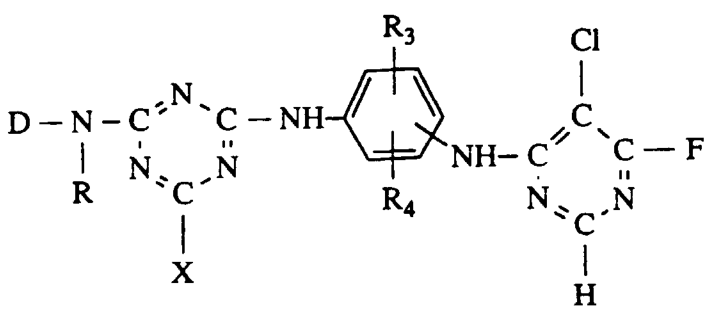

(2),

worin

| | |
|---|---|
| D, X und R | die gleichen Bedeutungen haben wie in Anspruch 8 unter a) angegeben und |
| $R_3$ und $R_4$ | unabhängig voneinander Wasserstoff, Methyl, Ethyl, Methoxy, Ethoxy, Chlor, Carboxy oder Sulfo ist. |

d) Reaktivfarbstoffe gemäß c), worin

| | |
|---|---|
| D | und Rdie gleichen Bedeutungen haben wie unter c) und |
| $R_3$ und $R_4$ | unabhängig voneinander Wasserstoff oder Sulfo ist. |

e) Reaktivfarbstoffe der Formel

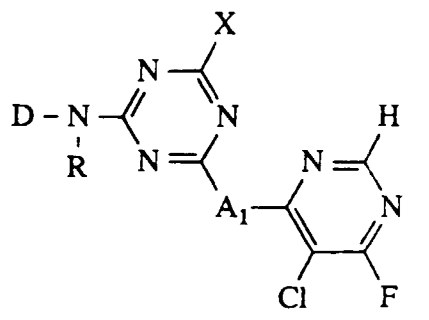

(3),

worin

| | |
|---|---|
| D, X und R | die gleichen Bedeutungen haben wie in Anspruch 8 unter a) angegeben und |
| $A_1$ | für ein aliphatisches, gegebenenfalls durch Heteroatome oder Heteroatome wie $NR_1$, O oder S enthaltende Gruppierungen unterbrochenes, geradkettiges oder verzweigtes $C_1$-$C_6$-Diaminoalkylen steht, welches mit OR, $OSO_3H$, $SO_3H$, COOR oder Halogen substituiert sein kann, |
| $R_1$ | die gleiche Bedeutung hat wie in Anspruch 8 angegeben. |

f) Reaktivfarbstoffe der Formel

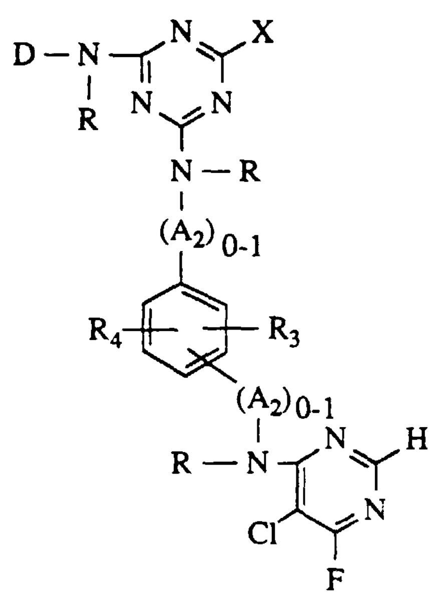

(4)

worin

| | |
|---|---|
| D, X und R | die gleichen Bedeutungen haben wie in Anspruch 8 unter a) angegeben und |
| $R_3$ und $R_4$ | unabhängig voneinander H, Methyl, Ethyl oder Sulfo ist und |
| $A_2$ | für ein aliphatisches, gegebenenfalls durch Heteroatome oder Heteroatome wie $NR_1$, O oder |

S enthaltende Gruppierungen unterbrochenes, geradkettiges oder verzweigtes $C_1$-$C_6$ Brükkenglied steht, welches mit OR, $OSO_3H$, $SO_3H$, COOR oder Halogen substituiert sein kann.

g) Reaktivfarbstoffe gemäß c), d), e) und f), in denen

X für F steht.

**10.** Reaktivfarbstoffe gemäß wenigstens einem der vorhergehenden Ansprüche, dadurch gekennzeichnet, daß sie wenigstens einer der folgenden Formeln entsprechen

h)

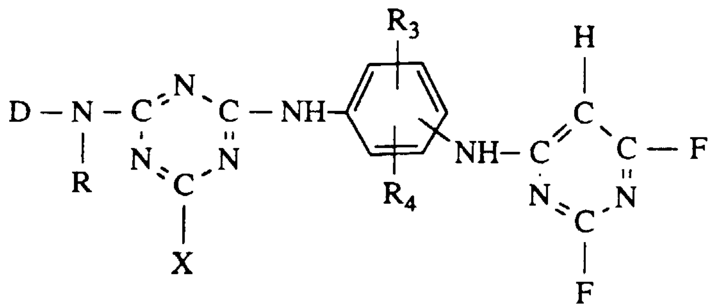

(5),

worin

D, X und R die gleichen Bedeutungen haben wie in Anspruch 8 unter a) angegeben und

$R_3$ und $R_4$ unabhängig voneinander Wasserstoff, Methyl, Ethyl, Methoxy, Ethoxy, Chlor, Carboxy oder Sulfo ist.

i) Reaktivfarbstoffe gemäß h), worin

D und R die gleichen Bedeutungen haben wie unter h) und

$R_3$ und $R_4$ unabhängig voneinander Wasserstoff oder Sulfo ist.

j) Reaktivfarbstoffe der Formel

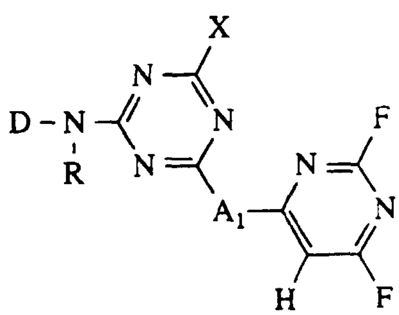

(6),

worin

D, X und R die gleichen Bedeutungen haben wie in Anspruch 8 unter a) angegeben und

$A_1$ für ein aliphatisches, gegebenenfalls durch Heteroatome oder Heteroatome wie $NR_1$, O oder S enthaltende Gruppierungen unterbrochenes, geradkettiges oder verzweigtes $C_1$-$C_6$-Diaminoalkylen steht, welches mit OR, $OSO_3H$, $SO_3H$, COOR oder Halogen substituiert sein kann,

| | |
|---|---|
| $R_1$ | die gleiche Bedeutung hat wie in Anspruch 8 angegeben. |

k) Reaktivfarbstoffe der Formel

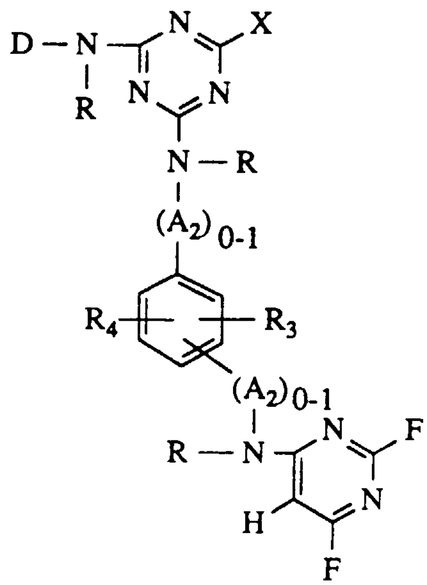

(7),

worin

| | |
|---|---|
| D, X und R | die gleichen Bedeutungen haben wie in Anspruch 8 unter a) angegeben und |
| $R_3$ und $R_4$ | unabhängig voneinander H, Methyl, Ethyl oder Sulfo ist und |
| $A_2$ | für ein aliphatisches, gegebenenfalls durch Heteroatome oder Heteroatome wie $NR_1$, O oder S enthaltende Gruppierungen unterbrochenes, geradkettiges oder verzweigtes $C_1$-$C_6$ Brückenglied steht, welches mit OR, $OSO_3H$, $SO_3H$, COOR oder Halogen substituiert sein kann. |

l) Reaktivfarbstoffe gemäß h), i), j) und k),
in denen

X für F steht.

**11.** Verfahren zur Herstellung der Reaktivfarbstoffe gemäß Anspruch 1, dadurch gekennzeichnet, daß man einen organischen Farbstoff der Formel

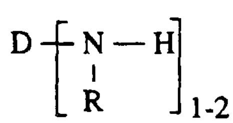

(8)

oder ein Farbstoffprodukt,
2,4,6-Trifluor-s-triazin oder 2,4,6-Trichlor-s-triazin,
eine Verbindung der Formel

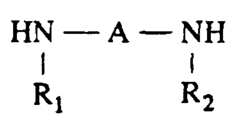

(9)

und 4,6-Difluor-5-chlorpyrimidin oder 2,4,6-Trifluorpyrimidin kondensiert, wobei D, R, $R_1$, $R_2$ und A in den obengenannten Formeln die in Anspruch 1 Formel (1) angegebenen Bedeutungen haben, und daß man im Falle der Verwendung von Farbstoffvorprodukten die erhaltenen Zwischenverbindungen in die gewünschten Endfarbstoffe umwandelt.

**12.** Verfahren zum Färben und Bedrucken von natürlichen und synthetischen OH- oder amidgruppenhaltigen Materialien, dadurch gekennzeichnet, daß man wenigstens einen Farbstoff gemäß wenigstens einem der vorhergehenden Ansprüche verwendet.

**13.** Verfahren gemäß Anspruch 12, dadurch gekennzeichnet, daß der Farbstoff in Abmischung mit anderen Farbstoffen für eine Trichromie verwendet wird.

**Claims**

**1.** Reactive dyestuffs of the formula (1)

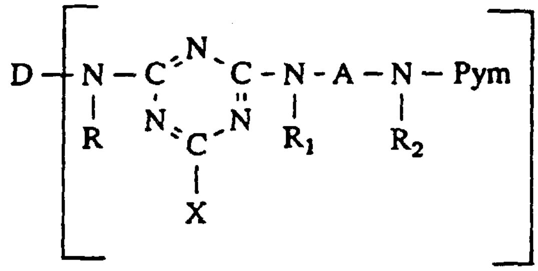

(1)

in which

| | |
|---|---|
| D | denotes the radical of an organic dyestuff, |
| R, $R_1$ and $R_2$, | independently of one another, denote hydrogen or substituted or unsubstituted $C_{1-4}$-alkyl, |
| A | denotes a substituted or unsubstituted aliphatic, aromatic or aromatic-aliphatic bridging member, |
| X | denotes Cl, F |
| Pym | denotes the radicals |

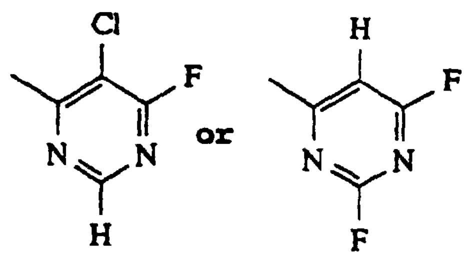

| | |
|---|---|
| n | denotes 1 or 2. |

**2.** Reactive dyestuffs according to Claim 1 of the formula (1a)

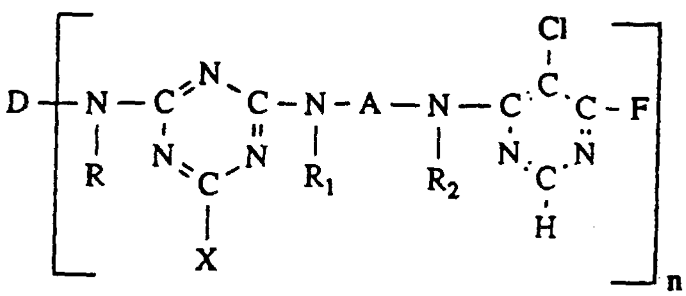

(1a)

in which

D, R, $R_1$, $R_2$, A, X and n have the meaning given in Claim 1.

**3.** Reactive dyestuffs according to Claim 1 of the formula (1b)

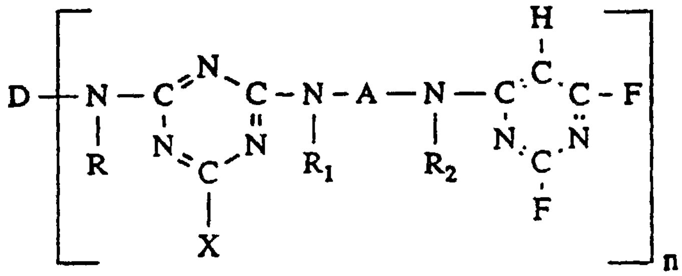

(1b)

in which
D, R, $R_1$, $R_2$, A, X and n have the meaning given in Claim 1.

**4.** Reactive dyestuffs according to at least one of the preceding claims, characterised in that D is the radical of a sulpho-containing organic dyestuff from the mono- or polyazo, metal complex azo, anthraquinone, phthalocyanine, formazan, azomethine, dioxazine, phenazine, stilbene, triphenylmethane, xanthene, thioxanthone, nitroaryl, naphthoquinone, pyrenequinone or perylenetetracarboximide series.

**5.** Reactive dyestuffs according to at least one of the preceding claims, characterised in that R is methyl, ethyl, propyl, isopropyl, butyl, isobutyl, sec.-butyl, tert.-butyl, β-chloroethyl, β-hydroxyethyl, β-hydroxybutyl, β-cyanoethyl, β-sulphatoethyl, carboxymethyl, sulphomethyl or hydrogen.

**6.** Reactive dyestuffs according to at least one of the preceding claims, characterised in that $R_1$ and $R_2$, independently of one another, are hydrogen, methyl, ethyl, β-hydroxyethyl, β-sulphatoethyl.

**7.** Reactive dyestuffs according to at least one of the preceding claims, characterised in that A is an alkylene radical having 2 to 6 carbon atoms, a naphthylene radical, the radical of a diphenyl or stilbene or a phenylene radical, in which the radical A is unsubstituted or substituted by fluorine, chlorine or bromine, alkyl groups having 1 to 4 carbon atoms, alkoxy groups having 1 to 4 carbon atoms, carboxyl, hydroxyl or sulpho.

**8.** Reactive dyestuffs according to at least one of the preceding claims, characterised in that

a)

| | |
|---|---|
| D | is the radical of a sulpho-containing organic dyestuff from the mono- or polyazo, metal complex azo, anthraquinone, phthalocyanine, formazan or dioxazine series, |
| n | is 1 or 2, |
| X | is Cl or F, |
| R | represents hydrogen, methyl or ethyl, |
| $R_1$, $R_2$ | independently of one another, represent H or $C_1$-$C_4$-alkyl which may be substituted by OR, $OSO_3H$, $SO_3H$, COOR or halogen, |
| A | represents a substituted or unsubstituted phenylene or a substituted or unsubstituted aromatic-aliphatic bridging member or a straight-chain or branched $C_1$-$C_6$-alkylene which may be interrupted by hetero atoms or groupings containing hetero atoms such as NR, O or S and which may be substituted by OR, $OSO_3H$, $SO_3H$, COOR or halogen, |

or

b) dyestuffs of the formula (1)

in which

A, n, D, R, $R_1$ and $R_2$ have the meaning as in a) and

X is F.

**9.** Reactive dyestuffs according to at least one of the preceding claims, characterised in that they have at least one of the following formulae

c)

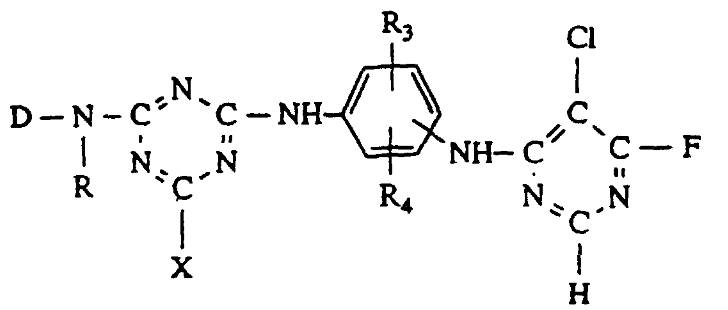

(2),

in which

D, X and R have the same meanings as mentioned in Claim 8 under a) and

$R_3$ and $R_4$, independently of one another, are hydrogen, methyl, ethyl, methoxy, ethoxy, chlorine, carboxyl or sulpho.

d) Reactive dyestuffs according to c), in which

D and R have the same meanings as in c) and

$R_3$ and $R_4$, independently of one another, are hydrogen or sulpho.

e) Reactive dyestuffs of the formula

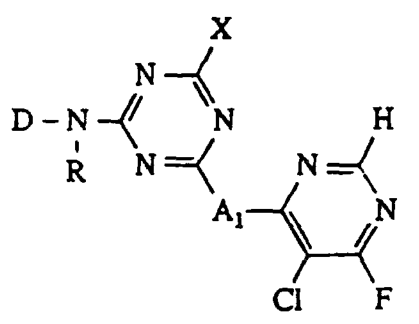

(3),

in which

D, X and R have the same meanings as mentioned in Claim 8 under a) and

$A_1$ represents an aliphatic, straight-chain or branched $C_1$-$C_6$-diaminoalkylene which may be interrupted by hetero atoms or groupings containing hetero atoms such as $NR_1$, O or S and which may be substituted by OR, $OSO_3H$, $SO_3H$, COOR or halogen,

$R_1$ has the same meaning as mentioned in Claim 8.

f) Reactive dyestuffs of the formula

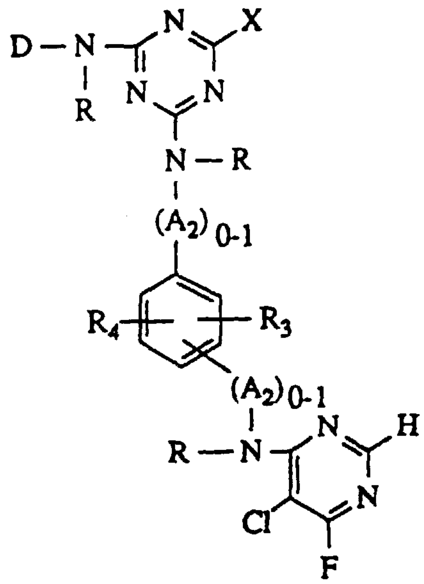

(4)

in which

D, X and R have the same meanings as mentioned in Claim 8 under a) and

$R_3$ and $R_4$, independently of one another, are H, methyl, ethyl or sulpho, and

$A_2$ represents an aliphatic, straight-chain or branched $C_1$-$C_6$ bridging member which may be interrupted by hetero atoms or groupings containing hetero atoms such as $NR_1$, O or S and may be substituted by OR, $OSO_3H$, $SO_3H$, COOR or halogen.

g) Reactive dyestuffs according to c), d), e) and f), in which

X represents F.

**10.** Reactive dyestuffs according to at least one of the preceding claims, characterised in that they have at least one of the following formulae

h)

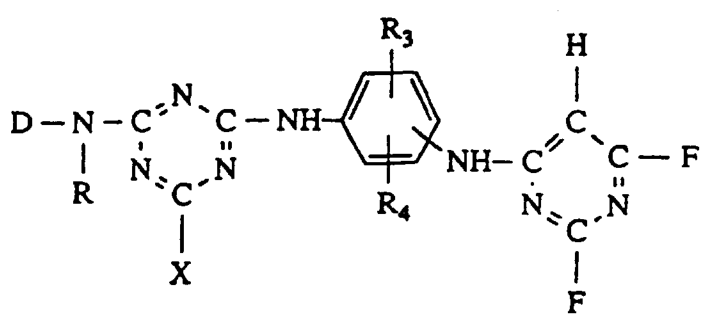

(5),

in which

D, X and R have the same meanings as mentioned in Claim 8 under a) and

$R_3$ and $R_4$, independently of one another, are hydrogen, methyl, ethyl, methoxy, ethoxy, chlorine, carboxyl or sulpho.

i) Reactive dyestuffs according to h), in which

D and R have the same meanings as in h) and $R_3$ and $R_4$, independently of one another, are hydrogen or sulpho.

j) Reactive dyestuffs of the formula

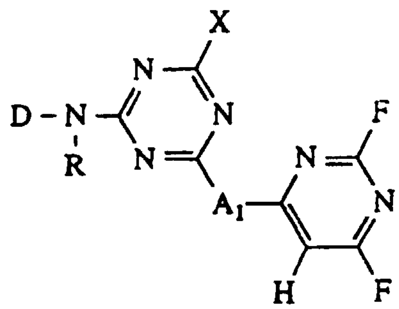

(6),

in which

D, X and R have the same meanings as mentioned in Claim 8 under a) and

$A_1$ represents aliphatic, straight-chain or branched $C_1$-$C_6$-diaminoalkylene which may be interrupted by hetero atoms or groupings containing hetero atoms such as $NR_1$, O or S and may be substituted by OR, $OSO_3H$, $SO_3H$, COOR or halogen,

$R_1$ has the same meaning as mentioned in Claim 8.

k) Reactive dyestuffs of the formula

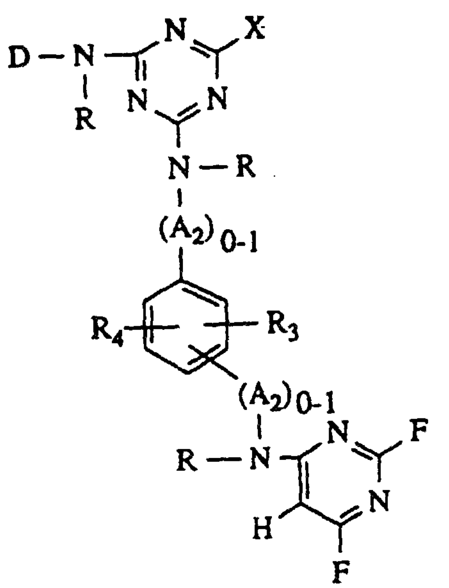

(7)

in which

D, X and R have the same meanings as mentioned in Claim 8 under a) and

$R_3$ and $R_4$, independently of one another, are H, methyl, ethyl or sulpho, and

$A_2$ represents an aliphatic, straight-chain or branched $C_1$-$C_6$ bridging member which may be interrupted by hetero atoms or groupings containing hetero atoms such as $NR_1$, O or S and may be substituted by OR, $OSO_3H$, $SO_3H$, COOR or halogen.

l) Reactive dyestuffs according to h), i), j) and k),
in which

X represents F.

**11.** Process for the preparation of the reactive dyestuffs according to Claim 1, characterised in that an organic dyestuff of the formula

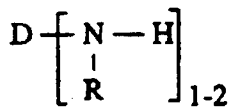

(8)

or a dyestuff precursor,
2,4,6-trifluoro-s-triazine or 2,4,6-trichloro-s-triazine,
a compound of the formula

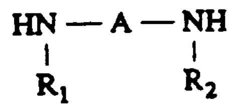

(9)

and 4,6-difluoro-5-chloropyrimidine or 2,4,6-trifluoropyrimidine are condensed with one another, in which D, R, $R_1$, $R_2$ and A in the abovementioned formulae have the meanings given in Claim 1, formula (1), and in that, if dyestuff precursors are used, the intermediates obtained are converted into the desired final dyestuffs.

**12.** Process for the dyeing and printing of natural and synthetic OH- or amido-containing materials, characterised in that at least one dyestuff according to at least one of the preceding claims is used.

**13.** Process according to Claim 12, characterised in that the dyestuff is used in a mixture with other dyestuffs for trichromatic dyeing.

**Revendications**

**1.** Colorants réactifs de formule (1)

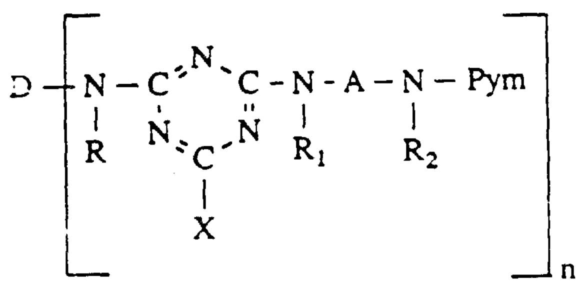

(1),

dans laquelle

D représente le radical d'un colorant organique,
R, $R_1$ et $R_2$ représentent chacun, indépendamment les uns des autres, l'hydrogène ou un groupe alkyle en $C_1$-$C_4$ éventuellement substitué,
A représente un pont aliphatique, aromatique ou aromatique-aliphatique éventuellement substitué,
X représente Cl, F
Pym représente un groupe

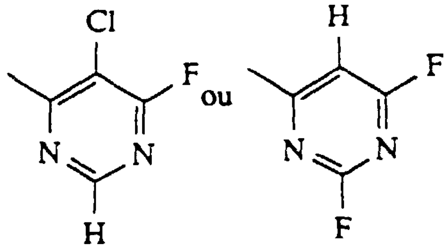

n est égal à 1 ou 2.

2. Colorants réactifs selon revendication 1, de formule (1a)

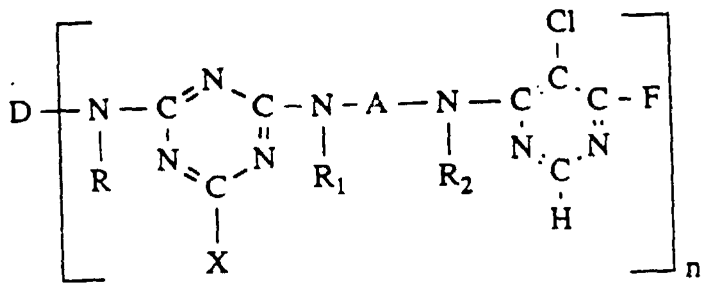

(1a),

dans laquelle
D, R, $R_1$, $R_2$, A, X et n ont les significations indiquées dans la revendication 1.

3. Colorants réactifs selon revendication 1, de formule (1b)

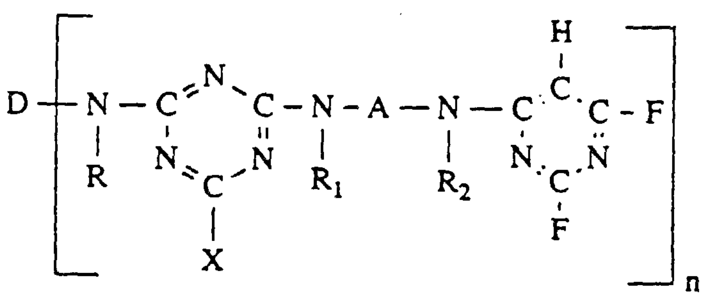

(1b),

dans laquelle
D, R, $R_1$, $R_2$, A, X et n ont les significations indiquées dans la revendication 1.

4. Colorants réactifs selon au moins une des revendications qui précèdent, caractérisés en ce que D représente le radical d'un colorant organique, contenant des groupes sulfo, de la série monoazoïque ou polyazoïque, des complexes métalliques de colorants azoïques, de la série anthraquinonique, des phtalocyanines, des colorants de formazanes, des colorants d'azométhines, de dioxazines, de phénazines, des colorants stilbéniques, des colorants du triphénylméthane, de xanthène, de thioxanthone, des colorants nitroaryliques, des colorants de naphtoquinones, de pyrènequinone ou de pérylènetétracarboximides.

5. Colorants réactifs selon au moins une des revendications qui précèdent, caractérisés en ce que R représente un groupe méthyle, éthyle, propyle, isopropyle, butyle, isobutyle, sec-butyle, tert-butyle, β-chloréthyle, β-hydroxyéthyle, β-hydroxybutyle, β-cyanéthyle, β-sulfatoéthyle, carboxyméthyle, sulfométhyle ou l'hydrogène.

6. Colorants réactifs selon au moins une des revendications qui précèdent, caractérisés en ce que $R_1$ et $R_2$ représentent chacun, indépendamment l'un de l'autre, l'hydrogène, un groupe méthyle, éthyle, β-hydroxyéthyle, β-sulfatoéthyle.

7. Colorants réactifs selon au moins une des revendications qui précèdent, caractérisés en ce que A représente un pont alkylène en $C_2$-$C_6$, un groupe naphtylène, le radical d'un diphényle ou d'un stilbène ou un groupe phénylène, A étant non substitué ou substitué par le fluor, le chlore et le brome, des groupes alkyle en $C_1$-$C_4$, des groupes alcoxy en $C_1$-$C_4$, carboxy, hydroxy ou sulfo.

8. Colorants réactifs selon au moins une des revendications qui précèdent, caractérisés en ce que

a)

D représente le radical d'un colorant organique, contenant des groupes sulfo, de la série monoazoïque ou polyazoïque, de la série des complexes métalliques de colorants azoïques, de la série des colorants anthraquinoniques, des colorants de phtalocyanines, de formazanes, ou de dioxazines,
n est égal à 1 ou 2,
X représente Cl ou F,
R représente l'hydrogène, un groupe méthyle ou éthyle,
$R_1$ et $R_2$ représentent chacun, indépendamment l'un de l'autre, H ou un groupe alkyle en $C_1$ -$C_4$ qui peut être substitué par OR, $OSO_3H$, $SO_3H$, COOR ou des halogènes,
A représente un groupe phénylène éventuellement substitué ou un pont aromatique-aliphatique éventuellement substitué ou un groupe alkylène en $C_1$-$C_6$ à chaîne droite ou ramifiée éventuellement interrompu par des hétéroatomes ou des groupements contenant des hétéroatomes tels que NR, O ou S, et qui peut être substitué par OR, $OSO_3H$, $SO_3H$, COOR ou des halogènes,

ou bien
b) ils consistent en colorants de formule (1),
dans laquelle

A, n, D, R, $R_1$ et $R_2$ ont les significations indiquées ci-dessus sous a) et
X = F.

9. Colorants réactifs selon au moins une des revendications qui précède, caractérisés en ce qu'ils répondent au moins à l'une des formules suivantes

c)

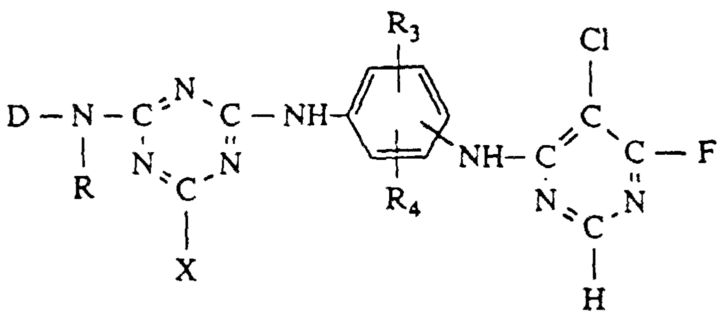 (2),

dans laquelle

D, X et R ont les significations indiquées dans la revendication 8 sous a) et
$R_3$ et $R_4$ représentent chacun, indépendamment l'un de l'autre, l'hydrogène, un groupe méthyle, éthyle, méthoxy, éthoxy, le chlore, un groupe carboxy ou sulfo,

d) ce sont des colorants réactifs tels que définis ci-dessus sous c), pour lesquels

D et R ont les significations indiquées ci-dessus sous c) et
$R_3$ et $R_4$ représentent chacun, indépendamment l'un de l'autre, l'hydrogène ou un groupe sulfo

e) ce sont des colorants réactifs de formule

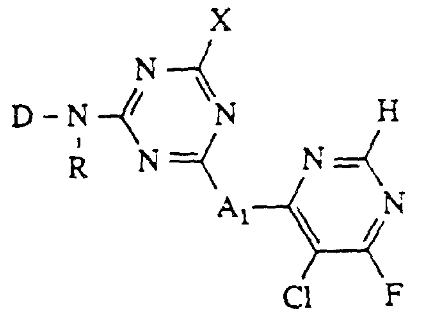

(3),

dans laquelle
D, X et R ont les significations indiquées dans la revendication 8 sous a) et

$A_1$ représente un groupe aliphatique diaminoalkylène en $C_1$-$C_6$ à chaîne droite ou ramifiée éventuellement interrompu par des hétéroatomes ou des groupements contenant des hétéroatomes tels que $NR_1$, O ou S, et qui peut être substitué par OR, $OSO_3H$, $SO_3H$, COOR ou des halogènes,
$R_1$ a les significations indiquées dans la revendication 8.

f) ce sont des colorants réactifs de formule

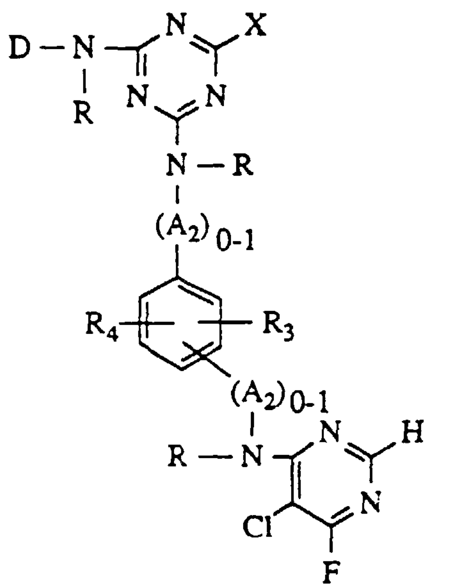

(4)

dans laquelle

D, X et R ont les significations indiquées dans la revendication 8 sous a) et
$R_3$ et $R_4$ représentent chacun indépendamment l'un de l'autre H, un groupe méthyle, éthyle ou sulfo et

$A_2$ représente un pont aliphatique en $C_1$-$C_6$ à chaîne droite ou ramifiée éventuellement interrompu par des hétéroatomes ou par des groupements contenant des hétéroatomes tels que $NR_1$, O ou S et qui peut être substitué par OR, $OSO_3H$, $SO_3H$, COOR ou des halogènes,

g) ce sont des colorants réactifs tels que définis ci-dessus sous c), d), e) et f),
pour lesquels
X = F.

**10.** Colorants réactifs selon au moins une des revendications qui précèdent, caractérisés en ce qu'ils répondent à au moins une des formules suivantes

h)

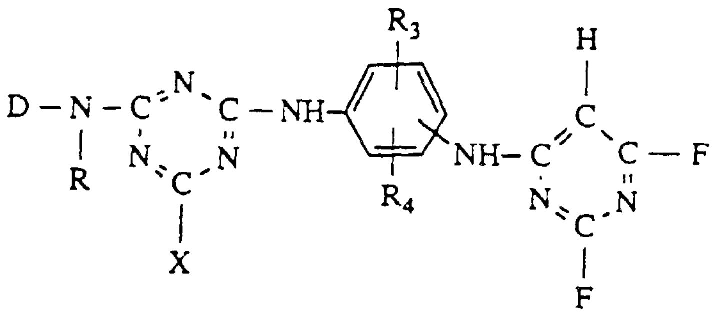

(5),

dans laquelle

D, X et R ont les significations indiquées dans la revendication 8 sous a) et
$R_3$ et $R_4$ représentent chacun indépendamment l'un de l'autre l'hydrogène, un groupe méthyle, éthyle, méthoxy, éthoxy, le chlore, un groupe carboxy ou sulfo,

i) ce sont des colorants réactifs tels que définis ci-dessus sous h), pour lesquels

D et R ont les significations indiquées ci-dessus sous h) et
$R_3$ et $R_4$ représentent chacun indépendamment l'un de l'autre l'hydrogène ou un groupe sulfo,

j) ce sont des colorants réactifs de formule

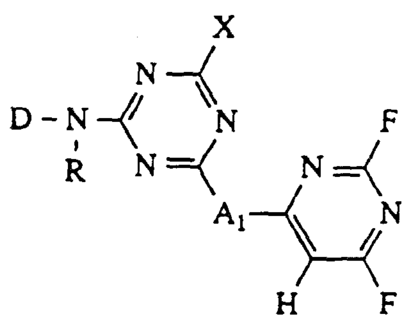

(6),

dans laquelle
D, X et R ont les significations indiquées dans la revendication 8 sous a) et

$A_1$ représente un groupe aliphatique diaminoalkylène en $C_1$-$C_6$ à chaîne droite ou ramifiée éventuellement interrompu par des hétéroatomes ou par des groupements contenant des hétéroatomes tels que $NR_1$, O ou S et qui peut être substitué par OR, $OSO_3H$, $SO_3H$, COOR ou des halogènes,
$R_1$ a les significations indiquées dans la revendication 8,

k) ce sont des colorants réactifs de formule

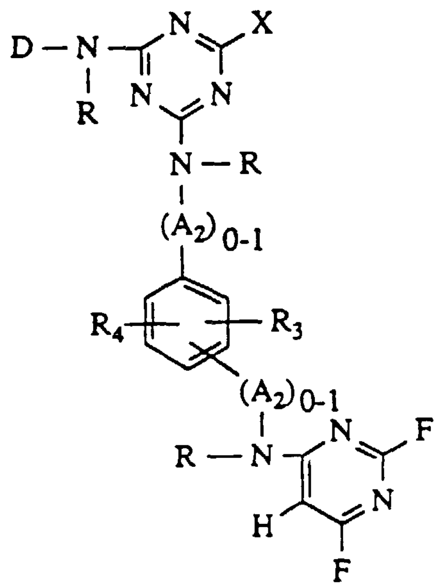

(7),

dans laquelle

D, X et R ont les significations indiquées dans la revendication 8 sous a) et
$R_3$ et $R_4$ représentent chacun indépendamment l'un de l'autre, H, un groupe méthyle, éthyle ou sulfo et

$A_2$ représente un pont aliphatique en $C_1$-$C_6$ à chaîne droite ou ramifiée éventuellement interrompu par des hétéroatomes ou par des groupements contenant des hétéroatomes tels que $NR_1$, O ou S, et qui peut être substitué par OR, $OSO_3H$, $SO_3H$, COOR ou des halogènes,

l) ce sont des colorants réactifs tels que définis ci-dessus sous h), i), j) et k),
pour lesquels

X égal F.

**11.** Procédé de préparation des colorants réactifs de la revendication 1, caractérisé en ce que l'on condense un colorant organique de formule

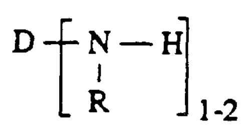

(8)

ou un produit précurseur de colorant,
la 2,4,6-trifluoro-s-triazine ou la 2,4,6-trichloro-s-triazine,
un composé de formule

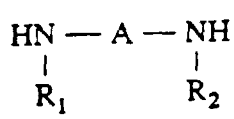

(9)

et la 4,6-difluoro-5-chloropyrimidine ou la 2,4,6-trifluoropyrimidine,
D, R, $R_1$, $R_2$ et A ayant dans les formules ci-dessus les significations indiquées en référence à la formule (1) dans la revendication 1, et dans le cas où on a utilisé des produits précurseurs de colorants, on convertit les produits intermédiaires obtenus en les colorants finals recherchés.

**12.** Procédé pour la teinture et l'impression de matières naturelles et synthétiques contenant des groupes OH ou des groupes amide, caractérisé en ce que l'on utilise au moins un colorant selon au moins une des revendications qui précèdent.

**13.** Procédé selon revendication 12, caractérisé en ce que, pour une trichromie, on utilise le colorant en mélange avec d'autres colorants.